(19)

**Europäisches Patentamt**
**European Patent Office**
**Office européen des brevets**

(11) **EP 4 648 415 A2**

(12) **EUROPEAN PATENT APPLICATION**
published in accordance with Art. 153(4) EPC

(43) Date of publication:
**12.11.2025 Bulletin 2025/46**

(21) Application number: **24738736.8**

(22) Date of filing: **04.01.2024**

(51) International Patent Classification (IPC):
$H04N\ 19/52^{(2014.01)}$     $H04N\ 19/56^{(2014.01)}$
$H04N\ 19/105^{(2014.01)}$     $H04N\ 19/70^{(2014.01)}$
$H04N\ 19/91^{(2014.01)}$     $H04N\ 19/176^{(2014.01)}$
$H04N\ 19/50^{(2014.01)}$     $H04N\ 19/124^{(2014.01)}$
$H04N\ 19/13^{(2014.01)}$     $H04N\ 19/60^{(2014.01)}$

(52) Cooperative Patent Classification (CPC):
**H04N 19/105; H04N 19/124; H04N 19/13;
H04N 19/176; H04N 19/50; H04N 19/52;
H04N 19/56; H04N 19/60; H04N 19/70; H04N 19/91**

(86) International application number:
**PCT/KR2024/000204**

(87) International publication number:
**WO 2024/147667 (11.07.2024 Gazette 2024/28)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.01.2023 KR 20230001455
03.07.2023 KR 20230086030**

(71) Applicant: **Electronics and Telecommunications
Research Institute
Daejeon 34129 (KR)**

(72) Inventors:
- **KIM, Jong-Ho**
  **Daejeon 34129 (KR)**
- **KIM, Dong-Hyun**
  **Daejeon 34129 (KR)**
- **LIM, Sung-Chang**
  **Daejeon 34129 (KR)**
- **LIM, Woong**
  **Daejeon 34129 (KR)**
- **CHOI, Jin-Soo**
  **Daejeon 34129 (KR)**

(74) Representative: **Betten & Resch
Patent- und Rechtsanwälte PartGmbB
Maximiliansplatz 14
80333 München (DE)**

(54) **METHOD, APPARATUS, AND RECORDING MEDIUM FOR IMAGE ENCODING/DECODING**

(57)    Disclosed herein are a method, an apparatus and a storage medium for image encoding/decoding. The method for image encoding/decoding includes determining a prediction method for a chroma block, determining information for deriving a cross-component prediction model, and generating a chroma prediction block using the cross-component prediction model. The chroma prediction block is derived by various prediction methods such as a Cross-Component Linear Model (CCLM), a Gradient Linear Model (GLM), a Filter-based Linear Model (FLM), and a Convolution Cross-Component Model (CCCM).

FIG. 39

## Description

### Technical Field

The present disclosure relates generally to a method, an apparatus and a storage medium for image encoding/decoding. More particularly, the present disclosure relates to a method, an apparatus and a storage medium for predicting a chroma signal.

This application claims the benefit of Korean Patent Application Nos. 10-2023-0001455, filed January 4, 2023, 10-2023-0086030, filed July 3, 2023, and 10-2024-0001582, filed January 4, 2024, which are hereby incorporated by reference in their entireties into this application.

### Background Art

With the continuous development of the information and communication industries, broadcasting services supporting High-Definition (HD) resolution have been popularized all over the world. Through this popularization, a large number of users have become accustomed to high-resolution and high-definition images and/or video.

To satisfy users' demand for high definition, many institutions have accelerated the development of next-generation imaging devices. Users' interest in UHD TVs, having resolution that is more than four times as high as that of Full HD (FHD) TVs, as well as High-Definition TVs (HDTV) and FHD TVs, has increased. As interest therein has increased, image encoding/decoding technology for images having higher resolution and higher definition is currently required.

As image compression technology, there are various technologies, such as inter-prediction technology, intra-prediction technology, transform, quantization technology and entropy coding technology.

Inter-prediction technology is technology for predicting the value of a pixel included in a current picture using a picture previous to and/or a picture subsequent to the current picture. Intra-prediction technology is technology for predicting the value of a pixel included in a current picture using information about pixels in the current picture. Transform and quantization technology may be technology for compressing the energy of a residual signal. The entropy coding technology is technology for assigning a short codeword to a frequently occurring value and assigning a long codeword to a less frequently occurring value.

By utilizing this image compression technology, data about images may be effectively compressed, transmitted, and stored.

### Disclosure

### Technical Problem

An embodiment is intended to provide an apparatus, a method and a storage medium, which perform processing on a chroma signal by utilizing information of a luma signal.

An embodiment is intended to provide an apparatus, a method and a storage medium, which perform prediction for a chroma signal based on a cross-component method.

### Technical Solution

In accordance with an aspect, there is provided an image decoding method, including determining a prediction method for a chroma block; determining information for deriving a cross-component prediction model; and generating a chroma prediction block using the cross-component prediction model.

The information for deriving the cross-component prediction model may include a reference region and a representative value.

The reference region and the representative value may be determined based on a size of a block.

The reference region and the representative value may be determined based on a prediction mode of a block.

The reference region may be determined based on template matching.

The prediction method may be determined using models derived from previously decoded blocks.

The chroma prediction block may be generated using a prediction block generated by a method other than the cross-component prediction model.

In accordance with another aspect, there is provided an image encoding method, including determining a prediction method for a chroma block; determining information for deriving a cross-component prediction model; and generating a chroma prediction block using the cross-component prediction model.

The information for deriving the cross-component prediction model may include a reference region and a representative value.

The reference region and the representative value may be determined based on a size of a block.

The reference region and the representative value may be determined based on a prediction mode of a block.

The reference region may be determined based on template matching.

The prediction method may be determined using models derived from previously encoded blocks.

The chroma prediction block may be generated using a prediction block generated by a method other than the cross-component prediction model.

In accordance with a further aspect, there is provided a computer-readable storage medium for storing a bitstream for image decoding, wherein the bitstream includes coding information, a prediction method for a chroma block is determined based on the coding information, information for deriving a cross-component prediction model is determined, and a chroma prediction block is generated using the cross-component prediction model.

The information for deriving the cross-component prediction model may include a reference region and a representative value.

The reference region and the representative value may be determined based on a size of a block.

The reference region and the representative value may be determined based on a prediction mode of a block.

The reference region may be determined based on template matching.

The prediction method may be determined using models derived from previously decoded blocks.

### Advantageous Effects

There are provided an apparatus, a method and a storage medium, which perform processing on a chroma signal by utilizing information of a luma signal.

There are provided an apparatus, a method and a storage medium, which perform prediction for a chroma signal based on a cross-component method.

### Description of Drawings

FIG. 1 is a block diagram illustrating the configuration of an embodiment of an encoding apparatus to which the present disclosure is applied;

FIG. 2 is a block diagram illustrating the configuration of an embodiment of a decoding apparatus to which the present disclosure is applied;

FIG. 3 is a diagram schematically illustrating the partition structure of an image when the image is encoded and decoded;

FIG. 4 is a diagram illustrating the form of a Prediction Unit (PU) that a Coding Unit (CU) can include;

FIG. 5 is a diagram illustrating the form of a Transform Unit (TU) that can be included in a CU;

FIG. 6 illustrates splitting of a block according to an example;

FIG. 7 is a diagram for explaining an embodiment of an intra-prediction procedure;

FIG. 8 is a diagram illustrating reference samples used in an intra-prediction procedure;

FIG. 9 is a diagram for explaining an embodiment of an inter-prediction procedure;

FIG. 10 illustrates spatial candidates according to an embodiment;

FIG. 11 illustrates the order of addition of motion information of spatial candidates to a merge list according to an embodiment;

FIG. 12 illustrates a transform and quantization process according to an example;

FIG. 13 illustrates diagonal scanning according to an example;

FIG. 14 illustrates horizontal scanning according to an example;

FIG. 15 illustrates vertical scanning according to an example;

FIG. 16 is a configuration diagram of an encoding apparatus according to an embodiment;

FIG. 17 is a configuration diagram of a decoding apparatus according to an embodiment;

FIG. 18 is a flowchart illustrating a target block prediction method and a bitstream generation method according to an embodiment;

FIG. 19 is a flowchart illustrating a target block prediction method using a bitstream according to an embodiment.

FIG. 20 illustrates scaling according to an example;

FIG. 21 illustrates the indices of neighboring blocks according to an example;

FIG. 22 illustrates details of coding parameters according to an example;

FIG. 23 illustrates the values of indices according to an example;

FIG. 24 illustrates indices and parameter values of coding parameters of neighboring blocks according to an example;

FIG. 25 illustrates the configuration of a template in inter-prediction according to an example;

FIG. 26 illustrates the configuration of a template in intra-prediction according to an example;

FIG. 27 illustrates the configuration of a template in bilateral matching according to an example;

FIG. 28 illustrates a first configuration of a template in template matching according to an example;

FIG. 29 illustrates a second configuration of a template in template matching according to an example;

FIG. 30 illustrates a first configuration of a template having alternately empty lines in template matching according to an example;

FIG. 31 illustrates a second configuration of a template having alternately empty lines in template matching according to an example;

FIG. 32 illustrates a second configuration of a template having alternately empty pixels in template matching according to an example;

FIG. 33 illustrates a second configuration of a template having alternately empty pixels in template matching according to an example;

FIG. 34 illustrates the configuration of a template in bilateral matching according to an example;

FIG. 35 illustrates the configuration of a template having alternately empty lines in bilateral matching according to an example;

FIG. 36 illustrates the configuration of a template having alternately empty pixels in bilateral matching according to an example;

FIG. 37 illustrates the configuration of a template when intra-prediction is performed in an inter-image according to an example;

FIG. 38 illustrates the configuration of a template when inter-prediction is performed on an inter-image according to an example;

FIG. 39 is a flowchart of a prediction method according to an embodiment.

FIG. 40 illustrates downsampling based on a deep neural network according to an example;

FIG. 41 illustrates a sample value range divided into N groups according to an example;

FIG. 42 illustrates a sample value range divided into two groups according to an example;

FIG. 43 illustrates a model derived for a new group between sample value averages according to an example;

FIG. 44 illustrates a model derived for a new group between sample value averages of groups according to an example;

FIG. 45 illustrates a luma block, and a luma block corresponding to a chroma block according to an example;

FIG. 46 illustrates a chroma block according to an example;

FIG. 47 illustrates a chroma prediction block according to an example;

FIG. 48 illustrates a luma block, and a luma block corresponding to a chroma block according to an example;

FIG. 49 illustrates a chroma block according to an example;

FIG. 50 illustrates four chroma prediction blocks according to an example;

FIG. 51 illustrates regions in a luma block and regions in a luma block directly corresponding to a chroma block according to an example;

FIG. 52 illustrates regions in a chroma block according to an example;

FIG. 53 illustrates regions in a luma block directly corresponding to a chroma block according to an example;

FIG. 54 illustrates regions in a chroma block according to an example;

FIG. 55 illustrates a chroma prediction block and a chroma template according to an example;

FIG. 56 is a flowchart of a chroma prediction method according to an example;

FIG. 57 illustrates the reconstruction of a chroma prediction mode table based on a model according to an example;

FIG. 58 illustrates the reconstruction of a prediction mode table using lowest error costs according to an example;

FIG. 59 illustrates the reconstruction of a prediction mode table using error costs lower than or equal to an average according to an example;

FIG. 60 illustrates gradient detection filters or gradient detection patterns according to an example;

FIG. 61 illustrates gradient blocks derived using a luma block and four gradient detection filters according to an example;

FIG. 62 illustrates regions in gradient blocks derived using regions in a luma block and four gradient detection filters according to an example;

FIG. 63 illustrates regions in gradient blocks derived using four gradient detection filters according to an example;

FIG. 64 illustrates regions in a chroma block according to an example;

FIG. 65 illustrates chroma prediction templates and a chroma template derived using four gradient-based linear models according to an example;

FIG. 66 is a flowchart of a chroma prediction method according to an example;

FIG. 67 illustrates the reconstruction of a chroma prediction mode table based on a model according to an example;

FIG. 68 illustrates reconstruction of a prediction mode table using lowest error costs according to an example;

FIG. 69 illustrates the reconstruction of a prediction mode table using error costs lower than or equal to an average according to an example;

FIG. 70 illustrates a luma sample corresponding to a chroma sample and a form in which a filter is applied according to an example;

FIG. 71 illustrates a chroma sample according to an example;

FIG. 72 illustrates filter shapes and the positions of filter coefficients according to an example;

FIG. 73 illustrates the shape of a filter according to an example;

FIGS. 74A to 74R illustrate the shapes of various filters according to an example;

FIG. 75 illustrates filter set 1 according to an example;

FIG. 76 illustrates filter set 2 according to an example;

FIG. 77 illustrates filter set 1 according to an example;

FIG. 78 illustrates filter set 2 according to an example;

FIG. 79 illustrates filter set 3 according to an example;

FIG. 80 illustrates filter set 4 according to an example;

FIG. 81 illustrates the determination of a filter depending on the direction of an intra-prediction mode according to an example;

FIG. 82 illustrates a luma sample corresponding to a chroma sample and a form in which a filter is applied according to an example;

FIG. 83 illustrates a chroma sample according to an example;

FIG. 84 illustrates filter shapes and the positions of filter coefficients according to an example;

FIG. 85 illustrates the location of a downsampled luma sample and the location of a chroma sample corresponding to the luma sample according to an example;

FIG. 86 illustrates a downsampling filter F1() according to an example;

FIG. 87 illustrates a downsampling filter F2() according to an example;

FIG. 88 illustrates a downsampling filter F3() according to an example;

FIG. 89 illustrates a downsampling filter F4() according to an example;

FIG. 90 illustrates a downsampling filter F5() according to an example;

FIG. 91 illustrates models and pieces of information used for the models according to an example;

FIG. 92 illustrates a downsampled luma sample corresponding to the location of a chroma sample and surrounding samples according to an example;

FIG. 93 is a first graph illustrating values used to set representative values according to an example;

FIG. 94 is a second graph illustrating values used to set representative values according to an example;

FIG. 95 is a third graph illustrating values used to set representative values according to an example;

FIG. 96 is a fourth graph illustrating values used to set representative values according to an example;

FIG. 97 is a fifth graph illustrating values used to set representative values according to an example;

FIG. 98 illustrates the determination of the number of reference lines and the number of reference samples depending on the partitioning shape of a block according to an example;

FIG. 99 illustrates a current block and neighboring blocks of the current block according to an example;

FIG. 100 illustrates a current block and a reference region for the current block according to an example;

FIG. 101 illustrates the determination of the number of reference lines and the number of reference samples depending on an intra-prediction mode according to an example;

FIG. 102 illustrates the change of a reference region to include a region detected by a matching method according to an example;

FIG. 103 illustrates the adjustment of a reference region using a location, indicated by a region detected by a matching method, as a reference according to an example;

FIG. 104 illustrates the configuration of a reference region according to an example;

FIG. 105 illustrates reference blocks for the configuration of a reference region according to an example;

FIG. 106 illustrates the combination of reference regions according to an example;

FIG. 107 illustrates the location of a non-adjacent block for determining a reference region according to an example;

FIG. 108 illustrates the size and shape of an actually encoded/decoded block at the location of a non-adjacent block according to an example;

FIG. 109 illustrates the location of a non-adjacent block according to an example;

FIG. 110 illustrates a range for the selection of a reference block according to an example;

FIG. 111 illustrates filtering of a prediction sample according to an example;

FIG. 112 illustrates the generation of a prediction block using blending according to an example;

FIG. 113 illustrates filtering for prediction blocks according to an example;

FIG. 114 illustrates the generation of a prediction block using samples predicted by utilizing three models according to an example;

FIG. 115 illustrates filtering for prediction samples and a chroma block according to an example.

FIG. 116 illustrates the generation of a prediction block using a weighted sum of prediction blocks generated by utilizing multiple models according to an example;

FIG. 117 illustrates the generation of a prediction signal using signals generated through different cross-component prediction models for samples according to an example;

FIG. 118 illustrates a U prediction signal revised using a color-component prediction model between a luma signal and a chroma signal according to an example;

FIG. 119 illustrates a Y prediction signal revised using a color-component prediction model between a luma signal and a chroma signal according to an example;

FIG. 120 illustrates a U prediction signal revised using a color-component prediction model between chroma signals according to an example;

FIG. 121 illustrates a V prediction signal revised using a color-component prediction model between chroma signals according to an example;

FIG. 122 illustrates gradient patterns according to an example;

FIG. 123 illustrates chroma samples used to derive a linear model according to an example;

FIG. 124 illustrates luma samples used to derive a linear model according to an example;

FIG. 125 illustrates non-downsampled luma samples according to an example;

FIG. 126 illustrates a filter for samples in CCLM according to an example; and

FIG. 127 illustrates the templates of a block according to an example.

FIG. 128 illustrates various downsampling filters used in cross-component models according to an example;

FIG. 129 illustrates the locations of chroma samples according to an example;

FIG. 130 illustrates a spatial part of a convolution filter according to an example;

FIG. 131 illustrates a reference region for BVG-CCCM according to an example;

FIG. 132 illustrates locations used to derive a block vector from a co-located luma block according to an example;

FIG. 133 illustrates the locations of temporal candidates according to an example;

FIG. 134 illustrates the locations of shifted temporal candidates according to an example;

FIG. 135 illustrates locations for selection of a neighboring motion vector;

FIG. 136 illustrates the derivation of shifted temporal candidates based on a current motion vector according to an example;

FIG. 137 illustrates a decoding method according to an example; and

FIG. 138 illustrates luma samples related to a chroma sample according to an example.

## Mode for Invention

The present invention may be variously changed, and may have various embodiments, and specific embodiments will be described in detail below with reference to the attached drawings. However, it should be understood that those embodiments are not intended to limit the present invention to specific disclosure forms, and that they include all changes, equivalents or modifications included in the spirit and scope of the present invention.

Detailed descriptions of the following exemplary embodiments will be made with reference to the attached drawings illustrating specific embodiments. These embodiments are described so that those having ordinary knowledge in the technical field to which the present disclosure pertains can easily practice the embodiments. It should be noted that the various embodiments are different from each other, but do not need to be mutually exclusive of each other. For example, specific shapes, structures, and characteristics described here may be implemented as other embodiments without departing from the spirit and scope of the embodiments in relation to an embodiment. Further, it should be understood that the locations or arrangement of individual components in each disclosed embodiment can be changed without departing from the spirit and scope of the embodiments. Therefore, the accompanying detailed description is not intended to restrict the scope of the disclosure, and the scope of the exemplary embodiments is limited only by the accompanying claims, along with equivalents thereof, as long as they are appropriately described.

In the drawings, similar reference numerals are used to designate the same or similar functions in various aspects. The shapes, sizes, etc. of components in the drawings may be exaggerated to make the description clear.

Terms such as "first" and "second" may be used to describe various components, but the components are not restricted by the terms. The terms are used only to distinguish one component from another component. For example, a first component may be named a second component without departing from the scope of the present specification. Likewise, a second component may be named a first component. The terms "and/or" may include combinations of a plurality of related described items or any of a plurality of related described items.

It will be understood that when a component is referred to as being "connected" or "coupled" to another component, the two components may be directly connected or coupled to each other, or intervening components may be present between the two components. On the other hand, it will be understood that when a component is referred to as being "directly connected or coupled", no intervening components are present between the two components.

Components described in the embodiments are independently shown in order to indicate different characteristic functions, but this does not mean that each of the components is formed of a separate piece of hardware or software. That is, the components are arranged and included separately for convenience of description. For example, at least two of the components may be integrated into a single component. Conversely, one component may be divided into multiple components. An embodiment into which the components are integrated or an embodiment in which some components are separated is included in the scope of the present specification as long as it does not depart from the essence of the present specification.

The terms used in the embodiment are merely used to describe specific embodiments and are not intended to limit the present invention. A singular expression includes a plural expression unless a description to the contrary is specifically pointed out in context. In the embodiments, it should be understood that the terms such as "include" or "have" are merely intended to indicate that features, numbers, steps, operations, components, parts, or combinations thereof are present, and are not intended to exclude the possibility that one or more other features, numbers, steps, operations, components, parts, or combinations thereof will be present or added. That is, in the embodiments, an expression describing that a component "comprises" a specific component means that additional components may be included within the scope of the practice of the present invention or the technical spirit of the present invention, but does not preclude the presence of components other than the specific component.

In the embodiments, a term "at least one" may mean one of one or more numbers, such as 1, 2, 3, and 4. In the embodiments, a term "a plurality of" may mean one of two or more numbers, such as 2, 3 and 4.

Some components of the embodiments are not essential components for performing essential functions, but may be optional components for improving only performance. The embodiments may be implemented using only essential components for implementing the essence of the embodiments. For example, a structure including only essential components, excluding optional components used only to improve performance, is also included in the scope of the embodiments.

Embodiments will be described in detail below with reference to the accompanying drawings so that those having ordinary knowledge in the technical field to which the embodiments pertain can easily practice the embodiments. In the following description of the embodiments, detailed descriptions of known functions or configurations which are deemed to make the gist of the present specification obscure will be omitted. Further, the same reference numerals are used to designate the same components throughout the drawings, and repeated descriptions of the same components will be omitted.

Hereinafter, "image" may mean a single picture constituting a video, or may mean the video itself. For example, "encoding and/or decoding of an image" may mean "encoding and/or decoding of a video", and may also mean "encoding and/or decoding of any one of images constituting the video".

Hereinafter, the terms "video" and "motion picture" may be used to have the same meaning, and may be used interchangeably with each other.

Hereinafter, a target image may be an encoding target image, which is the target to be encoded, and/or a decoding target image, which is the target to be decoded. Further, the target image may be an input image that is input to an encoding apparatus or an input image that is input to a decoding apparatus. And, a target image may be a current image, that is, the target to be currently encoded and/or decoded. For example, the terms "target image" and "current image" may be used to have the same meaning, and may be used interchangeably with each other.

Hereinafter, the terms "image", "picture", "frame", and "screen" may be used to have the same meaning and may be used interchangeably with each other.

Hereinafter, a target block may be an encoding target block, i.e. the target to be encoded and/or a decoding target block, i.e. the target to be decoded. Further, the target block may be a current block, i.e. the target to be currently encoded and/or decoded. Here, the terms "target block" and "current block" may be used to have the same meaning, and may be used interchangeably with each other. A current block may denote an encoding target block, which is the target of encoding, during encoding and/or a decoding target block, which is the target of decoding, during decoding. Also, the current block may be at least one of a coding block, a prediction block, a residual block, and a transform block.

Hereinafter, the terms "block" and "unit" may be used to have the same meaning, and may be used interchangeably with each other. Alternatively, "block" may denote a specific unit.

Hereinafter, the terms "region" and "segment" may be used interchangeably with each other.

In the following embodiments, specific information, data, a flag, an index, an element, and an attribute may have their respective values. A value of "0" corresponding to each of the information, data, flag, index, element, and attribute may indicate a false, a logical false or a first predefined value. In other words, the value of "0", a false, logical false, and a first predefined value may be used interchangeably with each other. A value of "1" corresponding to each of the information, data, flag, index, element, and attribute may indicate a true, a logical true or a second predefined value. In other words, the value of "1", true, logical true, and a second predefined value may be used interchangeably with each other.

When a variable such as $i$ or $j$ is used to indicate a row, a column, or an index, the value of $i$ may be an integer of 0 or more or an integer of 1 or more. In other words, in the embodiments, each of a row, a column, and an index may be counted from 0 or may be counted from 1.

In embodiments, the term "one or more" or the term "at least one" may mean the term "plural". The term "one or more" or the term "at least one" may be used interchangeably with "plural".

Below, the terms to be used in embodiments will be described.

Encoder: An encoder denotes a device for performing encoding. That is, an encoder may mean an encoding apparatus.

Decoder: A decoder denotes a device for performing decoding. That is, a decoder may mean a decoding apparatus.

Unit: A unit may denote the unit of image encoding and decoding. The terms "unit" and "block" may be used to have the same meaning, and may be used interchangeably with each other.

- A unit may be an MxN array of samples. Each of M and N may be a positive integer. A unit may typically mean an array of samples in the form of two-dimensions.
- In the encoding and decoding of an image, "unit" may be an area generated by the partitioning of one image. In other words, "unit" may be a region specified in one image. A single image may be partitioned into multiple units. Alternatively, one image may be partitioned into sub-parts, and the unit may denote each partitioned sub-part when encoding or decoding is performed on the partitioned sub-part.
- In the encoding and decoding of an image, predefined processing may be performed on each unit depending on the type of the unit.
- Depending on functions, the unit types may be classified into a macro unit, a Coding Unit (CU), a Prediction Unit (PU), a residual unit, a Transform Unit (TU), etc. Alternatively, depending on functions, the unit may denote a block, a macroblock, a coding tree unit, a coding tree block, a coding unit, a coding block, a prediction unit, a prediction block, a residual unit, a residual block, a transform unit, a transform block, etc. For example, a target unit, which is the target of encoding and/or decoding, may be at least one of a CU, a PU, a residual unit, and a TU.
- The term "unit" may mean information including a luminance (luma) component block, a chrominance (chroma) component block corresponding thereto, and syntax elements for respective blocks so that the unit is designated to be distinguished from a block.
- The size and shape of a unit may be variously implemented. Further, a unit may have any of various sizes and shapes. In particular, the shapes of the unit may include not only a square, but also a geometric figure that can be represented in two dimensions (2D), such as a rectangle, a trapezoid, a triangle, and a pentagon.
- Further, unit information may include one or more of the type of a unit, the size of a unit, the depth of a unit, the order of encoding of a unit and the order of decoding of a unit, etc. For example, the type of a unit may indicate one of a CU, a PU, a residual unit and a TU.
- One unit may be partitioned into sub-units, each having a smaller size than that of the relevant unit.

Depth: A depth may mean an extent to which the unit is partitioned. Further, the depth of the unit may indicate the level at which the corresponding unit is present when unit(s) are represented by a tree structure.

- Unit partition information may include a depth indicating the depth of a unit. A depth may indicate the number of times the unit is partitioned and/or the degree to which the unit is partitioned.
- In a tree structure, it may be considered that the depth of a root node is the smallest, and the depth of a leaf node is the largest. The root node may be the highest (top) node. The leaf node may be a lowest node.
- A single unit may be hierarchically partitioned into multiple sub-units while having depth information based on a tree structure. In other words, the unit and sub-units, generated by partitioning the unit, may correspond to a node and child nodes of the node, respectively. Each of the partitioned sub-units may have a unit depth. Since the depth indicates the number of times the unit is partitioned and/or the degree to which the unit is partitioned, the partition information of the sub-units may include information about the sizes of the sub-units.
- In a tree structure, the top node may correspond to the initial node before partitioning. The top node may be referred to as a "root node". Further, the root node may have a minimum depth value. Here, the top node may have a depth of level '0'.
- A node having a depth of level '1' may denote a unit generated when the initial unit is partitioned once. A node having a depth of level '2' may denote a unit generated when the initial unit is partitioned twice.
- A leaf node having a depth of level 'n' may denote a unit generated when the initial unit has been partitioned n times.
- The leaf node may be a bottom node, which cannot be partitioned any further. The depth of the leaf node may be the maximum level. For example, a predefined value for the maximum level may be 3.
- A QT depth may denote a depth for a quad-partitioning. A BT depth may denote a depth for a binary-partitioning. A TT depth may denote a depth for a ternary-partitioning.

Sample: A sample may be a base unit constituting a block. A sample may be represented by values from 0 to $2^{Bd}-1$ depending on the bit depth (Bd).

- A sample may be a pixel or a pixel value.
- Hereinafter, the terms "pixel" and "sample" may be used to have the same meaning, and may be used interchangeably with each other.

A Coding Tree Unit (CTU): A CTU may be composed of a single luma component (Y) coding tree block and two chroma component (Cb, Cr) coding tree blocks related to the luma component coding tree block. Further, a CTU may mean information including the above blocks and a syntax element for each of the blocks.

- Each coding tree unit (CTU) may be partitioned using one or more partitioning methods, such as a quad tree (QT), a binary tree (BT), and a ternary tree (TT) so as to configure sub-units, such as a coding unit, a prediction unit, and a transform unit. A quad tree may mean a quarternary tree. Further, each coding tree unit may be partitioned using a multitype tree (MTT) using one or more partitioning methods.
- "CTU" may be used as a term designating a pixel block, which is a processing unit in an image-decoding and encoding process, as in the case of partitioning of an input image.

Coding Tree Block (CTB): "CTB" may be used as a term designating any one of a Y coding tree block, a Cb coding tree block, and a Cr coding tree block.
Neighbor block: A neighbor block (or neighboring block) may mean a block adjacent to a target block. A neighbor block may mean a reconstructed neighbor block.
Hereinafter, the terms "neighbor block" and "adjacent block" may be used to have the same meaning and may be used interchangeably with each other.
A neighbor block may mean a reconstructed neighbor block.
Spatial neighbor block; A spatial neighbor block may a block spatially adjacent to a target block. A neighbor block may include a spatial neighbor block.

- The target block and the spatial neighbor block may be included in a target picture.
- The spatial neighbor block may mean a block, the boundary of which is in contact with the target block, or a block located within a predetermined distance from the target block.
- The spatial neighbor block may mean a block adjacent to the vertex of the target block. Here, the block adjacent to the vertex of the target block may mean a block vertically adjacent to a neighbor block which is horizontally adjacent to the target block or a block horizontally adjacent to a neighbor block which is vertically adjacent to the target block.

Temporal neighbor block: A temporal neighbor block may be a block temporally adjacent to a target block. A neighbor block may include a temporal neighbor block.

- The temporal neighbor block may include a co-located block (col block).
- The col block may be a block in a previously reconstructed co-located picture (col picture). The location of the col block in the col-picture may correspond to the location of the target block in a target picture. Alternatively, the location of the col block in the col-picture may be equal to the location of the target block in the target picture. The col picture may be a picture included in a reference picture list.
- The temporal neighbor block may be a block temporally adjacent to a spatial neighbor block of a target block.

Prediction mode: The prediction mode may be information indicating the mode used for intra prediction, or the mode used for inter prediction.
Prediction unit: A prediction unit may be a base unit for prediction, such as inter prediction, intra prediction, inter compensation, intra compensation, and motion compensation.

- A single prediction unit may be divided into multiple partitions having smaller sizes or sub-prediction units. The multiple partitions may also be base units in the performance of prediction or compensation. The partitions generated by dividing the prediction unit may also be prediction units.

Prediction unit partition: A prediction unit partition may be the shape into which a prediction unit is divided.
Reconstructed neighbor unit: A reconstructed neighbor unit may be a unit which has already been decoded and reconstructed neighboring a target unit.

- A reconstructed neighbor unit may be a unit that is spatially adjacent to the target unit or that is temporally adjacent to the target unit.
- A reconstructed spatial neighbor unit may be a unit which is included in a target picture and which has already been reconstructed through encoding and/or decoding.
- A reconstructed temporal neighbor unit may be a unit which is included in a reference image and which has already been reconstructed through encoding and/or decoding. The location of the reconstructed temporal neighbor unit in the reference image may be identical to that of the target unit in the target picture, or may correspond to the location of the target unit in the target picture. Also, a reconstructed temporal neighbor unit may be a block neighboring the corresponding block in a reference image. Here, the location of the corresponding block in the reference image may correspond to the location of the target block in the target image. Here, the fact that the locations of blocks correspond to each other may mean that the locations of the blocks are identical to each other, may mean that one block is included in another block, or may mean that one block occupies a specific location in another block.

Sub-picture: A picture may be divided into one or more sub-pictures. A sub-picture may be composed of one or more tile rows and one or more tile columns.

- A sub-picture may be a region having a square shape or a rectangular(i.e., a non-square rectangular) shape in a picture. Further, a sub-picture may include one or more CTUs.
- A sub-picture may be a rectangular region of one or more slices in a picture.
- One sub-picture may include one or more tiles, one or more bricks, and/or one or more slices.

Tile: A tile may be a region having a square shape or rectangular (i.e., a non-square rectangular) shape in a picture.

- A tile may include one or more CTUs.
- A tile may be partitioned into one or more bricks.

Brick: A brick may denote one or more CTU rows in a tile.

- A tile may be partitioned into one or more bricks. Each brick may include one or more CTU rows.
- A tile that is not partitioned into two parts may also denote a brick.

Slice: A slice may include one or more tiles in a picture. Alternatively, a slice may include one or more bricks in a tile.

- A sub-picture may contain one or more slices that collectively cover a rectangular region of a picture. Consequently, each sub-picture boundary is also always a slice boundary, and each vertical sub-picture boundary is always also a vertical tile boundary.

Parameter set: A parameter set may correspond to header information in the internal structure of a bitstream.

- A parameter set may include at least one of a video parameter set (VPS), a sequence parameter set (SPS), a picture parameter set (PPS), an adaptation parameter set (APS), a decoding parameter set (DPS), etc.
- Information signaled through each parameter set may be applied to pictures which refer to the corresponding parameter set. For example, information in a VPS may be applied to pictures which refer to the VPS. Information in an SPS may be applied to pictures which refer to the SPS. Information in a PPS may be applied to pictures which refer to the PPS.
- Each parameter set may refer to a higher parameter set. For example, a PPS may refer to an SPS. An SPS may refer to a VPS.
- Further, a parameter set may include a tile group, slice header information, and tile header information. The tile group may be a group including multiple tiles. Also, the meaning of "tile group" may be identical to that of "slice".

Rate-distortion optimization: An encoding apparatus may use rate-distortion optimization so as to provide high coding efficiency by utilizing combinations of the size of a coding unit (CU), a prediction mode, the size of a prediction unit (PU), motion information, and the size of a transform unit (TU).

- A rate-distortion optimization scheme may calculate rate-distortion costs of respective combinations so as to select an optimal combination from among the combinations. The rate-distortion costs may be calculated using the equation *"D*

+ $\lambda * R$". Generally, a combination enabling the rate-distortion cost to be minimized may be selected as the optimal combination in the rate-distortion optimization scheme.

- D may denote distortion. D may be the mean of squares of differences (i.e. mean square error) between original transform coefficients and reconstructed transform coefficients in a transform unit.
- R may denote the rate, which may denote a bit rate using related-context information.
- $\lambda$ denotes a Lagrangian multiplier. R may include not only coding parameter information, such as a prediction mode, motion information, and a coded block flag, but also bits generated due to the encoding of transform coefficients.
- An encoding apparatus may perform procedures, such as inter prediction and/or intra prediction, transform, quantization, entropy encoding, inverse quantization (dequantization), and/or inverse transform so as to calculate precise D and R. These procedures may greatly increase the complexity of the encoding apparatus.
- Bitstream: A bitstream may denote a stream of bits including encoded image information.

Parsing: Parsing may be the decision on the value of a syntax element, made by performing entropy decoding on a bitstream. Alternatively, the term "parsing" may mean such entropy decoding itself.

Symbol: A symbol may be at least one of the syntax element, the coding parameter, and the transform coefficient of an encoding target unit and/or a decoding target unit. Further, a symbol may be the target of entropy encoding or the result of entropy decoding.

Reference picture: A reference picture may be an image referred to by a unit so as to perform inter prediction or motion compensation. Alternatively, a reference picture may be an image including a reference unit referred to by a target unit so as to perform inter prediction or motion compensation.

Hereinafter, the terms "reference picture" and "reference image" may be used to have the same meaning, and may be used interchangeably with each other.

Reference picture list: A reference picture list may be a list including one or more reference images used for inter prediction or motion compensation.

- The types of a reference picture list may include List Combined (LC), List 0 (L0), List 1 (L1), List 2 (L2), List 3 (L3), etc.
- For inter prediction, one or more reference picture lists may be used.

Inter-prediction indicator: An inter-prediction indicator may indicate the inter-prediction direction for a target unit. Inter prediction may be one of unidirectional prediction and bidirectional prediction. Alternatively, the inter-prediction indicator may denote the number of reference pictures used to generate a prediction unit of a target unit. Alternatively, the inter-prediction indicator may denote the number of prediction blocks used for inter prediction or motion compensation of a target unit.

Prediction list utilization flag: A prediction list utilization flag may indicate whether a prediction unit is generated using at least one reference picture in a specific reference picture list.

- An inter-prediction indicator may be derived using the prediction list utilization flag. In contrast, the prediction list utilization flag may be derived using the inter-prediction indicator. For example, the case where the prediction list utilization flag indicates "0", which is a first value, may indicate that, for a target unit, a prediction block is not generated using a reference picture in a reference picture list. The case where the prediction list utilization flag indicates "1", which is a second value, may indicate that, for a target unit, a prediction unit is generated using the reference picture list.

Reference picture index: A reference picture index may be an index indicating a specific reference picture in a reference picture list.

Picture Order Count (POC): A POC value for a picture may denote an order in which the corresponding picture is displayed.

Motion vector (MV): A motion vector may be a 2D vector used for inter prediction or motion compensation. A motion vector may mean an offset between a target image and a reference image.

- For example, a MV may be represented in a form such as $(mv_x, mv_y)$. $mv_x$ may indicate a horizontal component, and $mv_y$ may indicate a vertical component.
- Search range: A search range may be a 2D area in which a search for a MV is performed during inter prediction. For example, the size of the search range may be MxN. M and N may be respective positive integers.

Motion vector candidate: A motion vector candidate may be a block that is a prediction candidate or the motion vector of the block that is a prediction candidate when a motion vector is predicted.

- A motion vector candidate may be included in a motion vector candidate list.

Motion vector candidate list: A motion vector candidate list may be a list configured using one or more motion vector candidates.

Motion vector candidate index: A motion vector candidate index may be an indicator for indicating a motion vector candidate in the motion vector candidate list. Alternatively, a motion vector candidate index may be the index of a motion vector predictor.

Motion information: Motion information may be information including at least one of a reference picture list, a reference image, a motion vector candidate, a motion vector candidate index, a merge candidate, and a merge index, as well as a motion vector, a reference picture index, and an inter-prediction indicator.

Merge candidate list: A merge candidate list may be a list configured using one or more merge candidates.

Merge candidate: A merge candidate may be a spatial merge candidate, a temporal merge candidate, a combined merge candidate, a combined bi-prediction merge candidate, a candidate based on a history, a candidate based on an average of two candidates, a zero-merge candidate, etc. A merge candidate may include an inter-prediction indicator, and may include motion information such as prediction type information, a reference picture index for each list, a motion vector, a prediction list utilization flag, and an inter-prediction indicator.

Merge index: A merge index may be an indicator for indicating a merge candidate in a merge candidate list.

- A merge index may indicate a reconstructed unit used to derive a merge candidate between a reconstructed unit spatially adjacent to a target unit and a reconstructed unit temporally adjacent to the target unit.
- A merge index may indicate at least one of pieces of motion information of a merge candidate.

Transform unit: A transform unit may be the base unit of residual signal encoding and/or residual signal decoding, such as transform, inverse transform, quantization, dequantization, transform coefficient encoding, and transform coefficient decoding. A single transform unit may be partitioned into multiple sub-transform units having a smaller size. Here, a transform may include one or more of a primary transform and a secondary transform, and an inverse transform may include one or more of a primary inverse transform and a secondary inverse transform.

Scaling: Scaling may denote a procedure for multiplying a factor by a transform coefficient level.

- As a result of scaling of the transform coefficient level, a transform coefficient may be generated. Scaling may also be referred to as "dequantization".

Quantization Parameter (QP): A quantization parameter may be a value used to generate a transform coefficient level for a transform coefficient in quantization. Alternatively, a quantization parameter may also be a value used to generate a transform coefficient by scaling the transform coefficient level in dequantization. Alternatively, a quantization parameter may be a value mapped to a quantization step size.

Delta quantization parameter: A delta quantization parameter may mean a difference value between a predicted quantization parameter and the quantization parameter of a target unit.

Scan: Scan may denote a method for aligning the order of coefficients in a unit, a block or a matrix. For example, a method for aligning a 2D array in the form of a one-dimensional (1D) array may be referred to as a "scan". Alternatively, a method for aligning a 1D array in the form of a 2D array may also be referred to as a "scan" or an "inverse scan".

Transform coefficient: A transform coefficient may be a coefficient value generated as an encoding apparatus performs a transform. Alternatively, the transform coefficient may be a coefficient value generated as a decoding apparatus performs at least one of entropy decoding and dequantization.

- A quantized level or a quantized transform coefficient level generated by applying quantization to a transform coefficient or a residual signal may also be included in the meaning of the term "transform coefficient".

Quantized level: A quantized level may be a value generated as the encoding apparatus performs quantization on a transform coefficient or a residual signal. Alternatively, the quantized level may be a value that is the target of dequantization as the decoding apparatus performs dequantization.

- A quantized transform coefficient level, which is the result of transform and quantization, may also be included in the meaning of a quantized level.

Non-zero transform coefficient: A non-zero transform coefficient may be a transform coefficient having a value other than 0 or a transform coefficient level having a value other than 0. Alternatively, a non-zero transform coefficient may be a transform coefficient, the magnitude of the value of which is not 0, or a transform coefficient level, the magnitude of the value of which is not 0.

Quantization matrix: A quantization matrix may be a matrix used in a quantization procedure or a dequantization procedure so as to improve the subjective image quality or objective image quality of an image. A quantization matrix may also be referred to as a "scaling list".

Quantization matrix coefficient: A quantization matrix coefficient may be each element in a quantization matrix. A quantization matrix coefficient may also be referred to as a "matrix coefficient".

Default matrix: A default matrix may be a quantization matrix predefined by the encoding apparatus and the decoding apparatus.

Non-default matrix: A non-default matrix may be a quantization matrix that is not predefined by the encoding apparatus and the decoding apparatus. The non-default matrix may mean a quantization matrix to be signaled from the encoding apparatus to the decoding apparatus by a user.

Most Probable Mode (MPM): An MPM may denote an intra-prediction mode having a high probability of being used for intra prediction for a target block.

An encoding apparatus and a decoding apparatus may determine one or more MPMs based on coding parameters related to the target block and the attributes of entities related to the target block.

The encoding apparatus and the decoding apparatus may determine one or more MPMs based on the intra-prediction mode of a reference block. The reference block may include multiple reference blocks. The multiple reference blocks may include spatial neighbor blocks adjacent to the left of the target block and spatial neighbor blocks adjacent to the top of the target block. In other words, depending on which intra-prediction modes have been used for the reference blocks, one or more different MPMs may be determined.

- The one or more MPMs may be determined in the same manner both in the encoding apparatus and in the decoding apparatus. That is, the encoding apparatus and the decoding apparatus may share the same MPM list including one or more MPMs.

MPM list: An MPM list may be a list including one or more MPMs. The number of the one or more MPMs in the MPM list may be defined in advance.

MPM indicator: An MPM indicator may indicate an MPM to be used for intra prediction for a target block among one or more MPMs in the MPM list. For example, the MPM indicator may be an index for the MPM list.

- Since the MPM list is determined in the same manner both in the encoding apparatus and in the decoding apparatus, there may be no need to transmit the MPM list itself from the encoding apparatus to the decoding apparatus.
- The MPM indicator may be signaled from the encoding apparatus to the decoding apparatus. As the MPM indicator is signaled, the decoding apparatus may determine the MPM to be used for intra prediction for the target block among the MPMs in the MPM list.

MPM use indicator: An MPM use indicator may indicate whether an MPM usage mode is to be used for prediction for a target block. The MPM usage mode may be a mode in which the MPM to be used for intra prediction for the target block is determined using the MPM list.

- The MPM use indicator may be signaled from the encoding apparatus to the decoding apparatus.

Signaling: "signaling" may denote that information is transferred from an encoding apparatus to a decoding apparatus. Alternatively, "signaling" may mean information is included in in a bitstream or a recoding medium by an encoding apparatus. Information signaled by an encoding apparatus may be used by a decoding apparatus.

- The encoding apparatus may generate encoded information by performing encoding on information to be signaled. The encoded information may be transmitted from the encoding apparatus to the decoding apparatus. The decoding apparatus may obtain information by decoding the transmitted encoded information. Here, the encoding may be entropy encoding, and the decoding may be entropy decoding.

Selective Signaling: Information may be signaled selectively. A selective signaling FOR information may mean that an encoding apparatus selectively includes information (according to a specific condition) in a bitstream or a recording medium. Selective signaling for information may mean that a decoding apparatus selectively extracts information from a bitstream (according to a specific condition).

Omission of signaling: Signaling for information may be omitted. Omission of signaling for information on information may mean that an encoding apparatus does not include information (according to a specific condition) in a bitstream or a recording medium. Omission of signaling for information may mean that a decoding apparatus does not extract information from a bitstream (according to a specific condition).

Statistic value: A variable, a coding parameter, a constant, etc. may have values that can be calculated. The statistic value may be a value generated by performing calculations (operations) on the values of specified targets. For example, the statistic value may indicate one or more of the average, weighted average, weighted sum, minimum value, maximum value, mode, median value, and interpolated value of the values of a specific variable, a specific coding parameter, a specific constant, or the like.

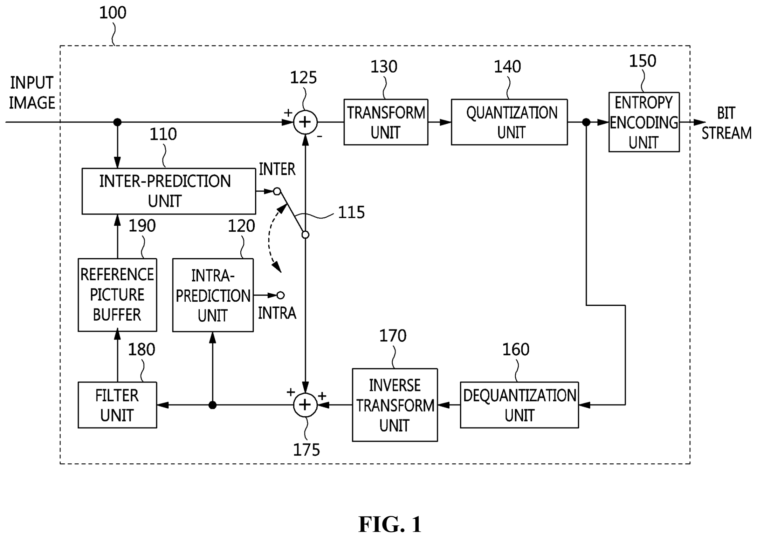

FIG. 1 is a block diagram illustrating the configuration of an embodiment of an encoding apparatus to which the present disclosure is applied.

An encoding apparatus 100 may be an encoder, a video encoding apparatus or an image encoding apparatus. A video may include one or more images (pictures). The encoding apparatus 100 may sequentially encode one or more images of the video.

Referring to FIG. 1, the encoding apparatus 100 includes an inter-prediction unit 110, an intra-prediction unit 120, a switch 115, a subtractor 125, a transform unit 130, a quantization unit 140, an entropy encoding unit 150, a dequantization (inverse quantization) unit 160, an inverse transform unit 170, an adder 175, a filter unit 180, and a reference picture buffer 190.

The encoding apparatus 100 may perform encoding on a target image using an intra mode and/or an inter mode. In other words, a prediction mode for a target block may be one of an intra mode and an inter mode.

Hereinafter, the terms "intra mode", "intra-prediction mode", "intra-picture mode" and "intra-picture prediction mode" may be used to have the same meaning, and may be used interchangeably with each other.

Hereinafter, the terms "inter mode", "inter-prediction mode", "inter-picture mode" and "inter-picture prediction mode" may be used to have the same meaning, and may be used interchangeably with each other.

Hereinafter, the term "image" may indicate only part of an image, or may indicate a block. Also, the processing of an "image" may indicate sequential processing of multiple blocks.

Further, the encoding apparatus 100 may generate a bitstream, including encoded information, via encoding on the target image, and may output and store the generated bitstream. The generated bitstream may be stored in a computer-readable storage medium and may be streamed through a wired and/or wireless transmission medium.

When the intra mode is used as a prediction mode, the switch 115 may switch to the intra mode. When the inter mode is used as a prediction mode, the switch 115 may switch to the inter mode.

The encoding apparatus 100 may generate a prediction block of a target block. Further, after the prediction block has been generated, the encoding apparatus 100 may encode a residual block for the target block using a residual between the target block and the prediction block.

When the prediction mode is the intra mode, the intra-prediction unit 120 may use pixels of previously encoded/decoded neighbor blocks adjacent to the target block as reference samples. The intra-prediction unit 120 may perform spatial prediction on the target block using the reference samples, and may generate prediction samples for the target block via spatial prediction. the prediction samples may mean samples in the prediction block.

The inter-prediction unit 110 may include a motion prediction unit and a motion compensation unit.

When the prediction mode is an inter mode, the motion prediction unit may search a reference image for the area most closely matching the target block in a motion prediction procedure, and may derive a motion vector for the target block and the found area based on the found area. Here, the motion-prediction unit may use a search range as a target area for searching.

The reference image may be stored in the reference picture buffer 190. More specifically, an encoded and/or decoded reference image may be stored in the reference picture buffer 190 when the encoding and/or decoding of the reference image have been processed.

Since a decoded picture is stored, the reference picture buffer 190 may be a Decoded Picture Buffer (DPB).

The motion compensation unit may generate a prediction block for the target block by performing motion compensation using a motion vector. Here, the motion vector may be a two-dimensional (2D) vector used for inter-prediction. Further, the motion vector may indicate an offset between the target image and the reference image.

The motion prediction unit and the motion compensation unit may generate a prediction block by applying an interpolation filter to a partial area of a reference image when the motion vector has a value other than an integer. In order to perform inter prediction or motion compensation, it may be determined which one of a skip mode, a merge mode, an advanced motion vector prediction (AMVP) mode, and a current picture reference mode corresponds to a method for predicting the motion of a PU included in a CU, based on the CU, and compensating for the motion, and inter prediction or motion compensation may be performed depending on the mode.

The subtractor 125 may generate a residual block, which is the differential between the target block and the prediction block. A residual block may also be referred to as a "residual signal".

The residual signal may be the difference between an original signal and a prediction signal. Alternatively, the residual signal may be a signal generated by transforming or quantizing the difference between an original signal and a prediction signal or by transforming and quantizing the difference. A residual block may be a residual signal for a block unit.

The transform unit 130 may generate a transform coefficient by transforming the residual block, and may output the generated transform coefficient. Here, the transform coefficient may be a coefficient value generated by transforming the residual block.

The transform unit 130 may use one of multiple predefined transform methods when performing a transform.

The multiple predefined transform methods may include a Discrete Cosine Transform (DCT), a Discrete Sine Transform (DST), a Karhunen-Loeve Transform (KLT), etc.

The transform method used to transform a residual block may be determined depending on at least one of coding parameters for a target block and/or a neighbor block. For example, the transform method may be determined based on at least one of an inter-prediction mode for a PU, an intra-prediction mode for a PU, the size of a TU, and the shape of a TU. Alternatively, transformation information indicating the transform method may be signaled from the encoding apparatus 100 to the decoding apparatus 200.

When a transform skip mode is used, the transform unit 130 may omit transforming the residual block.

By applying quantization to the transform coefficient, a quantized transform coefficient level or a quantized level may be generated. Hereinafter, in the embodiments, each of the quantized transform coefficient level and the quantized level may also be referred to as a 'transform coefficient'.

The quantization unit 140 may generate a quantized transform coefficient level (i.e., a quantized level or a quantized coefficient) by quantizing the transform coefficient depending on quantization parameters. The quantization unit 140 may output the quantized transform coefficient level that is generated. In this case, the quantization unit 140 may quantize the transform coefficient using a quantization matrix.

The entropy encoding unit 150 may generate a bitstream by performing probability distribution-based entropy encoding based on values, calculated by the quantization unit 140, and/or coding parameter values, calculated in the encoding procedure. The entropy encoding unit 150 may output the generated bitstream.

The entropy encoding unit 150 may perform entropy encoding on information about the pixels of the image and information required to decode the image. For example, the information required to decode the image may include syntax elements or the like.

When entropy encoding is applied, fewer bits may be assigned to more frequently occurring symbols, and more bits may be assigned to rarely occurring symbols. As symbols are represented by means of this assignment, the size of a bit string for target symbols to be encoded may be reduced. Therefore, the compression performance of video encoding may be improved through entropy encoding.

Further, for entropy encoding, the entropy encoding unit 150 may use a coding method such as exponential Golomb, Context-Adaptive Variable Length Coding (CAVLC), or Context-Adaptive Binary Arithmetic Coding (CABAC). For example, the entropy encoding unit 150 may perform entropy encoding using a Variable Length Coding/Code (VLC) table. For example, the entropy encoding unit 150 may derive a binarization method for a target symbol. Further, the entropy encoding unit 150 may derive a probability model for a target symbol/bin. The entropy encoding unit 150 may perform arithmetic coding using the derived binarization method, a probability model, and a context model.

The entropy encoding unit 150 may transform the coefficient of the form of a 2D block into the form of a 1D vector through a transform coefficient scanning method so as to encode a quantized transform coefficient level.

The coding parameters may be information required for encoding and/or decoding. The coding parameters may include information encoded by the encoding apparatus 100 and transferred from the encoding apparatus 100 to a decoding apparatus, and may also include information that may be derived in the encoding or decoding procedure. For example, information transferred to the decoding apparatus may include syntax elements.

The coding parameters may include not only information (or a flag or an index), such as a syntax element, which is encoded by the encoding apparatus and is signaled by the encoding apparatus to the decoding apparatus, but also information derived in an encoding or decoding process. Further, the coding parameters may include information required so as to encode or decode images. For example, the coding parameters may include at least one value, combinations or statistics of a size of a unit/block, a shape/form of a unit/block, a depth of a unit/block, partition information of a unit/block, a partition structure of a unit/block, information indicating whether a unit/block is partitioned in a quad-tree structure, information indicating whether a unit/block is partitioned in a binary tree structure, a partitioning direction of a binary tree structure (horizontal direction or vertical direction), a partitioning form of a binary tree structure (symmetrical partitioning or asymmetrical partitioning), information indicating whether a unit/block is partitioned in a ternary tree structure, a partitioning direction of a ternary tree structure (horizontal direction or vertical direction), a partitioning form of a ternary tree structure (symmetrical partitioning or asymmetrical partitioning, etc.), information indicating whether a unit/block is partitioned in a multi-type tree structure, a combination and a direction (horizontal direction or vertical direction, etc.) of a partitioning of the multi-type tree structure, a partitioning form of a multi-type tree structure (symmetrical partitioning or asymmetrical partitioning, etc.), a partitioning tree (a binary tree or a ternary tree) of the multi-type tree form, a type of a prediction (intra prediction or inter prediction), an intra-prediction mode/direction, an intra luma prediction mode/direction, an intra chroma prediction mode/direction, an intra partitioning information, an inter partitioning information, a coding block partitioning flag, a prediction block partitioning flag, a transform block partitioning flag, a reference sample filtering method, a reference sample filter tap, a reference sample filter coefficient, a prediction block filtering method, a prediction block filter tap, a prediction block filter coefficient, a prediction block boundary filtering method, a prediction block boundary filter tap, a prediction block boundary filter coefficient, an inter-prediction mode, motion information, a motion vector, a motion vector difference, a reference picture index, an inter-prediction direction, an inter-prediction indicator, a prediction list utilization flag, a reference picture list, a reference image, a POC, a motion vector predictor, a motion vector prediction index, a motion vector prediction candidate, a motion vector candidate list, information indicating whether a merge mode is used, a merge index, a merge candidate, a merge candidate list, information indicating whether a skip mode is used, a type of an interpolation filter, a tap of an interpolation filter, a filter coefficient of an interpolation filter, a magnitude of a motion vector, accuracy of motion vector representation, a transform type, a transform size, information indicating whether a first transform is used, information indicating whether an additional (secondary) transform is used, first transform selection information (or a first transform index), secondary transform selection information (or a secondary transform index), information indicating a presence or absence of a residual signal, a coded block pattern, a coded block flag, a quantization parameter, a residual quantization parameter, a quantization matrix, information about an intra-loop filter, information indicating whether an intra-loop filter is applied, a coefficient of an intra-loop filter, a tap of an intra-loop filter, a shape/form of an intra-loop filter, information indicating whether a deblocking filter is applied, a coefficient of a deblocking filter, a tap of a deblocking filter, deblocking filter strength, a shape/form of a deblocking filter, information indicating whether an adaptive sample offset is applied, a value of an adaptive sample offset, a category of an adaptive sample offset, a type of an adaptive sample offset, information indicating whether an adaptive in-loop filter is applied, a coefficient of an adaptive in-loop filter, a tap of an adaptive in-loop filter, a shape/form of an adaptive in-loop filter, a binarization/inverse binarization method, a context model, a context model decision method, a context model update method, information indicating whether a regular mode is performed, information whether a bypass mode is performed, a significant coefficient flag, a last significant coefficient flag, a coding flag for a coefficient group, a position of a last significant coefficient, information indicating whether a value of a coefficient is greater than 1, information indicating whether a value of a coefficient is greater than 2, information indicating whether a value of a coefficient is greater than 3, a remaining coefficient value information, a sign information, a reconstructed luma sample, a reconstructed chroma sample, a context bin, a bypass bin, a residual luma sample, a residual chroma sample, a transform coefficient, a luma transform coefficient, a chroma transform coefficient, a quantized level, a luma quantized level, a chroma quantized level, a transform coefficient level, a transform coefficient level scanning method, a size of a motion vector search region on a side of a decoding apparatus, a shape/form of a motion vector search region on a side of a decoding apparatus, the number of a motion vector search on a side of a decoding apparatus, a size of a CTU, a minimum block size, a maximum block size, a maximum block depth, a minimum block depth, an image display/output order, slice identification information, a slice type, slice partition information, tile group identification information, a tile group type, a tile group partitioning information, tile identification information, a tile type, tile partitioning information, a picture type, bit depth, input sample bit depth, reconstructed sample bit depth, residual sample bit depth, transform coefficient bit depth, quantized level bit depth, information about a luma signal, information about a chroma signal, a color space of a target block and a color space of a residual block. Further, the above-described coding parameter-related information may also be included in the coding parameter. Information used to calculate and/or derive the above-described coding parameter may also be included in the coding parameter. Information calculated or derived using the above-described coding parameter may also be included in the coding parameter.

The first transform selection information may indicate a first transform which is applied to a target block.

The second transform selection information may indicate a second transform which is applied to a target block.

The residual signal may denote the difference between the original signal and a prediction signal. Alternatively, the residual signal may be a signal generated by transforming the difference between the original signal and the prediction signal. Alternatively, the residual signal may be a signal generated by transforming and quantizing the difference between the original signal and the prediction signal. A residual block may be the residual signal for a block.

Here, signaling information may mean that the encoding apparatus 100 includes an entropy-encoded information, generated by performing entropy encoding a flag or an index, in a bitstream, and that the decoding apparatus 200 acquires information by performing entropy decoding on the entropy-encoded information, extracted from the bitstream. Here, the information may comprise a flag, an index, etc.

A signal may mean information to be signaled. Hereinafter, information for an image and a block may be referred to as a signal. Further, hereinafter, the terms "information" and "signal" may be used to have the same meaning and may be used interchangeably with each other. For example, a specific signal may be a signal representing a specific block. An original signal may be a signal representing a target block. A prediction signal may be a signal representing a prediction block. A residual signal may be a signal representing a residual block.

A bitstream may include information based on a specific syntax. The encoding apparatus 100 may generate a bitstream including information depending on a specific syntax. The decoding apparatus 200 may acquire information from the bitstream depending on a specific syntax.

Since the encoding apparatus 100 performs encoding via inter prediction, the encoded target image may be used as a reference image for additional image(s) to be subsequently processed. Therefore, the encoding apparatus 100 may reconstruct or decode the encoded target image and store the reconstructed or decoded image as a reference image in the reference picture buffer 190. For decoding, dequantization and inverse transform on the encoded target image may be processed.

The quantized level may be inversely quantized by the dequantization unit 160, and may be inversely transformed by the inverse transform unit 170. The dequantization unit 160 may generate an inversely quantized coefficient by performing inverse transform for the quantized level. The inverse transform unit 170 may generate a inversely quantized and inversely transformed coefficient by performing inverse transform for the inversely quantized coefficient.

The inversely quantized and inversely transformed coefficient may be added to the prediction block by the adder 175. The inversely quantized and inversely transformed coefficient and the prediction block are added, and then a reconstructed block may be generated. Here, the inversely quantized and/or inversely transformed coefficient may denote a coefficient on which one or more of dequantization and inverse transform are performed, and may also denote a reconstructed residual block. Here, the reconstructed block may mean a recovered block or a decoded block.

The reconstructed block may be subjected to filtering through the filter unit 180. The filter unit 180 may apply one or more of a deblocking filter, a Sample Adaptive Offset (SAO) filter, an Adaptive Loop Filter (ALF), and a Non Local Filter (NLF) to a reconstructed sample, the reconstructed block or a reconstructed picture. The filter unit 180 may also be referred to as an "in-loop filter".

The deblocking filter may eliminate block distortion occurring at the boundaries between blocks in a reconstructed picture. In order to determine whether to apply the deblocking filter, the number of columns or rows which are included in a block and which include pixel(s) based on which it is determined whether to apply the deblocking filter to a target block may be decided on.

When the deblocking filter is applied to the target block, the applied filter may differ depending on the strength of the required deblocking filtering. In other words, among different filters, a filter decided on in consideration of the strength of deblocking filtering may be applied to the target block. When a deblocking filter is applied to a target block, one or more filters of a long-tap filter, a strong filter, a weak filter and Gaussian filter may be applied to the target block depending on the strength of required deblocking filtering.

Also, when vertical filtering and horizontal filtering are performed on the target block, the horizontal filtering and the vertical filtering may be processed in parallel.

The SAO may add a suitable offset to the values of pixels to compensate for coding error. The SAO may perform, for the image to which deblocking is applied, correction that uses an offset in the difference between an original image and the image to which deblocking is applied, on a pixel basis. To perform an offset correction for an image, a method for dividing the pixels included in the image into a certain number of regions, determining a region to which an offset is to be applied, among the divided regions, and applying an offset to the determined region may be used, and a method for applying an offset in consideration of edge information of each pixel may also be used.

The ALF may perform filtering based on a value obtained by comparing a reconstructed image with an original image. After pixels included in an image have been divided into a predetermined number of groups, filters to be applied to each group may be determined, and filtering may be differentially performed for respective groups. information related to whether to apply an adaptive loop filter may be signaled for each CU. Such information may be signaled for a luma signal. The shapes and filter coefficients of ALFs to be applied to respective blocks may differ for respective blocks. Alternatively, regardless of the features of a block, an ALF having a fixed form may be applied to the block.

A non-local filter may perform filtering based on reconstructed blocks, similar to a target block. A region similar to the target block may be selected from a reconstructed picture, and filtering of the target block may be performed using the statistical properties of the selected similar region. Information about whether to apply a non-local filter may be signaled for a Coding Unit (CU). Also, the shapes and filter coefficients of the non-local filter to be applied to blocks may differ depending on the blocks.

The reconstructed block or the reconstructed image subjected to filtering through the filter unit 180 may be stored in the reference picture buffer 190 as a reference picture. The reconstructed block subjected to filtering through the filter unit 180 may be a part of a reference picture. In other words, the reference picture may be a reconstructed picture composed of reconstructed blocks subjected to filtering through the filter unit 180. The stored reference picture may be subsequently used for inter prediction or a motion compensation.

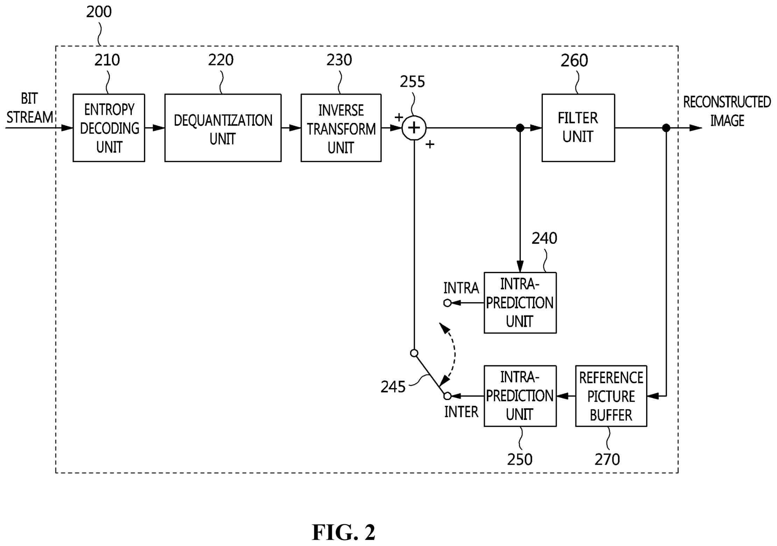

FIG. 2 is a block diagram illustrating the configuration of an embodiment of a decoding apparatus to which the present disclosure is applied.

A decoding apparatus 200 may be a decoder, a video decoding apparatus or an image decoding apparatus.

Referring to FIG. 2, the decoding apparatus 200 may include an entropy decoding unit 210, a dequantization (inverse quantization) unit 220, an inverse transform unit 230, an intra-prediction unit 240, an inter-prediction unit 250, a switch 245 an adder 255, a filter unit 260, and a reference picture buffer 270.

The decoding apparatus 200 may receive a bitstream output from the encoding apparatus 100. The decoding apparatus 200 may receive a bitstream stored in a computer-readable storage medium, and may receive a bitstream that is streamed through a wired/wireless transmission medium.

The decoding apparatus 200 may perform decoding on the bitstream in an intra mode and/or an inter mode. Further, the decoding apparatus 200 may generate a reconstructed image or a decoded image via decoding, and may output the reconstructed image or decoded image.

For example, switching to an intra mode or an inter mode based on the prediction mode used for decoding may be performed by the switch 245. When the prediction mode used for decoding is an intra mode, the switch 245 may be operated to switch to the intra mode. When the prediction mode used for decoding is an inter mode, the switch 245 may be operated to switch to the inter mode.

The decoding apparatus 200 may acquire a reconstructed residual block by decoding the input bitstream, and may generate a prediction block. When the reconstructed residual block and the prediction block are acquired, the decoding apparatus 200 may generate a reconstructed block, which is the target to be decoded, by adding the reconstructed residual block and the prediction block.

The entropy decoding unit 210 may generate symbols by performing entropy decoding on the bitstream based on the probability distribution of a bitstream. The generated symbols may include symbols in a form of a quantized transform coefficient level (i.e., a quantized level or a quantized coefficient). Here, the entropy decoding method may be similar to the above-described entropy encoding method. That is, the entropy decoding method may be the reverse procedure of the above-described entropy encoding method.

The entropy decoding unit 210 may change a coefficient having a one-dimensional (1D) vector form to a 2D block shape through a transform coefficient scanning method in order to decode a quantized transform coefficient level.

For example, the coefficients of the block may be changed to 2D block shapes by scanning the block coefficients using up-right diagonal scanning. Alternatively, which one of up-right diagonal scanning, vertical scanning, and horizontal scanning is to be used may be determined depending on the size and/or the intra-prediction mode of the corresponding block.

The quantized coefficient may be inversely quantized by the dequantization unit 220. The dequantization unit 220 may generate an inversely quantized coefficient by performing dequantization on the quantized coefficient. Further, the inversely quantized coefficient may be inversely transformed by the inverse transform unit 230. The inverse transform unit 230 may generate a reconstructed residual block by performing an inverse transform on the inversely quantized coefficient. As a result of performing dequantization and the inverse transform on the quantized coefficient, the reconstructed residual block may be generated. Here, the dequantization unit 220 may apply a quantization matrix to the quantized coefficient when generating the reconstructed residual block.

When the intra mode is used, the intra-prediction unit 240 may generate a prediction block by performing spatial prediction that uses the pixel values of previously decoded neighbor blocks adjacent to a target block for the target block.

The inter-prediction unit 250 may include a motion compensation unit. Alternatively, the inter-prediction unit 250 may be designated as a "motion compensation unit".

When the inter mode is used, the motion compensation unit may generate a prediction block by performing motion compensation that uses a motion vector and a reference image stored in the reference picture buffer 270 for the target block.

The motion compensation unit may apply an interpolation filter to a partial area of the reference image when the motion vector has a value other than an integer, and may generate a prediction block using the reference image to which the interpolation filter is applied. In order to perform motion compensation, the motion compensation unit may determine which one of a skip mode, a merge mode, an Advanced Motion Vector Prediction (AMVP) mode, and a current picture reference mode corresponds to the motion compensation method used for a PU included in a CU, based on the CU, and may perform motion compensation depending on the determined mode.

The reconstructed residual block and the prediction block may be added to each other by the adder 255. The adder 255 may generate a reconstructed block by adding the reconstructed residual block to the prediction block.

The reconstructed block may be subjected to filtering through the filter unit 260. The filter unit 260 may apply at least one of a deblocking filter, an SAO filter, an ALF, and a NLF to the reconstructed block or the reconstructed image. The reconstructed image may be a picture including the reconstructed block.

The filter unit may output the reconstructed image.

The reconstructed image and/or the reconstructed block subjected to filtering through the filter unit 260 may be stored as a reference picture in the reference picture buffer 270. The reconstructed block subjected to filtering through the filter unit 260 may be a part of the reference picture. In other words, the reference picture may be an image composed of reconstructed blocks subjected to filtering through the filter unit 260. The stored reference picture may be subsequently used for inter prediction or a motion compensation.

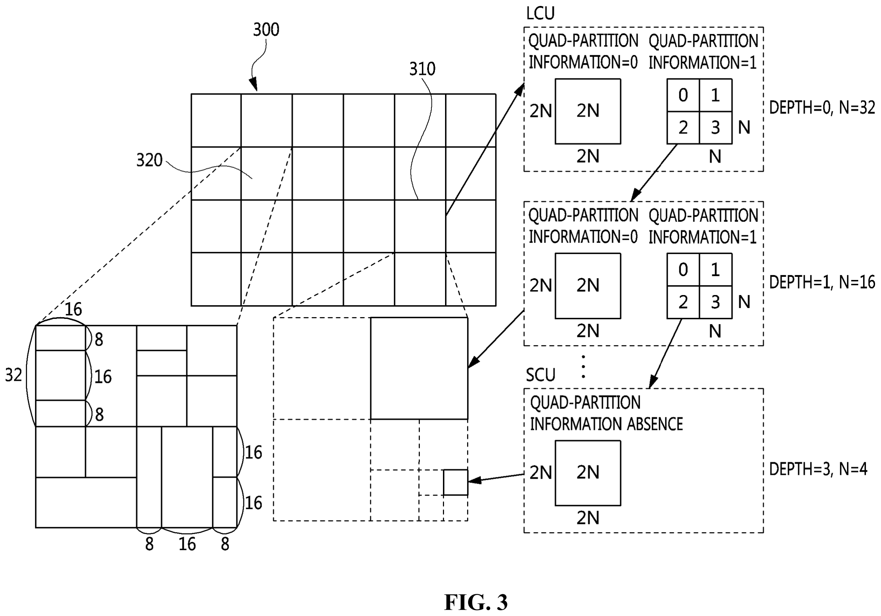

FIG. 3 is a diagram schematically illustrating the partition structure of an image when the image is encoded and decoded.

FIG. 3 may schematically illustrate an example in which a single unit is partitioned into multiple sub-units.

In order to efficiently partition the image, a Coding Unit (CU) may be used in encoding and decoding. The term "unit" may be used to collectively designate 1) a block including image samples and 2) a syntax element. For example, the "partitioning of a unit" may mean the "partitioning of a block corresponding to a unit".

A CU may be used as a base unit for image encoding/decoding. A CU may be used as a unit to which one mode selected from an intra mode and an inter mode in image encoding/decoding is applied. In other words, in image encoding/decoding, which one of an intra mode and an inter mode is to be applied to each CU may be determined.

Further, a CU may be a base unit in prediction, transform, quantization, inverse transform, dequantization, and encoding/decoding of transform coefficients.

Referring to FIG. 3, an image 200 may be sequentially partitioned into units corresponding to a Largest Coding Unit (LCU), and a partition structure may be determined for each LCU. Here, the LCU may be used to have the same meaning as a Coding Tree Unit (CTU).

The partitioning of a unit may mean the partitioning of a block corresponding to the unit. Block partition information may include depth information about the depth of a unit. The depth information may indicate the number of times the unit is partitioned and/or the degree to which the unit is partitioned. A single unit may be hierarchically partitioned into a plurality of sub-units while having depth information based on a tree structure.

Each of partitioned sub-units may have depth information. The depth information may be information indicating the size of a CU. The depth information may be stored for each CU.

Each CU may have depth information. When the CU is partitioned, CUs resulting from partitioning may have a depth increased from the depth of the partitioned CU by 1.

The partition structure may mean the distribution of Coding Units (CUs) to efficiently encode the image in an LCU 310. Such a distribution may be determined depending on whether a single CU is to be partitioned into multiple CUs. The number of CUs generated by partitioning may be a positive integer of 2 or more, including 2, 3, 4, 8, 16, etc.

The horizontal size and the vertical size of each of CUs generated by the partitioning may be less than the horizontal size and the vertical size of a CU before being partitioned, depending on the number of CUs generated by partitioning. For example, the horizontal size and the vertical size of each of CUs generated by the partitioning may be half of the horizontal size and the vertical size of a CU before being partitioned.

Each partitioned CU may be recursively partitioned into four CUs in the same way. Via the recursive partitioning, at least one of the horizontal size and the vertical size of each partitioned CU may be reduced compared to at least one of the horizontal size and the vertical size of the CU before being partitioned.

The partitioning of a CU may be recursively performed up to a predefined depth or a predefined size.

For example, the depth of a CU may have a value ranging from 0 to 3. The size of the CU may range from a size of 64x64 to a size of 8x8 depending on the depth of the CU.

For example, the depth of an LCU 310 may be 0, and the depth of a Smallest Coding Unit (SCU) may be a predefined maximum depth. Here, as described above, the LCU may be the CU having the maximum coding unit size, and the SCU may be the CU having the minimum coding unit size.

Partitioning may start at the LCU 310, and the depth of a CU may be increased by 1 whenever the horizontal and/or vertical sizes of the CU are reduced by partitioning.

For example, for respective depths, a CU that is not partitioned may have a size of 2Nx2N. Further, in the case of a CU that is partitioned, a CU having a size of 2Nx2N may be partitioned into four CUs, each having a size of NxN. The value of N may be halved whenever the depth is increased by 1.

Referring to FIG. 3, an LCU having a depth of 0 may have 64x64 pixels or 64x64 blocks. 0 may be a minimum depth. An SCU having a depth of 3 may have 8x8 pixels or 8x8 blocks. 3 may be a maximum depth. Here, a CU having 64x64 blocks, which is the LCU, may be represented by a depth of 0. A CU having 32x32 blocks may be represented by a depth of 1. A CU having 16x16 blocks may be represented by a depth of 2. A CU having 8x8 blocks, which is the SCU, may be represented by a depth of 3.

Information about whether the corresponding CU is partitioned may be represented by the partition information of the CU. The partition information may be 1-bit information. All CUs except the SCU may include partition information. For example, the value of the partition information of a CU that is not partitioned may be a first value. The value of the partition information of a CU that is partitioned may be a second value. When the partition information indicates whether a CU is partitioned or not, the first value may be "0" and the second value may be "1".

For example, when a single CU is partitioned into four CUs, the horizontal size and vertical size of each of four CUs generated by partitioning may be half the horizontal size and the vertical size of the CU before being partitioned. When a CU having a 32x32 size is partitioned into four CUs, the size of each of four partitioned CUs may be 16x16. When a single CU is partitioned into four CUs, it may be considered that the CU has been partitioned in a quad-tree structure. In other words, it may be considered that a quad-tree partition has been applied to a CU.

For example, when a single CU is partitioned into two CUs, the horizontal size or the vertical size of each of two CUs generated by partitioning may be half the horizontal size or the vertical size of the CU before being partitioned. When a CU having a 32x32 size is vertically partitioned into two CUs, the size of each of two partitioned CUs may be 16x32. When a CU having a 32x32 size is horizontally partitioned into two CUs, the size of each of two partitioned CUs may be 32x16.

When a single CU is partitioned into two CUs, it may be considered that the CU has been partitioned in a binary-tree structure. In other words, it may be considered that a binary-tree partition has been applied to a CU.

For example, when a single CU is partitioned (or split) into three CUs, the original CU before being partitioned is partitioned so that the horizontal size or vertical size thereof is divided at a ratio of 1:2:1, thus enabling three sub-CUs to be generated. For example, when a CU having a 16x32 size is horizontally partitioned into three sub-CUs, the three sub-CUs resulting from the partitioning may have sizes of 16x8, 16x16, and 16x8, respectively, in a direction from the top to the bottom. For example, when a CU having a 32x32 size is vertically partitioned into three sub-CUs, the three sub-CUs resulting from the partitioning may have sizes of 8x32, 16x32, and 8x32, respectively, in a direction from the left to the right. When a single CU is partitioned into three CUs, it may be considered that the CU is partitioned in a ternary-tree form. In other words, it may be considered that a ternary-tree partition has been applied to the CU.

Both of quad-tree partitioning and binary-tree partitioning are applied to the LCU 310 of FIG. 3.

In the encoding apparatus 100, a Coding Tree Unit (CTU) having a size of 64x64 may be partitioned into multiple smaller CUs by a recursive quad-tree structure. A single CU may be partitioned into four CUs having the same size. Each CU may be recursively partitioned, and may have a quad-tree structure.

By the recursive partitioning of a CU, an optimal partitioning method that incurs a minimum rate-distortion cost may be selected.

The Coding Tree Unit (CTU) 320 in FIG. 3 is an example of a CTU to which all of a quad-tree partition, a binary-tree partition, and a ternary-tree partition are applied.

As described above, in order to partition a CTU, at least one of a quad-tree partition, a binary-tree partition, and a ternary-tree partition may be applied to the CTU. Partitions may be applied based on specific priority.

For example, a quad-tree partition may be preferentially applied to the CTU. A CU that cannot be partitioned in a quad-tree form any further may correspond to a leaf node of a quad-tree. A CU corresponding to the leaf node of the quad-tree may be a root node of a binary tree and/or a ternary tree. That is, the CU corresponding to the leaf node of the quad-tree may be partitioned in a binary-tree form or a ternary-tree form, or may not be partitioned any further. In this case, each CU, which is generated by applying a binary-tree partition or a ternary-tree partition to the CU corresponding to the leaf node of a quad-tree, is prevented from being subjected again to quad-tree partitioning, thus effectively performing partitioning of a block and/or signaling of block partition information.

The partition of a CU corresponding to each node of a quad-tree may be signaled using quad-partition information. Quad-partition information having a first value (e.g., "1") may indicate that the corresponding CU is partitioned in a quad-tree form. Quad-partition information having a second value (e.g., "0") may indicate that the corresponding CU is not partitioned in a quad-tree form. The quad-partition information may be a flag having a specific length (e.g., 1 bit).

Priority may not exist between a binary-tree partition and a ternary-tree partition. That is, a CU corresponding to the leaf node of a quad-tree may be partitioned in a binary-tree form or a ternary-tree form. Also, the CU generated through a binary-tree partition or a ternary-tree partition may be further partitioned in a binary-tree form or a ternary-tree form, or may not be partitioned any further.

Partitioning performed when priority does not exist between a binary-tree partition and a ternary-tree partition may be referred to as a "multi-type tree partition". That is, a CU corresponding to the leaf node of a quad-tree may be the root node of a multi-type tree. Partitioning of a CU corresponding to each node of the multi-type tree may be signaled using at least one of information indicating whether the CU is partitioned in a multi-type tree, partition direction information, and partition tree information. For partitioning of a CU corresponding to each node of a multi-type tree, information indicating whether partitioning in the multi-type tree is performed, partition direction information, and partition tree information may be sequentially signaled.

For example, information indicating whether a CU is partitioned in a multi-type tree and having a first value (e.g., "1") may indicate that the corresponding CU is partitioned in a multi-type tree form. Information indicating whether a CU is partitioned in a multi-type tree and having a second value (e.g., "0") may indicate that the corresponding CU is not partitioned in a multi-type tree form.

When a CU corresponding to each node of a multi-type tree is partitioned in a multi-type tree form, the corresponding CU may further include partition direction information.

The partition direction information may indicate the partition direction of the multi-type tree partition. Partition direction information having a first value (e.g., "1") may indicate that the corresponding CU is partitioned in a vertical direction. Partition direction information having a second value (e.g., "0") may indicate that the corresponding CU is partitioned in a horizontal direction.

When a CU corresponding to each node of a multi-type tree is partitioned in a multi-type tree form, the corresponding CU may further include partition-tree information. The partition-tree information may indicate the tree that is used for a multi-type tree partition.

For example, partition-tree information having a first value (e.g., "1") may indicate that the corresponding CU is partitioned in a binary-tree form. Partition-tree information having a second value (e.g., "0") may indicate that the corresponding CU is partitioned in a ternary-tree form.

Here, each of the above-described information indicating whether partitioning in the multi-type tree is performed, partition-tree information, and partition direction information may be a flag having a specific length (e.g., 1 bit).

At least one of the above-described quad-partition information, information indicating whether partitioning in the multi-type tree is performed, partition direction information, and partition-tree information may be entropy-encoded and/or entropy-decoded. In order to perform entropy encoding/decoding of such information, information of a neighbor CU adjacent to a target CU may be used.

For example, it may be considered that there is a high probability that the partition form of a left CU and/or an above CU (i.e., partitioning/non-partitioning, a partition tree and/or a partition direction) and the partition form of a target CU will be similar to each other. Therefore, based on the information of a neighbor CU, context information for entropy encoding and/or entropy decoding of the information of the target CU may be derived. Here, the information of the neighbor CU may include at least one of 1) quad-partition information of the neighbor CU, 2) information indicating whether the neighbor CU is partitioned in a multi-type tree, 3) partition direction information of the neighbor CU, and 4) partition-tree information of the neighbor CU.

In another embodiment, of a binary-tree partition and a ternary-tree partition, the binary-tree partition may be preferentially performed. That is, the binary-tree partition may be first applied, and then a CU corresponding to the leaf node of a binary tree may be set to the root node of a ternary tree. In this case, a quad-tree partition or a binary-tree partition may not be performed on the CU corresponding to the node of the ternary tree.

A CU, which is not partitioned any further through a quad-tree partition, a binary-tree partition, and/or a ternary-tree partition, may be the unit of encoding, prediction and/or transform. That is, the CU may not be partitioned any further for prediction and/or transform. Therefore, a partition structure for partitioning the CU into Prediction Units (PUs) and/or Transform Units (TUs), partition information thereof, etc. may not be present in a bitstream.

However, when the size of a CU, which is the unit of partitioning, is greater than the size of a maximum transform block, the CU may be recursively partitioned until the size of the CU becomes less than or equal to the size of the maximum transform block. For example, when the size of a CU is 64x64 and the size of the maximum transform block is 32x32, the CU may be partitioned into four 32x32 blocks so as to perform a transform. For example, when the size of a CU is 32x64 and the size of the maximum transform block is 32x32, the CU may be partitioned into two 32x32 blocks.

In this case, information indicating whether a CU is partitioned for a transform may not be separately signaled. Without signaling, whether a CU is partitioned may be determined via a comparison between the horizontal size (and/or vertical size) of the CU and the horizontal size (and/or vertical size) of the maximum transform block. For example, when the horizontal size of the CU is greater than the horizontal size of the maximum transform block, the CU may be vertically bisected. Further, when the vertical size of the CU is greater than the vertical size of the maximum transform block, the CU may be horizontally bisected.

Information about the maximum size and/or minimum size of a CU and information about the maximum size and/or minimum size of a transform block may be signaled or determined at a level higher than that of the CU. For example, the higher level may be a sequence level, a picture level, a tile level, a tile group level or a slice level. For example, the minimum size of the CU may be set to 4x4. For example, the maximum size of the transform block may be set to 64x64. For example, the maximum size of the transform block may be set to 4x4.

Information about the minimum size of a CU corresponding to the leaf node of a quad-tree (i.e., the minimum size of the quad-tree) and/or information about the maximum depth of a path from the root node to the leaf node of a multi-type tree (i.e., the maximum depth of a multi-type tree) may be signaled or determined at a level higher than that of the CU. For example, the higher level may be a sequence level, a picture level, a slice level, a tile group level or a tile level. Information about the minimum size of a quad-tree and/or information about the maximum depth of a multi-type tree may be separately signaled or determined at each of an intra-slice level and an inter-slice level.

Information about the difference between the size of a CTU and the maximum size of a transform block may be signaled or determined at a level higher than that of a CU. For example, the higher level may be a sequence level, a picture level, a slice level, a tile group level or a tile level. Information about the maximum size of a CU corresponding to each node of a binary tree (i.e., the maximum size of the binary tree) may be determined based on the size and the difference information of a CTU. The maximum size of a CU corresponding to each node of a ternary tree (i.e., the maximum size of the ternary tree) may have different values depending on the type of slice. For example, the maximum size of the ternary tree at an intra-slice level may be 32x32. For example, the maximum size of the ternary tree at an inter-slice level may be 128x128. For example, the minimum size of a CU corresponding to each node of a binary tree (i.e., the minimum size of the binary tree) and/or the minimum size of a CU corresponding to each node of a ternary tree (i.e., the minimum size of the ternary tree) may be set to the minimum size of a CU.

In a further example, the maximum size of a binary tree and/or the maximum size of a ternary tree may be signaled or determined at a slice level. Also, the minimum size of a binary tree and/or the minimum size of a ternary tree may be signaled or determined at a slice level.

Based on the above-described various block sizes and depths, quad-partition information, information indicating whether partitioning in a multi-type tree is performed, partition tree information and/or partition direction information may or may not be present in a bitstream.

For example, when the size of a CU is not greater than the minimum size of a quad-tree, the CU may not include quad-partition information, and quad-partition information of the CU may be inferred as a second value.

For example, when the size of a CU corresponding to each node of a multi-type tree (horizontal size and vertical size) is greater than the maximum size of a binary tree (horizontal size and vertical size) and/or the maximum size of a ternary tree (horizontal size and vertical size), the CU may not be partitioned in a binary-tree form and/or a ternary-tree form. By means of this determination manner, information indicating whether partitioning in a multi-type tree is performed may not be signaled, but may be inferred as a second value.

Alternatively, when the size of a CU corresponding to each node of a multi-type tree (horizontal size and vertical size) is equal to the minimum size of a binary tree (horizontal size and vertical size), or when the size of a CU (horizontal size and vertical size) is equal to twice the minimum size of a ternary tree (horizontal size and vertical size), the CU may not be partitioned in a binary tree form and/or a ternary tree form. By means of this determination manner, information indicating whether partitioning in a multi-type tree is performed may not be signaled, but may be inferred as a second value. The reason for this is that, when a CU is partitioned in a binary tree form and/or a ternary tree form, a CU smaller than the minimum size of the binary tree and/or the minimum size of the ternary tree is generated.

Alternatively, a binary-tree partition or a ternary-tree partition may be limited based on the size of a virtual pipeline data unit (i.e., the size of a pipeline buffer). For example, when a CU is partitioned into sub-CUs unsuitable for the size of a pipeline buffer through a binary-tree partition or a ternary-tree partition, a binary-tree partition or a ternary-tree partition may be limited. The size of the pipeline buffer may be equal to the maximum size of a transform block (e.g., 64x64).

For example, when the size of the pipeline buffer is 64x64, the following partitions may be limited.

- Ternary-tree partition for NxM CU (where N and/or M are 128)
- Horizontal binary-tree partition for 128xN CU (where N <= 64)
- Vertical binary-tree partition for Nx128 CU (where N <= 64)

Alternatively, when the depth of a CU corresponding to each node of a multi-type tree is equal to the maximum depth of the multi-type tree, the CU may not be partitioned in a binary-tree form and/or a ternary-tree form. By means of this determination manner, information indicating whether partitioning in a multi-type tree is performed may not be signaled, but may be inferred as a second value.

Alternatively, information indicating whether partitioning in a multi-type tree is performed may be signaled only when at least one of a vertical binary-tree partition, a horizontal binary-tree partition, a vertical ternary-tree partition, and a horizontal ternary-tree partition is possible for a CU corresponding to each node of a multi-type tree. Otherwise, the CU may not be partitioned in a binary-tree form and/or a ternary-tree form. By means of this determination manner, information indicating whether partitioning in a multi-type tree is performed may not be signaled, but may be inferred as a second value.

Alternatively, partition direction information may be signaled only when both a vertical binary-tree partition and a horizontal binary-tree partition are possible or only when both a vertical ternary-tree partition and a horizontal ternary-tree partition are possible, for a CU corresponding to each node of a multi-type tree. Otherwise, the partition direction information may not be signaled, but may be inferred as a value indicating the direction in which the CU can be partitioned.

Alternatively, partition tree information may be signaled only when both a vertical binary-tree partition and a vertical ternary-tree partition are possible or only when both a horizontal binary-tree partition and a horizontal ternary-tree partition are possible, for a CU corresponding to each node of a multi-type tree. Otherwise, the partition tree information may not be signaled, but may be inferred as a value indicating a tree that can be applied to the partition of the CU.

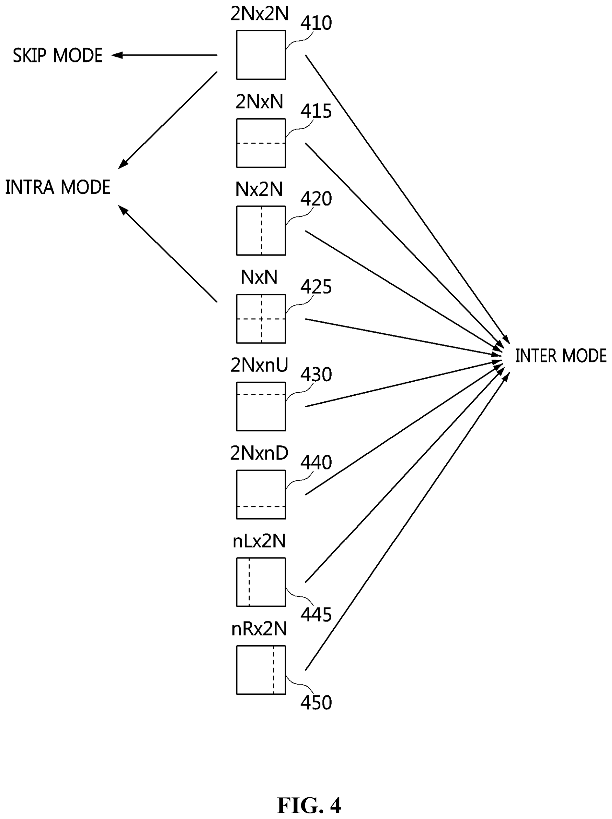

FIG. 4 is a diagram illustrating the form of a Prediction Unit that a Coding Unit can include.

When, among CUs partitioned from an LCU, a CU, which is not partitioned any further, may be divided into one or more Prediction Units (PUs). Such division is also referred to as "partitioning".

A PU may be a base unit for prediction. A PU may be encoded and decoded in any one of a skip mode, an inter mode, and an intra mode. A PU may be partitioned into various shapes depending on respective modes. For example, the target block, described above with reference to FIG. 1, and the target block, described above with reference to FIG. 2, may each be a PU.

A CU may not be split into PUs. When the CU is not split into PUs, the size of the CU and the size of a PU may be equal to each other.

In a skip mode, partitioning may not be present in a CU. In the skip mode, a 2Nx2N mode 410, in which the sizes of a PU and a CU are identical to each other, may be supported without partitioning.

In an inter mode, 8 types of partition shapes may be present in a CU. For example, in the inter mode, the 2Nx2N mode 410, a 2NxN mode 415, an Nx2N mode 420, an NxN mode 425, a 2NxnU mode 430, a 2NxnD mode 435, an nLx2N mode 440, and an nRx2N mode 445 may be supported.

In an intra mode, the 2Nx2N mode 410 and the NxN mode 425 may be supported.

In the 2Nx2N mode 410, a PU having a size of 2Nx2N may be encoded. The PU having a size of 2Nx2N may mean a PU having a size identical to that of the CU. For example, the PU having a size of 2Nx2N may have a size of 64x64, 32x32, 16x16 or 8x8.

In the NxN mode 425, a PU having a size of NxN may be encoded.

For example, in intra prediction, when the size of a PU is 8x8, four partitioned PUs may be encoded. The size of each partitioned PU may be 4x4.

When a PU is encoded in an intra mode, the PU may be encoded using any one of multiple intra-prediction modes. For example, HEVC technology may provide 35 intra-prediction modes, and the PU may be encoded in any one of the 35 intra-prediction modes.

Which one of the 2Nx2N mode 410 and the NxN mode 425 is to be used to encode the PU may be determined based on rate-distortion cost.

The encoding apparatus 100 may perform an encoding operation on a PU having a size of 2Nx2N. Here, the encoding operation may be the operation of encoding the PU in each of multiple intra-prediction modes that can be used by the encoding apparatus 100. Through the encoding operation, the optimal intra-prediction mode for a PU having a size of 2Nx2N may be derived. The optimal intra-prediction mode may be an intra-prediction mode in which a minimum rate-distortion cost occurs upon encoding the PU having a size of 2Nx2N, among multiple intra-prediction modes that can be used by the encoding apparatus 100.

Further, the encoding apparatus 100 may sequentially perform an encoding operation on respective PUs obtained from NxN partitioning. Here, the encoding operation may be the operation of encoding a PU in each of multiple intra-prediction modes that can be used by the encoding apparatus 100. By means of the encoding operation, the optimal intra-prediction mode for the PU having a size of NxN may be derived. The optimal intra-prediction mode may be an intra-prediction mode in which a minimum rate-distortion cost occurs upon encoding the PU having a size of NxN, among multiple intra-prediction modes that can be used by the encoding apparatus 100.

The encoding apparatus 100 may determine which of a PU having a size of 2Nx2N and PUs having sizes of NxN to be encoded based on a comparison of a rate-distortion cost of the PU having a size of 2Nx2N and a rate-distortion costs of the PUs having sizes of NxN.

A single CU may be partitioned into one or more PUs, and a PU may be partitioned into multiple PUs.

For example, when a single PU is partitioned into four PUs, the horizontal size and vertical size of each of four PUs generated by partitioning may be half the horizontal size and the vertical size of the PU before being partitioned. When a PU having a 32x32 size is partitioned into four PUs, the size of each of four partitioned PUs may be 16x16. When a single PU is partitioned into four PUs, it may be considered that the PU has been partitioned in a quad-tree structure.

For example, when a single PU is partitioned into two PUs, the horizontal size or the vertical size of each of two PUs generated by partitioning may be half the horizontal size or the vertical size of the PU before being partitioned. When a PU having a 32x32 size is vertically partitioned into two PUs, the size of each of two partitioned PUs may be 16x32. When a PU having a 32x32 size is horizontally partitioned into two PUs, the size of each of two partitioned PUs may be 32x16. When a single PU is partitioned into two PUs, it may be considered that the PU has been partitioned in a binary-tree structure.

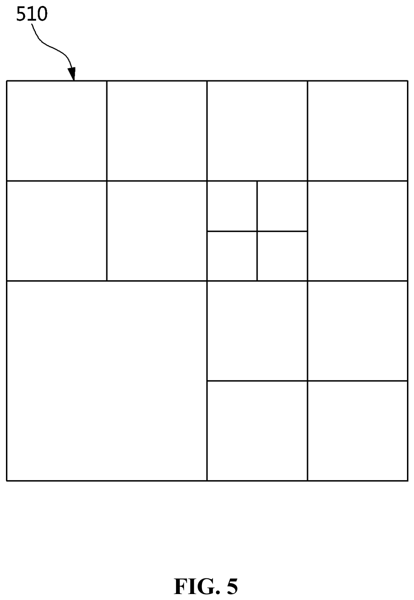

FIG. 5 is a diagram illustrating the form of a Transform Unit that can be included in a Coding Unit.

A Transform Unit (TU) may have a base unit that is used for a procedure, such as transform, quantization, inverse transform, dequantization, entropy encoding, and entropy decoding, in a CU.

A TU may have a square shape or a rectangular shape. A shape of a TU may be determined based on a size and/or a shape of a CU.

Among CUs partitioned from the LCU, a CU which is not partitioned into CUs any further may be partitioned into one or more TUs. Here, the partition structure of a TU may be a quad-tree structure. For example, as shown in FIG. 5, a single CU 510 may be partitioned one or more times depending on the quad-tree structure. By means of this partitioning, the single CU 510 may be composed of TUs having various sizes.

It can be considered that when a single CU is split two or more times, the CU is recursively split. Through splitting, a single CU may be composed of Transform Units (TUs) having various sizes.

Alternatively, a single CU may be split into one or more TUs based on the number of vertical lines and/or horizontal lines that split the CU.

A CU may be split into symmetric TUs or asymmetric TUs. For splitting into asymmetric TUs, information about the size and/or shape of each TU may be signaled from the encoding apparatus 100 to the decoding apparatus 200. Alternatively, the size and/or shape of each TU may be derived from information about the size and/or shape of the CU.

A CU may not be split into TUs. When the CU is not split into TUs, the size of the CU and the size of a TU may be equal to each other.

A single CU may be partitioned into one or more TUs, and a TU may be partitioned into multiple TUs.

For example, when a single TU is partitioned into four TUs, the horizontal size and vertical size of each of four TUs generated by partitioning may be half the horizontal size and the vertical size of the TU before being partitioned. When a TU having a 32x32 size is partitioned into four TUs, the size of each of four partitioned TUs may be 16x16. When a single TU is partitioned into four TUs, it may be considered that the TU has been partitioned in a quad-tree structure.

For example, when a single TU is partitioned into two TUs, the horizontal size or the vertical size of each of two TUs generated by partitioning may be half the horizontal size or the vertical size of the TU before being partitioned. When a TU having a 32x32 size is vertically partitioned into two TUs, the size of each of two partitioned TUs may be 16x32. When a TU having a 32x32 size is horizontally partitioned into two TUs, the size of each of two partitioned TUs may be 32x16. When a single TU is partitioned into two TUs, it may be considered that the TU has been partitioned in a binary-tree structure.

In a way differing from that illustrated in FIG. 5, a CU may be split.

For example, a single CU may be split into three CUs. The horizontal sizes or vertical sizes of the three CUs generated from splitting may be 1/4, 1/2, and 1/4, respectively, of the horizontal size or vertical size of the original CU before being split.

For example, when a CU having a 32x32 size is vertically split into three CUs, the sizes of the three CUs generated from the splitting may be 8x32, 16x32, and 8x32, respectively. In this way, when a single CU is split into three CUs, it may be considered that the CU is split in the form of a ternary tree.

One of exemplary splitting forms, that is, quad-tree splitting, binary tree splitting, and ternary tree splitting, may be applied to the splitting of a CU, and multiple splitting schemes may be combined and used together for splitting of a CU. Here, the case where multiple splitting schemes are combined and used together may be referred to as "complex tree-format splitting".

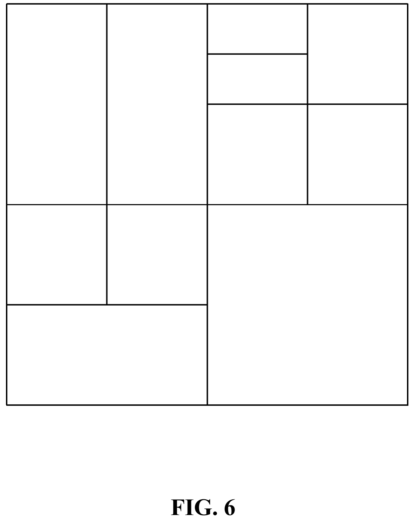

FIG. 6 illustrates the splitting of a block according to an example.

In a video encoding and/or decoding process, a target block may be split, as illustrated in FIG. 6. For example, the target block may be a CU.

For splitting of the target block, an indicator indicating split information may be signaled from the encoding apparatus 100 to the decoding apparatus 200. The split information may be information indicating how the target block is split.

The split information may be one or more of a split flag (hereinafter referred to as "split_flag"), a quad-binary flag (hereinafter referred to as "QB_flag"), a quad-tree flag (hereinafter referred to as "quadtree_flag"), a binary tree flag (hereinafter referred to as "binarytree_flag"), and a binary type flag (hereinafter referred to as "Btype_flag").

"split_flag" may be a flag indicating whether a block is split. For example, a split_flag value of 1 may indicate that the corresponding block is split. A split_flag value of 0 may indicate that the corresponding block is not split.

"QB_flag" may be a flag indicating which one of a quad-tree form and a binary tree form corresponds to the shape in which the block is split. For example, a QB_flag value of 0 may indicate that the block is split in a quad-tree form. A QB_flag value of 1 may indicate that the block is split in a binary tree form. Alternatively, a QB_flag value of 0 may indicate that the block is split in a binary tree form. A QB_flag value of 1 may indicate that the block is split in a quad-tree form.

"quadtree_flag" may be a flag indicating whether a block is split in a quad-tree form. For example, a quadtree_flag value of 1 may indicate that the block is split in a quad-tree form. A quadtree_flag value of 0 may indicate that the block is not split in a quad-tree form.

"binarytree_flag" may be a flag indicating whether a block is split in a binary tree form. For example, a binarytree_flag value of 1 may indicate that the block is split in a binary tree form. A binarytree_flag value of 0 may indicate that the block is not split in a binary tree form.

"Btype_flag" may be a flag indicating which one of a vertical split and a horizontal split corresponds to a split direction when a block is split in a binary tree form. For example, a Btype_flag value of 0 may indicate that the block is split in a horizontal direction. A Btype_flag value of 1 may indicate that a block is split in a vertical direction. Alternatively, a Btype_flag value of 0 may indicate that the block is split in a vertical direction. A Btype_flag value of 1 may indicate that a block is split in a horizontal direction.

For example, the split information of the block in FIG. 6 may be derived by signaling at least one of quadtree_flag, binarytree_flag, and Btype_flag, as shown in the following Table 1.

Table 1

| | quadtree_flag | binarytree_flag | Btype_flag |
|---|---|---|---|
| | 1 | | |
| | 0 | | |
| | | 1 | |
| | | | 1 |
| | | 0 | |
| | | 0 | |

(continued)

| | quadtree_flag | binarytree_flag | Btype_flag |
|---|---|---|---|
| | 1 | | |
| | 0 | | |
| | | 1 | |
| | | | 0 |
| | | 0 | |
| | | 0 | |
| | 0 | | |
| | | 0 | |
| | 0 | | |
| | | 0 | |
| | 0 | | |
| | | 0 | |
| | 0 | | |
| | | 1 | |
| | | | 0 |
| | | 1 | |
| | | | 1 |
| | | 0 | |
| | | 0 | |
| | | 0 | |
| | 0 | | |
| | | 0 | |

For example, the split information of the block in FIG. 6 may be derived by signaling at least one of split_flag, QB_flag and Btype_flag, as shown in the following Table 2.

Table 2

| | split_flag | QB_flag | Btype_flag |
|---|---|---|---|
| | 1 | | |
| | | 0 | |
| | 1 | | |
| | | 1 | |
| | | | 1 |
| | 0 | | |
| | 0 | | |
| | 1 | | |
| | | 0 | |

(continued)

| | split_flag | QB_flag | Btype_flag |
|---|---|---|---|
| | 1 | | |
| | | 1 | |
| | | | 0 |
| | 0 | | |
| | 0 | | |
| | 0 | | |
| | 0 | | |
| | 0 | | |
| | 1 | | |
| | | 1 | |
| | | | 0 |
| | 1 | | |
| | | | 1 |
| | 0 | | |
| | 0 | | |
| | 0 | | |
| | 0 | | |

The splitting method may be limited only to a quad-tree or to a binary tree depending on the size and/or shape of the block. When this limitation is applied, split_flag may be a flag indicating whether a block is split in a quad-tree form or a flag indicating whether a block is split in a binary tree form. The size and shape of a block may be derived depending on the depth information of the block, and the depth information may be signaled from the encoding apparatus 100 to the decoding apparatus 200.

When the size of a block falls within a specific range, only splitting in a quad-tree form may be possible. For example, the specific range may be defined by at least one of a maximum block size and a minimum block size at which only splitting in a quad-tree form is possible.

Information indicating the maximum block size and the minimum block size at which only splitting in a quad-tree form is possible may be signaled from the encoding apparatus 100 to the decoding apparatus 200 through a bitstream. Further, this information may be signaled for at least one of units such as a video, a sequence, a picture, a parameter, a tile group, and a slice (or a segment).

Alternatively, the maximum block size and/or the minimum block size may be fixed sizes predefined by the encoding apparatus 100 and the decoding apparatus 200. For example, when the size of a block is above 64x64 and below 256x256, only splitting in a quad-tree form may be possible. In this case, split_flag may be a flag indicating whether splitting in a quad-tree form is performed.

When the size of a block is greater than the maximum size of a transform block, only partitioning in a quad-tree form may be possible. Here, a subblock resulting from partitioning may be at least one of a CU and a TU.

In this case, split_flag may be a flag indicating whether a CU is partitioned in a quad-tree form.

When the size of a block falls within the specific range, only splitting in a binary tree form or a ternary tree form may be possible. For example, the specific range may be defined by at least one of a maximum block size and a minimum block size at which only splitting in a binary tree form or a ternary tree form is possible.

Information indicating the maximum block size and/or the minimum block size at which only splitting in a binary tree form or splitting in a ternary tree form is possible may be signaled from the encoding apparatus 100 to the decoding apparatus 200 through a bitstream. Further, this information may be signaled for at least one of units such as a sequence, a picture, and a slice (or a segment).

Alternatively, the maximum block size and/or the minimum block size may be fixed sizes predefined by the encoding apparatus 100 and the decoding apparatus 200. For example, when the size of a block is above 8x8 and below 16x16, only splitting in a binary tree form may be possible. In this case, split_flag may be a flag indicating whether splitting in a binary tree form or a ternary tree form is performed.

The above description of partitioning in a quad-tree form may be equally applied to a binary-tree form and/or a ternary-tree form.

The partition of a block may be limited by a previous partition. For example, when a block is partitioned in a specific binary-tree form and then multiple subblocks are generated from the partitioning, each subblock may be additionally partitioned only in a specific tree form. Here, the specific tree form may be at least one of a binary-tree form, a ternary-tree form, and a quad-tree form.

When the horizontal size or vertical size of a partition block is a size that cannot be split further, the above-described indicator may not be signaled.

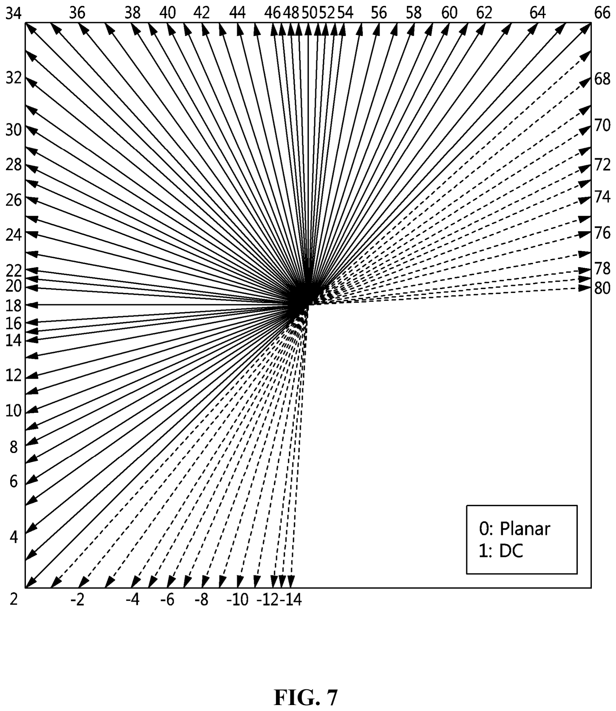

FIG. 7 is a diagram for explaining an embodiment of an intra-prediction process.

Arrows radially extending from the center of the graph in FIG. 7 indicate the prediction directions of intra-prediction modes. Further, numbers appearing near the arrows indicate examples of mode values assigned to intra-prediction modes or to the prediction directions of the intra-prediction modes.

In FIG. 7, A number 0 may represent a Planar mode which is a non-directional intra prediciton mode. A number 1 may represent a DC mode which is a non-directional intra prediciton mode

Intra encoding and/or decoding may be performed using a reference sample of neighbor block of a target block. The neighbor block may be a reconstructed neighbor block. The reference sample may mean a neighbor sample.

For example, intra encoding and/or decoding may be performed using the value of a reference sample which are included in are reconstructed neighbor block or the coding parameters of the reconstructed neighbor block.

The encoding apparatus 100 and/or the decoding apparatus 200 may generate a prediction block by performing intra prediction on a target block based on information about samples in a target image. When intra prediction is performed, the encoding apparatus 100 and/or the decoding apparatus 200 may generate a prediction block for the target block by performing intra prediction based on information about samples in the target image. When intra prediction is performed, the encoding apparatus 100 and/or the decoding apparatus 200 may perform directional prediction and/or non-directional prediction based on at least one reconstructed reference sample.

A prediction block may be a block generated as a result of performing intra prediction. A prediction block may correspond to at least one of a CU, a PU, and a TU.

The unit of a prediction block may have a size corresponding to at least one of a CU, a PU, and a TU. The prediction block may have a square shape having a size of 2Nx2N or NxN. The size of NxN may include sizes of 4x4, 8x8, 16x16, 32x32, 64x64, or the like.

Alternatively, a prediction block may a square block having a size of 2x2, 4x4, 8x8, 16x16, 32x32, 64x64 or the like or a rectangular block having a size of 2x8, 4x8, 2x16, 4x16, 8x16, or the like.

Intra prediction may be performed in consideration of the intra-prediction mode for the target block. The number of intra-prediction modes that the target block can have may be a predefined fixed value, and may be a value determined differently depending on the attributes of a prediction block. For example, the attributes of the prediction block may include the size of the prediction block, the type of prediction block, etc. Further, the attribute of a prediction block may indicate a coding parameter for the prediction block.

For example, the number of intra-prediction modes may be fixed at N regardless of the size of a prediction block. Alternatively, the number of intra-prediction modes may be, for example, 3, 5, 9, 17, 34, 35, 36, 65, 67 or 95.

The intra-prediction modes may be non-directional modes or directional modes.

For example, the intra-prediction modes may include two non-directional modes and 65 directional modes corresponding to numbers 0 to 66 illustrated in FIG. 7.

For example, the intra-prediction modes may include two non-directional modes and 93 directional modes corresponding to numbers -14 to 80 illustrated in FIG. 7 in a case that a specific intra prediciton method is used.

The two non-directional modes may include a DC mode and a planar mode.

A directional mode may be a prediction mode having a specific direction or a specific angle. The directional mode may also be referred to as an "angular mode".

An intra-prediction mode may be represented by at least one of a mode number, a mode value, a mode angle, and a mode direction. In other words, the terms "(mode) number of the intra-prediction mode", "(mode) value of the intra-prediction mode", "(mode) angle of the intra-prediction mode", and "(mode) direction of the intra-prediction mode" may be used to have the same meaning, and may be used interchangeably with each other.

The number of intra-prediction modes may be M. The value of M may be 1 or more. In other words, the number of intra-prediction modes may be M, which includes the number of non-directional modes and the number of directional modes.

The number of intra-prediction modes may be fixed to M regardless of the size and/or the color component of a block. For example, the number of intra-prediction modes may be fixed at any one of 35 and 67 regardless of the size of a block.

Alternatively, the number of intra-prediction modes may differ depending on the shape, the size and/or the type of the color component of a block.

For example, in FIG. 7, directional prediction modes illustrated as dashed lines may be applied only for a prediction for a non-square block.

For example, the larger the size of the block, the greater the number of intra-prediction modes. Alternatively, the larger the size of the block, the smaller the number of intra-prediction modes. When the size of the block is 4x4 or 8x8, the number of intra-prediction modes may be 67. When the size of the block is 16x16, the number of intra-prediction modes may be 35. When the size of the block is 32x32, the number of intra-prediction modes may be 19. When the size of a block is 64x64, the number of intra-prediction modes may be 7.

For example, the number of intra prediction modes may differ depending on whether a color component is a luma signal or a chroma signal. Alternatively, the number of intra-prediction modes corresponding to a luma component block may be greater than the number of intra-prediction modes corresponding to a chroma component block.

For example, in a vertical mode having a mode value of 50, prediction may be performed in a vertical direction based on the pixel value of a reference sample. For example, in a horizontal mode having a mode value of 18, prediction may be performed in a horizontal direction based on the pixel value of a reference sample.

Even in directional modes other than the above-described mode, the encoding apparatus 100 and the decoding apparatus 200 may perform intra prediction on a target unit using reference samples depending on angles corresponding to the directional modes.

Intra-prediction modes located on a right side with respect to the vertical mode may be referred to as 'vertical-right modes'. Intra-prediction modes located below the horizontal mode may be referred to as 'horizontal-below modes'. For example, in FIG. 7, the intra-prediction modes in which a mode value is one of 51, 52, 53, 54, 55, 56, 57, 58, 59, 60, 61, 62, 63, 64, 65, and 66 may be vertical-right modes. Intra-prediction modes in which a mode value is one of 2, 3, 4, 5, 6, 7, 8, 9, 10, 11, 12, 13, 14, 15, 16, and 17 may be horizontal-below modes.

The non-directional mode may include a DC mode and a planar mode. For example, a value of the DC mode may be 1. A value of the planar mode may be 0.

The directional mode may include an angular mode. Among the plurality of the intra prediction modes, remaining modes except for the DC mode and the planar mode may be directional modes.

When the intra-prediction mode is a DC mode, a prediction block may be generated based on the average of pixel values of a plurality of reference pixels. For example, a value of a pixel of a prediction block may be determined based on the average of pixel values of a plurality of reference pixels.

The number of above-described intra-prediction modes and the mode values of respective intra-prediction modes are merely exemplary. The number of above-described intra-prediction modes and the mode values of respective intra-prediction modes may be defined differently depending on the embodiments, implementation and/or requirements.

In order to perform intra prediction on a target block, the step of checking whether samples included in a reconstructed neighbor block can be used as reference samples of a target block may be performed. When a sample that cannot be used as a reference sample of the target block is present among samples in the neighbor block, a value generated via copying and/or interpolation that uses at least one sample value, among the samples included in the reconstructed neighbor block, may replace the sample value of the sample that cannot be used as the reference sample. When the value generated via copying and/or interpolation replaces the sample value of the existing sample, the sample may be used as the reference sample of the target block.

When intra prediction is used, a filter may be applied to at least one of a reference sample and a prediction sample based on at least one of the intra-prediction mode and the size of the target block.

The type of filter to be applied to at least one of a reference sample and a prediction sample may differ depending on at least one of the intra-prediction mode of a target block, the size of the target block, and the shape of the target block. The types of filters may be classified depending on one or more of the length of filter tap, the value of a filter coefficient, and filter strength. The length of filter tap may mean the number of filter taps. Also, the number of filter tap may mean the length of the filter.

When the intra-prediction mode is a planar mode, a sample value of a prediction target block may be generated using a weighted sum of an above reference sample of the target block, a left reference sample of the target block, an above-right reference sample of the target block, and a below-left reference sample of the target block depending on the location of the prediction target sample in the prediction block when the prediction block of the target block is generated.

When the intra-prediction mode is a DC mode, the average of reference samples above the target block and the reference samples to the left of the target block may be used when the prediction block of the target block is generated. Also, filtering using the values of reference samples may be performed on specific rows or specific columns in the target block. The specific rows may be one or more upper rows adjacent to the reference sample. The specific columns may be one or more left columns adjacent to the reference sample.

When the intra-prediction mode is a directional mode, a prediction block may be generated using the above reference samples, left reference samples, above-right reference sample and/or below-left reference sample of the target block.

In order to generate the above-described prediction sample, real-number-based interpolation may be performed.

The intra-prediction mode of the target block may be predicted from intra prediction mode of a neighbor block adjacent to the target block, and the information used for prediction may be entropy-encoded/decoded.

For example, when the intra-prediction modes of the target block and the neighbor block are identical to each other, it may be signaled, using a predefined flag, that the intra-prediction modes of the target block and the neighbor block are identical.

For example, an indicator for indicating an intra-prediction mode identical to that of the target block, among intra-prediction modes of multiple neighbor blocks, may be signaled.

When the intra-prediction modes of the target block and a neighbor block are different from each other, information about the intra-prediction mode of the target block may be encoded and/or decoded using entropy encoding and/or decoding.

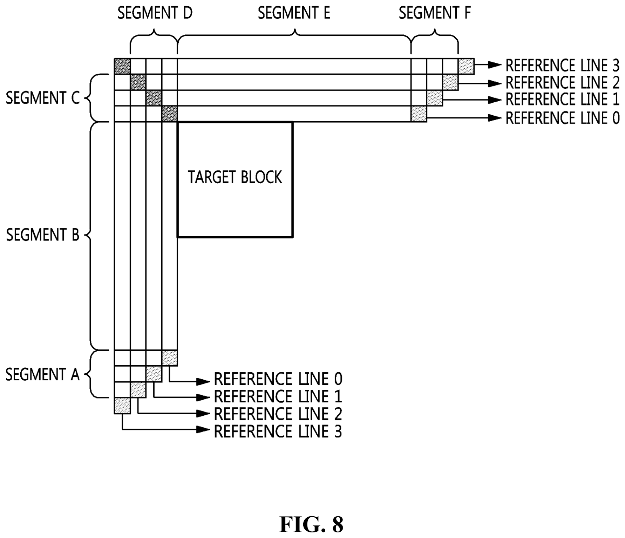

FIG. 8 is a diagram illustrating reference samples used in an intra-prediction procedure.

Reconstructed reference samples used for intra prediction of the target block may include below-left reference samples, left reference samples, an above-left corner reference sample, above reference samples, and above-right reference samples.

For example, the left reference samples may mean reconstructed reference pixels adjacent to the left side of the target block. The above reference samples may mean reconstructed reference pixels adjacent to the top of the target block. The above-left corner reference sample may mean a reconstructed reference pixel located at the above-left corner of the target block. The below-left reference samples may mean reference samples located below a left sample line composed of the left reference samples, among samples located on the same line as the left sample line. The above-right reference samples may mean reference samples located to the right of an above sample line composed of the above reference samples, among samples located on the same line as the above sample line.

When the size of a target block is NxN, the numbers of the below-left reference samples, the left reference samples, the above reference samples, and the above-right reference samples may each be N.

By performing intra prediction on the target block, a prediction block may be generated. The generation of the prediction block may include the determination of the values of pixels in the prediction block. The sizes of the target block and the prediction block may be equal.

The reference samples used for intra prediction of the target block may vary depending on the intra-prediction mode of the target block. The direction of the intra-prediction mode may represent a dependence relationship between the reference samples and the pixels of the prediction block. For example, the value of a specified reference sample may be used as the values of one or more specified pixels in the prediction block. In this case, the specified reference sample and the one or more specified pixels in the prediction block may be the sample and pixels which are positioned in a straight line in the direction of an intra-prediction mode. In other words, the value of the specified reference sample may be copied as the value of a pixel located in a direction reverse to the direction of the intra-prediction mode. Alternatively, the value of a pixel in the prediction block may be the value of a reference sample located in the direction of the intra-prediction mode with respect to the location of the pixel.

In an example, when the intra-prediction mode of a target block is a vertical mode, the above reference samples may be used for intra prediction. When the intra-prediction mode is the vertical mode, the value of a pixel in the prediction block may be the value of a reference sample vertically located above the location of the pixel. Therefore, the above reference samples adjacent to the top of the target block may be used for intra prediction. Furthermore, the values of pixels in one row of the prediction block may be identical to those of the above reference samples.

In an example, when the intra-prediction mode of a target block is a horizontal mode, the left reference samples may be used for intra prediction. When the intra-prediction mode is the horizontal mode, the value of a pixel in the prediction block may be the value of a reference sample horizontally located left to the location of the pixel. Therefore, the left reference samples adjacent to the left of the target block may be used for intra prediction. Furthermore, the values of pixels in one column of the prediction block may be identical to those of the left reference samples.

In an example, when the mode value of the intra-prediction mode of the current block is 34, at least some of the left reference samples, the above-left corner reference sample, and at least some of the above reference samples may be used for intra prediction. When the mode value of the intra-prediction mode is 34, the value of a pixel in the prediction block may be the value of a reference sample diagonally located at the above-left corner of the pixel.

Further, At least a part of the above-right reference samples may be used for intra prediction in a case that an intra prediction mode of which a mode value is a value ranging from 52 to 66.

Further, At least a part of the below-left reference samples may be used for intra prediction in a case that an intra prediction mode of which a mode value is a value ranging from 2 to 17.

Further, the above-left corner reference sample may be used for intra prediction in a case that an intra prediction mode of which a mode value is a value ranging from 19 to 49.

The number of reference samples used to determine the pixel value of one pixel in the prediction block may be either 1, or 2 or more.

As described above, the pixel value of a pixel in the prediction block may be determined depending on the location of the pixel and the location of a reference sample indicated by the direction of the intra-prediction mode. When the location of the pixel and the location of the reference sample indicated by the direction of the intra-prediction mode are integer positions, the value of one reference sample indicated by an integer position may be used to determine the pixel value of the pixel in the prediction block.

When the location of the pixel and the location of the reference sample indicated by the direction of the intra-prediction mode are not integer positions, an interpolated reference sample based on two reference samples closest to the location of the reference sample may be generated. The value of the interpolated reference sample may be used to determine the pixel value of the pixel in the prediction block. In other words, when the location of the pixel in the prediction block and the location of the reference sample indicated by the direction of the intra-prediction mode indicate the location between two reference samples, an interpolated value based on the values of the two samples may be generated.

The prediction block generated via prediction may not be identical to an original target block. In other words, there may be a prediction error which is the difference between the target block and the prediction block, and there may also be a prediction error between the pixel of the target block and the pixel of the prediction block.

Hereinafter, the terms "difference", "error", and "residual" may be used to have the same meaning, and may be used interchangeably with each other.

For example, in the case of directional intra prediction, the longer the distance between the pixel of the prediction block and the reference sample, the greater the prediction error that may occur. Such a prediction error may result in discontinuity between the generated prediction block and neighbor blocks.

In order to reduce the prediction error, filtering for the prediction block may be used. Filtering may be configured to adaptively apply a filter to an area, regarded as having a large prediction error, in the prediction block. For example, the area regarded as having a large prediction error may be the boundary of the prediction block. Further, an area regarded as having a large prediction error in the prediction block may differ depending on the intra-prediction mode, and the characteristics of filters may also differ depending thereon.

As illustrated in FIG. 8, for intra prediction of a target block, at least one of reference line 0 to reference line 3 may be used.

Each reference line in FIG. 8 may indicate a reference sample line comprising one or more reference samples. As the number of the reference line is lower, a line of reference samples closer to a target block may be indicated.

Samples in segment A and segment F may be acquired through padding that uses samples closest to the target block in segment B and segment E instead of being acquired from reconstructed neighbor blocks.

Index information indicating a reference sample line to be used for intra-prediction of the target block may be signaled. The index information may indicate a reference sample line to be used for intra-prediction of the target block, among multiple reference sample lines. For example, the index information may have a value corresponding to any one of 0 to 3.

When the top boundary of the target block is the boundary of a CTU, only reference sample line 0 may be available. Therefore, in this case, index information may not be signaled. When an additional reference sample line other than reference sample line 0 is used, filtering of a prediction block, which will be described later, may not be performed.

In the case of inter-color intra prediction, a prediction block for a target block of a second color component may be generated based on the corresponding reconstructed block of a first color component.

For example, the first color component may be a luma component, and the second color component may be a chroma component.

In order to perform inter-color intra prediction, parameters for a linear model between the first color component and the second color component may be derived based on a template.

The template may include reference samples above the target block (above reference samples) and/or reference samples to the left of the target block (left reference samples), and may include above reference samples and/or left reference samples of a reconstructed block of the first color component, which correspond to the reference samples.

For example, parameters for a linear model may be derived using 1) the value of the sample of a first color component having the maximum value, among the samples in the template, 2) the value of the sample of a second color component corresponding to the sample of the first color component, 3) the value of the sample of a first color component having the minimum value, among the samples in the template, and 4) the value of the sample of a second color component corresponding to the sample of the first color component.

When the parameters for the linear model are derived, a prediction block for the target block may be generated by applying the corresponding reconstructed block to the linear model.

Depending on the image format, sub-sampling may be performed on samples adjacent to the reconstructed block of the first color component and the corresponding reconstructed block of the first color component. For example, when one sample of the second color component corresponds to four samples of the first color component, one corresponding sample may be calculated by performing sub-sampling on the four samples of the first color component. When sub-sampling is performed, derivation of the parameters for the linear model and inter-color intra prediction may be performed based on the sub-sampled corresponding sample.

Information about whether inter-color intra prediction is performed and/or the range of the template may be signaled in an intra-prediction mode.

The target block may be partitioned into two or four subblocks in a horizontal direction and/or a vertical direction.

The subblocks resulting from the partitioning may be sequentially reconstructed. That is, as intra-prediction is performed on each subblock, a sub-prediction block for the subblock may be generated. Also, as dequantization (inverse quantization) and/or an inverse transform are performed on each subblock, a sub-residual block for the corresponding subblock may be generated. A reconstructed subblock may be generated by adding the sub-prediction block to the sub-residual block. The reconstructed subblock may be used as a reference sample for intra prediction of the subblock having the next priority.

A subblock may be a block including a specific number (e.g., 16) of samples or more. For example, when the target block is an 8x4 block or a 4x8 block, the target block may be partitioned into two subblocks. Also, when the target block is a 4x4 block, the target block cannot be partitioned into subblocks. When the target block has another size, the target block may be partitioned into four subblocks.

Information about whether intra prediction based on such subblocks is performed and/or information about a partition direction (horizontal direction or vertical direction) may be signaled.

Such subblock-based intra prediction may be limited such that it is performed only when reference sample line 0 is used. When subblock-based intra-prediction is performed, filtering of a prediction block, which will be described below, may not be performed.

A final prediction block may be generated by performing filtering on the prediction block generated via intra prediction.

Filtering may be performed by applying specific weights to a filtering target sample, which is the target to be filtered, a left reference sample, an above reference sample, and/or an above-left reference sample.

The weights and/or reference samples (e.g., the range of reference samples, the locations of the reference samples, etc.) used for filtering may be determined based on at least one of a block size, an intra-prediction mode, and the location of the filtering target sample in a prediction block.

For example, filtering may be performed only in a specific intra-prediction mode (e.g., DC mode, planar mode, vertical mode, horizontal mode, diagonal mode and/or adjacent diagonal mode).

The adjacent diagonal mode may be a mode having a number obtained by adding k to the number of the diagonal mode, and may be a mode having a number obtained by subtracting k from the number of the diagonal mode. In other words, the number of the adjacent diagonal mode may be the sum of the number of the diagonal mode and k, or may be the difference between the number of the diagonal mode and k. For example, k may be a positive integer of 8 or less.

The intra-prediction mode of a target block may be derived using the intra-prediction mode of a neighboring block present around the target block, and such a derived intra-prediction mode may be entropy-encoded and/or entropy-decoded.

For example, when the intra-prediction mode of the target block is identical to the intra-prediction mode of the neighbor block, information indicating that the intra-prediction mode of the target block is identical to the intra-prediction mode of the neighbor block may be signaled using specific flag information.

Further, for example, indicator information for a neighbor block having an intra-prediction mode identical to the intra-prediction mode of the target block, among intra-prediction modes of multiple neighbor blocks, may be signaled.

For example, when the intra-prediction mode of the target block is different from the intra-prediction mode of the neighbor block, entropy encoding and/or entropy decoding may be performed on information about the intra-prediction mode of the target block by performing entropy encoding and/or entropy decoding based on the intra-prediction mode of the neighbor block.

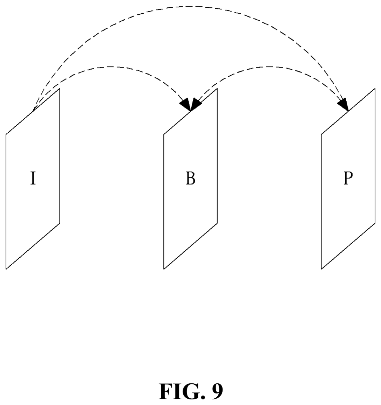

FIG. 9 is a diagram for explaining an embodiment of an inter prediction procedure.

The rectangles shown in FIG. 9 may represent images (or pictures). Further, in FIG. 9, arrows may represent prediction directions. An arrow pointing from a first picture to a second picture means that the second picture refers to the first picture. That is, each image may be encoded and/or decoded depending on the prediction direction.

Images may be classified into an Intra Picture (I picture), a Uni-prediction Picture or Predictive Coded Picture (P picture), and a Bi-prediction Picture or Bipredictive Coded Picture (B picture) depending on the encoding type. Each picture may be encoded and/or decoded depending on the encoding type thereof.

When a target image that is the target to be encoded is an I picture, the target image may be encoded using data contained in the image itself without inter prediction that refers to other images. For example, an I picture may be encoded only via intra prediction.

When a target image is a P picture, the target image may be encoded via inter prediction, which uses reference pictures existing in one direction. Here, the one direction may be a forward direction or a backward direction.

When a target image is a B picture, the image may be encoded via inter prediction that uses reference pictures existing in two directions, or may be encoded via inter prediction that uses reference pictures existing in one of a forward direction and a backward direction. Here, the two directions may be the forward direction and the backward direction.

A P picture and a B picture that are encoded and/or decoded using reference pictures may be regarded as images in which inter prediction is used.

Below, inter prediction in an inter mode according to an embodiment will be described in detail.

Inter prediction or a motion compensation may be performed using a reference image and motion information.

In an inter mode, the encoding apparatus 100 may perform inter prediction and/or motion compensation on a target block. The decoding apparatus 200 may perform inter prediction and/or motion compensation, corresponding to inter prediction and/or motion compensation performed by the encoding apparatus 100, on a target block.

Motion information of the target block may be individually derived by the encoding apparatus 100 and the decoding apparatus 200 during the inter prediction. The motion information may be derived using motion information of a reconstructed neighbor block, motion information of a col block, and/or motion information of a block adjacent to the col block.

For example, the encoding apparatus 100 or the decoding apparatus 200 may perform prediction and/or motion compensation by using motion information of a spatial candidate and/or a temporal candidate as motion information of the target block. The target block may mean a PU and/or a PU partition.

A spatial candidate may be a reconstructed block which is spatially adjacent to the target block.

A temporal candidate may be a reconstructed block corresponding to the target block in a previously reconstructed co-located picture (col picture).

In inter prediction, the encoding apparatus 100 and the decoding apparatus 200 may improve encoding efficiency and decoding efficiency by utilizing the motion information of a spatial candidate and/or a temporal candidate. The motion information of a spatial candidate may be referred to as 'spatial motion information'. The motion information of a temporal candidate may be referred to as 'temporal motion information'.

Below, the motion information of a spatial candidate may be the motion information of a PU including the spatial candidate. The motion information of a temporal candidate may be the motion information of a PU including the temporal candidate. The motion information of a candidate block may be the motion information of a PU including the candidate block.

Inter prediction may be performed using a reference picture.

The reference picture may be at least one of a picture previous to a target picture and a picture subsequent to the target picture. The reference picture may be an image used for the prediction of the target block.

In inter prediction, a region in the reference picture may be specified by utilizing a reference picture index (or refIdx) for indicating a reference picture, a motion vector, which will be described later, etc. Here, the region specified in the reference picture may indicate a reference block.

Inter prediction may select a reference picture, and may also select a reference block corresponding to the target block from the reference picture. Further, inter prediction may generate a prediction block for the target block using the selected reference block.

The motion information may be derived during inter prediction by each of the encoding apparatus 100 and the decoding apparatus 200.

A spatial candidate may be a block 1) which is present in a target picture, 2) which has been previously reconstructed via encoding and/or decoding, and 3) which is adjacent to the target block or is located at the corner of the target block. Here, the "block located at the corner of the target block" may be either a block vertically adjacent to a neighbor block that is horizontally adjacent to the target block, or a block horizontally adjacent to a neighbor block that is vertically adjacent to the target block. Further, "block located at the corner of the target block" may have the same meaning as "block adjacent to the corner of the target block". The meaning of "block located at the corner of the target block" may be included in the meaning of "block adjacent to the target block".

For example, a spatial candidate may be a reconstructed block located to the left of the target block, a reconstructed block located above the target block, a reconstructed block located at the below-left corner of the target block, a reconstructed block located at the above-right corner of the target block, or a reconstructed block located at the above-left corner of the target block.

Each of the encoding apparatus 100 and the decoding apparatus 200 may identify a block present at the location spatially corresponding to the target block in a col picture. The location of the target block in the target picture and the location of the identified block in the col picture may correspond to each other.

Each of the encoding apparatus 100 and the decoding apparatus 200 may determine a col block present at the predefined relative location for the identified block to be a temporal candidate. The predefined relative location may be a location present inside and/or outside the identified block.

For example, the col block may include a first col block and a second col block. When the coordinates of the identified block are (xP, yP) and the size of the identified block is represented by (nPSW, nPSH), the first col block may be a block located at coordinates (xP + nPSW, yP + nPSH). The second col block may be a block located at coordinates (xP + (nPSW >> 1), yP + (nPSH >> 1)). The second col block may be selectively used when the first col block is unavailable.

The motion vector of the target block may be determined based on the motion vector of the col block. Each of the encoding apparatus 100 and the decoding apparatus 200 may scale the motion vector of the col block. The scaled motion vector of the col block may be used as the motion vector of the target block. Further, a motion vector for the motion information of a temporal candidate stored in a list may be a scaled motion vector.

The ratio of the motion vector of the target block to the motion vector of the col block may be identical to the ratio of a first temporal distance to a second temporal distance. The first temporal distance may be the distance between the reference picture and the target picture of the target block. The second temporal distance may be the distance between the reference picture and the col picture of the col block.

The scheme for deriving motion information may change depending on the inter-prediction mode of a target block. For example, as inter-prediction modes applied for inter prediction, an Advanced Motion Vector Predictor (AMVP) mode, a merge mode, a skip mode, a merge mode with a motion vector difference, a sub block merge mode, a triangle partition mode, an inter-intra combined prediction mode, an affine inter mode, a current picture reference mode, etc. may be present. The merge mode may also be referred to as a "motion merge mode". Individual modes will be described in detail below.

1) AMVP mode

When an AMVP mode is used, the encoding apparatus 100 may search a neighbor region of a target block for a similar block. The encoding apparatus 100 may acquire a prediction block by performing prediction on the target block using motion information of the found similar block. The encoding apparatus 100 may encode a residual block, which is the difference between the target block and the prediction block.

1-1) Creation of list of prediction motion vector candidates

When an AMVP mode is used as the prediction mode, each of the encoding apparatus 100 and the decoding apparatus 200 may create a list of prediction motion vector candidates using the motion vector of a spatial candidate, the motion vector of a temporal candidate, and a zero vector. The prediction motion vector candidate list may include one or more prediction motion vector candidates. At least one of the motion vector of a spatial candidate, the motion vector of a temporal candidate, and a zero vector may be determined and used as a prediction motion vector candidate.

Hereinafter, the terms "prediction motion vector (candidate)" and "motion vector (candidate)" may be used to have the same meaning, and may be used interchangeably with each other.

Hereinafter, the terms "prediction motion vector candidate" and "AMVP candidate" may be used to have the same meaning, and may be used interchangeably with each other.

Hereinafter, the terms "prediction motion vector candidate list" and "AMVP candidate list" may be used to have the same meaning, and may be used interchangeably with each other.

Spatial candidates may include a reconstructed spatial neighbor block. In other words, the motion vector of the reconstructed neighbor block may be referred to as a "spatial prediction motion vector candidate".

Temporal candidates may include a col block and a block adjacent to the col block. In other words, the motion vector of the col block or the motion vector of the block adjacent to the col block may be referred to as a "temporal prediction motion vector candidate".

The zero vector may be a (0, 0) motion vector.

The prediction motion vector candidates may be motion vector predictors for predicting a motion vector. Also, in the encoding apparatus 100, each prediction motion vector candidate may be an initial search location for a motion vector.

1-2) Search for motion vectors that use list of prediction motion vector candidates

The encoding apparatus 100 may determine the motion vector to be used to encode a target block within a search range using a list of prediction motion vector candidates. Further, the encoding apparatus 100 may determine a prediction motion vector candidate to be used as the prediction motion vector of the target block, among prediction motion vector candidates present in the prediction motion vector candidate list.

The motion vector to be used to encode the target block may be a motion vector that can be encoded at minimum cost.

Further, the encoding apparatus 100 may determine whether to use the AMVP mode to encode the target block.

1-3) Transmission of inter-prediction information

The encoding apparatus 100 may generate a bitstream including inter-prediction information required for inter prediction. The decoding apparatus 200 may perform inter prediction on the target block using the inter-prediction information of the bitstream.

The inter-prediction information may contain 1) mode information indicating whether an AMVP mode is used, 2) a prediction motion vector index, 3) a Motion Vector Difference (MVD), 4) a reference direction, and 5) a reference picture index.

Hereinafter, the terms "prediction motion vector index" and "AMVP index" may be used to have the same meaning, and may be used interchangeably with each other.

Further, the inter-prediction information may contain a residual signal.

The decoding apparatus 200 may acquire a prediction motion vector index, an MVD, a reference direction, and a reference picture index from the bitstream through entropy decoding when mode information indicates that the AMVP mode is used.

The prediction motion vector index may indicate a prediction motion vector candidate to be used for the prediction of a target block, among prediction motion vector candidates included in the prediction motion vector candidate list.

1-4) Inter prediction in AMVP mode that uses inter-prediction information

The decoding apparatus 200 may derive prediction motion vector candidates using a prediction motion vector candidate list, and may determine the motion information of a target block based on the derived prediction motion vector candidates.

The decoding apparatus 200 may determine a motion vector candidate for the target block, among the prediction motion vector candidates included in the prediction motion vector candidate list, using a prediction motion vector index. The decoding apparatus 200 may select a prediction motion vector candidate, indicated by the prediction motion vector index, from among prediction motion vector candidates included in the prediction motion vector candidate list, as the prediction motion vector of the target block.

The encoding apparatus 100 may generate an entropy-encoded prediction motion vector index by applying entropy encoding to a prediction motion vector index, and may generate a bitstream including the entropy-encoded prediction motion vector index. The entropy-encoded prediction motion vector index may be signaled from the encoding apparatus 100 to the decoding apparatus 200 through a bitstream. The decoding apparatus 200 may extract the entropy-encoded prediction motion vector index from the bitstream, and may acquire the prediction motion vector index by applying entropy decoding to the entropy-encoded prediction motion vector index.

The motion vector to be actually used for inter prediction of the target block may not match the prediction motion vector. In order to indicate the difference between the motion vector to be actually used for inter prediction of the target block and the prediction motion vector, an MVD may be used. The encoding apparatus 100 may derive a prediction motion vector similar to the motion vector to be actually used for inter prediction of the target block so as to use an MVD that is as small as possible.

A Motion Vector Difference (MVD) may be the difference between the motion vector of the target block and the prediction motion vector. The encoding apparatus 100 may calculate the MVD, and may generate an entropy-encoded MVD by applying entropy encoding to the MVD. The encoding apparatus 100 may generate a bitstream including the entropy-encoded MVD.

The MVD may be transmitted from the encoding apparatus 100 to the decoding apparatus 200 through the bitstream. The decoding apparatus 200 may extract the entropy-encoded MVD from the bitstream, and may acquire the MVD by applying entropy decoding to the entropy-encoded MVD.

The decoding apparatus 200 may derive the motion vector of the target block by summing the MVD and the prediction motion vector. In other words, the motion vector of the target block derived by the decoding apparatus 200 may be the sum of the MVD and the motion vector candidate.

Also, the encoding apparatus 100 may generate entropy-encoded MVD resolution information by applying entropy encoding to calculated MVD resolution information, and may generate a bitstream including the entropy-encoded MVD resolution information. The decoding apparatus 200 may extract the entropy-encoded MVD resolution information from the bitstream, and may acquire MVD resolution information by applying entropy decoding to the entropy-encoded MVD resolution information. The decoding apparatus 200 may adjust the resolution of the MVD using the MVD resolution information.

Meanwhile, the encoding apparatus 100 may calculate an MVD based on an affine model. The decoding apparatus 200 may derive the affine control motion vector of the target block through the sum of the MVD and an affine control motion vector candidate, and may derive the motion vector of a subblock using the affine control motion vector.

The reference direction may indicate a list of reference pictures to be used for prediction of the target block. For example, the reference direction may indicate one of a reference picture list LO and a reference picture list L1.

The reference direction merely indicates the reference picture list to be used for prediction of the target block, and may not mean that the directions of reference pictures are limited to a forward direction or a backward direction. In other words, each of the reference picture list L0 and the reference picture list L1 may include pictures in a forward direction and/or a backward direction.

That the reference direction is unidirectional may mean that a single reference picture list is used. That the reference direction is bidirectional may mean that two reference picture lists are used. In other words, the reference direction may indicate one of the case where only the reference picture list L0 is used, the case where only the reference picture list L1 is used, and the case where two reference picture lists are used.

The reference picture index may indicate a reference picture that is used for prediction of the target block, among reference pictures present in a reference picture list. The encoding apparatus 100 may generate an entropy-encoded reference picture index by applying entropy encoding to the reference picture index, and may generate a bitstream including the entropy-encoded reference picture index. The entropy-encoded reference picture index may be signaled from the encoding apparatus 100 to the decoding apparatus 200 through the bitstream. The decoding apparatus 200 may extract the entropy-encoded reference picture index from the bitstream, and may acquire the reference picture index by applying entropy decoding to the entropy-encoded reference picture index.

When two reference picture lists are used to predict the target block, a single reference picture index and a single motion vector may be used for each of the reference picture lists. Further, when two reference picture lists are used to predict the target block, two prediction blocks may be specified for the target block. For example, the (final) prediction block of the target block may be generated using the average or weighted sum of the two prediction blocks for the target block.

The motion vector of the target block may be derived by the prediction motion vector index, the MVD, the reference direction, and the reference picture index.

The decoding apparatus 200 may generate a prediction block for the target block based on the derived motion vector and the reference picture index. For example, the prediction block may be a reference block, indicated by the derived motion vector, in the reference picture indicated by the reference picture index.

Since the prediction motion vector index and the MVD are encoded without the motion vector itself of the target block being encoded, the number of bits transmitted from the encoding apparatus 100 to the decoding apparatus 200 may be decreased, and encoding efficiency may be improved.

For the target block, the motion information of reconstructed neighbor blocks may be used. In a specific inter-prediction mode, the encoding apparatus 100 may not separately encode the actual motion information of the target block. The motion information of the target block is not encoded, and additional information that enables the motion information of the target block to be derived using the motion information of reconstructed neighbor blocks may be encoded instead. As the additional information is encoded, the number of bits transmitted to the decoding apparatus 200 may be decreased, and encoding efficiency may be improved.

For example, as inter-prediction modes in which the motion information of the target block is not directly encoded, there may be a skip mode and/or a merge mode. Here, each of the encoding apparatus 100 and the decoding apparatus 200 may use an identifier and/or an index that indicates a unit, the motion information of which is to be used as the motion information of the target unit, among reconstructed neighbor units.

### 2) Merge mode

As a scheme for deriving the motion information of a target block, there is merging. The term "merging" may mean the merging of the motion of multiple blocks. "Merging" may mean that the motion information of one block is also applied to other blocks. In other words, a merge mode may be a mode in which the motion information of the target block is derived from the motion information of a neighbor block.

When a merge mode is used, the encoding apparatus 100 may predict the motion information of a target block using the motion information of a spatial candidate and/or the motion information of a temporal candidate. The spatial candidate may include a reconstructed spatial neighbor block that is spatially adjacent to the target block. The spatial neighbor block may include a left neighbor block and an above neighbor block. The temporal candidate may include a col block. The terms "spatial candidate" and "spatial merge candidate" may be used to have the same meaning, and may be used interchangeably with each other. The terms "temporal candidate" and "temporal merge candidate" may be used to have the same meaning, and may be used interchangeably with each other.

The encoding apparatus 100 may acquire a prediction block via prediction. The encoding apparatus 100 may encode a residual block, which is the difference between the target block and the prediction block.

### 2-1) Creation of merge candidate list

When the merge mode is used, each of the encoding apparatus 100 and the decoding apparatus 200 may create a merge candidate list using the motion information of a spatial candidate and/or the motion information of a temporal candidate. The motion information may include 1) a motion vector, 2) a reference picture index, and 3) a reference direction. The reference direction may be unidirectional or bidirectional. The reference direction may mean a inter prediction indicator.

The merge candidate list may include merge candidates. The merge candidates may be motion information. In other words, the merge candidate list may be a list in which pieces of motion information are stored.

The merge candidates may be pieces of motion information of temporal candidates and/or spatial candidates. In other words, the merge candidates list may comprise motion information of a temporal candidates and/or spatial candidates, etc.

Further, the merge candidate list may include new merge candidates generated by a combination of merge candidates that are already present in the merge candidate list. In other words, the merge candidate list may include new motion information generated by a combination of pieces of motion information previously present in the merge candidate list.

Also, a merge candidate list may include history-based merge candidates. The history-based merge candidates may be the motion information of a block which is encoded and/or decoded prior to a target block.

Also, a merge candidate list may include a merge candidate based on an average of two merge candidates.

The merge candidates may be specific modes deriving inter prediction information. The merge candidate may be information indicating a specific mode deriving inter prediction information. Inter prediction information of a target block may be derived according to a specific mode which the merge candidate indicates. Furthermore, the specific mode may include a process of deriving a series of inter prediction information. This specific mode may be an inter prediction information derivation mode or a motion information derivation mode.

The inter prediction information of the target block may be derived according to the mode indicated by the merge candidate selected by the merge index among the merge candidates in the merge candidate list.

For example, the motion information derivation modes in the merge candidate list may be at least one of 1) motion information derivation mode for a subblock unit and 2) an affine motion information derivation mode.

Furthermore, the merge candidate list may include motion information of a zero vector. The zero vector may also be referred to as a "zero-merge candidate".

In other words, pieces of motion information in the merge candidate list may be at least one of 1) motion information of a spatial candidate, 2) motion information of a temporal candidate, 3) motion information generated by a combination of pieces of motion information previously present in the merge candidate list, and 4) a zero vector.

Motion information may include 1) a motion vector, 2) a reference picture index, and 3) a reference direction. The reference direction may also be referred to as an "inter-prediction indicator". The reference direction may be unidirectional or bidirectional. The unidirectional reference direction may indicate L0 prediction or L1 prediction.

The merge candidate list may be created before prediction in the merge mode is performed.

The number of merge candidates in the merge candidate list may be predefined. Each of the encoding apparatus 100 and the decoding apparatus 200 may add merge candidates to the merge candidate list depending on the predefined scheme and predefined priorities so that the merge candidate list has a predefined number of merge candidates. The merge candidate list of the encoding apparatus 100 and the merge candidate list of the decoding apparatus 200 may be made identical to each other using the predefined scheme and the predefined priorities.

Merging may be applied on a CU basis or a PU basis. When merging is performed on a CU basis or a PU basis, the encoding apparatus 100 may transmit a bitstream including predefined information to the decoding apparatus 200. For example, the predefined information may contain 1) information indicating whether to perform merging for individual block partitions, and 2) information about a block with which merging is to be performed, among blocks that are spatial candidates and/or temporal candidates for the target block.

2-2) Search for motion vector that uses merge candidate list

The encoding apparatus 100 may determine merge candidates to be used to encode a target block. For example, the encoding apparatus 100 may perform prediction on the target block using merge candidates in the merge candidate list, and may generate residual blocks for the merge candidates. The encoding apparatus 100 may use a merge candidate that incurs the minimum cost in prediction and in the encoding of residual blocks to encode the target block.

Further, the encoding apparatus 100 may determine whether to use a merge mode to encode the target block.

2-3) Transmission of inter-prediction information

The encoding apparatus 100 may generate a bitstream that includes inter-prediction information required for inter prediction. The encoding apparatus 100 may generate entropy-encoded inter-prediction information by performing entropy encoding on inter-prediction information, and may transmit a bitstream including the entropy-encoded inter-prediction information to the decoding apparatus 200. Through the bitstream, the entropy-encoded inter-prediction information may be signaled to the decoding apparatus 200 by the encoding apparatus 100. The decoding apparatus 200 may extract entropy-encoded inter-prediction information from the bitstream, and may acquire inter-prediction information by applying entropy decoding to the entropy-encoded inter-prediction information.

The decoding apparatus 200 may perform inter prediction on the target block using the inter-prediction information of the bitstream.

The inter-prediction information may contain 1) mode information indicating whether a merge mode is used, 2) a merge index and 3) correction information.

Further, the inter-prediction information may contain a residual signal.

The decoding apparatus 200 may acquire the merge index from the bitstream only when the mode information indicates that the merge mode is used.

The mode information may be a merge flag. The unit of the mode information may be a block. Information about the block may include mode information, and the mode information may indicate whether a merge mode is applied to the block.

The merge index may indicate a merge candidate to be used for the prediction of the target block, among merge candidates included in the merge candidate list. Alternatively, the merge index may indicate a block with which the target block is to be merged, among neighbor blocks spatially or temporally adjacent to the target block.

The encoding apparatus 100 may select a merge candidate having the highest encoding performance among the merge candidates included in the merge candidate list and set a value of the merge index to indicate the selected merge candidate.

Correction information may be information used to correct a motion vector. The encoding apparatus 100 may generate correction information. The decoding apparatus 200 may correct the motion vector of a merge candidate selected by a merge index based on the correction information.

The correction information may include at least one of information indicating whether correction is to be performed, correction direction information, and correction size information. A prediction mode in which the motion vector is corrected based on the signaled correction information may be referred to as a "merge mode having a motion vector difference".

2-4) Inter prediction of merge mode that uses inter-prediction information

The decoding apparatus 200 may perform prediction on the target block using the merge candidate indicated by the merge index, among merge candidates included in the merge candidate list.

The motion vector of the target block may be specified by the motion vector, reference picture index, and reference direction of the merge candidate indicated by the merge index.

3) Skip mode

A skip mode may be a mode in which the motion information of a spatial candidate or the motion information of a temporal candidate is applied to the target block without change. Also, the skip mode may be a mode in which a residual signal is not used. In other words, when the skip mode is used, a reconstructed block may be the same as a prediction block.

The difference between the merge mode and the skip mode lies in whether or not a residual signal is transmitted or used. That is, the skip mode may be similar to the merge mode except that a residual signal is not transmitted or used.

When the skip mode is used, the encoding apparatus 100 may transmit information about a block, the motion information of which is to be used as the motion information of the target block, among blocks that are spatial candidates or temporal candidates, to the decoding apparatus 200 through a bitstream. The encoding apparatus 100 may generate entropy-encoded information by performing entropy encoding on the information, and may signal the entropy-encoded information to the decoding apparatus 200 through a bitstream. The decoding apparatus 200 may extract entropy-encoded information from the bitstream, and may acquire information by applying entropy decoding to the entropy-encoded information.

Further, when the skip mode is used, the encoding apparatus 100 may not transmit other syntax information, such as an MVD, to the decoding apparatus 200. For example, when the skip mode is used, the encoding apparatus 100 may not signal a syntax element related to at least one of an MVD, a coded block flag, and a transform coefficient level to the decoding apparatus 200.

3-1) Creation of merge candidate list

The skip mode may also use a merge candidate list. In other words, a merge candidate list may be used both in the merge mode and in the skip mode. In this aspect, the merge candidate list may also be referred to as a "skip candidate list" or a "merge/skip candidate list".

Alternatively, the skip mode may use an additional candidate list different from that of the merge mode. In this case, in the following description, a merge candidate list and a merge candidate may be replaced with a skip candidate list and a skip candidate, respectively.

The merge candidate list may be created before prediction in the skip mode is performed.

3-2) Search for motion vector that uses merge candidate list

The encoding apparatus 100 may determine the merge candidates to be used to encode a target block. For example, the encoding apparatus 100 may perform prediction on the target block using the merge candidates in a merge candidate list. The encoding apparatus 100 may use a merge candidate that incurs the minimum cost in prediction to encode the target block.

Further, the encoding apparatus 100 may determine whether to use a skip mode to encode the target block.

3-3) Transmission of inter-prediction information

The encoding apparatus 100 may generate a bitstream that includes inter-prediction information required for inter prediction. The decoding apparatus 200 may perform inter prediction on the target block using the inter-prediction information of the bitstream.

The inter-prediction information may include 1) mode information indicating whether a skip mode is used, and 2) a skip index.

The skip index may be identical to the above-described merge index.

When the skip mode is used, the target block may be encoded without using a residual signal. The inter-prediction information may not contain a residual signal. Alternatively, the bitstream may not include a residual signal.

The decoding apparatus 200 may acquire a skip index from the bitstream only when the mode information indicates that the skip mode is used. As described above, a merge index and a skip index may be identical to each other. The decoding apparatus 200 may acquire the skip index from the bitstream only when the mode information indicates that the merge mode or the skip mode is used.

The skip index may indicate the merge candidate to be used for the prediction of the target block, among the merge candidates included in the merge candidate list.

3-4) Inter prediction in skip mode that uses inter-prediction information

The decoding apparatus 200 may perform prediction on the target block using a merge candidate indicated by a skip index, among the merge candidates included in a merge candidate list.

The motion vector of the target block may be specified by the motion vector, reference picture index, and reference direction of the merge candidate indicated by the skip index.

4) Current picture reference mode

The current picture reference mode may denote a prediction mode that uses a previously reconstructed region in a target picture to which a target block belongs.

A motion vector for specifying the previously reconstructed region may be used. Whether the target block has been encoded in the current picture reference mode may be determined using the reference picture index of the target block.

A flag or index indicating whether the target block is a block encoded in the current picture reference mode may be signaled by the encoding apparatus 100 to the decoding apparatus 200. Alternatively, whether the target block is a block encoded in the current picture reference mode may be inferred through the reference picture index of the target block.

When the target block is encoded in the current picture reference mode, the target picture may exist at a fixed location or an arbitrary location in a reference picture list for the target block.

For example, the fixed location may be either a location where a value of the reference picture index is 0 or the last location.

When the target picture exists at an arbitrary location in the reference picture list, an additional reference picture index indicating such an arbitrary location may be signaled by the encoding apparatus 100 to the decoding apparatus 200.

5) Subblock merge mode

A subblock merge mode may be a mode in which motion information is derived from the subblock of a CU.

When the subblock merge mode is applied, a subblock merge candidate list may be generated using the motion information of a co-located subblock (col-subblock) of a target subblock (i.e., a subblock-based temporal merge candidate) in a reference image and/or an affine control point motion vector merge candidate.

6) Triangle partition mode

In a triangle partition mode, a target block may be partitioned in a diagonal direction, and sub-target blocks resulting from partitioning may be generated. For each sub-target block, motion information of the corresponding sub-target block may be derived, and a prediction sample for each sub-target block may be derived using the derived motion information. A prediction sample for the target block may be derived through a weighted sum of the prediction samples for the sub-target blocks resulting from the partitioning.

7) Combination inter-intra prediction mode

The combination inter-intra prediction mode may be a mode in which a prediction sample for a target block is derived using a weighted sum of a prediction sample generated via inter-prediction and a prediction sample generated via intra-prediction.

In the above-described modes, the decoding apparatus 200 may autonomously correct derived motion information. For example, the decoding apparatus 200 may search a specific area for motion information having the minimum sum of Absolute Differences (SAD) based on a reference block indicated by the derived motion information, and may derive the found motion information as corrected motion information.

In the above-described modes, the decoding apparatus 200 may compensate for the prediction sample derived via inter prediction using an optical flow.

In the above-described AMVP mode, merge mode, skip mode, etc., motion information to be used for prediction of the target block may be specified among pieces of motion information in a list using the index information of the list.

In order to improve encoding efficiency, the encoding apparatus 100 may signal only the index of an element that incurs the minimum cost in inter prediction of the target block, among elements in the list. The encoding apparatus 100 may encode the index, and may signal the encoded index.

Therefore, the above-described lists (i.e. the prediction motion vector candidate list and the merge candidate list) must be able to be derived by the encoding apparatus 100 and the decoding apparatus 200 using the same scheme based on the same data. Here, the same data may include a reconstructed picture and a reconstructed block. Further, in order to specify an element using an index, the order of the elements in the list must be fixed.

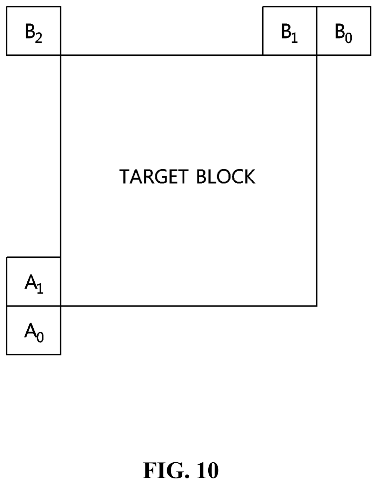

FIG. 10 illustrates spatial candidates according to an embodiment.

In FIG. 10, the locations of spatial candidates are illustrated.

The large block in the center of the drawing may denote a target block. Five small blocks may denote spatial candidates.

The coordinates of the target block may be (xP, yP), and the size of the target block may be represented by (nPSW, nPSH).

Spatial candidate $A_0$ may be a block adjacent to the below-left corner of the target block. $A_0$ may be a block that occupies pixels located at coordinates (xP - 1, yP + nPSH).

Spatial candidate $A_1$ may be a block adjacent to the left of the target block. $A_1$ may be a lowermost block, among blocks adjacent to the left of the target block. Alternatively, $A_1$ may be a block adjacent to the top of $A_0$. $A_1$ may be a block that occupies pixels located at coordinates (xP - 1, yP + nPSH - 1).

Spatial candidate $B_0$ may be a block adjacent to the above-right corner of the target block. $B_0$ may be a block that occupies pixels located at coordinates (xP + nPSW, yP - 1).

Spatial candidate $B_1$ may be a block adjacent to the top of the target block. Bi may be a rightmost block, among blocks adjacent to the top of the target block. Alternatively, $B_1$ may be a block adjacent to the left of $B_0$. $B_1$ may be a block that occupies pixels located at coordinates (xP + nPSW - 1, yP - 1).

Spatial candidate $B_2$ may be a block adjacent to the above-left corner of the target block. $B_2$ may be a block that occupies pixels located at coordinates (xP - 1, yP - 1).

Determination of availability of spatial candidate and temporal candidate

In order to include the motion information of a spatial candidate or the motion information of a temporal candidate in a list, it must be determined whether the motion information of the spatial candidate or the motion information of the temporal candidate is available.

Hereinafter, a candidate block may include a spatial candidate and a temporal candidate.

For example, the determination may be performed by sequentially applying the following steps 1) to 4).

Step 1) When a PU including a candidate block is out of the boundary of a picture, the availability of the candidate block may be set to "false". The expression "availability is set to false" may have the same meaning as "set to be unavailable".

Step 2) When a PU including a candidate block is out of the boundary of a slice, the availability of the candidate block may be set to "false". When the target block and the candidate block are located in different slices, the availability of the candidate block may be set to "false".

Step 3) When a PU including a candidate block is out of the boundary of a tile, the availability of the candidate block may be set to "false". When the target block and the candidate block are located in different tiles, the availability of the candidate block may be set to "false".

Step 4) When the prediction mode of a PU including a candidate block is an intra-prediction mode, the availability of the candidate block may be set to "false". When a PU including a candidate block does not use inter prediction, the availability of the candidate block may be set to "false".

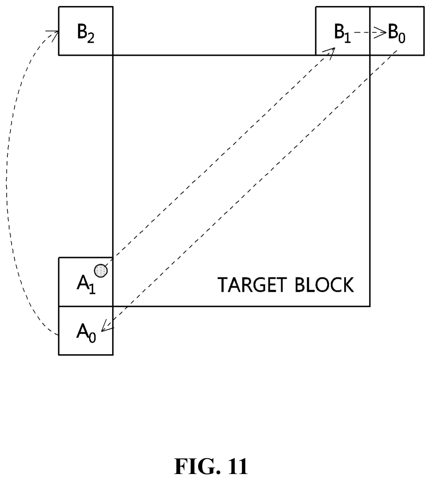

FIG. 11 illustrates the order of addition of motion information of spatial candidates to a merge list according to an embodiment.

As shown in FIG. 11, when pieces of motion information of spatial candidates are added to a merge list, the order of $A_1$, $B_1$, $B_0$, $A_0$, and $B_2$ may be used. That is, pieces of motion information of available spatial candidates may be added to the merge list in the order of $A_1$, $B_1$, $B_0$, $A_0$, and $B_2$.

Method for deriving merge list in merge mode and skip mode

As described above, the maximum number of merge candidates in the merge list may be set. The set maximum number is indicated by "N". The set number may be transmitted from the encoding apparatus 100 to the decoding apparatus 200. The slice header of a slice may include N. In other words, the maximum number of merge candidates in the merge list for the target block of the slice may be set by the slice header. For example, the value of N may be basically 5.

Pieces of motion information (i.e., merge candidates) may be added to the merge list in the order of the following steps 1) to 4).

Step 1) Among spatial candidates, available spatial candidates may be added to the merge list. Pieces of motion information of the available spatial candidates may be added to the merge list in the order illustrated in FIG. 11. Here, when the motion information of an available spatial candidate overlaps other motion information already present in the merge list, the motion information may not be added to the merge list. The operation of checking whether the corresponding motion information overlaps other motion information present in the list may be referred to in brief as an "overlap check".

The maximum number of pieces of motion information that are added may be N.

Step 2) When the number of pieces of motion information in the merge list is less than N and a temporal candidate is available, the motion information of the temporal candidate may be added to the merge list. Here, when the motion information of the available temporal candidate overlaps other motion information already present in the merge list, the motion information may not be added to the merge list.

Step 3) When the number of pieces of motion information in the merge list is less than N and the type of a target slice is "B", combined motion information generated by combined bidirectional prediction (bi-prediction) may be added to the merge list.

The target slice may be a slice including a target block.

The combined motion information may be a combination of L0 motion information and L1 motion information. L0 motion information may be motion information that refers only to a reference picture list L0. L1 motion information may be motion information that refers only to a reference picture list L1.

In the merge list, one or more pieces of L0 motion information may be present. Further, in the merge list, one or more pieces of L1 motion information may be present.

The combined motion information may include one or more pieces of combined motion information. When the combined motion information is generated, L0 motion information and L1 motion information, which are to be used for generation, among the one or more pieces of L0 motion information and the one or more pieces of L1 motion information, may be predefined. One or more pieces of combined motion information may be generated in a predefined order via combined bidirectional prediction, which uses a pair of different pieces of motion information in the merge list. One of the pair of different pieces of motion information may be L0 motion information and the other of the pair may be L1 motion information.

For example, combined motion information that is added with the highest priority may be a combination of L0 motion information having a merge index of 0 and L1 motion information having a merge index of 1. When motion information having a merge index of 0 is not L0 motion information or when motion information having a merge index of 1 is not L1 motion information, the combined motion information may be neither generated nor added. Next, the combined motion information that is added with the next priority may be a combination of L0 motion information, having a merge index of 1, and L1 motion information, having a merge index of 0. Subsequent detailed combinations may conform to other combinations of video encoding/decoding fields.

Here, when the combined motion information overlaps other motion information already present in the merge list, the combined motion information may not be added to the merge list.

Step 4) When the number of pieces of motion information in the merge list is less than N, motion information of a zero vector may be added to the merge list.

The zero-vector motion information may be motion information for which the motion vector is a zero vector.

The number of pieces of zero-vector motion information may be one or more. The reference picture indices of one or more pieces of zero-vector motion information may be different from each other. For example, the value of the reference picture index of first zero-vector motion information may be 0. The value of the reference picture index of second zero-vector motion information may be 1.

The number of pieces of zero-vector motion information may be identical to the number of reference pictures in the reference picture list.

The reference direction of zero-vector motion information may be bidirectional. Both of the motion vectors may be zero vectors. The number of pieces of zero-vector motion information may be the smaller one of the number of reference pictures in the reference picture list L0 and the number of reference pictures in the reference picture list L1. Alternatively, when the number of reference pictures in the reference picture list L0 and the number of reference pictures in the reference picture list L1 are different from each other, a reference direction that is unidirectional may be used for a reference picture index that may be applied only to a single reference picture list.

The encoding apparatus 100 and/or the decoding apparatus 200 may sequentially add the zero-vector motion information to the merge list while changing the reference picture index.

When zero-vector motion information overlaps other motion information already present in the merge list, the zero-vector motion information may not be added to the merge list.

The order of the above-described steps 1) to 4) is merely exemplary, and may be changed. Further, some of the above steps may be omitted depending on predefined conditions.

Method for deriving prediction motion vector candidate list in AMVP mode

The maximum number of prediction motion vector candidates in a prediction motion vector candidate list may be predefined. The predefined maximum number is indicated by N. For example, the predefined maximum number may be 2.

Pieces of motion information (i.e. prediction motion vector candidates) may be added to the prediction motion vector candidate list in the order of the following steps 1) to 3).

Step 1) Available spatial candidates, among spatial candidates, may be added to the prediction motion vector candidate list. The spatial candidates may include a first spatial candidate and a second spatial candidate.

The first spatial candidate may be one of $A_0$, $A_1$, scaled $A_0$, and scaled $A_1$. The second spatial candidate may be one of $B_0$, $B_1$, $B_2$, scaled $B_0$, scaled $B_1$, and scaled $B_2$.

Pieces of motion information of available spatial candidates may be added to the prediction motion vector candidate list in the order of the first spatial candidate and the second spatial candidate. In this case, when the motion information of an available spatial candidate overlaps other motion information already present in the prediction motion vector candidate list, the motion information may not be added to the prediction motion vector candidate list. In other words, when the value of N is 2, if the motion information of a second spatial candidate is identical to the motion information of a first spatial candidate, the motion information of the second spatial candidate may not be added to the prediction motion vector candidate list.

The maximum number of pieces of motion information that are added may be N.

Step 2) When the number of pieces of motion information in the prediction motion vector candidate list is less than N and a temporal candidate is available, the motion information of the temporal candidate may be added to the prediction motion vector candidate list. In this case, when the motion information of the available temporal candidate overlaps other motion information already present in the prediction motion vector candidate list, the motion information may not be added to the prediction motion vector candidate list.

Step 3) When the number of pieces of motion information in the prediction motion vector candidate list is less than N, zero-vector motion information may be added to the prediction motion vector candidate list.

The zero-vector motion information may include one or more pieces of zero-vector motion information. The reference picture indices of the one or more pieces of zero-vector motion information may be different from each other.

The encoding apparatus 100 and/or the decoding apparatus 200 may sequentially add pieces of zero-vector motion information to the prediction motion vector candidate list while changing the reference picture index.

When zero-vector motion information overlaps other motion information already present in the prediction motion vector candidate list, the zero-vector motion information may not be added to the prediction motion vector candidate list.

The description of the zero-vector motion information, made above in connection with the merge list, may also be applied to zero-vector motion information. A repeated description thereof will be omitted.

The order of the above-described steps 1) to 3) is merely exemplary, and may be changed. Further, some of the steps may be omitted depending on predefined conditions.

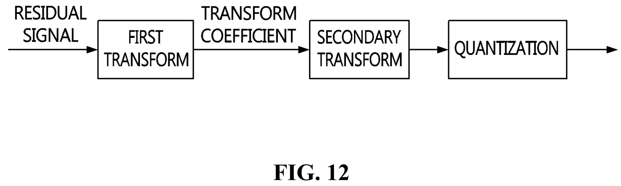

FIG. 12 illustrates a transform and quantization process according to an example.

As illustrated in FIG. 12, quantized levels may be generated by performing a transform and/or quantization process on a residual signal.

A residual signal may be generated as the difference between an original block and a prediction block. Here, the prediction block may be a block generated via intra prediction or inter prediction.

The residual signal may be transformed into a signal in a frequency domain through a transform procedure that is a part of a quantization procedure.

A transform kernel used for a transform may include various DCT kernels, such as Discrete Cosine Transform (DCT) type 2 (DCT-II) and Discrete Sine Transform (DST) kernels.

These transform kernels may perform a separable transform or a twodimensional (2D) non-separable transform on the residual signal. The separable transform may be a transform indicating that a one-dimensional (1D) transform is performed on the residual signal in each of a horizontal direction and a vertical direction.

The DCT type and the DST type, which are adaptively used for a 1D transform, may include DCT-V, DCT-VIII, DST-I, and DST-VII in addition to DCT-II, as shown in each of the following Table 3 and the following table 4.

Table 3

| Transform set | Transform candidates |
|---|---|
| 0 | DST-VII, DCT-VIII |
| 1 | DST-VII, DST-I |
| 2 | DST-VII, DCT-V |

Table 4

| Transform set | Transform candidates |
|---|---|
| 0 | DST-VII, DCT-VIII, DST-I |
| 1 | DST-VII, DST-I, DCT-VIII |
| 2 | DST-VII, DCT-V, DST-I |

As shown in Table 3 and Table 4, when a DCT type or a DST type to be used for a transform is derived, transform sets may be used. Each transform set may include multiple transform candidates. Each transform candidate may be a DCT type or a DST type.

The following Table 5 shows examples of a transform set to be applied to a horizontal direction and a transform set to be applied to a vertical direction depending on intra-prediction modes.

Table 5

| Intra-prediction mode | 0 | 1 | 2 | 3 | 4 | 5 | 6 | 7 | 8 | 9 |
|---|---|---|---|---|---|---|---|---|---|---|
| Vertical transform set | 2 | 1 | 0 | 1 | 0 | 1 | 0 | 1 | 0 | 1 |
| Horizontal transform set | 2 | 1 | 0 | 1 | 0 | 1 | 0 | 1 | 0 | 1 |
| **Intra-prediction mode** | **10** | **11** | **12** | **13** | **14** | **15** | **16** | **17** | **18** | **19** |
| Vertical transform set | 0 | 1 | 0 | 1 | 0 | 0 | 0 | 0 | 0 | 0 |
| Horizontal transform set | 0 | 1 | 0 | 1 | 2 | 2 | 2 | 2 | 2 | 2 |
| **Intra-prediction mode** | **20** | **21** | **22** | **23** | **24** | **25** | **26** | **27** | **28** | **29** |
| Vertical transform set | 0 | 0 | 0 | 1 | 0 | 1 | 0 | 1 | 0 | 1 |
| Horizontal transform set | 2 | 2 | 2 | 1 | 0 | 1 | 0 | 1 | 0 | 1 |
| **Intra-prediction mode** | **30** | **31** | **32** | **33** | **34** | **35** | **36** | **37** | **38** | **39** |
| Vertical transform set | 0 | 1 | 0 | 1 | 0 | 1 | 0 | 1 | 0 | 1 |
| Horizontal transform set | 0 | 1 | 0 | 1 | 0 | 1 | 0 | 1 | 0 | 1 |
| **Intra-prediction mode** | **40** | **41** | **42** | **43** | **44** | **45** | **46** | **47** | **48** | **49** |
| Vertical transform set | 0 | 1 | 0 | 1 | 0 | 1 | 2 | 2 | 2 | 2 |
| Horizontal transform set | 0 | 1 | 0 | 1 | 0 | 1 | 0 | 0 | 0 | 0 |

(continued)

| Intra-prediction mode | 50 | 51 | 52 | 53 | 54 | 55 | 56 | 57 | 58 | 59 |
|---|---|---|---|---|---|---|---|---|---|---|
| Vertical transform set | 2 | 2 | 2 | 2 | 2 | 1 | 0 | 1 | 0 | 1 |
| Horizontal transform set | 0 | 0 | 0 | 0 | 0 | 1 | 0 | 1 | 0 | 1 |
| **Intra-prediction mode** | **60** | **61** | **62** | **63** | **64** | **65** | **66** | | | |
| Vertical transform set | 0 | 1 | 0 | 1 | 0 | 1 | 0 | | | |
| Horizontal transform set | 0 | 1 | 0 | 1 | 0 | 1 | 0 | | | |

In Table 5, numbers of vertical transform sets and horizontal transform sets that are to be applied to the horizontal direction of a residual signal depending on the intra-prediction modes of the target block are indicated.

As exemplified in FIGS. 4 and 5, transform sets to be applied to the horizontal direction and the vertical direction may be predefined depending on the intra-prediction mode of the target block. The encoding apparatus 100 may perform a transform and an inverse transform on the residual signal using a transform included in the transform set corresponding to the intra-prediction mode of the target block. Further, the decoding apparatus 200 may perform an inverse transform on the residual signal using a transform included in the transform set corresponding to the intra-prediction mode of the target block.

In the transform and inverse transform, transform sets to be applied to the residual signal may be determined, as exemplified in Tables 3, 4, and 5, and may not be signaled. Transform indication information may be signaled from the encoding apparatus 100 to the decoding apparatus 200. The transform indication information may be information indicating which one of multiple transform candidates included in the transform set to be applied to the residual signal is used.

For example, when the size of the target block is 64x64, transform sets, each having three transforms, may be configured depending on the intra-prediction mode. An optimal transform method may be selected from among a total of nine multiple transform methods resulting from combinations of three transforms in a horizontal direction and three transforms in a vertical direction. Through such an optimal transform method, the residual signal may be encoded and/or decoded, and thus coding efficiency may be improved.

Here, information indicating which one of transforms belonging to each transform set has been used for at least one of a vertical transform and a horizontal transform may be entropy-encoded and/or -decoded. Here, truncated unary binarization may be used to encode and/or decode such information.

As described above, methods using various transforms may be applied to a residual signal generated via intra prediction or inter prediction.

The transform may include at least one of a first transform and a secondary transform. A transform coefficient may be generated by performing the first transform on the residual signal, and a secondary transform coefficient may be generated by performing the secondary transform on the transform coefficient.

The first transform may be referred to as a "primary transform". Further, the first transform may also be referred to as an "Adaptive Multiple Transform (AMT) scheme". AMT may mean that, as described above, different transforms are applied to respective 1D directions (i.e. a vertical direction and a horizontal direction).

A secondary transform may be a transform for improving energy concentration on a transform coefficient generated by the first transform. Similar to the first transform, the secondary transform may be a separable transform or a non-separable transform. Such a non-separable transform may be a Non-Separable Secondary Transform (NSST).

The first transform may be performed using at least one of predefined multiple transform methods. For example, the predefined multiple transform methods may include a Discrete Cosine Transform (DCT), a Discrete Sine Transform (DST), a Karhunen-Loeve Transform (KLT), etc.

Further, a first transform may be a transform having various transform types depending on a kernel function that defines a Discrete Cosine Transform (DCT) or a Discrete Sine Transform (DST).

For example, the transform type may be determined based at least one of 1) a prediction mode of a target block (for example, one of an intra prediction and an inter prediction), 2) a size of a target block, 3) a shape of a target block, 4) an intra prediction mode of a target block, 5) a component of a target block (for example, one of a luma component an a chroma component), and 6) a partitioning type applied to a target block (for example, one of a Quad Tree, a Binary Tree and a Ternary Tree).

For example, the first transform may include transforms, such as DCT-2, DCT-5, DCT-7, DST-7, DST-1, DST-8, and DCT-8 depending on the transform kernel presented in the following Table 6. In the following Table 6, various transform types and transform kernel functions for Multiple Transform Selection (MTS) are exemplified.

MTS may refer to the selection of combinations of one or more DCT and/or DST kernels so as to transform a residual signal in a horizontal and/or vertical direction.

Table 6

| Transform type | Transform kernel function $T_i(j)$ |
|---|---|
| DCT-2 | $$T_i(j) = \omega_0 \cdot \sqrt{\frac{2}{N}} \cdot \cos\left(\frac{\pi \cdot i \cdot (2j+1)}{2N}\right) \qquad \omega_0 = \sqrt{\frac{2}{N}} \ (i=0) \ or \ 1 \ (otherwise)$$ where |
| DST-7 | $$T_i(j) = \sqrt{\frac{4}{2N+1}} \cdot \sin\left(\frac{\pi \cdot (2j+1) \cdot (j+1)}{2N+1}\right)$$ |
| DCT-5 | $$T_i(j) = \omega_0 \cdot \omega_1 \cdot \sqrt{\frac{2}{2N-1}} \cdot \cos\left(\frac{2\pi \cdot i \cdot j}{2N+1}\right) \qquad \omega_{0/1} = \sqrt{\frac{2}{N}} \ (i \ or \ j = 0) \ or \ 1 \ (otherwise)$$ where |
| DCT-8 | $$T_i(j) = \sqrt{\frac{4}{2N+1}} \cdot \cos\left(\frac{\pi \cdot (2j+1) \cdot (2j+1)}{4N+2}\right)$$ |
| DST-1 | $$T_i(j) = \sqrt{\frac{2}{N+1}} \cdot \sin\left(\frac{\pi \cdot (i+1) \cdot (j+1)}{N+1}\right)$$ |

In Table 6, i and j may be integer values that are equal to or greater than 0 and are less than or equal to N-1.

The secondary transform may be performed on the transform coefficient generated by performing the first transform.

As in the first transform, transform sets may also be defined in a secondary transform. The methods for deriving and/or determining the above-described transform sets may be applied not only to the first transform but also to the secondary transform.

The first transform and the secondary transform may be determined for a specific target.

For example, a first transform and a secondary transform may be applied to signal components corresponding to one or more of a luminance (luma) component and a chrominance (chroma) component. Whether to apply the first transform and/or the secondary transform may be determined depending on at least one of coding parameters for a target block and/or a neighbor block. For example, whether to apply the first transform and/or the secondary transform may be determined depending on the size and/or shape of the target block.

In the encoding apparatus 100 and the decoding apparatus 200, transform information indicating the transform method to be used for the target may be derived by utilizing specified information.

For example, the transform information may include a transform index to be used for a primary transform and/or a secondary transform. Alternatively, the transform information may indicate that a primary transform and/or a secondary transform are not used.

For example, when the target of a primary transform and a secondary transform is a target block, the transform method(s) to be applied to the primary transform and/or the secondary transform indicated by the transform information may be determined depending on at least one of coding parameters for the target block and/or blocks neighbor the target block.

Alternatively, transform information indicating a transform method for a specific target may be signaled from the encoding apparatus 100 to the decoding apparatus 200.

For example, for a single CU, whether to use a primary transform, an index indicating the primary transform, whether to use a secondary transform, and an index indicating the secondary transform may be derived as the transform information by the decoding apparatus 200. Alternatively, for a single CU, the transform information, which indicates whether to use a primary transform, an index indicating the primary transform, whether to use a secondary transform, and an index indicating the secondary transform, may be signaled.

The quantized transform coefficient (i.e. the quantized levels) may be generated by performing quantization on the result, generated by performing the first transform and/or the secondary transform, or on the residual signal.

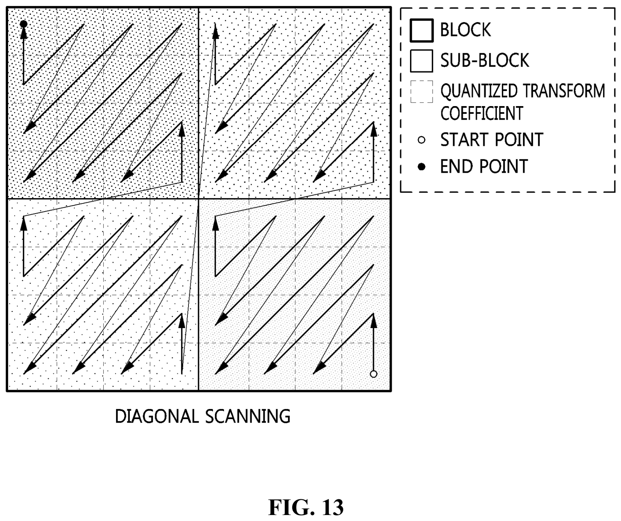

FIG. 13 illustrates diagonal scanning according to an example.

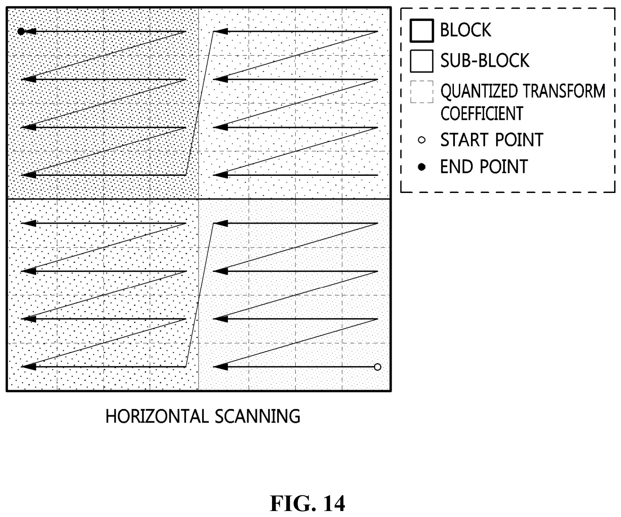

FIG. 14 illustrates horizontal scanning according to an example.

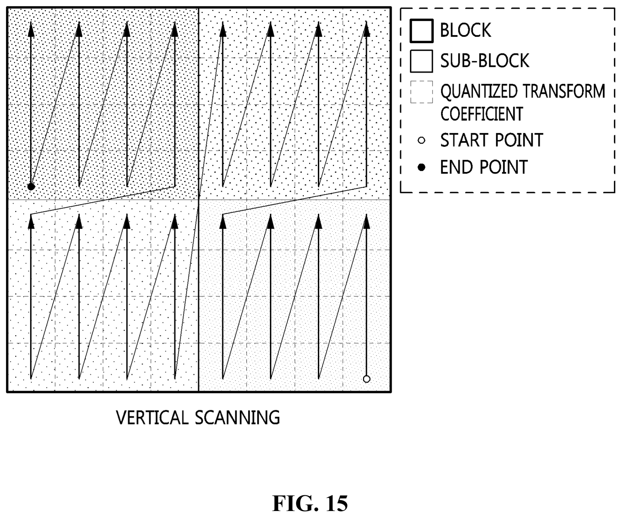

FIG. 15 illustrates vertical scanning according to an example.

Quantized transform coefficients may be scanned via at least one of (upright) diagonal scanning, vertical scanning, and horizontal scanning depending on at least one of an intra-prediction mode, a block size, and a block shape. The block may be a Transform Unit (TU).

Each scanning may be initiated at a specific start point, and may be terminated at a specific end point.

For example, quantized transform coefficients may be changed to 1D vector forms by scanning the coefficients of a block using diagonal scanning of FIG. 13. Alternatively, horizontal scanning of FIG. 14 or vertical scanning of FIG. 15, instead of diagonal scanning, may be used depending on the size and/or intra-prediction mode of a block.

Vertical scanning may be the operation of scanning 2D block-type coefficients in a column direction. Horizontal scanning may be the operation of scanning 2D block-type coefficients in a row direction.

In other words, which one of diagonal scanning, vertical scanning, and horizontal scanning is to be used may be determined depending on the size and/or inter-prediction mode of the block.

As illustrated in FIGS. 13, 14, and 15, the quantized transform coefficients may be scanned along a diagonal direction, a horizontal direction or a vertical direction.

The quantized transform coefficients may be represented by block shapes. Each block may include multiple subblocks. Each subblock may be defined depending on a minimum block size or a minimum block shape.

In scanning, a scanning sequence depending on the type or direction of scanning may be primarily applied to subblocks. Further, a scanning sequence depending on the direction of scanning may be applied to quantized transform coefficients in each subblock.

For example, as illustrated in FIGS. 13, 14, and 15, when the size of a target block is 8x8, quantized transform coefficients may be generated through a first transform, a secondary transform, and quantization on the residual signal of the target block. Therefore, one of three types of scanning sequences may be applied to four 4x4 subblocks, and quantized transform coefficients may also be scanned for each 4x4 subblock depending on the scanning sequence.

The encoding apparatus 100 may generate entropy-encoded quantized transform coefficients by performing entropy encoding on scanned quantized transform coefficients, and may generate a bitstream including the entropy-encoded quantized transform coefficients.

The decoding apparatus 200 may extract the entropy-encoded quantized transform coefficients from the bitstream, and may generate quantized transform coefficients by performing entropy decoding on the entropy-encoded quantized transform coefficients. The quantized transform coefficients may be aligned in the form of a 2D block via inverse scanning. Here, as the method of inverse scanning, at least one of upright diagonal scanning, vertical scanning, and horizontal scanning may be performed.

In the decoding apparatus 200, dequantization may be performed on the quantized transform coefficients. A secondary inverse transform may be performed on the result generated by performing dequantization depending on whether to perform the secondary inverse transform. Further, a first inverse transform may be performed on the result generated by performing the secondary inverse transform depending on whether the first inverse transform is to be performed. A reconstructed residual signal may be generated by performing the first inverse transform on the result generated by performing the secondary inverse transform.

For a luma component which is reconstructed via intra prediction or inter prediction, inverse mapping having a dynamic range may be performed before in-loop filtering.

The dynamic range may be divided into 16 equal pieces, and mapping functions for respective pieces may be signaled. Such a mapping function may be signaled at a slice level or a tile group level.

An inverse mapping function for performing inverse mapping may be derived based on the mapping function.

In-loop filtering, the storage of a reference picture, and motion compensation may be performed in an inverse mapping area.

A prediction block generated via inter prediction may be changed to a mapped area through mapping using a mapping function, and the changed prediction block may be used to generate a reconstructed block. However, since intra prediction is performed in the mapped area, a prediction block generated via intra prediction may be used to generate a reconstructed block without requiring mapping and/or inverse mapping.

For example, when the target block is a residual block of a chroma component, the residual block may be changed to an inversely mapped area by scaling the chroma component of the mapped area.

Whether scaling is available may be signaled at a slice level or a tile group level.

For example, scaling may be applied only to the case where mapping is available for a luma component and where the partitioning of the luma component and the partitioning of the chroma component follow the same tree structure.

Scaling may be performed based on the average of the values of samples in a luma prediction block, which corresponds to a chroma prediction block. Here, when the target block uses inter prediction, the luma prediction block may mean a mapped luma prediction block.

A value required for scaling may be derived by referring to a look-up table using the index of a piece to which the average of sample values of the luma prediction block belongs.

The residual block may be changed to an inversely mapped area by scaling the residual block using a finally derived value. Thereafter, for the block of a chroma component, reconstruction, intra prediction, inter prediction, in-loop filtering, and the storage of a reference picture may be performed in the inversely mapped area.

For example, information indicating whether the mapping and/or inverse mapping of a luma component and a chroma component are available may be signaled through a sequence parameter set.

A prediction block for the target block may be generated based on a block vector. The block vector may indicate displacement between the target block and a reference block. The reference block may be a block in a target image.

In this way, a prediction mode in which the prediction block is generated by referring to the target image may be referred to as an "Intra-Block Copy (IBC) mode".

An IBC mode may be applied to a CU having a specific size. For example, the IBC mode may be applied to an MxN CU. Here, M and N may be less than or equal to 64.

The IBC mode may include a skip mode, a merge mode, an AMVP mode, etc. In the case of the skip mode or the merge mode, a merge candidate list may be configured, and a merge index is signaled, and thus a single merge candidate may be specified among merge candidates present in the merge candidate list. The block vector of the specified merge candidate may be used as the block vector of the target block.

In the case of the AMVP mode, a differential block vector may be signaled. Also, a prediction block vector may be derived from the left neighbor block and the above neighbor block of the target block. Further, an index indicating which neighbor block is to be used may be signaled.

A prediction block in the IBC mode may be included in a target CTU or a left CTU, and may be limited to a block within a previously reconstructed area. For example, the value of a block vector may be limited so that a prediction block for a target block is located in a specific area. The specific area may be an area defined by three 64x64 blocks that are encoded and/or decoded prior to a 64x64 block including the target block. The value of the block vector is limited in this way, and thus memory consumption and device complexity caused by the implementation of the IBC mode may be decreased.

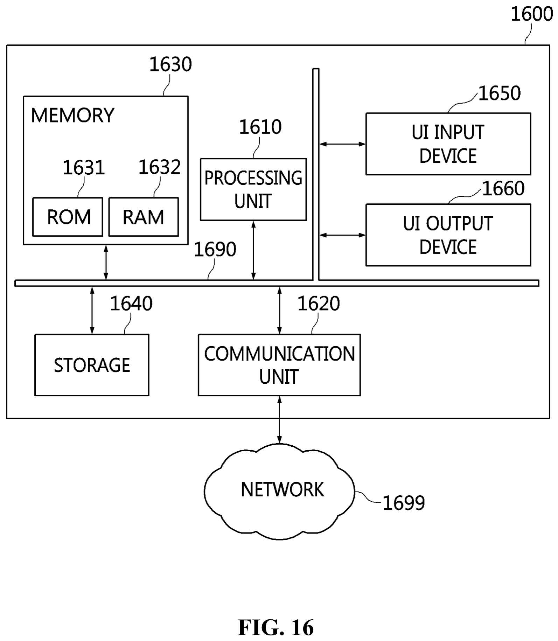

FIG. 16 is a configuration diagram of an encoding apparatus according to an embodiment.

An encoding apparatus 1600 may correspond to the above-described encoding apparatus 100.

The encoding apparatus 1600 may include a processing unit 1610, memory 1630, a user interface (UI) input device 1650, a UI output device 1660, and storage 1640, which communicate with each other through a bus 1690. The encoding apparatus 1600 may further include a communication unit 1620 coupled to a network 1699.

The processing unit 1610 may be a Central Processing Unit (CPU) or a semiconductor device for executing processing instructions stored in the memory 1630 or the storage 1640. The processing unit 1610 may be at least one hardware processor.

The processing unit 1610 may generate and process signals, data or information that are input to the encoding apparatus 1600, are output from the encoding apparatus 1600, or are used in the encoding apparatus 1600, and may perform examination, comparison, determination, etc. related to the signals, data or information. In other words, in embodiments, the generation and processing of data or information and examination, comparison and determination related to data or information may be performed by the processing unit 1610.

The processing unit 1610 may include an inter-prediction unit 110, an intra-prediction unit 120, a switch 115, a subtractor 125, a transform unit 130, a quantization unit 140, an entropy encoding unit 150, a dequantization unit 160, an inverse transform unit 170, an adder 175, a filter unit 180, and a reference picture buffer 190.

At least some of the inter-prediction unit 110, the intra-prediction unit 120, the switch 115, the subtractor 125, the transform unit 130, the quantization unit 140, the entropy encoding unit 150, the dequantization unit 160, the inverse transform unit 170, the adder 175, the filter unit 180, and the reference picture buffer 190 may be program modules, and may communicate with an external device or system. The program modules may be included in the encoding apparatus 1600 in the form of an operating system, an application program module, or other program modules.

The program modules may be physically stored in various types of well-known storage devices. Further, at least some of the program modules may also be stored in a remote storage device that is capable of communicating with the encoding apparatus 1200.

The program modules may include, but are not limited to, a routine, a subroutine, a program, an object, a component, and a data structure for performing functions or operations according to an embodiment or for implementing abstract data types according to an embodiment.

The program modules may be implemented using instructions or code executed by at least one processor of the encoding apparatus 1600.

The processing unit 1610 may execute instructions or code in the inter-prediction unit 110, the intra-prediction unit 120, the switch 115, the subtractor 125, the transform unit 130, the quantization unit 140, the entropy encoding unit 150, the dequantization unit 160, the inverse transform unit 170, the adder 175, the filter unit 180, and the reference picture buffer 190.

A storage unit may denote the memory 1630 and/or the storage 1640. Each of the memory 1630 and the storage 1640 may be any of various types of volatile or nonvolatile storage media. For example, the memory 1630 may include at least one of Read-Only Memory (ROM) 1631 and Random Access Memory (RAM) 1632.

The storage unit may store data or information used for the operation of the encoding apparatus 1600. In an embodiment, the data or information of the encoding apparatus 1600 may be stored in the storage unit.

For example, the storage unit may store pictures, blocks, lists, motion information, inter-prediction information, bitstreams, etc.

The encoding apparatus 1600 may be implemented in a computer system including a computer-readable storage medium.

The storage medium may store at least one module required for the operation of the encoding apparatus 1600. The memory 1630 may store at least one module, and may be configured such that the at least one module is executed by the processing unit 1610.

Functions related to communication of the data or information of the encoding apparatus 1600 may be performed through the communication unit 1620.

For example, the communication unit 1620 may transmit a bitstream to a decoding apparatus 1600, which will be described later.

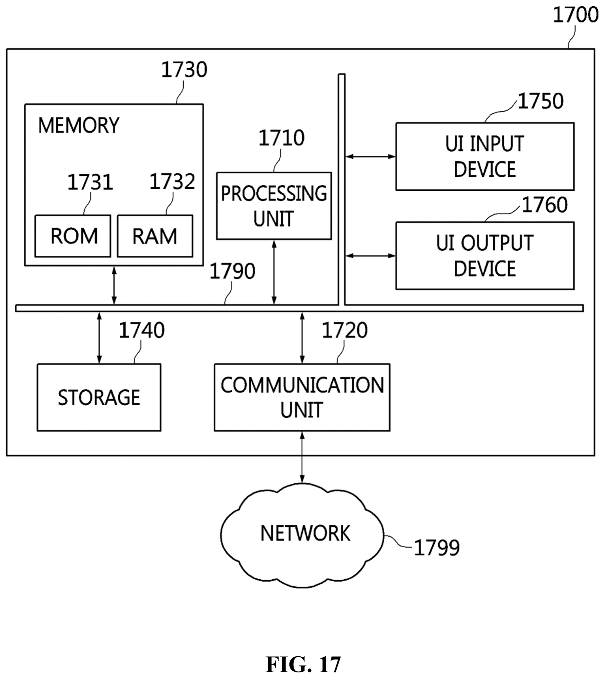

FIG. 17 is a configuration diagram of a decoding apparatus according to an embodiment.

The decoding apparatus 1700 may correspond to the above-described decoding apparatus 200.

The decoding apparatus 1700 may include a processing unit 1710, memory 1730, a user interface (UI) input device 1750, a UI output device 1760, and storage 1740, which communicate with each other through a bus 1790. The decoding apparatus 1700 may further include a communication unit 1720 coupled to a network 1799.

The processing unit 1710 may be a Central Processing Unit (CPU) or a semiconductor device for executing processing instructions stored in the memory 1730 or the storage 1740. The processing unit 1710 may be at least one hardware processor.

The processing unit 1710 may generate and process signals, data or information that are input to the decoding apparatus 1700, are output from the decoding apparatus 1700, or are used in the decoding apparatus 1700, and may perform examination, comparison, determination, etc. related to the signals, data or information. In other words, in embodiments, the generation and processing of data or information and examination, comparison and determination related to data or information may be performed by the processing unit 1710.

The processing unit 1710 may include an entropy decoding unit 210, a dequantization unit 220, an inverse transform unit 230, an intra-prediction unit 240, an inter-prediction unit 250, a switch 245, an adder 255, a filter unit 260, and a reference picture buffer 270.

At least some of the entropy decoding unit 210, the dequantization unit 220, the inverse transform unit 230, the intra-prediction unit 240, the inter-prediction unit 250, the adder 255, the switch 245, the filter unit 260, and the reference picture buffer 270 of the decoding apparatus 200 may be program modules, and may communicate with an external device or system. The program modules may be included in the decoding apparatus 1700 in the form of an operating system, an application program module, or other program modules.

The program modules may be physically stored in various types of well-known storage devices. Further, at least some of the program modules may also be stored in a remote storage device that is capable of communicating with the decoding apparatus 1700.

The program modules may include, but are not limited to, a routine, a subroutine, a program, an object, a component, and a data structure for performing functions or operations according to an embodiment or for implementing abstract data types according to an embodiment.

The program modules may be implemented using instructions or code executed by at least one processor of the decoding apparatus 1700.

The processing unit 1710 may execute instructions or code in the entropy decoding unit 210, the dequantization unit 220, the inverse transform unit 230, the intra-prediction unit 240, the inter-prediction unit 250, the switch 245, the adder 255, the filter unit 260, and the reference picture buffer 270.

A storage unit may denote the memory 1730 and/or the storage 1740. Each of the memory 1730 and the storage 1740 may be any of various types of volatile or nonvolatile storage media. For example, the memory 1730 may include at least one of ROM 1731 and RAM 1732.

The storage unit may store data or information used for the operation of the decoding apparatus 1700. In an embodiment, the data or information of the decoding apparatus 1700 may be stored in the storage unit.

For example, the storage unit may store pictures, blocks, lists, motion information, inter-prediction information, bitstreams, etc.

The decoding apparatus 1700 may be implemented in a computer system including a computer-readable storage medium.

The storage medium may store at least one module required for the operation of the decoding apparatus 1700. The memory 1730 may store at least one module, and may be configured such that the at least one module is executed by the processing unit 1710.

Functions related to communication of the data or information of the decoding apparatus 1700 may be performed through the communication unit 1720.

For example, the communication unit 1720 may receive a bitstream from the encoding apparatus 1700.

Hereinafter, a processing unit may represent the processing unit 1610 of the encoding apparatus 1600 and/or the processing unit 1710 of the decoding apparatus 1700. For example, as to functions relating to prediction, the processing unit may represent the switch 115 and/or the switch 245. As to functions relating to inter prediction, the processing unit may represent the inter-prediction unit 110, the subtractor 125 and the adder 175, and may represent the inter prediction unit 250 and the adder 255. As to functions relating to intra prediction, the processing unit may represent the intra prediction unit 120, the subtractor 125, and the adder 175, and may represent the intra prediction unit 240 and the adder 255. As to functions related to transform, the processing unit may represent the transform unit 130 and the inverse transform unit 170, and may represent the inverse transform unit 230. As to functions relating quantization, the processing unit may represent the quantization unit 140 and the inverse quantization unit 160, and may indicate the inverse quantization unit 220. As to functions relating to entropy encoding and/or entropy decoding, the processing unit may represent the entropy encoding unit 150 and/or the entropy decoding unit 210. As to functions relating filtering, the processing unit may represent the filter unit 180 and/or the filter unit 260. As to functions relating a reference picture, the processing unit may indicate the reference picture buffer 190 and/or the reference picture buffer 270.

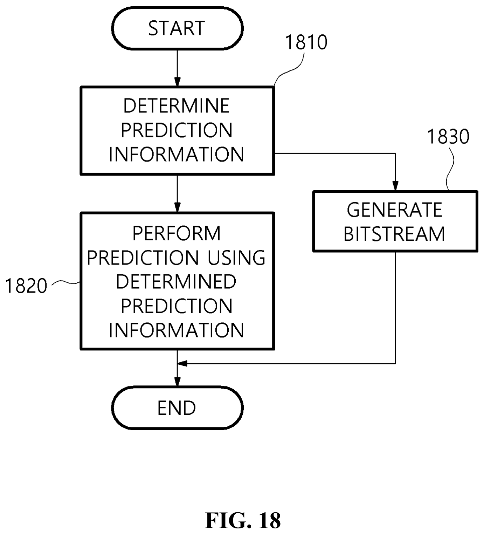

FIG. 18 is a flowchart illustrating a target block prediction method and a bitstream generation method according to an embodiment.

The target block prediction method and the bitstream generation method according to the embodiment may be performed by the encoding apparatus 1600. The embodiment may be a part of a target block encoding method or a video encoding method.

At step 1810, the processing unit 1610 may determine prediction information to be applied to the encoding of the target block.

The prediction information may include information used for the above-described prediction. For example, the prediction information may include inter-prediction information. For example, the prediction information may include intra-prediction information.

At step 1820, the processing unit 1610 may perform prediction for the target block using information about the target block and the determined prediction information.

A prediction block may be generated by prediction for the target block.

A residual block that is the difference between the target block and the prediction block may be generated. The information about the target block may be generated by applying transform and quantization to the residual block.

The information about the target block may include transformed and quantized coefficients for the target block. The information about the target block may include the prediction information.

Further, a reconstructed block that is the sum of the prediction block and a reconstructed residual block may be generated.

At step 1830, the processing unit 1610 may generate a bitstream.

The bitstream may include information about the target block. Further, the bitstream may include the information described above in embodiments. For example, the bitstream may include coding parameters related to the target block and/or the attributes of the target block.

The information included in the bitstream may be generated at step 1830, or may be at least partially generated at steps 1810 and 1820.

The processing unit 1610 may store the generated bitstream in the storage 1640. Alternatively, the communication unit 1620 may transmit the bitstream to the decoding apparatus 1700.

The bitstream may include encoded information about a target block. The processing unit 1610 may generate the encoded information about the target block by performing entropy encoding on the information about the target block.

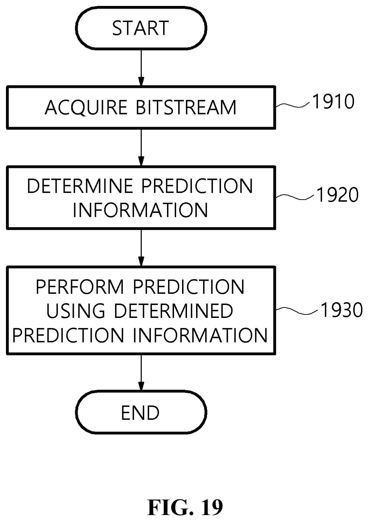

FIG. 19 is a flowchart of a target block prediction method using a bitstream according to an embodiment.

The target block prediction method using a bitstream according to the embodiment may be performed by the decoding apparatus 1700. The embodiment may be a part of a target block decoding method or a video decoding method.

At step 1910, the communication unit 1720 may obtain a bitstream. The communication unit 1720 may receive the bitstream from the encoding apparatus 1600.

The bitstream may include information about the target block.

The information about the target block may include transformed and quantized coefficients for the target block. The information about the target block may include the prediction information.

Also, the bitstream may include the information described above in the embodiments. For example, the bitstream may include coding parameters related to the target block and/or the attributes of the target block.

A computer-readable storage medium may include the bitstream, and prediction and decoding on the target block may be performed using the information about the target block included in the bitstream.

The bitstream may include encoded information about the target block. The processing unit 1710 may generate information about the target block by performing entropy decoding on the encoded information about the target block.

The processing unit 1710 may store the obtained bitstream in the storage 1740.

At step 1920, the processing unit 1710 may determine prediction information to be applied to the decoding of the target block.

The processing unit 1710 may determine the prediction information using the method used in the above-described embodiments.

The processing unit 1710 may determine the prediction information for the target block based on prediction method-related information obtained from the bitstream.

The prediction information may include inter-prediction information. The prediction information may include intra-prediction information.

At step 1930, the processing unit 1710 may perform prediction for the target block using information about the target block and the determined prediction information.

At step 1930, a prediction block may be generated by performing prediction for the target block using the prediction information.

Further, a reconstructed block that is the sum of the prediction block and a reconstructed residual block may be generated.

**Prediction for chroma block**

In order to reduce the amount of bits required for encoding/decoding in a prediction method for a chroma block, chroma prediction may be performed using cross-component prediction methods such as a Cross-Component Linear Model (CCLM), a Gradient Linear Model (GLM), a Filter based Linear Model (FLM), and a Convolution Cross-Component Model (CCCM).

In embodiments, prediction for a chroma block may be performed using information of a luma block. By means of this prediction, the amount of bits required for prediction for the chroma block may be reduced, and the efficiency of signaling/encoding/decoding in the chroma block may be improved.

In embodiments, "luma" may refer to "luminance". "Chroma" may refer to "chrominance".

**Information in embodiments**

In embodiments, block information may refer to at least one of information of a neighboring block, information of a reference block, and information of a current block. In embodiments, the current block may refer to a target block.

Further, the block information may include at least one of coding parameters.

The coding parameters may include at least one of pieces of information used in inter-prediction, intra-prediction, transform, inverse transform, quantization, dequantization, entropy encoding/decoding, and in-loop filtering.

The coding parameters may further include a block index, an intra-prediction mode candidate list, an intra-prediction candidate index, etc.

The block shape of the coding parameters may indicate which one of a square and a non-square is the shape of the block.

The motion vector may be a motion vector for at least one of L0, L1, L2, and L3.

The motion vector difference may be the motion vector difference of at least one of L0, L1, L2 and L3.

A reference image index may be a reference image index for at least one of L0, L1, L2, and L3.

The accuracy of motion vector representation may be a motion vector representation unit that is represented by samples of n times and samples of 1/n times such as an integer sample, an 1/2 sample, a 1/4 sample, a 1/8 sample, a 1/16 sample, and a 1/32 sample. n may be a positive integer. Further, n may be determined based on at least one of the coding parameter and coding parameters of candidates. Further, n may be preset by the encoding apparatus 1600 and the decoding apparatus 1700, and may be a value signaled from the encoding apparatus 1600 to the decoding apparatus 1700.

**Terms in embodiments**

In embodiments, a statistic value may indicate one or more of the average value, a weighted average value, a weighted-sum value, a minimum value, a maximum value, a mode value, a median value, and an interpolation value of specific values. The specific values may be values such as variables, coding parameters, constants, and predefined values, described in embodiments.

In embodiments, the error cost (or error) may be a value derived by the difference between one or more pixel values of comparison targets. The error cost may be calculated using the following methods for targets:

- Sum of Absolute Difference (SAD)
- Sum of Absolute Error (SAE)
- Mean Absolute Difference (MAD)
- Mean Absolute Error (MAE)

- Sum of Squared Difference (SSD)
- Sum of Squared Error (SSE)
- Mean Squared Difference (MSD)
- Mean Squared Error (MSE)
- Mean Reduced Sum of Absolute Difference (MR-SAD)
- Sum of Absolute Transformed Differences (SATD)
- Rate-Distortion Cost (RD-cost)

The prediction information in embodiments may include information used in inter-prediction. The prediction information may include motion information.

In embodiments, motion information may refer to information including at least one of a prediction list utilization flag, reference image list information, a reference image, a motion vector candidate, a motion vector candidate index, a merge candidate, and a merge index, or information that can be derived using such information, as well as a motion vector, a reference image index, and an inter-prediction indicator.

The intra-prediction information in embodiments may refer to information including at least one of intra luma prediction mode/direction, intra chroma prediction mode/direction, an intra-prediction mode candidate list (e.g., a Most Probable Mode (MPM) candidate list in MPM), an intra-prediction mode candidate index (e.g., MPM index in MPM), intra partitioning information, a gradient and/or prediction mode derived through a decoder-side intra mode derivation method, a prediction mode derived through a Template-based Intra Mode Derivation (TIMD) method, or information that can be derived using such information.

In embodiments, the prediction mode may refer to an intra-prediction mode or an intra-prediction direction.

In embodiments, candidate list management may include processes such as configuration of a candidate list, reduction of a candidate list, addition of candidates to a candidate list, and removal of candidates from the candidate list.

In embodiments, a final candidate list may refer to a list including final candidates (or candidate blocks) for determining a reference block at the reference block determination step.

## Scaling

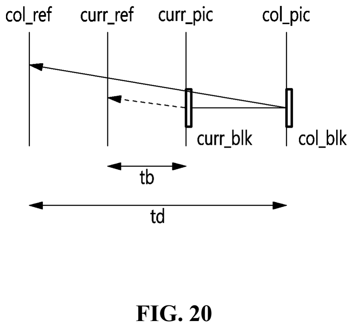

FIG. 20 illustrates scaling according to an example.

In FIG. 20, curr_blk may refer to the current block.

col_blk may be a reference block at a (collocated) location.

curr_pic may refer to a current image including the current block.

curr_ref may refer to a reference image for the current image.

col_pic may refer to a reference image in which a block referenced by the current block is present.

col_ref may refer to a reference image for the reference block.

In embodiments, a scaling factor may be a value used to scale various coding parameters including motion information.

As illustrated in FIG. 20, the scaling factor may refer to the ratio of the distance tb between the current image and the reference image for the current image to the distance td between the reference block and the reference image for the reference block.

The scaling factor may be defined by the following [Equation 1]:

$$[Equation\ 1]$$

$$Scaling\ factor = w * \frac{tb}{td}$$

A weight w may be a value greater than 0. w may be a value preset by the encoding apparatus 1600 and/or the decoding apparatus 1700. Further, w may be a value signaled from the encoding apparatus 1600 to the decoding apparatus 1700.

By utilizing different weights, at least one scaling factor may be derived.

Further, when the scaling factor is applied, at least one scaling factor may be used.

## Prediction mode

In embodiments, a Decoder-side Intra Mode Derivation (DIMD) method may refer to a method of deriving a prediction mode by calculating the gradient of surrounding pixels in intra-prediction, and of adding the derived prediction mode to an MPM list, thus improving MPM prediction efficiency. Here, on the decoder side, a prediction mode derived by calculating the gradient of surrounding pixels may be added when the MPM list is configured.

Here, the surrounding pixels may be pixels around the current block. The neighboring pixels may include a pixel adjacent to the current block. The surrounding pixels may be pixels satisfying a specific condition in relation to the distance to the current block. For example, the surrounding pixels may be pixels to which the distance from the current block is less than or equal to a specific value. The distance may be a horizontal distance and/or a vertical distance, and may be the result value of an equation that uses the horizontal distance and the vertical distance.

An Intra Template Matching (ITM) method in embodiments may refer to a method for configuring a current template for the current block using surrounding pixels in intra-prediction, deriving a region most similar to the current template within the reconstructed region in the current image as the reference template, and utilizing the reference block for the reference template as a prediction block for the current block. Here, a relative position relationship between the current block and the current template may be identical to a relative position relationship between the reference block and the reference template. In other words, as in the case where the current template and pixels in the current template are determined based on the relative position to the current block, a reference block may be determined based on the relative position to the reference template.

In embodiments, a Template-based Intra Mode Derivation (TIMD) method may refer to a method of generating templates for prediction modes present in an MPM list, calculating error costs for respective templates, and deriving a prediction mode based on the calculated error costs.

**Determination using threshold**

In embodiments, 'determination based on a comparison with a specific value' may be determined based on at least one of the following conditions.

Here, the specific value may be a threshold.

Here, $BLK_j$ may be a candidate/block to be compared with the threshold. $P_k$ may be a parameter to be compared. $TH_i$ may be the threshold that is the specific value. j may be the index of the candidate/block to be compared. k may be the index of the parameter to be compared. i may be the index of the threshold., Each of k, i, and j may be a positive integer including 0.

**[Condition 1]**

As shown in the following [Equation 2], when the parameters of the block/candidate to be compared are identical to the threshold, the block/candidate may be determined to be the target for specific processing.

$$\textbf{[Equation 2]}$$
$$BLK_{j\_}P_k = TH_i$$

**[Condition 2]**

As shown in the following [Equation 3], when the parameters of the block/candidate to be compared are less than the threshold, the block/candidate may be determined to be a target for specific processing.

$$\textbf{[Equation 3]}$$
$$BLK_{j\_}P_k < TH_i$$

**[Condition 3]**

As shown in the following [Equation 4], when the parameters of the block/candidate to be compared are greater than the threshold, the block/candidate may be determined to be the target for specific processing.

$$\textbf{[Equation 4]}$$
$$BLK_{j\_}P_k > TH_i$$

**[Condition 4]**

As shown in the following [Equation 5] and [Equation 6], when the parameters of the block/candidate to be compared are present between thresholds, the block/candidate may be determined to be the target for specific processing. [Equation 5] may indicate the case where two thresholds are present. [Equation 6] may indicate that the three thresholds are present.

## [Equation 5]

$$TH_1 < BLK_{j\_Pk} < TH_2, (단, TH_2 > TH_1)$$

## [Equation 6]

$$TH_1 < BLK_{j-1\_Pk} < TH_2 < BLK_{j\_Pk} < TH_3$$

(where $TH_2 > TH_1$ & $TH_3 > TH_2$, $BLK_{j\_Pk} > BLK_{j-1\_Pk}$)

**[Condition 5]**

The differences between parameters of the blocks/candidates to be compared and thresholds may be reordered in descending order, and blocks/candidates corresponding to top n of the reordered differences may be determined to be targets for specific processing.

**[Condition 6]**

The differences between the parameters of the blocks/candidates to be compared and the threshold may be sorted in descending order, and blocks/candidates corresponding to bottom v of the sorted differences may be determined to be the targets for specific processing.

Here, n and v may be values preset by the encoding apparatus 1600 and the decoding apparatus 1700, and may be values signaled from the encoding apparatus 1600 to the decoding apparatus 1700.

Each of the parameter and the threshold may include at least one or more values.

Determination based on the threshold may be performed using at least one of the above-described conditions.

The threshold may be a value preset by the encoding apparatus 1600 and the decoding apparatus 1700, and may be a value signaled from the encoding apparatus 1600 to the decoding apparatus 1700.

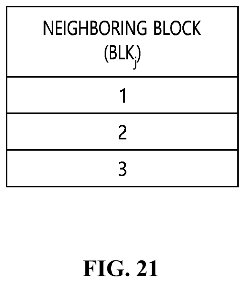

FIG. 21 illustrates the indices of neighboring blocks according to an example.

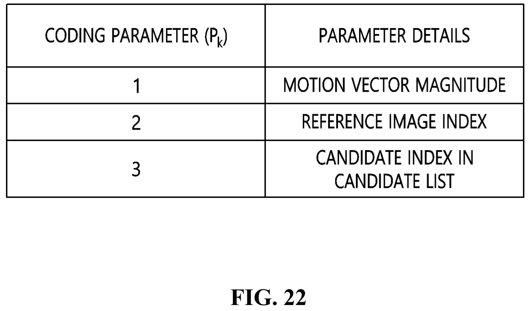

FIG. 22 illustrates details of coding parameters according to an example.

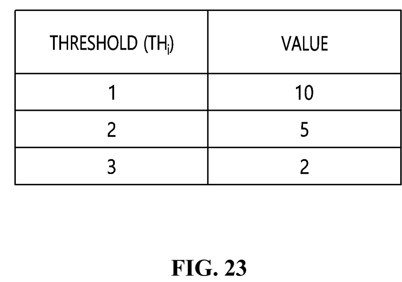

FIG. 23 illustrates the values of indices according to an example.

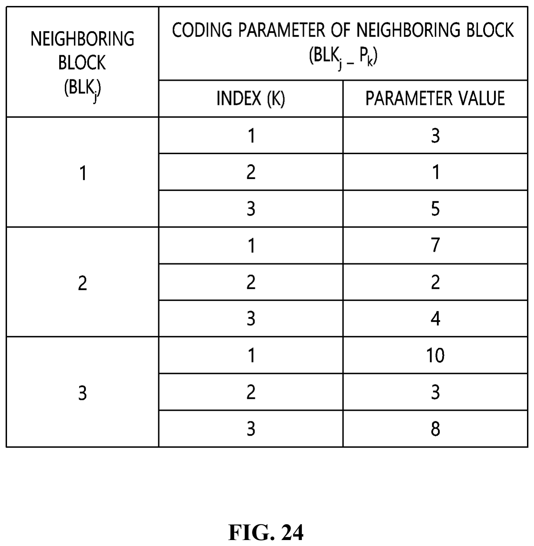

FIG. 24 illustrates indices and parameter values of coding parameters of neighboring blocks according to an example.

For example, pieces of information exemplified in FIGS. 21 to 24 may be used for 'determination based on a comparison with a specific value'.

For example, when threshold $TH_2(= 5)$ is used, the parameter to be compared is $P_3$(=candidate index in a candidate list, the second threshold in [condition 4] is Ti(= 10), n in [condition 5] is 1, and v in [condition 5] is 2, the neighboring blocks determined by the above-described [condition 1] to [condition 5] are as follows:

Neighboring block determined by **[Condition1]:** $BLK_1$
Neighboring block determined by **[Condition2]:** $BLK_2$
Neighboring block determined by **[Condition3]:** $BLK_3$
Neighboring block determined by **[Condition4]:** $BLK_3$
Neighboring block determined by **[Condition5]:** $BLK_2$
Neighboring blocks determined by **[Condition6]:** $BLK_3$ and $BLK_1$

## Matching method

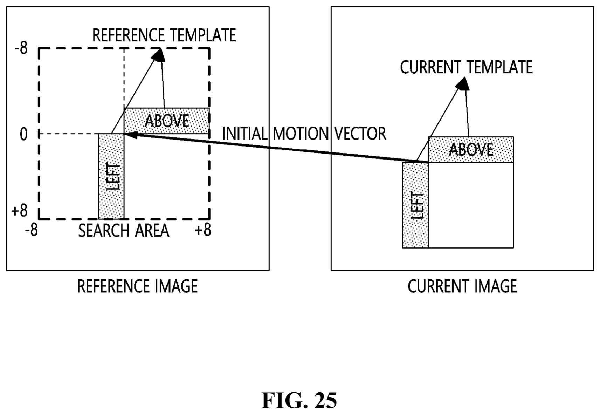

FIG. 25 illustrates the configuration of a template in inter-prediction according to an example.

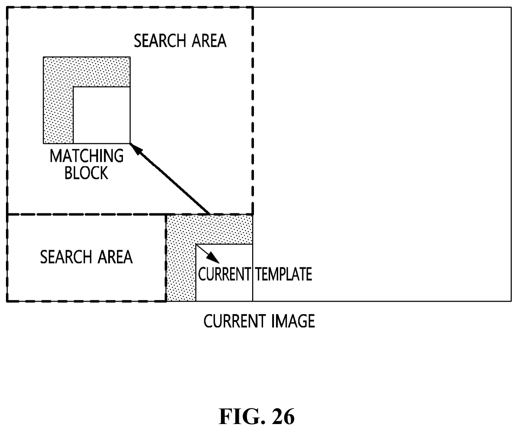

FIG. 26 illustrates the configuration of a template in intra-prediction according to an embodiment.

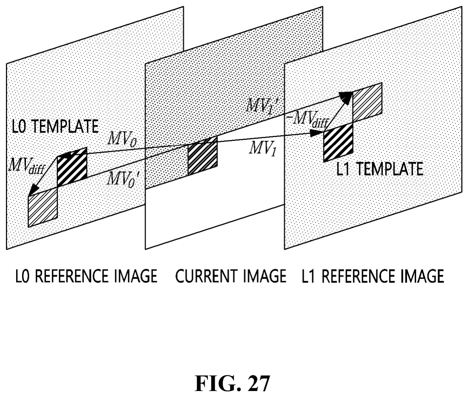

FIG. 27 illustrates the configuration of a template in bilateral matching according to an example.

In embodiments, the matching technique may refer to a method of calculating error costs while adjusting the location of the template defined between comparison targets by utilizing the template, and may include Template Matching (TM), Bilateral Matching (BM), etc.

As shown in FIGS. 25 and 26, template matching may configure a current template for a current block using surrounding pixels of the current block, and may configure a reference template matching the current template using pixels in a search area of a reference image.

As shown in FIG. 27, bilateral matching may configure a template using pixels in the reference image. Here, the template may be configured using at least one of reconstructed pixels in the current image or the reference image.

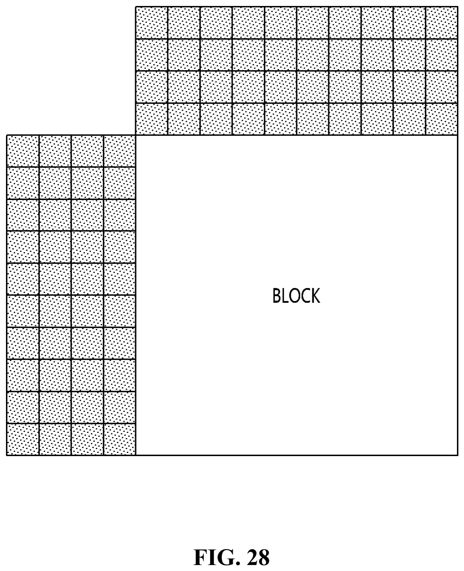

FIG. 28 illustrates first configuration of a template in template matching according to an example.

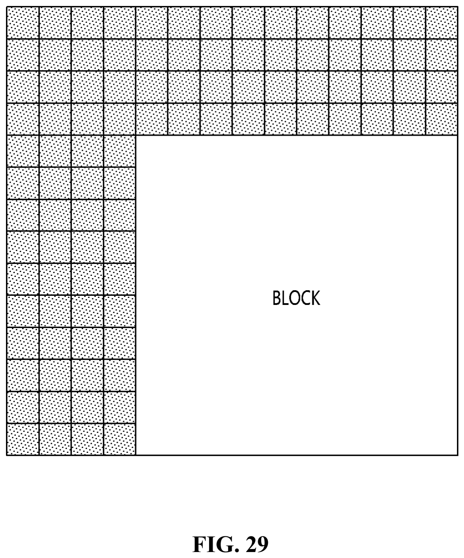

FIG. 29 illustrates second configuration of a template in template matching according to an example.

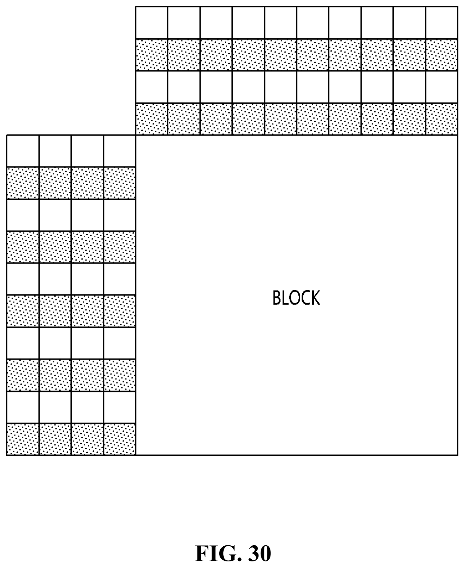

FIG. 30 illustrates first configuration of a template having alternately empty lines in template matching according to an example.

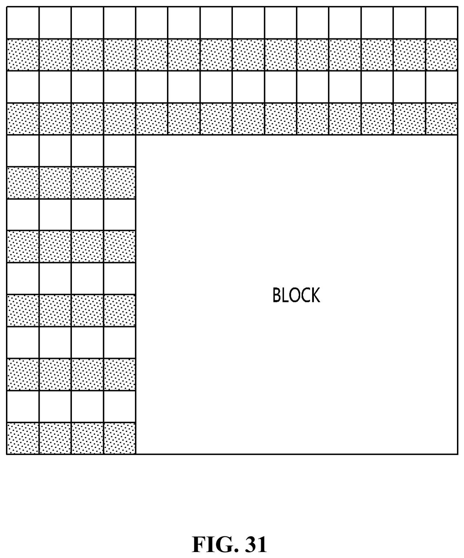

FIG. 31 illustrates second configuration of a template having alternately empty lines in template matching according to an example.

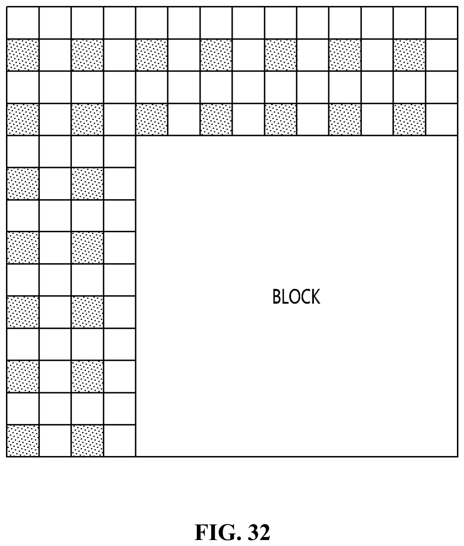

FIG. 32 illustrates second configuration of a template having alternately empty pixels in template matching according to an example.

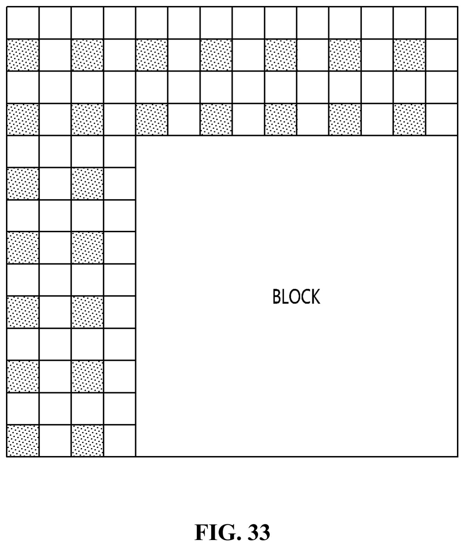

FIG. 33 illustrates second configuration of a template having alternately empty pixels in template matching according to an example.

In FIGS. 28 to 33, a large rectangle in a bottom-right portion may denote a block. The block may be the current block. Small rectangles may indicate pixels of the templates. A region of small rectangles may indicate a template. A region adjacent to the top of the block may be an above (top) template. A region adjacent to the left of the block may be a left template. Small shaded rectangles may indicate pixels used to configure a template. Small empty rectangles may indicate pixels that are not used to configure a template.

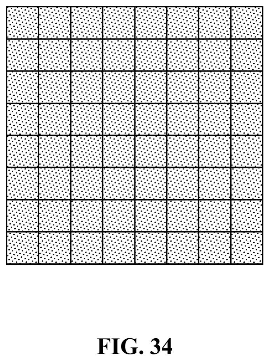

FIG. 34 illustrates the configuration of a template in bilateral matching according to an example.

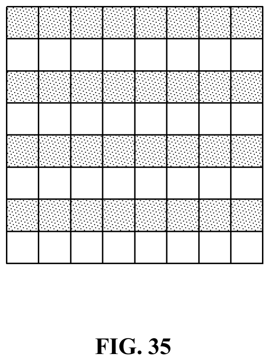

FIG. 35 illustrates the configuration of a template having alternately empty lines in bilateral matching according to an example.

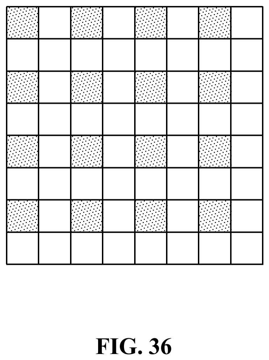

FIG. 36 illustrates the configuration of a template having alternately empty pixels in bilateral matching according to an example.

In FIGS. 34 to 36, a large rectangle may denote a template. Small rectangles may indicate pixels of the templates. Small shaded rectangles may indicate pixels used to configure a template. Small empty rectangles may indicate pixels that are not used to configure a template.

In this matching technique, as shown in FIGS. 30, 31, 32, 33, 35, and 36, templates may be configured to have alternately empty lines or pixels.

Each template may be configured to have one or more empty pixels or one or more empty lines.

The number of pixels constituting the corresponding template, the number of lines, and the shape of the template may be determined differently based on coding parameters.

For example, the shape of the template may be configured differently depending on the partitioning shape of the current block or the neighboring block, the size thereof, the statistical values of the size.

For example, a template having a side of a size equal to that of a side contacting the current block or the neighboring block may be configured.

For example, a template having a side of a size smaller than that of the side contacting the current block or the neighboring block may be configured.

For example, a template having a side of a size greater than that of the side contacting the current block or the neighboring block may be configured.

For example, a template may be configured using the maximum value, minimum value, and median value of the sizes of the sides of each of the current block and the neighboring block as the size of each side.

For example, when the size of the current block or the neighboring block is less than the threshold, the template may be configured by decreasing the lines or pixels, or the size of the template may be decreased.

In embodiments, decreasing the lines (or pixels) may mean that some of the multiple lines (or pixels) are removed. Alternatively, decreasing the lines (or pixels) may mean that the number of lines (pixels) is decreased by applying interpolation, sampling, and/or filtering to multiple lines (or pixels).

For example, when the size of the current block or the neighboring block is less than the threshold, the template may be configured by increasing the lines or pixels, or the size of the template may be decreased.

In embodiments, increasing the lines (or pixels) may mean that some of the multiple lines (or pixels) are duplicated. Alternatively, increasing the lines (or pixels) may mean that the number of lines (pixels) is increased by applying interpolation, sampling, and/or filtering to multiple lines (or pixels).

For example, when the size of the current block or the neighboring block is greater than the threshold, the template may be configured by decreasing the lines or pixels, or the size of the template may be decreased.

For example, when the size of the current block or the neighboring block is greater than the threshold, the template may be configured by increasing the lines or pixels, or the size of the template may be decreased.

The threshold may be a value preset by the encoding apparatus 1600 and the decoding apparatus 1700, and may be a value signaled from the encoding apparatus 1600 to the decoding apparatus 1700.

For example, the shape of the template may be configured differently depending on the motion information of the neighboring block or the statistical value of the motion information.

For example, when one of statistical values of the motion vector of the neighboring block is less than a threshold, the template may be configured by decreasing the lines or pixels, or the size of the template may be further decreased.

For example, when one of statistical values of the motion vector of the neighboring block is less than the threshold, the template may be configured by increasing the lines or pixels, or the size of the template may be further increased.

For example, when one of statistical values of the motion vector of the neighboring block is greater than the threshold, the template may be configured by decreasing the lines or pixels, or the size of the template may be further decreased.

For example, when one of statistical values of the motion vector of the neighboring block is greater than the threshold, the template may be configured by decreasing the lines or pixels, or the size of the template may be further decreased.

The threshold may be a value preset by the encoding apparatus 1600 and the decoding apparatus 1700, and may be a value signaled from the encoding apparatus 1600 to the decoding apparatus 1700.

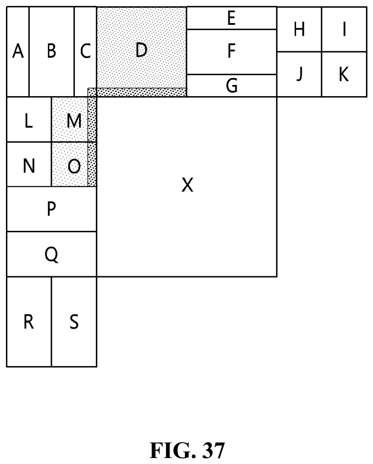

FIG. 37 illustrates the configuration of a template when intra-prediction is performed in an inter-image according to an example.

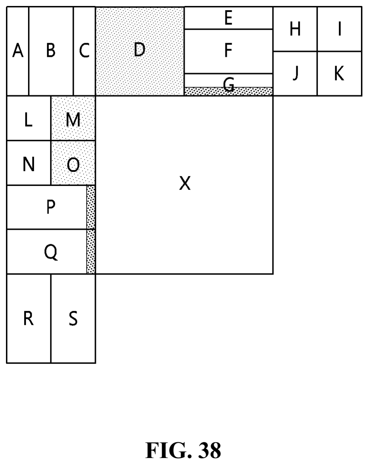

FIG. 38 illustrates the configuration of a template when inter-prediction is performed on an inter-image according to an example.

The number of pixels and the number of lines constituting the template and the shape of the template may be determined differently based on the prediction mode of the current block or the neighboring block.

For example, when inter-prediction is performed for the current block, at least one of blocks determined to use inter-prediction may be selected, and a template may be configured using the selected block.

For example, when inter-prediction is performed for the current block, at least one of blocks determined to use intra-prediction may be selected, and a template may be configured using the selected block.

For example, when intra-prediction is performed for the current block (in an inter image (inter picture)), at least one of blocks determined to use inter-prediction may be selected, and a template may be configured using the selected block.

For example, when intra-prediction is performed for the current block (in an inter image (inter picture)), at least one of blocks determined to use intra-prediction may be selected, and a template may be configured using the selected block.

The number of pixels and the number of lines constituting the template and the shape of the template may be determined differently based on the positions of pixels, the distance between the pixels, a partitioned region, etc.

For example, the shape of the template may be configured differently depending on the distance from the center of a search area.

For example, when the distance from the center of the search area to the position at which matching is performed is less than a threshold, the template may be configured by decreasing lines or pixels, or the size of the template may be decreased.

For example, when the distance from the center of the search area to the position at which matching is performed is less than a threshold, the template may be configured by increasing lines or pixels, or the size of the template may be increased.

For example, when the distance from the center of the search area to the position at which matching is performed is greater than the threshold, the template may be configured by decreasing lines or pixels, or the size of the template may be decreased.

For example, when the distance from the center of the search area to the position at which matching is performed is greater than the threshold, the template may be configured by increasing lines or pixels, or the size of the template may be increased.

The threshold may be a value preset by the encoding apparatus 1600 and the decoding apparatus 1700, and may be a value signaled from the encoding apparatus 1600 to the decoding apparatus 1700.

For example, the shape of the template may be configured differently depending on the distance from a pixel on which matching is performed first.

For example, when the distance from the pixel on which matching is performed first is less than a threshold, the template may be configured by decreasing lines or pixels, or the size of the template may be decreased.

For example, when the distance from the pixel on which matching is performed first is less than the threshold, the template may be configured by increasing lines or pixels, or the size of the template may be increased.

For example, when the distance from the pixel on which matching is performed first is greater than the threshold, the template may be configured by decreasing lines or pixels, or the size of the template may be decreased.

For example, when the distance from the pixel on which matching is performed first is greater than the threshold, the template may be configured by increasing lines or pixels, or the size of the template may be increased.

The threshold may be a value preset by the encoding apparatus 1600 and the decoding apparatus 1700, and may be a value signaled from the encoding apparatus 1600 to the decoding apparatus 1700.

For example, when the search area is divided into partitioned regions, the shape of the template may be configured differently for each partitioned region.

The number of pixels and the number of lines constituting the corresponding template and the shape of the template may be determined differently based on the steps of performing matching.

For example, when a neighboring block having the lowest error cost is searched using template matching, template matching may be performed only on a specific position belonging to a defined pattern within a search range, as in the case of a pattern matching method, in order to reduce complexity.

Here, the pattern matching method may be performed through the following steps.

**[Step 1]**

First, sparse matching may be performed by performing matching with a large pattern in the search area, or by performing matching after setting the distance between positions to which matching is applied to a large value.

**[Step 2]**

Next, based on the position with the lowest error cost derived at [Step 1], fine matching may be performed by performing matching with a small pattern or by performing matching after the distance between positions to which matching is applied is set to a small value.

The region of matching performed at [Step 2] may be determined based on the position derived at [Step 1]. The position derived at [Step 1] may be the position with the lowest error cost among the positions in the search area.

At [Step 1], a template may be configured by decreasing the lines or pixels, or the size of the template may be reduced.

At [Step 2], a template may be configured by increasing the lines or pixels, or the size of the template may be enlarged.

Further, at [Step 1], a template may be configured by increasing the lines or pixels, or the size of the template may be enlarged, and at step [Step 2], a template may be configured by decreasing the lines or pixels, or the size of the template may be reduced.

Matching based on a matching technique may be performed at least one pixel position within a search range.

For example, matching may be performed on at least one of pixel positions derived from candidates in a candidate list.

For example, matching may be performed on at least one of pixel positions present within a certain distance from the current block.

For example, matching may be performed on at least one of pixel positions present outside the certain distance from the current block.

For example, when the search range is partitioned, matching may be performed on at least one of pixel positions within a specific partitioned region among partitioned regions.

For example, matching may be performed on at least one of pixel positions belonging to a specific pattern.

For example, matching may be performed on at least one of pixel positions derived from a block (or a candidate) having a coding parameter value identical to or similar to the coding parameter value of the current block.

For example, when motion information of a pixel position is identical to or similar to motion information of a block including the pixel position, matching may be performed at the pixel position.

For example, when prediction information of a pixel position is identical to or similar to prediction information of a block including the pixel position, matching may be performed at the pixel position. The prediction information may be inter-prediction information and/or intra-prediction information.

When the prediction direction of a pixel position is identical to or similar to the prediction direction of a block including the pixel position, matching may be performed at the pixel position.

When the intra-prediction mode of a pixel position is identical to or similar to the intra-prediction mode of a block including the pixel position, matching may be performed at the pixel position.

The processes in the above-described template matching and bilateral matching may be performed based on the statistical values of coding parameters of the candidates. For example the above-described statistical values may be statistical values of the coding parameters of candidates, and may include the statistical values of the coding parameters of the candidates.

The threshold may be a value preset by the encoding apparatus 1600 and the decoding apparatus 1700, and may be a value signaled from the encoding apparatus 1600 to the decoding apparatus 1700.

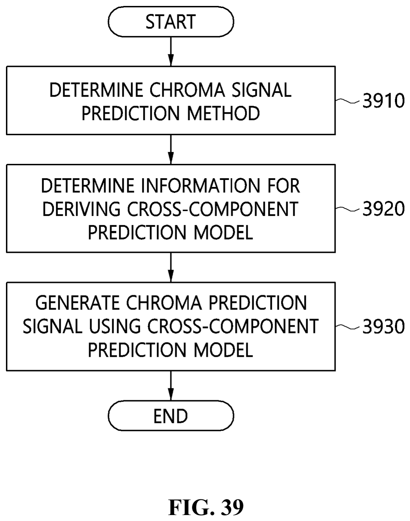

FIG. 39 is a flowchart of a prediction method according to an embodiment.

Steps 3910, 3920 and 3930 may be performed by each of the encoding apparatus 1600 and the decoding apparatus 1700. Steps 3910, 3920 and 3930 may be performed by the processing unit 1610 of the encoding apparatus 1600 and the processing unit 1710 of the decoding apparatus 1700.

Determination of prediction information at steps 1810 and 1820 may include steps 3910 and 3920, which will be described later.

Performance of prediction at steps 1920 and 1930 may include step 3930, which will be described later.

Alternatively, setting and derivation of information related to prediction, described at steps 3910, 3920, and 3930, may be included in each of steps 1810 and 1939.

Alternatively, performance of prediction at steps 3910, 3920, and 3930, may be included in each of steps 1820 and 1930.

At step 3910, a prediction method and/or a prediction model for a chroma signal may be determined.

The prediction model may be a cross-component prediction model. In embodiments, a prediction model may be abbreviated as a model.

At step 3920, information required to derive the prediction model may be determined.

The information required to derive the prediction model may include a reference region and a representative value.

At step 3930, a chroma prediction signal may be generated using the prediction model. The chroma prediction signal may include a chroma prediction block.

The bitstream may include coding information.

Each of steps 3910, 3920, and 3930, may be performed based on the coding information. Information generated at steps 3910, 3920, and 3930, may be generated based on the coding information. At step 3910, a prediction method and/or a prediction model for a chroma signal may be determined based on the coding information. At step 3920, information required to derive the prediction model may be determined based on the coding information. At step 3930, a chroma prediction signal may be generated using the prediction model based on the coding information.

### Determination of prediction method for chroma signal

Hereinafter, determination of a prediction method for a chroma signal at step 3910 will be described.

In embodiments, a current chroma block may be a chroma block that is the target of current encoding/decoding/signaling/prediction. The current chroma block may refer to a current chroma prediction block.

In determining the prediction method for the chroma signal, a prediction signal (or a prediction block) may be generated based on a cross-color component correlation.

In prediction for a chroma signal based on cross-color component relationship, a prediction signal may be derived based on a Cross-component Linear Model (CCLM).

A chroma signal prediction method based on CCLM may generate a chroma prediction block for chroma prediction using reconstructed chroma samples adjacent to the current chroma block and sample values of reconstructed luma samples at positions corresponding to the reconstructed chroma samples.

In embodiments, the samples may include 1) a pixel, 2) the statistical value of pixel values of a pixel or pixels, and 3) coding information derived from a pixel or pixels. The coding information may include coding parameters, and may include information used for encoding/decoding/signaling in embodiments.

A linear regression model may be derived using 1) correlation between surrounding pixels of a luma block and surrounding pixels of a chroma block or 2) statistical values such as a maximum value and a minimum value, as shown in the following [Equation 7], and model coefficients a and b may be calculated. The current chroma prediction block may be derived using the values of the model coefficients a and b and the pixels in the luma block.

### [Equation 7]

$$C'(i, j) = a * L'(i, j) + b \text{ or } C'(i, j) = a * L(x, y) + b$$

C(i, j) may denote the current chroma prediction block or a sample in the current chroma prediction block. L'(i, j) may denote a reconstructed luma block/sample corresponding to the position of the current chroma prediction block.

In embodiments, the model may refer to a linear regression model. The model coefficient values may include the values of the model coefficients a and b.

However, L'(i, j) may refer to the luma sample of the luma block adjusted to have the same size as the chroma block through subsampling, downsampling or the like. L(x, y) may denote the luma sample of a luma block having a size different from that of the chroma block.

Therefore, the luma sample position (x, y) of the luma sample L(x, y) corresponding to the chroma sample C'(i, j) and the chroma sample position (i, j) may be different from each other.

In deriving the model coefficients of [Equation 7], model coefficients may be derived for a U signal and a V signal, respectively.

In deriving the model coefficients of [Equation 7], model coefficients applied both to the U signal and to the V signal may be derived.

Whether a model is applied may be individually determined for each of the U signal and the V signal. Information indicating whether the model is applied may be encoded/decoded/signaled.

In order to derive the values of model coefficients a and b, information about one or more of 1) surrounding samples of the current chroma prediction block, 2) surrounding samples of a luma block corresponding to the position of the current chroma prediction block, and 3) a reference line index of the corresponding luma block may be used.

The reference line may refer to multiple reference lines, described above with reference to FIG. 8. The reference line index may indicate a reference line used for encoding/decoding/signaling for a block among the multiple reference lines. The reference line may also refer to an adjacent sample line or a neighboring sample line of the block.

When a reference line for deriving model coefficients is determined, N or more lines may be used as reference lines. Here, N may be a positive number of 0 or more. N may be a value present by the encoding apparatus 1600 and/or the decoding apparatus 1700, and may be a value signaled from the encoding apparatus 1600 to the decoding apparatus 1700.

In an embodiment, a neighboring block or a sample position to be used may be determined based on a chroma format.

For example, in a YUV 4:4:4 or YUV 4:2:2 format, the reference line of a luma block indicated by the reference line index of the luma block and the reference line of a chroma block corresponding to the reference line may be used. Here, the reference lines corresponding to each other may refer to reference lines having positions relative to the blocks. Alternatively, the reference lines corresponding to each other may refer to reference lines having the same numbers, illustrated in FIG. 8.

For example, in a YUV 4:2:0 format, the index (= IntraChromaRefLineIdx) of the reference line of the chroma block may be derived, as shown in the following Equation 8.

## [Equation 8]

$$IntraChromaRefLineIdx = floor(IntraLumaRefLineIdx / 2)$$

IntraLumaRefLineIdx may be the index of the adjacent sample line of the chroma block.

The number of luma samples and the number of chroma samples may be adjusted to be identical to each other by utilizing only specific samples in a luma reference line reconstructed based on a sub-sampling scheme. In other words, luma samples corresponding to respective chroma samples may be determined. Here, the specific samples may be even-numbered (or odd-numbered) pixels in the reference lines.

Furthermore, luma samples at specific sample positions may be determined to be samples corresponding to the chroma samples.

For example, when the size of the luma block is 2Mx2N, and the size of the chroma block is MxN, samples located at positions of (M+N)*X1/8, (M+N)*X2/8, (M+N)*X3/8 and (M+N)*X4/8 in the luma block may be determined to be luma samples corresponding to the chroma samples.

Here, Xi may be a specific constant for determining sample positions. i may be an integer of 1 or more. As the number of samples increases, the number of specific constants may increase.

For example, as exemplified above, when four samples are used, constants substituted into X1 to X4 may be arbitrarily determined as in the case of (1, 3, 5, 7) and (2, 4, 6, 8). Alternatively, constants substituted into X1 to X4 may be determined differently based on the coding information of the neighboring blocks.

A luma sample corresponding to one chroma sample may be derived using N luma samples. N may be a specific positive integer.

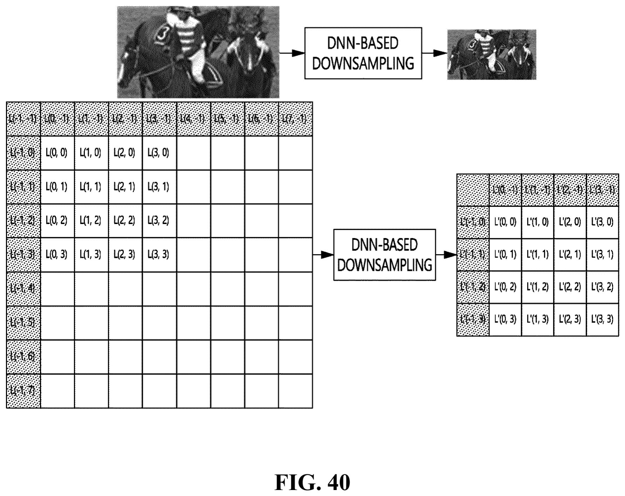

FIG. 40 illustrates downsampling based on a deep neural network according to an example.

For example, a luma sample corresponding to a chroma sample may be determined using downsampling.

Downsampling may be performed based on various filters, such as those in the following [Equation 9], [Equation 10], and [Equation 11].

**[Equation 9]**

$$F\_dS1 = \begin{pmatrix} 0 & 1 & 0 \\ 1 & 4 & 1 \\ 0 & 1 & 0 \end{pmatrix}$$

**[Equation 10]**

$$F\_dS2 = \begin{pmatrix} 1 & 2 & 1 \\ 1 & 2 & 1 \end{pmatrix}$$

**[Equation 11]**

$$F\_dS3 = \begin{pmatrix} 1 & 2 & 1 \end{pmatrix}$$

Downsampling may be performed through filtering based on a Deep Neural Network (DNN) illustrated in FIG. 40.

Statistical values of one or more of N luma samples may be calculated, and a representative luma sample may be derived using at least one of the statistical values. The representative luma sample may be used to replace the luma sample.

In embodiments, statistical values may include the average, maximum value, minimum value, and median value of the samples.

For example, when luma samples corresponding to an adjacent sample c(0, -1) of the current chroma block are L(-1,-2), L(0,-2), L(1,-2), L(-1,-1), L(0,-1), and L(1,-1), candidate values for deriving representative values may be extracted using the corresponding luma samples. The representative values may include an average, a maximum value, a minimum value, a median value, etc.

The candidate values for deriving the representative values may refer to statistical values. The representative values may refer to the sample values of the luma sample corresponding to the chroma sample used to derive the model coefficients.

For example, as the reference line of the chroma samples, the reference line of the chroma block may be derived using the following [Equation 12].

**[Equation 12]** c(0,-1) = ( L(-1, -2) + 2 * L(0, -2) + L(1, -2) + L(-1, -1) + 2 * L(0, -1) + L(1, -1) + 4 ) >> 3.       [Equation 12]

">>" may denote a right shift operator.

Luma samples corresponding to the chroma sample may be changed. Also, the equation for deriving the chroma prediction sample may be changed. Information about luma samples corresponding to the adjacent sample of the current chroma block or information about the equation for deriving the adjacent sample of the current chroma block may be signaled from the encoding apparatus 1600 to the decoding apparatus 1700.

The threshold may be a value preset by the encoding apparatus 1600 and the decoding apparatus 1700, and may be a value signaled from the encoding apparatus 1600 to the decoding apparatus 1700. Alternatively, the sample position described in embodiments may be derived using the coding information of the surrounding samples or the block.

## Generation of chroma prediction block

When the values of model coefficients a and b are derived, the current chroma prediction block may be generated using [Equation 7] or the like.

As illustrated in [Equation 13], [Equation 14], and [Equation 15], a and b values may be derived using at least one of selected or derived N representative values (e.g., a first representative value, a second representative value, a third representative value, and a fourth representative value). N may be a positive integer. For example, N may be 2 or 4.

**[Equation 13]**

$$a = (CMAX - CMIN) / (LMAX - LMIN)$$

**[Equation 14]**

$$b = CMIN - a * LMIN$$

**[Equation 15]**

$$a = Log_2(CMAX - CMIN) - Log_2(LMAX - LMIN) >> k$$

The first representative value (= LMAX) may refer to the value of an x axis of the maximum value. The second representative value (= CMAX) may refer to the value of a y axis of the maximum value. The third representative value (= LMIN) may refer to the value of an x axis of the minimum value. The fourth representative value (= CMIN) may refer to the value of a y axis of the minimum value.

For example, in order to derive b in [Equation 3], the values of LMAX and CMAX may be used.

In [Equation 13], a division operation is used, and thus it may be difficult to perform implementation using an integer unit. Therefore, the division operation may be replaced with a multiplication operation and a shift operation (= >>).

In [Equation 15], the value of a may be derived through a subtraction operation of utilizing a subtraction operation using $Log_2$ while avoiding the use of the division operation in [Equation 13].

Because the value is derived by $Log_2$, a normalization of the value a may be performed by utilizing the value of k to the shift operation (= >>).

### Derivation of chroma signal/sample/block using multiple models

In an embodiment, in chroma signal prediction based on CCLMs, chroma signal/sample/block may be derived using the multiple models.

The multiple models may be derived from luma samples at different positions, respectively.

For example, one model may be derived from even-numbered samples located in the reference line. Also, another model may be derived from samples located at odd-numbered positions in the reference line.

For example, samples located above the luma block and samples located to the left of the luma block may be separated from each other, and different models may be individually derived using the separated samples.

### Derivation of multiple models based on statistical values of luma samples

The multiple models may be derived based on the statistical values of luma samples.

For example, the average value of the luma samples may be used as a threshold. Samples having sample values less than or equal to a threshold and samples having sample values exceeding the threshold may be separated from each other. Different models may be derived from the separated samples.

For example, the sample values of the luma samples may be sorted in specific order. For example, the specific order may be an order close to the average. Among the sorted luma samples, top N samples and bottom S samples may be selected. Different models may be individually derived using the top N samples and bottom S samples.

Here, N and S may be values preset by the encoding apparatus 1600 and the decoding apparatus 1700, and may be values signaled from the encoding apparatus 1600 to the decoding apparatus 1700.

The multiple models may be derived based on the defined threshold.

For example, the specific value may be used as the threshold. Samples having sample values less than or equal to the threshold and samples having sample values exceeding the threshold may be separated from each other. Different models may be derived from the separated samples.

The threshold may be a value preset by the encoding apparatus 1600 and the decoding apparatus 1700, and may be a value signaled from the encoding apparatus 1600 to the decoding apparatus 1700.

In embodiments, a sample value range may be a range from a minimum value to a maximum value of sample values. Alternatively, the sample value range may be a range between the minimum value and the maximum value of sample values.

For example, the sample value range may be divided into N groups. Different models may be derived for groups, respectively, by utilizing the samples of the divided groups. In other words, the models of groups may be derived based on the samples of the divided groups.

Here, N may be a value preset by the encoding apparatus 1600 and the decoding apparatus 1700, and may be a value signaled from the encoding apparatus 1600 to the decoding apparatus 1700.

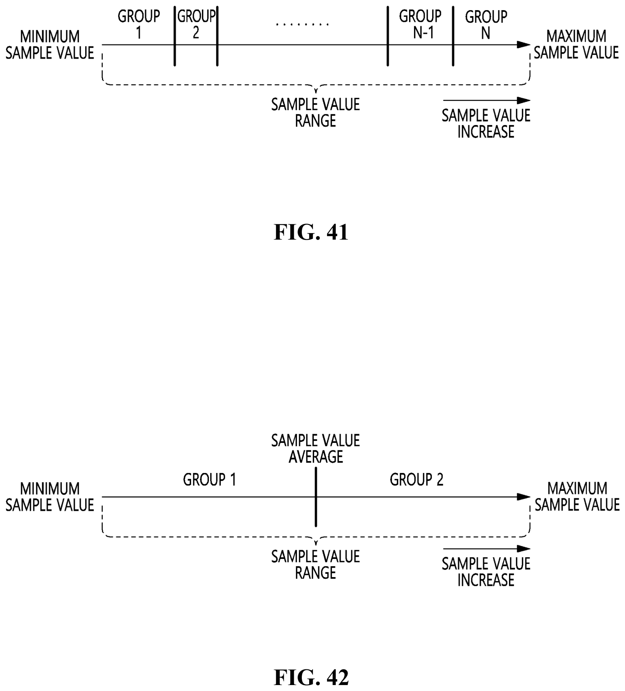

FIG. 41 illustrates a sample value range divided into N groups according to an example.

For example, as illustrated in FIG. 41, samples may be divided into units of groups.

When the samples are divided into the units of groups, a model for each group may be derived using the statistical values of samples in the corresponding group, for each group. Different models for respective groups may be derived depending on the statistical values of the samples in the groups.

For example, the average value of samples in each group may be derived.

New sample groups may be generated based on the average values of the samples in the groups. Different models may be derived for sample groups, respectively.

FIG. 42 illustrates a sample value range divided into two groups according to an example.

The average value of samples in each group may be derived.

In embodiments, the sample value average of each group may represent the average value of samples in the corresponding group. A total sample value average may represent the average value of all samples. The sample value average may include sample value average(s) of group(s) and the total sample value average.

For each group, samples having sample values less than or equal to the sample value average and samples having sample values greater than the sample value average may be divided into sample groups, respectively.

For example, as illustrated in FIG. 42, group 1 of samples having sample values less than or equal to the sample value average and group 2 of samples having sample values greater than the sample value average may be configured based on the sample value average.

Different models may be derived for the divided sample groups, respectively.

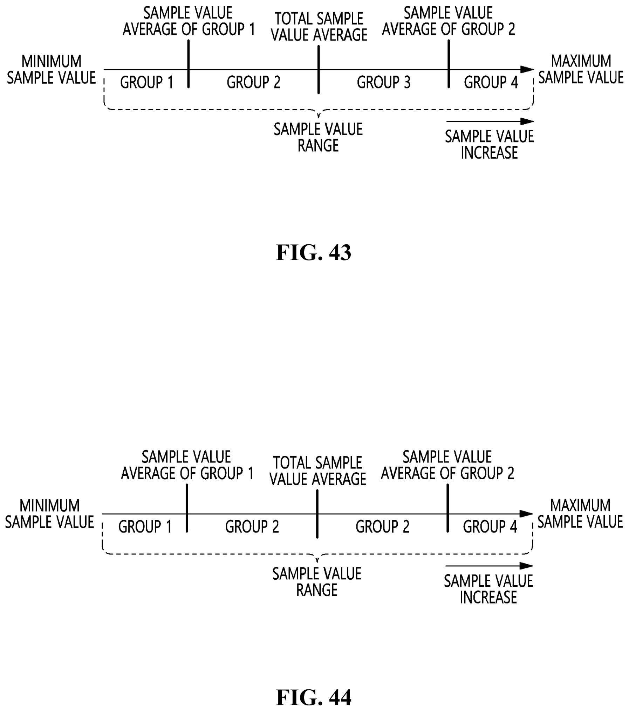

FIG. 43 illustrates a model derived for a new group between sample value averages according to an example.

A range between two sample value averages may be defined as a new group. In other words, the new group may include samples having sample values within two sample value averages. Alternatively a new group may include samples having sample values which are greater than one sample value average and less than or equal to the next sample value average.

In other words, new groups may be determined using the sample value averages of previous groups.

Here, as illustrated in FIG. 43, the total sample value average may also be used as a sample value average by which groups are to be divided.

Different models may be derived for divided new groups, respectively.

FIG. 44 illustrates a model derived for a new group between sample value averages of groups according to an example.

A range between the sample value averages of two groups may be defined as a new group. In other words, the new group may include samples having sample values within the sample value averages of two existing groups. Alternatively, a new group may include samples having sample values which are greater than the sample value average of one existing group and less than or equal to the sample value average of the next existing group.

In other words, new groups may be determined using the sample value averages of previous groups.

Here, as illustrated in FIG. 44, the total sample value average may not be used as a sample value average by which groups are to be divided.

Different models may be derived for divided new groups, respectively.

**Derivation of multiple models**

When multiple models are derived, a model derived from a previously encoded/decoded block may be used.

In embodiments, the term "model derived from a block" may refer to a "model derived for a block" or a "derived model of a block", and the terms "model ... from a block", "model ... for a block", and "... model of a block" may be used interchangeably with each other.

In embodiments, the derivation of a model may refer to the computation of the model.

For example, for each block, a model derived from the block may be stored. A model derived from each encoded/decoded block may be stored. In encoding/decoding of a current block, a stored model of another block may be loaded, and may be used for the current block.

In embodiments, a "specific model is used for a block" may mean that the specific model is used as a model of the block.

Here, the storage of a model may be performed on each of all blocks. Alternatively, the model of the block may be stored only when a chroma mode based on a cross-component model is used as the chroma mode of the block.

When a reference block for deriving the model of the current block is determined, at least one block may be selected from among adjacent blocks or nonadjacent blocks of the current block, and the selected block may be used as a reference block. Here, the storage of model coefficients in embodiments may be applied to the derivation of models.

Also, when a reference block for deriving a model is determined, at least one block may be selected from among blocks in a reference picture, and the selected block may be used as a reference block. Here, the storage of model coefficients in embodiments may be applied to the derivation of models.

When multiple models are derived, a model derived from a block having a size different from that of the current block may be used.

For example, the location of a reference region or a reference sample may be changed depending on the size of the block, and different models may be configured depending on the locations of reference regions or reference samples. Here, a model generated from a large-sized block may be loaded for a small-sized block, and may be used in the small-sized block. On the other hand, a model derived from a small-sized block may be used in a large-sized block.

In embodiments, a reference region may include reconstructed samples, lines and/or blocks that are used for model parameter derivation and inheritance.

In deriving multiple models, a model derived from a block at another location in a partitioned block may be used for the block.

For example, when, in the partitioned block, the location of a reference region or a reference sample changes depending on the location of the block, and different models are configured depending on the locations of reference regions or reference samples, a model derived from a block at another location in the partitioned block may be used for the current block.

In deriving multiple models, a new model may be derived by modifying the coefficient value of a previously derived model.

Here, at least one of a coefficient, a bias, and a nonlinear term that constitute the new model may be derived by modifying coefficients, biases, or nonlinear terms of previously derived models.

For example, for model coefficient a and bias value b of model "C'(i, j) = a * L'(i, j) + b" in the above-described [Equation 7], a new model may be generated by modifying the value of a or b.

Here, when values derived by modifying a and b are a' and b', respectively, a' and b' may be derived, as shown in the following [Equation 16] to [Equation 19].

**[Equation 16]**

$$a' = a + v$$

**[Equation 17]**

$$a' = a - v$$

**[Equation 18]**

$$a' = a * v$$

**[Equation 19]**

$$a' = a / v$$

That is, a' or b' may be derived by adding a specific value v to a or b. Alternatively, a' or b' may be derived by subtracting a specific value v from a or b. Alternatively, a' or b' may be derived by multiplying a specific value v by a or b. Alternatively, a' or b' may be derived by dividing a or b by a specific value v.

Here, an equation for deriving a' or b' may be configured in the form of a polynomial using a and b, as shown in the following [Equation 20].

**[Equation 20]**

$$a' = a * t + s$$

Individual coefficients such as v, t, and s used to derive a' or b' may be values preset by the encoding apparatus 1600 and/or the decoding apparatus 1700, and may be values signaled from the encoding apparatus 1600 to the decoding apparatus 1700.

For a' and b', the range of values of a' and the range of values of b' may be set by W, X, Y and Z, as shown in the following [Equation 21] and [Equation 22].

**[Equation 21]**

$$W < a' < X$$

## [Equation 22]

$$Y < b' < Z$$

Here, each of W, X, Y, and Z may be a value preset by the encoding apparatus 1600 and/or the decoding apparatus 1700, and may be a value signaled from the encoding apparatus 1600 to the decoding apparatus 1700.

In deriving multiple models, a new model may be derived using a weighted sum of the coefficient values of previously derived models.

Here, at least one of a coefficient, a bias, and a nonlinear term that constitute the new model may be derived using the weighted sum of coefficients, biases, or nonlinear terms of previously derived models.

For example, the following [Model 1-1] and [Model 1-2] may represent the previously derived models.

## [Model 1-1]

$$C'(i, j) = a * L'(i, j) + b$$

## [Model 1-2]

$$C'(i, j) = c * L'(i, j) + d$$

Here, the following [Model 1-3] may represent a model newly generated using [Model 1-1] and [Model 1-2].

## [Model 1-3]

$$C'(i, j) = e * L'(i, j) + f$$

Here, each of coefficient e and bias f of [Model 1-3] may be generated using the weighted sum of the coefficients in [Model 1-1] and [Model 1-2] and the weighted sum of [Model 1-1] and [Model 1-2].

The following [Equation 23] may represent the derivation of coefficient e in [Model 1-3].

## [Equation 23]

$$e = w * a + (1 - w) * c$$

The following [Equation 24] may represent the derivation of bias f in [Model 1-3].

## [Equation 24]

$$f = w * b + (1 - w) * d$$

In [Equation 23] and [Equation 24], w may represent the weight of the weighted sum.

The weight w may be a value preset by the encoding apparatus 1600 and/or the decoding apparatus 1700, and may be a value signaled from the encoding apparatus 1600 to the decoding apparatus 1700.

The method for deriving models, described in embodiments, may be used for the derivation of not only multiple models but also a single model for the current block.

For example, a new model may not be derived using reference samples in the current block, and a model that is previously calculated in at least one of an adjacent block, a neighboring block or a block in a reference picture may be used as a model for the current block.

For example, a new model may not be derived using surrounding samples in the current block, and a model derived using the weighted sum of the coefficient values of a previously derived model may be used as the model of the current block.

For example, a new model may not be derived using surrounding samples in the current block, and a model configured by modifying the coefficient value of a previously derived model may be used as the model of the current block.

In embodiments, a method for deriving a cross-component prediction parameter using a reference sample in a block at a specific location has been described. In this method, a model parameter from the block at the specific location may be inherited to the current block.

The inherited model parameter may be used for Cross-Component Prediction (CCP) merge for the current block.

In CCP merge, a default candidate may be generated through scaling of the model parameter.

In embodiments, scaling of the model parameter may refer to changing the model parameter depending on specific processing such as an operation in embodiments. Here, the operation may include a multiplication and a division, and may include an addition and a subtraction. For example, the scaling of the model parameter may include deriving a multiplication of the value of the model parameter and an offset, deriving a model parameter divided by the offset, deriving an addition of the value of the model parameter and the offset, and deriving a subtraction between the value of the model parameter and the offset.

The model generated by the method described in embodiments may be added to a merge candidate list for merge.

### Determination of model information

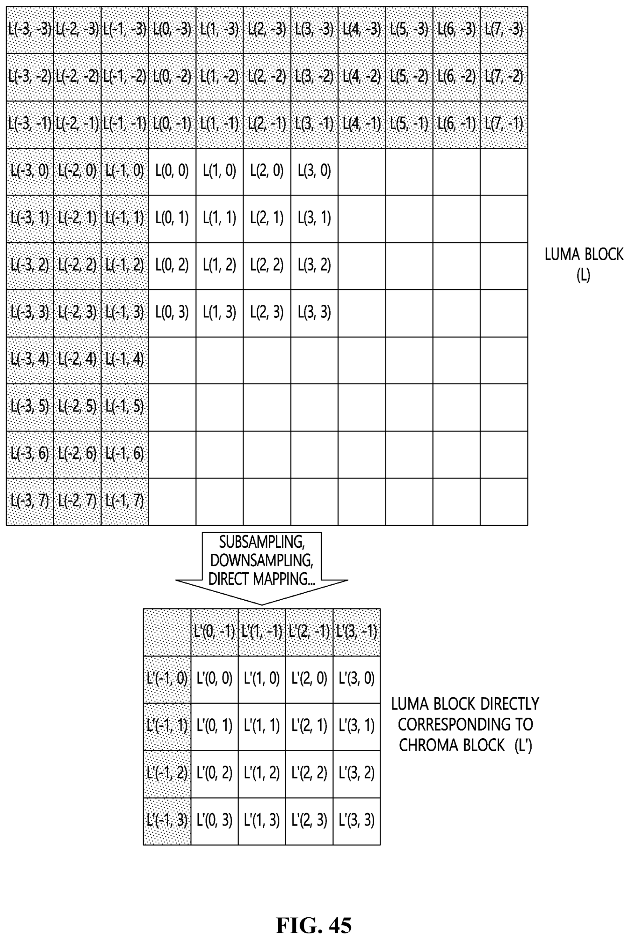

FIG. 45 illustrates a luma block, and a luma block corresponding to a chroma block according to an example.

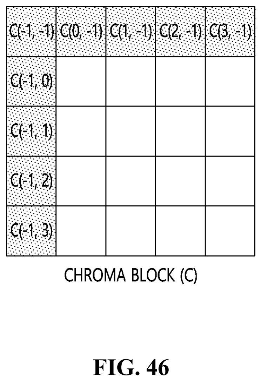

FIG. 46 illustrates a chroma block according to an example.

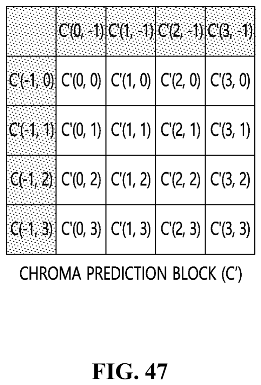

FIG. 47 illustrates a chroma prediction block according to an example.

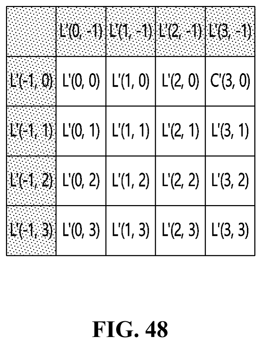

FIG. 48 illustrates a luma block, and a luma block corresponding to a chroma block according to an example.

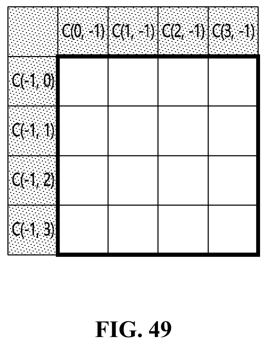

FIG. 49 illustrates a chroma block according to an example.

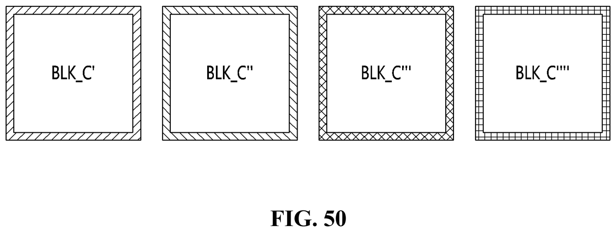

FIG. 50 illustrates four chroma prediction blocks according to an example.

The chroma block in FIGS. 46 and 49 represent the size and pixels of a chroma block that is the target of prediction.

The chroma prediction block of FIG. 47 may represent prediction values of a chroma block generated by prediction for the chroma block.

In prediction for a chroma signal based on multiple models, information about a model to be used for generation of the chroma block among the multiple models may be signaled from the encoding apparatus 1600 to the decoding apparatus 1700. Alternatively, the information about a model to be used for generation of the chroma block may be derived using coding information of a block or a surrounding pixel.

The information about the model may include information about an equation used to derive the chroma signal and information about coefficients and constants included in the equation.

For example, multiple models such as the following [model 1-1] to [model 1-4] may be derived.

$$[\text{Model 2-1}]$$
$$C'(i, j) = a * L'(I, j) + b$$

$$[\text{Model 2-2}]$$
$$C''(i, j) = c * L'(I, j) + d$$

$$[\text{Model 2-3}]$$
$$C'''(i, j) = e * L'(I, j) + f$$

$$[\text{Model 2-4}]$$
$$C''''(i, j) = g * L'(I, j) + h$$

Prediction samples (= C', C", C''', and C'''') for the region of the chroma block (e.g., a region defined by bold lines in FIG. 49) or chroma prediction blocks (= BLK_C', BLK_C", BLK_C''', BLK_C''') may be generated, respectively, using the multiple models.

Through chroma prediction, a chroma prediction block and a model having the lowest error cost may be selected. Here, the selected model may be a model used to generate a chroma prediction block having the lowest error cost.

Information indicating the selected model may be signaled from the encoding apparatus 1600 to the decoding apparatus 1700.

### Signaling of model information

In generating a chroma signal/block based on multiple models, information about a model used to generate the final chroma signal/block may be signaled. The final chroma signal/block may refer to a chroma signal/block finally generated by prediction. The final chroma signal/block may be a signal/block finally determined to be used as the result of prediction for the chroma block among multiple signals/blocks.

As shown in FIGS. 45 to 50, multiple chroma prediction blocks may be generated using multiple models. Chroma predictions that generate multiple chroma prediction blocks may be performed using multiple models.

The final model may be determined based on error costs of the multiple chroma prediction blocks. The final model may be a model finally determined to be used for prediction for the chroma block. Information about the final model may be signaled.

The error cost of each model may be prediction cost of chroma prediction block generated by the model.

For example, the model having the lowest error cost among the multiple models may be determined to be the final model.

Information indicating the final model may be signaled.

Here, the error costs may be calculated for a U signal and a V signal, respectively. Alternatively, the error cost for U and the error cost for V may be summed into one error cost.

## Model information derivation method

In generating a chroma signal/block based on multiple models, a final model to be used to generate the final chroma block may be derived by performing chroma prediction that uses derivation and application of a model from and to a reference region.

For example, a region from which a model in a reference region is derived to extract information about the final model and a region in which error cost is calculated by applying the derived model may be separated, and the separated regions may be respectively used.

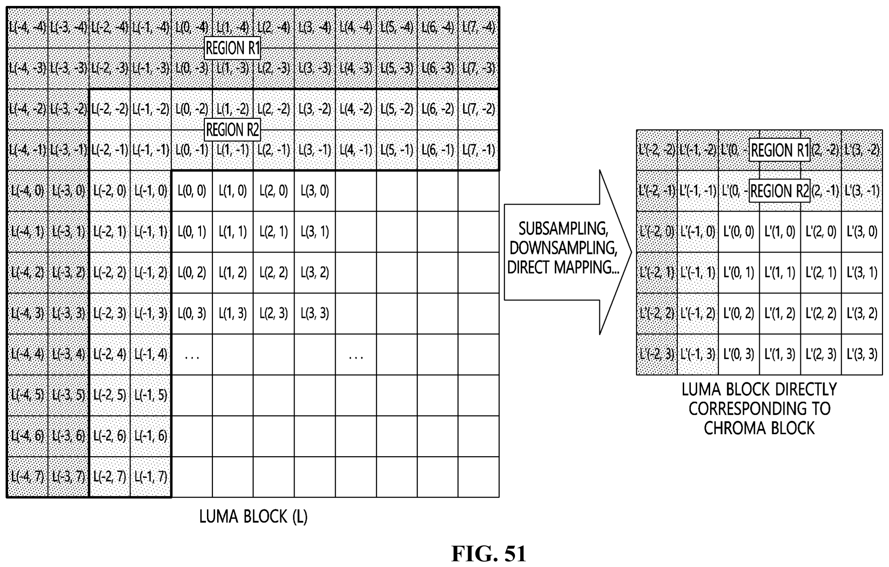

FIG. 51 illustrates regions in a luma block and regions in a luma block directly corresponding to a chroma block according to an example.

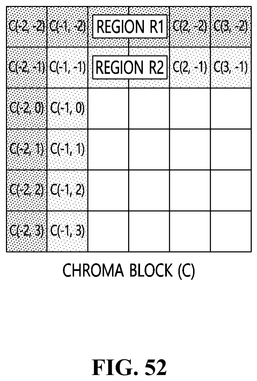

FIG. 52 illustrates regions in a chroma block according to an example.

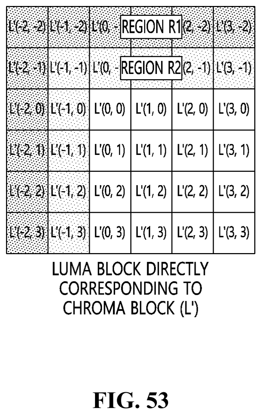

FIG. 53 illustrates regions in a luma block directly corresponding to a chroma block according to an example.

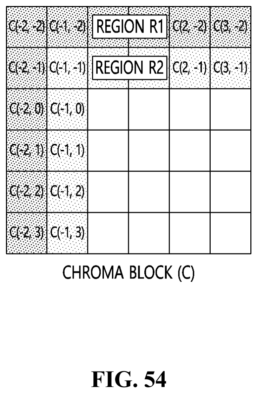

FIG. 54 illustrates regions in a chroma block according to an example.

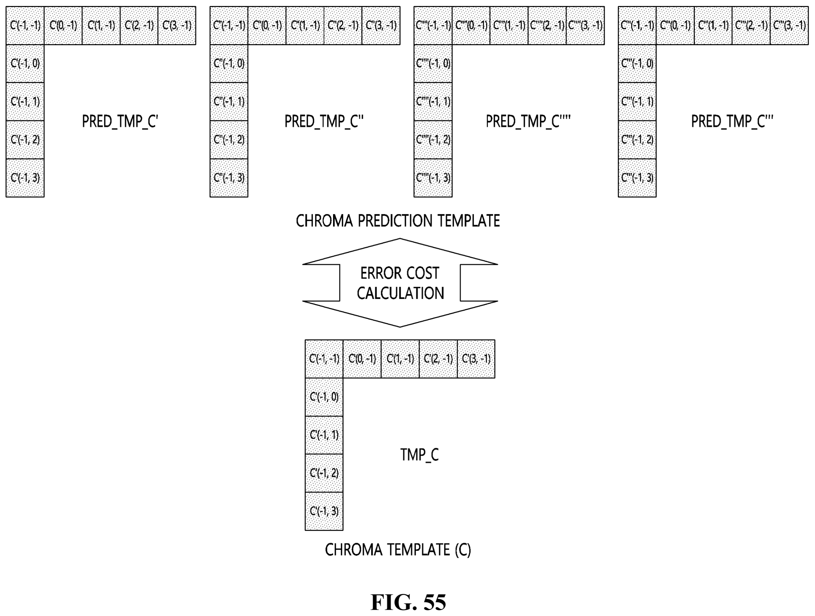

FIG. 55 illustrates a chroma prediction block and a chroma template according to an example.

Region R1 may be a region used to derive a model within a reference region.

Region R2 may be a region to generate a chroma prediction signal by applying the derived model and calculate the error cost of a chroma signal, within the reference region.

One or more models may be derived using luma samples in region R1 and chroma samples corresponding to the luma samples.

For example, region R2 may indicate samples adjacent to a luma block among samples in the reference region.

For example, region R1 may indicate samples adjacent to region R2 among the samples in the reference region.

For example, region R2 may indicate samples adjacent to the block among the samples in the reference region. For example, samples adjacent to one of the left, topleft, and top of the luma block among the samples in the reference region may be included in region R2.

For example, region R1 may indicate samples adjacent to region R2 among the samples in the reference region. For example, samples adjacent to one of the left, topleft, and top of region R2 among the samples in the reference region may be included in region R1.

For example, region R1 may indicate samples having a distance of 2 from the block in the reference region. Region R2 may indicate samples having a distance of 1 from the block in the reference region. Here, the distance between a specific sample and a specific block may be the distance between the specific sample and the nearest sample in the specific block. The nearest sample may be a sample closest to the specific sample among the samples in the block. The distance between the specific sample and the block (or the nearest sample) may be the larger of the horizontal distance between the sample and the block (or the nearest sample) and the vertical distance between the sample and the block (or the nearest sample).

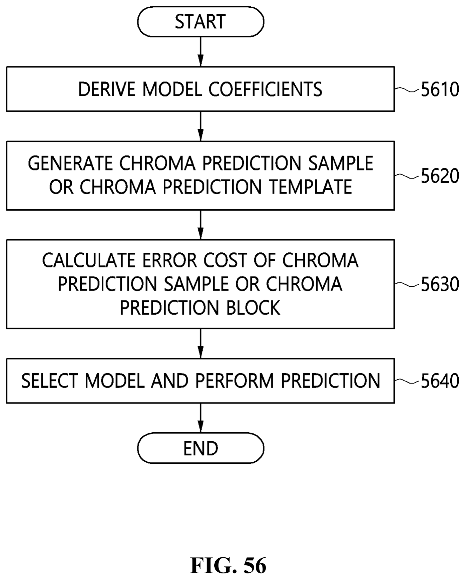

FIG. 56 is a flowchart of a chroma prediction method according to an example.

At step 5210, the model coefficient values of CCML may be derived using samples included in region R1 among reconstructed surrounding reference samples of a luma block (=L') directly corresponding to a chroma block (= C).

Here, model coefficient values of multiple models may be derived by separating the samples used to derive the model coefficients. For example, the samples may be separated into even-numbered samples and odd-numbered samples.

At step 5220, a chroma prediction sample or a chroma prediction template may be generated using the multiple models.

Chroma prediction samples (e.g., C', C", C''', and C'''') corresponding to region R2 among the reconstructed surrounding reference samples of the chroma block (= C) may be generated using the derived models.

Chroma prediction samples (e.g., C', C", C''', and C'''') of respective models may be generated by applying respective derived models to the luma samples in region R2.

A combination of chroma prediction samples in respective models may be configured as one chroma prediction template. In other words, a chroma prediction template may be a set of chroma prediction samples for one model. Multiple chroma prediction templates (e.g., PRED_TMP_C', PRED_TMP_C", PRED_TMP_C''', and PRED_TMP_C'''') for multiple models may be configured.

At step 5230, error cost of each chroma prediction sample or chroma prediction template may be calculated.

As shown in FIG. 51, error cost between the chroma prediction sample (or chroma prediction template) generated for each model and a chroma sample (chroma template) may be calculated.

The chroma sample may be a sample in region R2 of the chroma block (= C).

The chroma template may be a combination of samples in region R2 of the chroma block (= C).

The chroma prediction template and the chroma template may correspond to each other.

Error cost between each chroma prediction sample (or chroma prediction template) among the multiple chroma prediction samples (or chroma prediction templates) and the chroma sample (or chroma template) may be calculated.

The error costs of multiple models may be calculated. Here, the error cost of each model may be error cost between the chroma prediction sample (or chroma prediction template) generated for the corresponding model and the chroma sample (chroma template).

Here, the error costs may be calculated for U and V, respectively. Alternatively, the error cost for U and the error cost for V may be summed into one error cost.

At step 5240, the model may be selected, and chroma prediction may be performed.

For example, the model having the lowest error cost among the multiple models may be determined to be the final model for prediction.

A chroma prediction block may be generated by performing chroma prediction using the final model.

The sizes, positions, and shapes of region R1 and region R2 may be variable. Information for specifying the sizes, positions, and shapes of regions R1 and R2 may be values preset by the encoding apparatus 1600 and/or the decoding apparatus 1700, and may be values signaled from the encoding apparatus 1600 to the decoding apparatus 1700.

In embodiments, regions R1 and R2 may be determined based on template matching. For example, as in the case of TIMD, a reference region (i.e., region R1 of a luma block directly corresponding to a chroma block) may be determined using the template. A prediction block (i.e., chroma prediction block) may be generated using the determined reference region. The reference region may be a template for a prediction block. Error cost may be calculated by comparing the generated prediction block (i.e., chroma prediction template) with an adjacent template (i.e., region R2 of the block or the chroma template of the block) of the chroma block.

**Signaling of model information**

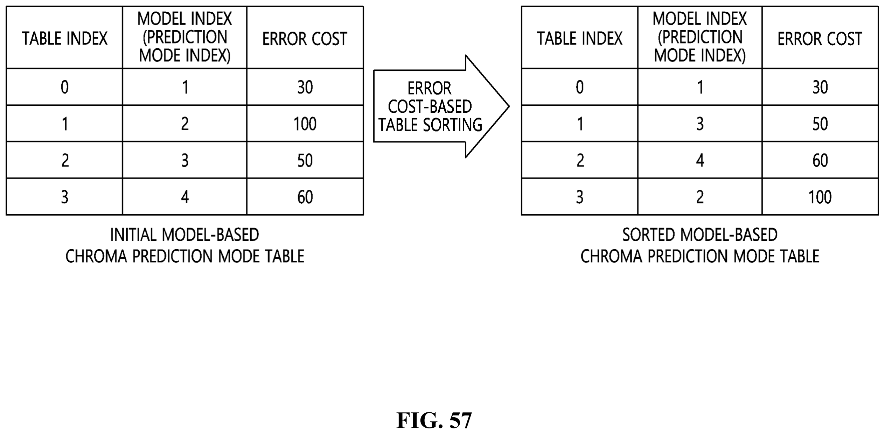

FIG. 57 illustrates the reconstruction of a chroma prediction mode table based on a model according to an example.

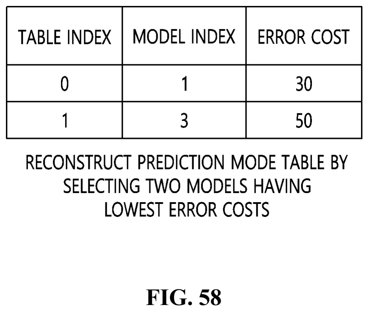

FIG. 58 illustrates the reconstruction of a prediction mode table using lowest error costs according to an example.

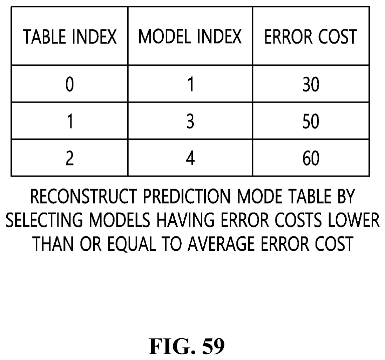

FIG. 59 illustrates the reconstruction of a prediction mode table using error costs lower than or equal to an average according to an example.

In prediction for a chroma signal based on multiple models, a bit amount required for signaling of model information may be decreased using the model information derivation method according to the embodiment.

For example, when multiple models are available, a prediction mode index (or model index) for each of the multiple models may be defined in the form of a table. Such a table may be referred to as a 'chroma prediction mode table' or 'prediction mode table'.

On the left side of FIG. 57, a prediction mode table based on an initial model is depicted.

Items in the prediction mode table may include a table index, a model index indicating a model, and the error cost of the model.

The error costs of multiple models may be calculated.

As in the case of a model information derivation method, chroma prediction samples (e.g., C', C", C''', and C'''') neighboring a chroma block may be configured for each of multiple models.

The error cost of each of multiple models may be calculated. The error cost of each model may be the error cost of a chroma prediction sample generated for the model.

The error cost of the chroma prediction sample may be error cost between the chroma prediction sample and the surrounding reconstructed chroma sample (=C) of the chroma block corresponding to the chroma prediction sample.

Reordering of a chroma prediction mode table may be performed based on calculated error costs.

In embodiments, reordering of a specific target may refer to sorting of the specific target or elements in the specific target.

As shown on the right side of FIG. 57, reordering may be performed on the prediction mode table. The model indices of the prediction mode table may be reordered based on the error costs of the models indicated by the model indices. The items of the prediction mode table may be reordered in ascending order of error costs.

For example, as shown in FIG. 57, when models are reordered so that a model having lower error cost has a higher index value in the model-based chroma prediction mode table, chroma prediction blocks may be generated for top N models, respectively. Next, information indicating a model finally determined through chroma prediction may be signaled. By means of this method, the amount of bits required for signaling may be reduced.

A chroma prediction block may be generated based on statistical values of error costs of the models, and models to be included in the model-based chroma prediction mode table may be selected.

For example, as shown in FIG. 58, a prediction mode table may be reconstructed by selecting N models having the lowest error costs. For example, N may be 2.

For example, as shown in FIG. 59, a chroma prediction mode table may be reconstructed by selecting only models having error costs lower than or equal to average error cost, and a chroma prediction block may be generated using the reconstructed chroma prediction mode table.

For example, the prediction mode table may be reconstructed by selecting S models having the lowest variance values. A chroma prediction block may be generated using the reconstructed chroma prediction mode table.

For example, N may be equal to or greater than 1 and less than or equal to M. M may be the number of multiple models. S may be equal to or greater than 1 and less than or equal to M. Each of N and S may be a value preset by the encoding apparatus 1600 and the decoding apparatus 1700, and may be a value signaled from the encoding apparatus 1600 to the decoding apparatus 1700.

### Derivation of prediction mode using Gradient-based Linear Model (Gradient Linear Model: GLM)

A gradient may refer to variation in the statistical value or a sample value or sample values. A gradient may also indicate a slope or an increment/decrement.

In chroma signal prediction based on a correlation between pieces of cross-color component coding information, a prediction chroma signal may be derived based on gradient among various types of coding information. A linear model based on such a gradient may be referred to as a gradient-based linear model.

A chroma signal prediction method that uses a cross-color component linear model based on gradient may derive a gradient value using reconstructed chroma samples adjacent to a current chroma block and reconstructed luma samples at positions corresponding to the positions of the chroma samples, and may generate a chroma prediction block/signal using the derived gradient value.

In embodiments, the samples may include 1) a pixel, 2) the statistical value of pixel values of a pixel or pixels, and 3) coding information derived from a pixel or pixels. The coding information may include coding parameters, and may include information used for encoding/decoding/signaling in embodiments.

A linear regression model may be derived using 1) correlation between surrounding pixels of a luma block and surrounding pixels of a chroma block or 2) a correlation between statistical values such as a maximum value and a minimum value, and model coefficients a and b of the linear regression model may be calculated.

$$\textbf{[Equation 25]}$$
$$C'(i, j) = a * G(i, j) + b$$

C(i, j) may denote the pixel value of the current chroma block or a sample in the current chroma block.

G(i, j) may denote a gradient sample derived from a reconstructed luma block at a location corresponding to the location of the current chroma block.

The current chroma signal/block may be derived using the values of the model coefficients a and b and the gradient value of the pixels in the luma block.

In deriving the model coefficients of [Equation 25], model coefficients may be derived for a U signal and a V signal, respectively.

In deriving the model coefficients of [Equation 25], model coefficients applied both to the U signal and to the V signal may be derived.

Whether a model is applied may be individually determined for each of the U signal and the V signal. Information indicating whether the model is applied may be encoded/decoded/signaled.

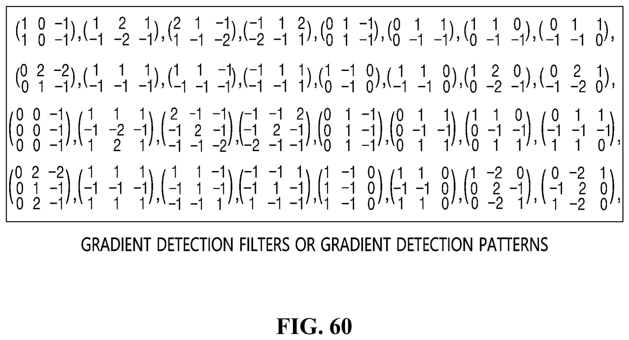

FIG. 60 illustrates gradient detection filters or gradient detection patterns according to an example.

In detecting the gradient value, a gradient sample corresponding to a chroma sample may be derived using multiple gradient detection filters illustrated in FIG. 56.

Each gradient detection filter may be a gradient detection pattern.

One or more filters may be used to derive a gradient sample. The number of filters used to derive the gradient sample may be a value present by the encoding apparatus 1600 and/or the decoding apparatus 1700. Information indicating the number of filters may be signaled from the encoding apparatus 1600 to the decoding apparatus 1700.

The gradient value may be detected for each of the gradient detection filters, and a gradient-based linear model corresponding to the detected gradient value may be derived.

Here, gradient values may be respectively detected by gradient detection filters that detect gradient values. A gradient linear model corresponding to a gradient value detected by each gradient detection filter may be derived.

For example, multiple gradient-based linear models such as those in the following [Model 3-1] to [Model 3-4] may be derived using the gradient values detected through the multiple gradient detection filters.

**[Model 3-1]**

$$C'(i, j) = a * G(i, j) + b$$

**[Model 3-2]**

$$C''(i, j) = c * G(i, j) + d$$

**[Model 3-3]**

$$C'''(i, j) = e * G(i, j) + f$$

**[Model 3-4]**

$$C''''(i, j) = g * G(i, j) + h$$

In [Model 3-1], a gradient value may be derived using filter 1. In [Model 3-2], a gradient value may be derived using filter 2. In [Model 3-3], a gradient value may be derived using filter 3. In [Model 3-4], a gradient value may be derived using filter 4.

Gradient detection filter information indicating a filter used to derive a model for generating the final chroma prediction block among the multiple gradient detection filters may be signaled. Also, the gradient detection filter information may be derived using coding information.

One or more filters may be used to derive a model for generating the final chroma prediction block.

The number of filters may be a value preset by the encoding apparatus 1600 and the decoding apparatus 1700, and may be a value signaled from the encoding apparatus 1600 to the decoding apparatus 1700.

In an embodiment, in chroma signal prediction using the gradient linear model, chroma signal/sample/block may be derived using multiple gradient-based models.

When multiple gradient-based linear models are derived, gradient samples may be respectively derived from luma samples at different positions.

For example, gradient samples may be generated from luma samples located at even-numbered positions in a reference line, and one model may be derived using the generated gradient samples. Furthermore, gradient samples may be generated from luma samples located at odd-numbered positions in a reference line, and another model may be derived using the generated gradient samples.

For example, samples located above the luma block and samples located to the left of the luma block may be separated from each other, gradient samples may be generated using the separated samples, and different models may be individually derived using the gradient samples.

The multiple models may be derived based on the statistical values of gradient samples.

For example, the average value of the gradient samples may be used as a threshold. Samples having sample values less than or equal to the threshold and samples having sample values exceeding the threshold may be separated from each other. Different models may be derived from the separated samples.

For example, the sample values of the gradient samples may be sorted in specific order. For example, the specific order may be an order close to the average. Among the sorted gradient samples, top N samples and bottom S samples may be selected. Different models may be individually derived using the top N samples and bottom S samples.

Here, N and S may be values preset by the encoding apparatus 1600 and the decoding apparatus 1700, and may be values signaled from the encoding apparatus 1600 to the decoding apparatus 1700.

The multiple models may be derived based on the defined threshold.

For example, a specific value may be used as the threshold. Samples having sample values less than or equal to the threshold and samples having sample values exceeding the threshold may be separated from each other. Different models may be derived from the separated samples.

The threshold may be a value preset by the encoding apparatus 1600 and the decoding apparatus 1700, and may be a value signaled from the encoding apparatus 1600 to the decoding apparatus 1700.

Multiple models may be derived using gradient samples derived using multiple gradient detection filters.

Here, multiple models may be derived using gradient samples derived by one gradient detection filter.

In deriving multiple models, a model derived from previously encoded/decoded blocks may be used.

In deriving multiple models, a model derived from a block having a size different from that of the current block may be used.

In deriving multiple models, a model derived from a block at another location in a partitioned block may be used for the block.

In deriving multiple models, a new model may be derived by modifying the coefficient value of a previously derived model.

In deriving multiple models, a new model may be derived using a weighted sum of the coefficient values of previously derived models.

The method for deriving models, described in embodiments, may be used for the derivation of not only multiple models but also a single model for the current block.

In a method for deriving multiple models and deriving a model for the current block according to embodiments, at least one of methods for deriving models used in a "Cross-Component Linear Model (CCLM)" may be used to derive models.

## Signaling of gradient detection filter information

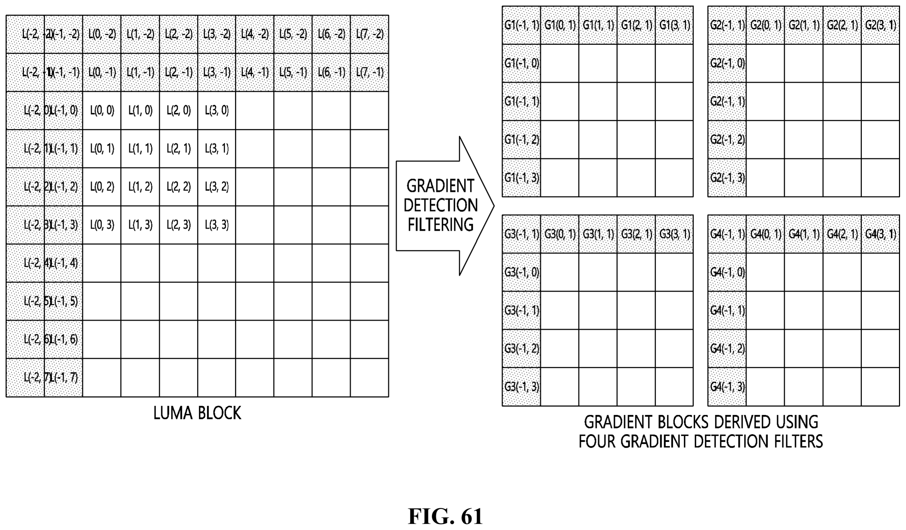

FIG. 61 illustrates gradient blocks derived using a luma block and four gradient detection filters according to an example.

Information about a gradient detection filter used to derive a model for generating the final chroma prediction block among the multiple gradient detection filters may be signaled.

As shown in FIG. 61, a gradient-based linear model corresponding to each of multiple gradient detection filters may be derived using the multiple gradient detection filters. Chroma prediction blocks may be respectively generated using the gradient-based linear models.

Multiple chroma prediction blocks may be respectively generated using multiple gradient-based linear models. Chroma predictions for generating multiple chroma prediction blocks may be performed using the multiple gradient-based linear models.

A final gradient-based linear model and a final gradient detection filter may be determined based on error costs of the multiple chroma prediction blocks. The final gradient detection filter may be a gradient detection filter used to derive the final gradient-based linear model.

The error cost of each gradient detection filter may be the prediction cost of a chroma prediction block generated by the corresponding gradient detection filter.

For example, a gradient detection filter having the lowest error cost among the multiple gradient detection filters may be determined to be the final gradient detection filter.

Information indicating the final gradient detection filter may be signaled.

Here, the error costs may be calculated for a U signal and a V signal, respectively. Alternatively, the error cost for U and the error cost for V may be summed into one error cost.

Different gradient detection filters may be used for the U signal and the V signal, respectively. An identical gradient detection filter may be used for both the U signal and the V signal. Information indicating gradient detection filter(s) used for the U signal and the V signal may be signaled.

## First derivation method for gradient detection filter information

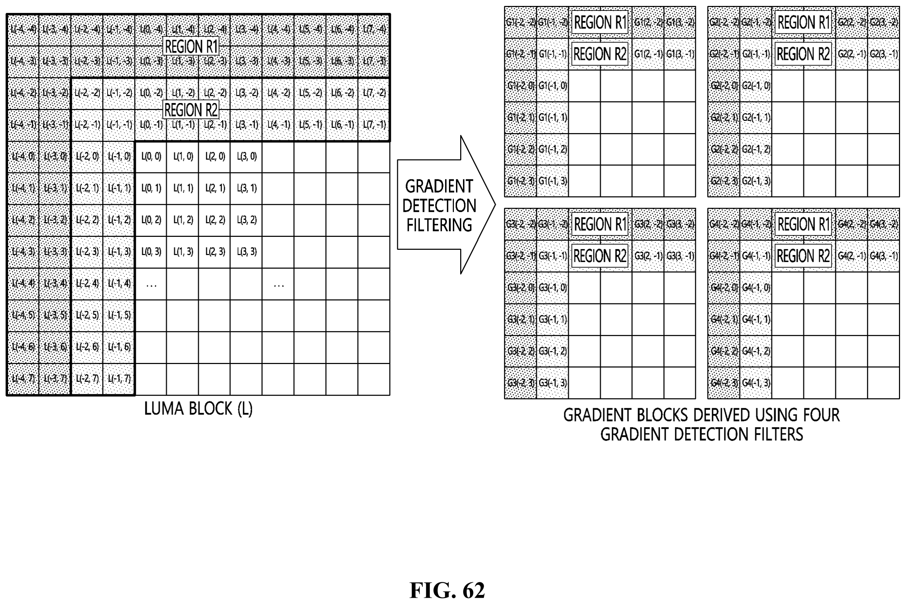

FIG. 62 illustrates regions in gradient blocks derived using regions in a luma block and four gradient detection filters according to an example.

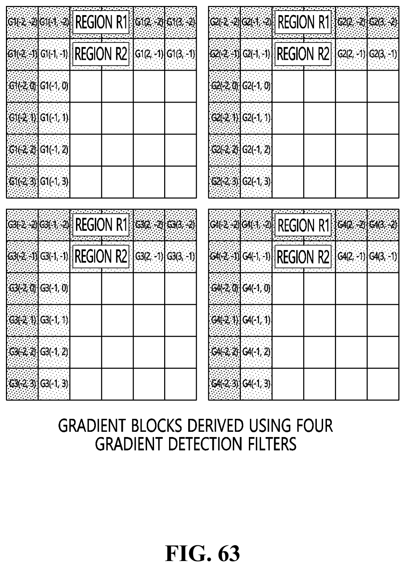

FIG. 63 illustrates regions in gradient blocks derived using four gradient detection filters according to an example.

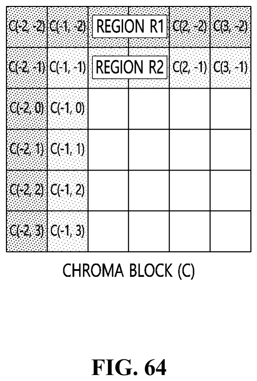

FIG. 64 illustrates regions in a chroma block according to an example.

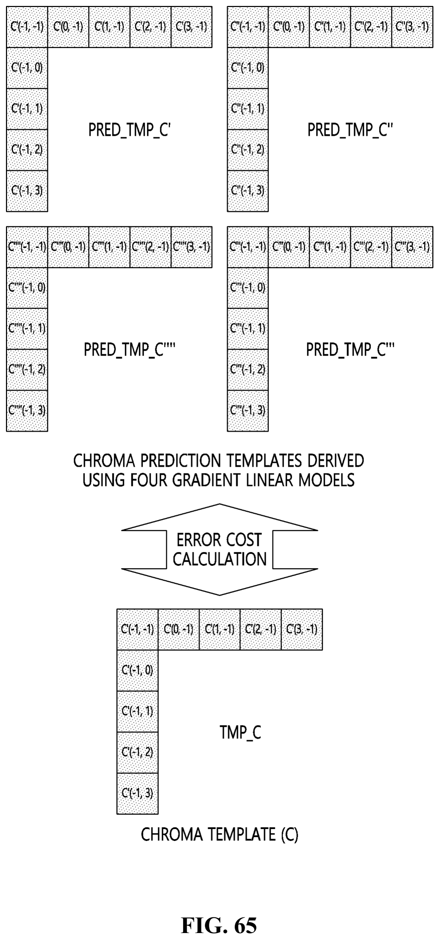

FIG. 65 illustrates chroma prediction templates and a chroma template derived using four gradient-based linear models according to an example.

In embodiments, information about a gradient detection filter used to derive a model required to generate the final chroma prediction block among the multiple gradient detection filters may be derived.

When such information about the gradient detection filter is derived, a gradient detection filter used to derive the final model may be derived by performing chroma prediction that uses the derivation of a model from a reference region and the application of the model.

When information about a gradient detection filter is derived to derive a model used to generate the final chroma prediction block, reference regions (or reference gradient samples) may be distinguished from each other, and the distinguished reference regions (or reference gradient samples) may be respectively used.

When the reference regions are distinguished from each other, 1) a region used to derive gradient-based linear models respectively corresponding to gradient detection filters using multiple gradient detection filters and 2) a region used to individually generate chroma prediction signals (or chroma prediction samples) by applying the derived gradient-based linear models and calculate error costs of the chroma prediction signals with the chroma signal may be distinguished from each other.

As shown in FIG. 62, region R1 may be a region used to derive a model among the reference regions.

Region R2 may be a region used to generate a chroma prediction signal by applying the derived model and calculate the error cost of a chroma signal, within the reference region.

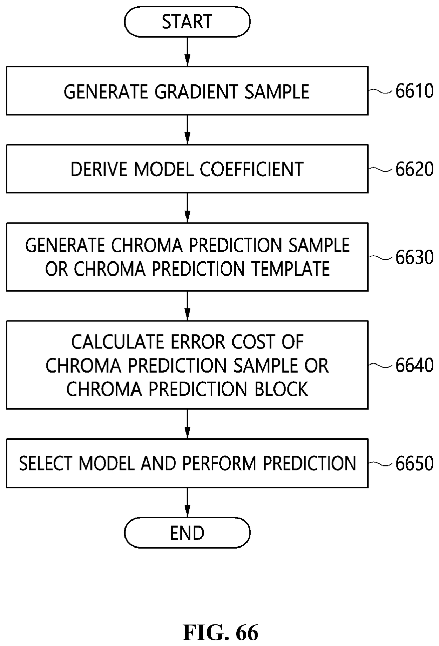

FIG. 66 is a flowchart of a chroma prediction method according to an example.

At step 6610, gradient samples for each of multiple gradient detection filters may be generated using the multiple gradient detection filters.

Multiple gradient blocks may be generated using the multiple gradient detection filters. The gradient block may include multiple gradient samples.

At step 6620, multiple models and model coefficients of the multiple models may be derived.

In embodiments, the models may refer to gradient-based linear models.

Multiple models may be derived using gradient samples in region R1 of each of the multiple gradient blocks and chroma samples corresponding to the gradient samples.

Here, a model corresponding to each of the multiple gradient detection filters may be derived.

Here, the multiple models may be derived by separating the samples used to derive the model coefficients. For example, the samples may be separated into evennumbered samples and odd-numbered samples.

At step 6630, a chroma prediction sample or a chroma prediction template may be generated using the model.

The model coefficient values of the models may be derived using 1) samples included in reconstructed region R1 among gradient samples directly corresponding to the chroma block and 2) samples included in region R1 among reconstructed surrounding reference samples of the chroma block.

Chroma prediction samples (e.g., C', C", C‴, and C⁗) corresponding to region R2 among the reconstructed surrounding reference samples of the chroma block (= C) may be generated using the derived models.

After the multiple models are derived, chroma prediction samples (e.g., C', C", C‴, and C⁗) of respective models may be generated by applying respective derived models to the gradient samples in region R2.

A combination of chroma prediction samples in respective models may be configured as one chroma prediction template. In other words, a chroma prediction template may be a set of chroma prediction samples for one model. Multiple chroma prediction templates (e.g., PRED_TMP_C', PRED_TMP_C", PRED_TMP_C‴, and PRED_TMP_C⁗) for multiple models may be configured.

At step 6640, error cost of each chroma prediction sample or chroma prediction template may be calculated.

As shown in FIG. 65, error cost between the chroma prediction sample (or chroma prediction template) generated for each model and a reconstructed chroma sample in region R2 (or a reconstructed chroma template in region R2) may be calculated.

The chroma sample may be a sample in region R2 of the chroma block (= C).

The chroma template may be a combination of samples in region R2 of the chroma block (= C).

The chroma prediction template and the chroma template may correspond to each other.

Error cost between each chroma prediction sample (or chroma prediction template) among the multiple chroma prediction samples (or chroma prediction templates) and the chroma sample (or chroma template) may be calculated.

The error costs of multiple models may be calculated. Here, the error cost of each model may be error cost between the chroma prediction sample (or chroma prediction template) generated for the corresponding model and the chroma sample (chroma template).

Here, the error costs may be calculated for U and V, respectively. Alternatively, the error cost for U and the error cost for V may be summed into one error cost.

At step 6650, the model may be selected, and chroma prediction may be performed.

For example, the model having the lowest error cost among the multiple models may be determined to be the final prediction model for prediction.

Here, a gradient prediction filter used to derive the final model may be determined to be the final gradient detection filter.

A finally used filter among the multiple gradient detection filters may be a gradient detection filter used to derive the finally determined model. That is, the finally used filter may be a filter used to generate a gradient sample required to derive the finally determined model.

A chroma prediction block may be generated by performing chroma prediction using the final model.

The sizes, positions, and shapes of region R1 and region R2 may be variable. Information for specifying the sizes, positions, and shapes of regions R1 and R2 may be values preset by the encoding apparatus 1600 and/or the decoding apparatus 1700, and may be values signaled from the encoding apparatus 1600 to the decoding apparatus 1700.

In embodiments, regions R1 and R2 may be determined based on template matching. For example, as in the case of TIMD, a reference region (i.e., region R1 of a luma block directly corresponding to a chroma block) may be determined using the template. A prediction block (i.e., chroma prediction block) may be generated using the determined reference region. The reference region may be a template for a prediction block. Error cost may be calculated by comparing the generated prediction block (i.e., chroma prediction template) with an adjacent template (i.e., region R2 of the block or the chroma template of the block) of the chroma block.

## Second derivation method for gradient detection filter information

Information about a gradient detection filter used to derive a model required to generate the final chroma prediction block among the multiple gradient detection filters may be derived.

In order to derive information about the gradient detection filter, information about the intra-prediction mode may be used.

The following [Equation 26] to [Equation 29] may indicate gradient detection filters according to an example.

In embodiments, gradient may refer to a slope or a direction.

**[Equation 26]**

$$\begin{pmatrix} -1 & -1 & -1 \\ 2 & 2 & 2 \\ -1 & -1 & -1 \end{pmatrix}$$

**[Equation 27]**

$$\begin{pmatrix} -1 & 2 & -1 \\ -1 & 2 & 2 \\ -1 & 2 & -1 \end{pmatrix}$$

**[Equation 28]**

$$\begin{pmatrix} -1 & -1 & 2 \\ -1 & 2 & -1 \\ 2 & -1 & -1 \end{pmatrix}$$

**[Equation 29]**

$$\begin{pmatrix} 2 & -1 & -1 \\ -1 & 2 & -1 \\ -1 & -1 & 2 \end{pmatrix}$$

[Equation 26] may indicate a gradient detection filter designed to be advantageous for detecting the gradient value of a horizontal intra-prediction mode (i.e., 180 degrees).

[Equation 27] may indicate a gradient detection filter designed to be advantageous for detecting the gradient value of a vertical intra-prediction mode (i.e., 90 degrees).

[Equation 28] may indicate a gradient detection filter designed to be advantageous for detecting the gradient value of a diagonal-up intra-prediction mode (i.e., 45 degrees).

[Equation 29] may indicate a gradient detection filter designed to be advantageous for detecting the gradient value of a diagonal-down intra-prediction mode (i.e., 135 degrees).

For example, when the gradient detection filters are designed to be advantageous for detecting a specific gradient value as in the case of the gradient detection filters in [Equation 26] to [Equation 29], a gradient detection filter designed to detect a gradient value most similar to the gradient value of a prediction mode determined in directional prediction for the neighboring block or the current block may be used to derive the gradient-based linear model.

For example, when the directional prediction mode of the neighboring block or the current block is vertical, a gradient detection pattern designed to detect a vertical component among given gradient prediction filters may be selected.

For example, a gradient detection filter designed to detect a gradient component most similar to the gradient of a prediction mode determined by DIMD in the neighboring block or the current block may be used to derive the gradient-based linear model.

## Third derivation method for gradient detection filter information

Information about a gradient detection filter used to derive a model required to generate the final chroma prediction block among the multiple gradient detection filters may be derived.

In order to derive information about the gradient detection filter, a reconstructed luma sample in a luma block may be used.

For example, as in the case of DIMD, a histogram of gradient values of the samples may be derived using the samples in the luma block. The prediction mode of the luma block may be determined using the histogram. A gradient detection filter designed to detect a gradient component most similar to the gradient of the detection mode may be used to derive a gradient-based linear model.

## Method for deriving another information for chroma prediction

In an embodiment, a gradient value or a gradient sample may be derived using neural network-based filtering.

In an embodiment, in order to derive the values of model coefficients a and b, one or more pieces of coding information may be included.

In embodiments, pieces of coding information may include 1) surrounding samples of a current chroma prediction block, 2) surrounding samples of a luma block corresponding to the location of the current chroma prediction block, 3) a gradient block (or a gradient sample) configured using samples in the luma block and surrounding samples of the luma block, 4) a reference line index of a luma block corresponding to the current chroma block, 5) a gradient derived from luma samples, etc.

For example, a gradient sample of a luma sample corresponding to one chroma sample may be derived using N luma samples. N may be a specific positive integer.

For example, statistical values of one or more gradient values among gradient values of N gradient samples may be calculated, and one representative gradient value may be derived using at least one of the statistical values. The derived representative gradient value may be used to replace the gradient value in gradient embodiments.

In embodiments, the statistical values may include the average, maximum value, minimum value, and median value of the gradient values.

Luma samples used to derive a gradient sample corresponding to a chroma sample may be changed. Also, an equation for deriving a chroma prediction signal may also be changed.

Information about luma samples corresponding to the adjacent sample of the current chroma block or information about an equation for deriving the adjacent sample of the current chroma block may be signaled from the encoding apparatus 1600 to the decoding apparatus 1700.

The position of a luma sample used to derive the gradient sample or information about the position of the luma sample may be a value present by the encoding apparatus 1600 and/or the decoding apparatus 1700, and may be a value signaled from the encoding apparatus 1600 to the decoding apparatus 1700. Alternatively, the position of the luma sample or information about the position of the luma sample may be derived using the coding information of the surrounding sample or the block.

## Signaling of model information

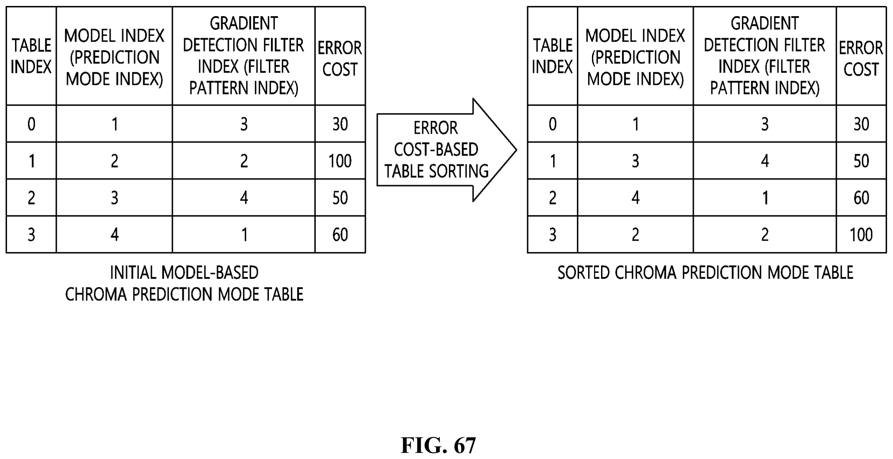

FIG. 67 illustrates the reconstruction of a chroma prediction mode table based on a model according to an example.

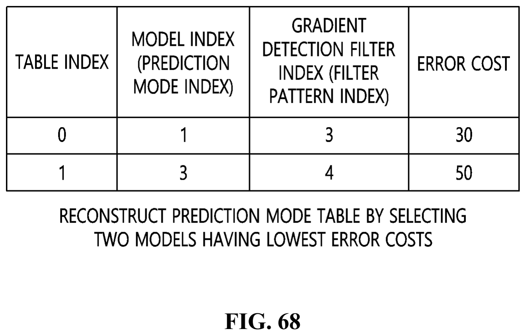

FIG. 68 illustrates the reconstruction of a prediction mode table in which lowest error costs are used according to an example.

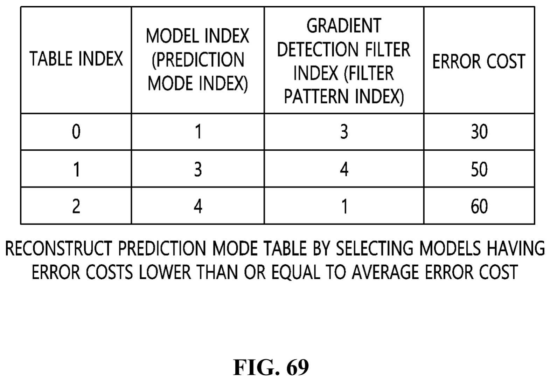

FIG. 69 illustrates the reconstruction of a prediction mode table in which error costs lower than or equal to an average are used according to an example.

Multiple models may be used in chroma prediction that uses a gradient-based linear model. Here, the amount of bits required for signaling model information may be decreased using a model information derivation method according to an embodiment.

For example, when multiple models are available, a prediction mode index (or model index) for each of the multiple models may be defined in the form of a table. Such a table may be referred to as a 'chroma prediction mode table' or a 'prediction mode table'.

On the left side of FIG. 67, a chroma prediction mode table based on an initial model is depicted.

Items in the prediction mode table may include a table index, a model index indicating a model, and the error cost of the model. Further, a gradient prediction filter index may also be included in the chroma prediction mode table. The gradient prediction filter index may indicate a gradient prediction filter used to derive a model among multiple gradient prediction filters.

The error costs of multiple models may be calculated.

As in the case of a model information derivation method, chroma prediction samples (e.g., C', C", C‴, and C‴') neighboring a chroma block may be configured for each of multiple models.

The error cost of each of multiple models may be calculated. The error cost of each model may be the error cost of a chroma prediction sample generated for the model.

The error cost of the chroma prediction sample may be error cost between the chroma prediction sample and the surrounding reconstructed chroma sample (=C) of the chroma block corresponding to the chroma prediction sample.

Reordering may be performed on the chroma prediction mode table based on the calculated error costs.

As shown on the right side of FIG. 67, reordering may be performed on the prediction mode table. The model indices of the prediction mode table may be reordered based on the error costs of the models indicated by the model indices. The items of the prediction mode table may be reordered in ascending order of error costs.

For example, as shown in FIG. 67, when models are reordered so that a model having lower error cost has a higher index value in the model-based chroma prediction mode table, chroma prediction blocks may be generated for top N models, respectively. Next, information indicating a model finally determined through chroma prediction may be signaled. By means of this method, the amount of bits required for signaling may be reduced.

A chroma prediction block may be generated based on statistical values of error costs of the models, and models to be included in the model-based chroma prediction mode table may be selected.

For example, as shown in FIG. 68, a prediction mode table may be reconstructed by selecting N models having the lowest error costs. For example, N may be 2.

For example, as shown in FIG. 69, a chroma prediction mode table may be reconstructed by selecting only models having error costs lower than or equal to average error cost, and a chroma prediction block may be generated using the reconstructed chroma prediction mode table.

For example, the prediction mode table may be reconstructed by selecting S models having the lowest variance values. A chroma prediction block may be generated using the reconstructed chroma prediction mode table.

For example, N may be equal to or greater than 1 and less than or equal to M. M may be the number of multiple models. S may be equal to or greater than 1 and less than or equal to M. Each of N and S may be a value preset by the encoding apparatus 1600 and the decoding apparatus 1700, and may be a value signaled from the encoding apparatus 1600 to the decoding apparatus 1700.

A prediction mode index (or a model index) and a gradient prediction filter index in the chroma prediction mode table may be combined into one piece of information, and information indicating the prediction mode index and the gradient prediction filter index may be managed. In other words, the prediction mode index and the gradient prediction filter index may be combined to be represented by one symbol.

**Generation of prediction signal based on filter-based Linear Model (FLM)**

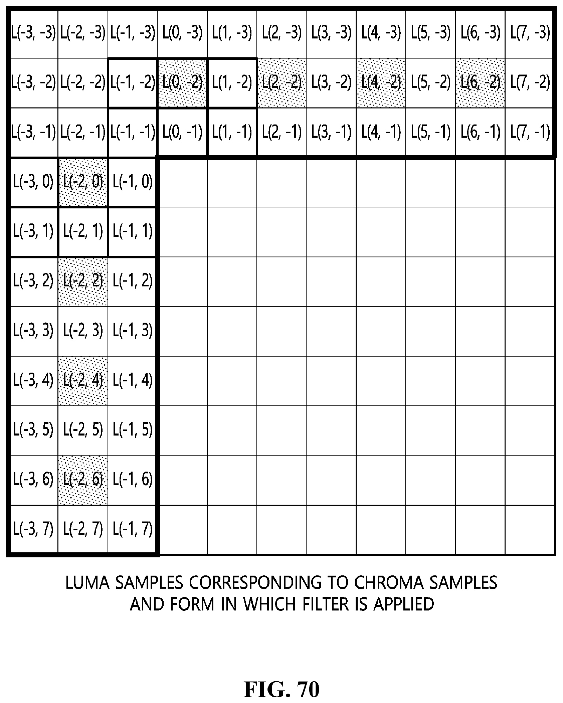

FIG. 70 illustrates a luma sample corresponding to a chroma sample and a form in which a filter is applied according to an example.

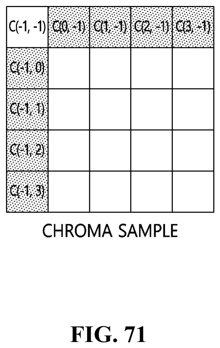

FIG. 71 illustrates a chroma sample according to an example.

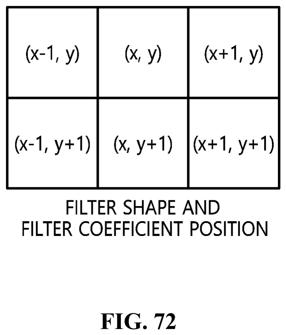

FIG. 72 illustrates filter shapes and the positions of filter coefficients according to an example.

In chroma signal prediction based on a cross-color component relationship, a prediction signal may be generated based on the filter-based linear model.

The filter-based linear model may be derived, as shown in the following [Equation 30] using 1) a correlation between surrounding samples of a luma block and surrounding samples of a chroma block or 2) a correlation between statistical values such as a maximum value and a minimum value, and a filter coefficient value a(x, y) and an offset value b may be calculated.

**[Equation 30]**

$$C'(i,j) = \sum_{i=0, j=0}^{N-1} \alpha_{(x,y)} \cdot L_{(x,y)} + b \quad \text{or} \quad C' = \sum_{i=0}^{N-1} \alpha_i \cdot L_i + b$$

In embodiments, the offset may be a bias.

The current chroma prediction block may be derived using samples in the derived filter-based linear model and samples in the luma block.

Each of C'(i, j) and C' may denote the current chroma prediction block or a sample in the current chroma prediction block. L'(i, j) may denote a reconstructed luma block/sample corresponding to the location of the current chroma prediction block. L(x, y) may denote a reconstructed luma block/sample at position (x, y). The position (x, y) of the luma sample L(x, y) corresponding to the chroma sample C'(i, j) and the position (i, j) of the chroma sample may be different from each other.

The filter may be applied, as shown in FIGS. 70 to 72.

In deriving the model coefficients of [Equation 30], the model coefficients may be derived for a U signal and a V signal, respectively.

In deriving the model coefficients of [Equation 30], model coefficients applied both to the U signal and to the V signal may be derived.

Whether a filter-based linear model is applied may be individually determined for each of the U signal and the V signal. Information indicating whether the model is applied may be encoded/decoded/signaled.

In order to derive the filter coefficient value a(x, y) and the offset value b, information about one or more of 1) surrounding samples of the current chroma prediction block, 2) surrounding samples of a luma block corresponding to the position of the current chroma prediction block, and 3) a reference line index of the corresponding luma block may be used.

The reference line may refer to multiple reference lines, described above with reference to FIG. 8. The reference line index may indicate a reference line used for encoding/decoding/signaling for a block among the multiple reference lines. The reference line may also refer to an adjacent sample line or a neighboring sample line of the block.

Here, when a reference line for deriving the filter coefficient is determined, N or more lines may be used as reference lines. Here, N may be a positive number of 0 or more. N may be a value preset by the encoding apparatus 1600 and the decoding apparatus 1700, and may be a value signaled from the encoding apparatus 1600 to the decoding apparatus 1700.

Statistical values of one or more of N luma samples may be calculated, and one or more representative luma samples may be derived using at least one of the statistical values. The filter coefficient may be derived from the one or more representative luma samples.

In embodiments, statistical values may include the average, maximum value, minimum value, and median value of the samples.

For example, only samples having average values higher than the average value of the samples may be selected from among adjacent samples of the current chroma block, and the selected samples may be used to derive the filter coefficient.

For example, only samples having average values lower than the average value of the samples may be selected from among adjacent samples of the current chroma block, and the selected samples may be used to derive the filter coefficient.

Luma samples for deriving the filter coefficient may be changed. Also, the equation for deriving the chroma prediction sample may also be changed. Information about luma samples for deriving the filter coefficient or information about the equation for deriving the adjacent sample of the current chroma block may be signaled from the encoding apparatus 1600 to the decoding apparatus 1700.

The sample position described in embodiments may be a value preset by the encoding apparatus 1600 and the decoding apparatus 1700, and may be a value signaled from the encoding apparatus 1600 to the decoding apparatus 1700. Alternatively, the sample position described in embodiments may be derived using the coding information of the surrounding samples or the block.

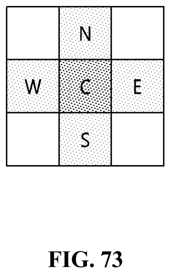

FIG. 73 illustrates the shape of a filter according to an example.

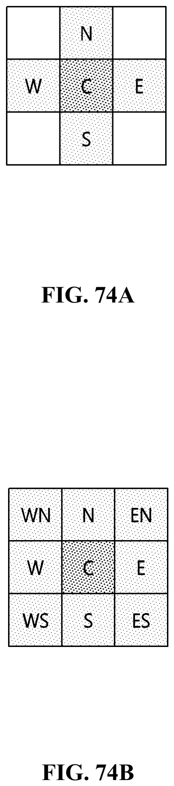

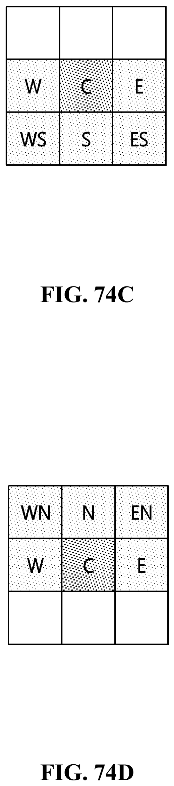

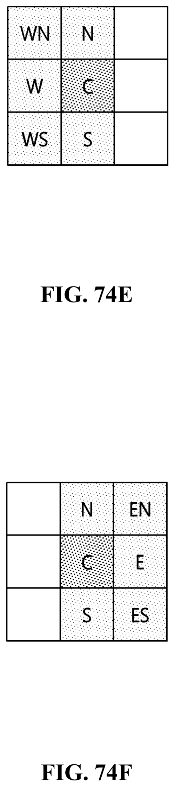

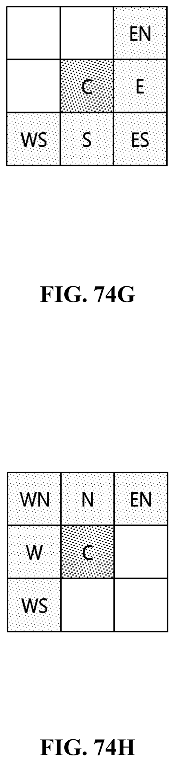

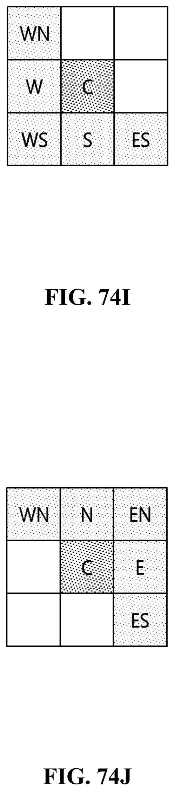

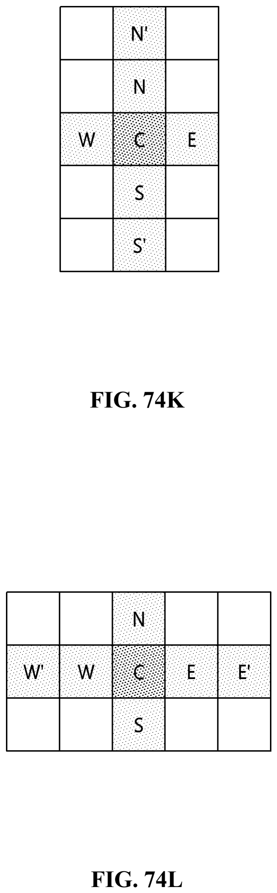

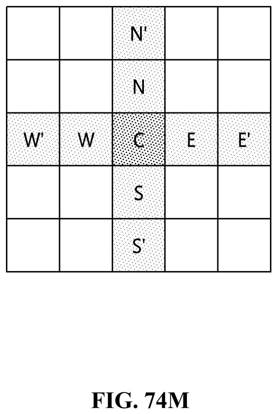

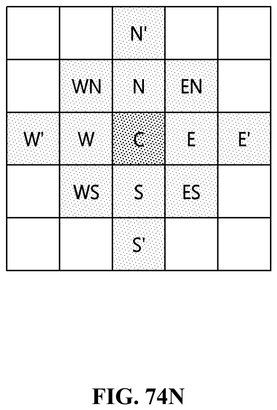

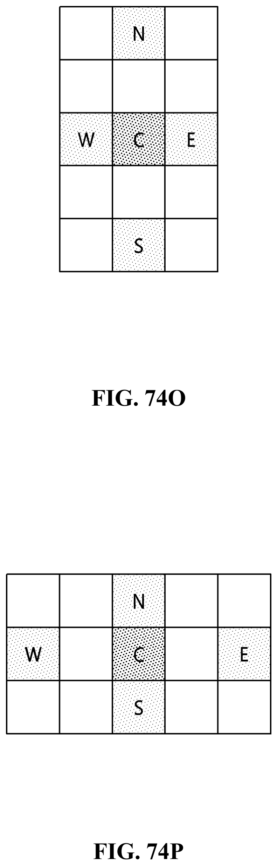

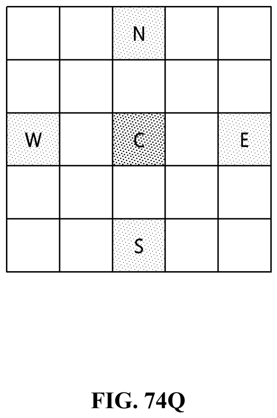

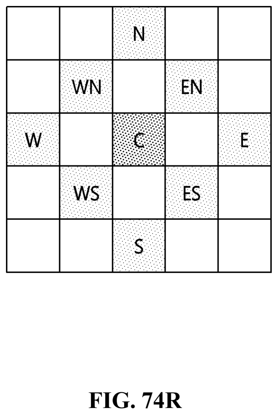

FIGS. 74A to 74R illustrate the shapes of various filters according to an example.

In the filter-based linear model, the shape of a filter may be determined based on the position (x, y) of the luma sample to which each filter is applied and the number of filters to be applied. Here, the position of the sample to which each filter is applied and the number of filters may be values preset by the encoding apparatus 1600 and the decoding apparatus 1700, and may be values signaled from the encoding apparatus 1600 to the decoding apparatus 1700.

As illustrated in FIGS. 74A to 74R, in the filter-based linear model, the shape of a filter may be determined based on the position (x, y) of the luma sample to which each filter is applied and the number of filters to be applied. Here, the position of the sample to which each filter is applied and the number of filters may be determined based on coding information of one or more of the current block and a neighboring block.

In embodiments, the shape of each filter may be configured to have various shapes such as cross, radial, hexagonal, diamond, and triangular patterns.

When the shape of the filter is configured, filter coefficients constituting the filter may be disposed in the filter at specific intervals.

For example, the distances between the filter coefficients included in the filter may be equal to each other.

For example, the distances between the filter coefficients included in the filter may be different from each other.

In order to determine the distance between the filter coefficients included in the filter, at least one of these methods may be selected.

The distances between the filter coefficients may be values preset by the encoding apparatus 1600 and the decoding apparatus 1700, and may be values signaled from the encoding apparatus 1600 to the decoding apparatus 1700.

The form of the filter may be configured not only in a symmetrical shape but also in an asymmetrical shape.

When samples at the positions of filter coefficients included in the filter cannot be referenced, samples that can be referenced around the samples at the positions of the filter coefficients may replace the samples at the positions of the filter coefficients.

A sample spatially adjacent to a sample that cannot be referenced may replace the sample that cannot be referenced. Here, the spatially adjacent sample may be a sample in a reference image.

The shape and the size of the filter may be determined based on the sizes of a neighboring block and/or the current block.

For example, when the size of the neighboring block is smaller than that of the current block, the size of the filter may be reduced. When a sample to which the filter is applied is present outside the adjacent block, the sample may be excluded from filtering.

For example, when the size of a neighboring adjacent block is greater than that of the current block, the size of the filter may be enlarged, and the coefficients included in the filter or the number of samples may also be increased.

For example, as the size of the current block becomes larger, the size of the filter may be enlarged, or the number of filter coefficients may be increased. Also, the interval between the filter coefficients may be further increased.

For example, as the size of the current block becomes larger, the size of the filter may be reduced, or the number of filter coefficients may be decreased. Also, the interval between the filter coefficients may be further decreased.

For example, as the size of the current block becomes smaller, the size of the filter may be enlarged, or the number of filter coefficients may be increased. Also, the interval between the filter coefficients may be further increased.

For example, as the size of the current block becomes smaller, the size of the filter may be reduced, or the number of filter coefficients may be decreased. Also, the interval between the filter coefficients may be further decreased.

The shape and the size of the filter may be determined based on the shapes of a neighboring block and/or the current block. Here, the shape may refer to a partitioning shape.

For example, when the current block or the neighboring block is partitioned and the horizontal size of each partitioned block is greater than the vertical size thereof, the size of the filter may be increased in a horizontal direction. Alternatively, the size of the filter may be increased in a vertical direction.

For example, when the current block or the neighboring block is partitioned and the horizontal size of each partitioned block is less than the vertical size thereof, the size of the filter may be increased in a vertical direction. Alternatively, the size of the filter may be increased in a horizontal direction.

In these cases, when the number of filter coefficients is defined, filter coefficients at a position corresponding to a changed direction may be increased or decreased.

The shape and the size of the filter may be determined based on the prediction mode of a neighboring block and/or the current block.

For example, the shape and size of the filter may be determined based on the direction of an intra-prediction mode.

In this case, the size of the filter is increased or the number of filter coefficients may be increased in the direction of the intra-prediction mode from the position of the current sample. Furthermore, the interval between filters may be adjusted.

Alternatively, the size of the filter is decreased or the number of filter coefficients may be decreased in the direction of the intra-prediction mode from the position of the current sample. Furthermore, the interval between filters may be adjusted.

In embodiment, a filter coefficient may be derived using a sample value at a location which does not correspond to the location of the filter coefficient.

As illustrated in FIG. 73, when a specific filter is given, filter coefficients of the filter may be derived using samples at locations corresponding to the locations of the filter coefficients. Each filter coefficient of the filter may be derived using a sample at a location corresponding to the location of the filter coefficient.

Here, a filter coefficient may be derived using a statistical value that exploits a sample value at a location which does not correspond to the location of the filter coefficient. Here, the sample value may include multiple values.

For example, as shown in the following [Equation 31], a filter coefficient may be derived using a sample derived by an addition that employs a sample at a location different from that of the filter coefficient. A filter coefficient may be derived using a sample derived by the addition of the sample at the location of the filter coefficient and the sample at the location different from that of the filter coefficient.

**[Equation 31]** Sample value at location of filter coefficient N = sample value at location of S + sample value at location of N

[Equation 31]

For example, as shown in the following [Equation 32], a filter coefficient may be derived using a sample derived by a subtraction that employs a sample at a location different from that of the filter coefficient. A filter coefficient may be derived using a sample derived by a subtraction between the sample at the location of the filter coefficient from the sample at the location different from that of the filter coefficient.

**[Equation 32]** Sample value at location of filter coefficient N = sample value at location of S - sample value at location of N

[Equation 32]

For example, as shown in the following [Equation 33], a filter coefficient may be derived using a sample derived by a multiplication that employs the sample at the location different from that of the filter coefficient. A filter coefficient may be derived using a sample derived by the multiplication of the sample at the location of the filter coefficient and the sample at the location different from that of the filter coefficient.

**[Equation 33]** Sample value at location of filter coefficient N = sample value at location of S * sample value at location of N

[Equation 33]

For example, as shown in the following [Equation 34], a filter coefficient may be derived using a sample derived by a division that employs a sample at a location different from that of the filter coefficient. A filter coefficient may be derived using a sample derived by a division between the sample at the location of the filter coefficient and the sample at the location different from that of the filter coefficient.

**[Equation 34]** Sample value at location of filter coefficient N = sample value at location of S/ sample value at location of N

[Equation 34]

For example, as shown in the following [Equation 35] and [Equation 36], a filter coefficient may be derived using a relational expression (or a polynomial) that employs a sample at a location different from that of the filter coefficient. A filter coefficient may be derived using a sample derived by the relational expression (or polynomial) between a sample at the location of the filter coefficient and a sample at the location different from that of the filter coefficient.

**[Equation 35]** Sample value at location of filter coefficient N = a * sample value at location of S + sample value at location of N

[Equation 35]

**[Equation 36]** Sample value at location of filter coefficient N = w * sample value at location of S + (1-w) * sample value at location of N

[Equation 36]

Here, w may be a weight.
Here, each of a and W may be a value preset by the encoding apparatus 1600 and/or the decoding apparatus 1700, and may be a value signaled from the encoding apparatus 1600 to the decoding apparatus 1700.
For example, the filter coefficient may be derived using the average value of sample values at the location of the filter coefficient.

## Configuration of filters or filter sets depending on block size

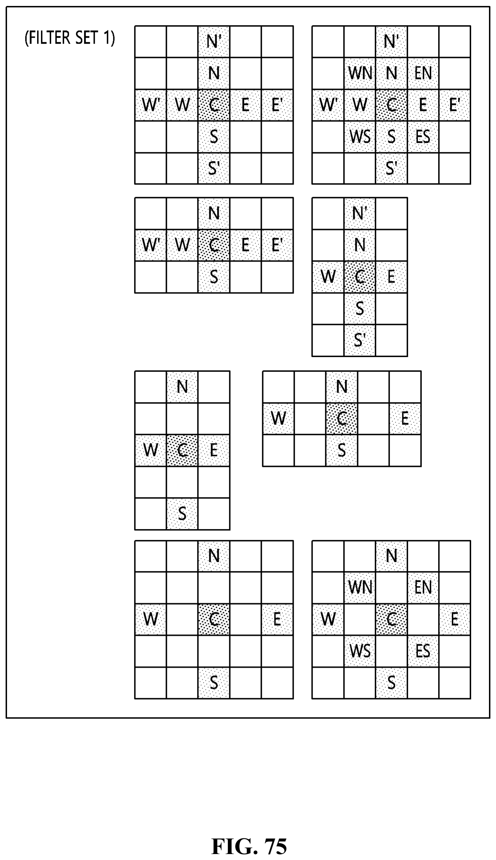

FIG. 75 illustrates filter set 1 according to an example.

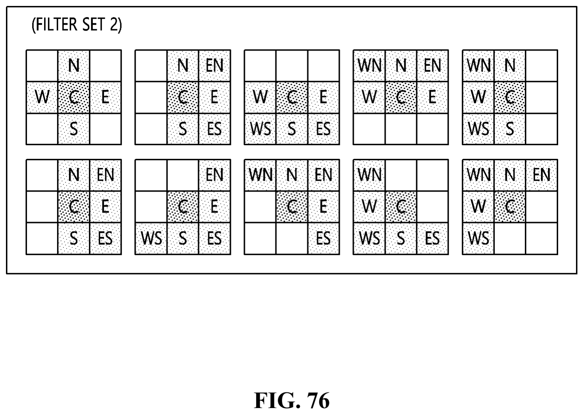

FIG. 76 illustrates filter set 2 according to an example.
A filter set for a block may be selected from among different filter sets depending on the coding parameter of the block.
A filter set for a block may be selected from among different filter sets depending on the size of the block.
For example, filter set 1 may be a filter set used when the width of a block is greater than 16 and the height of the block is greater than 16.
For example, filter set 2 may be a filter set used when the width of a block is less than or equal to 16 and the height of the block is less than or equal to 16.

Each filter set may include multiple filters.

One or more filters may be selected from among multiple filters included in each filter set, and the selected filters may be used.

When one or more filters are selected and used from the filter set, information indicating finally determined filters may be signaled from the encoding apparatus 1600 to the decoding apparatus 1700.

### Configuration of filter sets depending on direction of intra-prediction mode

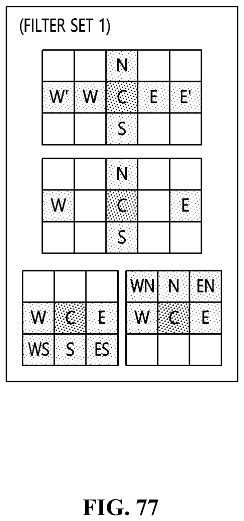

FIG. 77 illustrates filter set 1 according to an example.

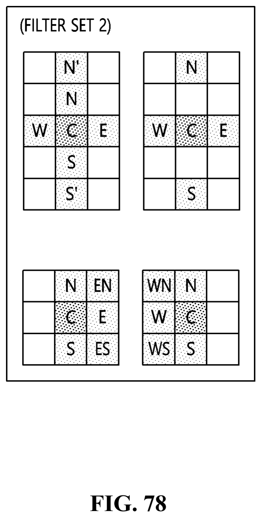

FIG. 78 illustrates filter set 2 according to an example.

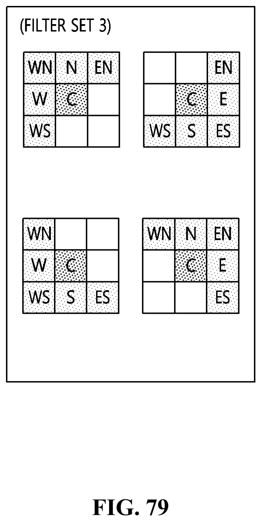

FIG. 79 illustrates filter set 3 according to an example.

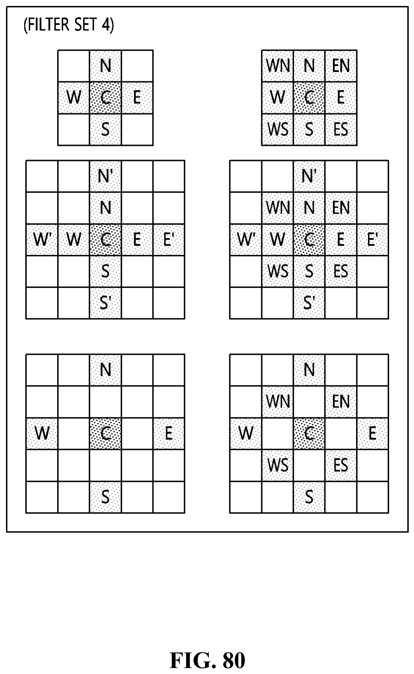

FIG. 80 illustrates filter set 4 according to an example.

A filter set for a block may be selected from among different filter sets depending on the intra-prediction mode. Here, the intra-prediction mode may be the intra-prediction mode of a current block or an adjacent block.

For example, filter set 1 may be selected when the intra-prediction mode is a horizontal mode.

For example, filter set 2 may be selected when the intra-prediction mode is a vertical mode.

For example, filter set 3 may be selected when the intra-prediction mode is a diagonal mode. Here, the diagonal mode may represent the remaining intra-prediction modes among directional intra-prediction modes, excluding the vertical mode and the horizontal mode.

For example, filter set 4 may be selected for the remaining intra-prediction modes. Filter set 4 may be used for the remaining intra-prediction modes other than intra-prediction modes in which one of filter set 1, filter set 2, and filter set 3 is used. Filter set 4 may be used for non-directional intra-prediction modes. Filter set 4 may be used for a DC mode and a planar mode.

Each filter set may include multiple filters.

One or more filters may be selected from among multiple filters included in each filter set, and the selected filters may be used.

When one or more filters are selected and used from the filter set, information indicating finally determined filters may be signaled from the encoding apparatus 1600 to the decoding apparatus 1700.

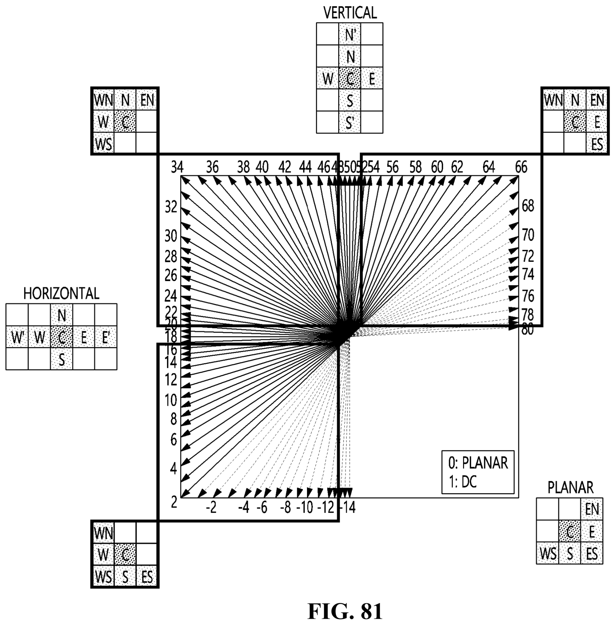

FIG. 81 illustrates the determination of a filter depending on the direction of an intra-prediction mode according to an example.

A filter to be used may be determined depending on the direction of the intra-prediction mode and/or the locations of samples used in the intra-prediction mode.

For example, as illustrated in FIG. 81, a specific filter may be used for a specific intra-prediction mode. A specific filter may be used for a specific range between intra-prediction modes. Here, the specific intra-prediction mode may include a vertical mode (i.e., intra-prediction mode 50), a horizontal mode (i.e., intra-prediction mode 18), and a planar mode (i.e., intra-prediction mode 0). The specific range may include the range of intra-prediction modes directed toward the bottom-left (i.e., the range from intra-prediction mode -14 to intra-prediction mode 17), the range of intra-prediction modes directed toward the top-left (i.e., the range from intra-prediction mode 19 to intra-prediction mode 49), and the range of intra-prediction modes directed toward the top-right (i.e., the range from intra-prediction mode 51 to intra-prediction mode 80).

Here, the "direction of the intra-prediction mode" may correspond to the "locations of samples used for intra-prediction".

### Chroma signal prediction using multiple models

In chroma signal prediction based on a filter-based linear model, chroma signal/sample/block may be derived using the multiple models.

When multiple models are derived, multiple filter-based linear models may be derived based on information such as luma samples at other positions, the statistical values of luma samples, and a defined threshold, as described above in CCLM. In other words, information described as being used in CCLM may also be applied to derivation of multiple models.

In deriving multiple models, a model derived from previously encoded/decoded blocks may be used.

In deriving multiple models, a model derived from a block having a size different from that of the current block may be used.

In deriving multiple models, a model derived from a block at another location in a partitioned block may be used for the block.

In deriving multiple models, a new model may be derived by modifying the coefficient value of a previously derived model.

In deriving multiple models, a new model may be derived using a weighted sum of the coefficient values of previously derived models.

The method for deriving models, described in embodiments, may be used for the derivation of not only multiple models but also a single model for the current block.

In a method for deriving multiple models and deriving a model for the current block according to embodiments, at least one of methods for deriving models used in a "Cross-Component Linear Model (CCLM)" may be used to derive models.

In prediction of a chroma signal based on multiple models, information about a model used to generate the chroma signal/block among multiple models may be signaled. Alternatively, the information about the model may be derived using coding information of the block or the surrounding coding information of the block. The surrounding coding information of the block may refer to the coding information of the surrounding pixels of the block.

The model information may include information about an equation required to derive the chroma signal and information about coefficients and constants included in the equation.

Information about a model used to generate a final chroma prediction signal/sample/block among multiple models may be signaled using a method such as a method of signaling the final model information in CCLM. In an embodiment, description of signaling of the model information of the final model in CCLM may also be applied to signaling of information about the model used to generate the final chroma prediction signal/sample/block.

A model for generating a prediction signal/block/sample having the lowest error cost may be determined to be the final model in the chroma signal prediction process, and information indicating the final model may be signaled.

The error cost of the prediction signal/block/sample generated by the model may be calculated using the same method as a method for calculating error costs in CCLM. In an embodiment, description of calculation of error cost in CCLM may also be applied to calculation of error cost of the prediction signal/block/sample generated by the model.

Reference regions may be separated into region R1 and region R2. Region R1 may be a region used to derive a model. Region R2 may be a region used to generate a chroma prediction signal by applying the derived model and calculate the error cost of a chroma signal, within the reference region.

Multiple models may be derived in R1 region. A chroma prediction sample may be generated using multiple models in region R2. Error cost between the chroma prediction sample and a reconstructed chroma sample may be calculated.

A final model used to generate a final chroma prediction signal/sample/block may be determined based on the calculated error cost.

## Generation of prediction signal based on Convolution Cross-Component Model (CCCM)

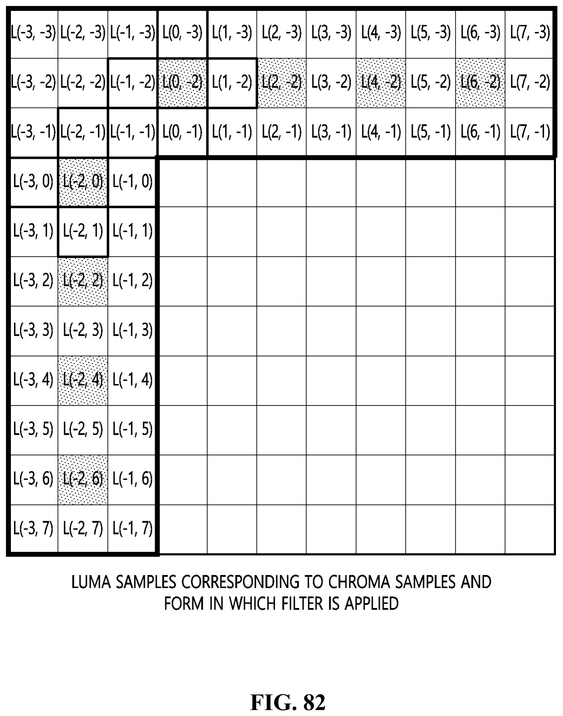

FIG. 82 illustrates a luma sample corresponding to a chroma sample and a form in which a filter is applied according to an example.

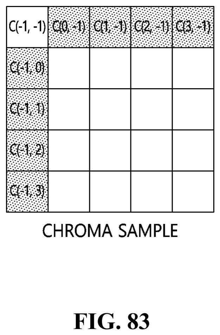

FIG. 83 illustrates a chroma sample according to an example.

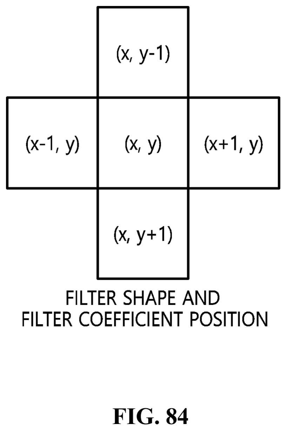

FIG. 84 illustrates filter shapes and the positions of filter coefficients according to an example.

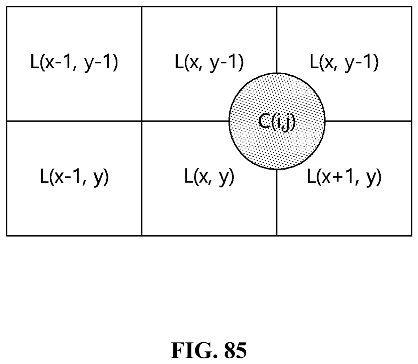

FIG. 85 illustrates the location of a downsampled luma sample and the location of a chroma sample corresponding to the luma sample according to an example.

In FIG. 85, the location of a chroma sample $C(i, j)$ corresponding to a downsampled luma sample $L'(i, j)$ is depicted.

The location of the chroma sample $C(i, j)$ may be determined according to the format of chroma signal sampling.

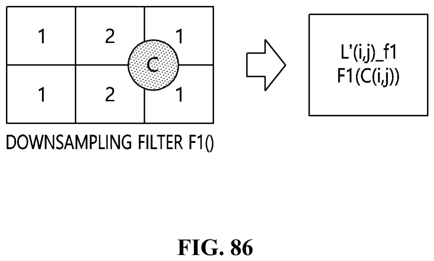

FIG. 86 illustrates a downsampling filter F1() according to an example.

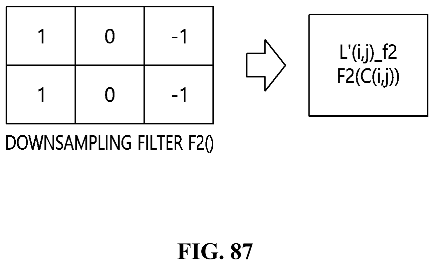

FIG. 87 illustrates a downsampling filter F2() according to an example.

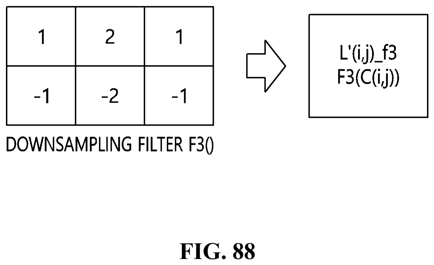

FIG. 88 illustrates a downsampling filter F3() according to an example.

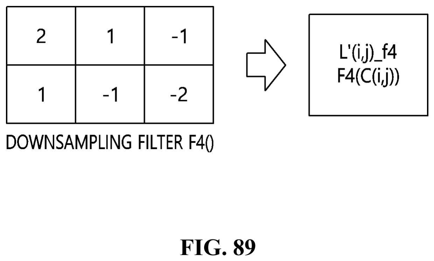

FIG. 89 illustrates a downsampling filter F4() according to an example;

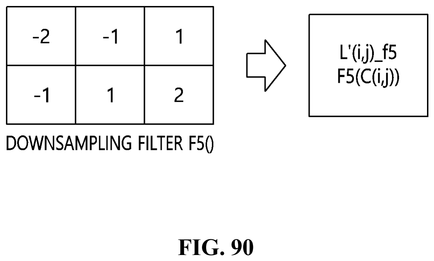

FIG. 90 illustrates a downsampling filter F5() according to an example.

For example, a downsampled luma sample $L'(i, j)$ may be $F1(C(i, j))$.

$L'(i, j)$ may be a downsampled luma sample at a location corresponding to a chroma sample $C(i, j)$. In other words, a downsampling filter may generate $L'(i, j)$ corresponding to the location of the chroma sample $C(i, j)$ using a reconstructed luma sample.

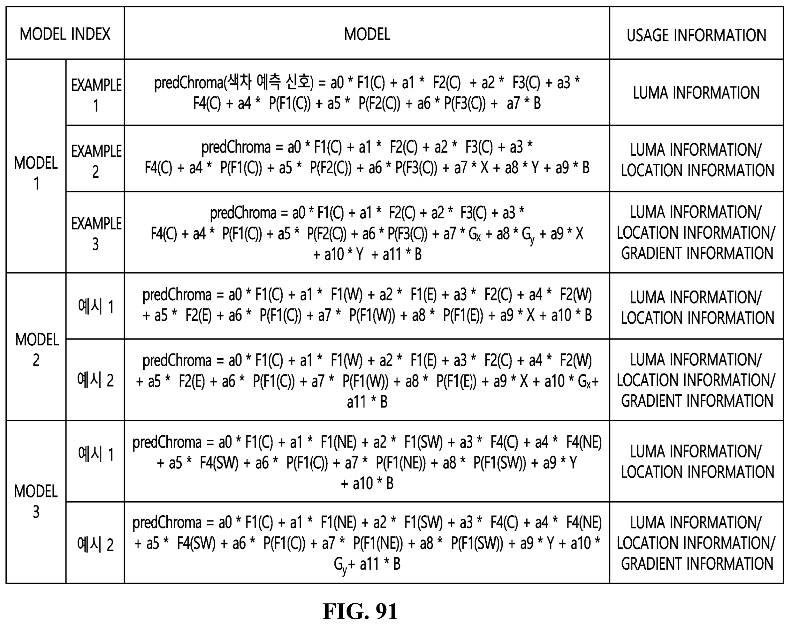

FIG. 91 illustrates models and pieces of information used for the models according to an example.

$a_i$ may denote a filter coefficient (i.e., model parameter). The filter coefficient may be derived by LDL decomposition.

P() may be a nonlinear term. The following [Equation 37] may be applied to P(C).

### [Equation 37]

$$P(C) = (C * C + midVal) >> bitDepth$$

When 10 bits are used as bitDepth, the following [Equation 38] may be applied to P(C).

**[Equation 38]**

$$P = (C * C + 512) >> 10$$

Here, C may denote the value of a downsampled luma sample L' corresponding to the location of the chroma sample.

B may denote a bias term. B may be a scalar offset value between input and output. Generally, when 10 bits are used as bitDepth, B may be set to 512 that is an intermediate value of sample values.

X and Y may represent respective coordinates obtained by moving horizontally by X and vertically by Y from the top-left location of the block. In embodiments, the location of each sample may refer to the coordinates of the sample.

For example, $G_y$ may be set by the following [Equation 39].

**[Equation 39]**

$$G_y = (2N + NW + NE) - (2S + SW + SE)$$

For example, $G_x$ may be set by the following [Equation 40].

**[Equation 40]**

$$G_x = (2W + NW + SW) - (2E + NE + SE)$$

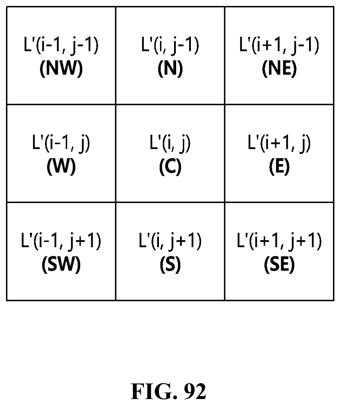

FIG. 92 illustrates downsampled luma sample corresponding to the location of a chroma sample and surrounding samples according to an example.

In FIG. 92, a downsampled luma sample L'(i, j) corresponding to the location of a chroma sample C(i, j) and surrounding samples of the luma sample L'(i, j) are depicted.

**Generation of prediction signal based on convolution-based cross-component model**

Reference is again made to FIGS. 82 to 92.

In chroma signal prediction based on cross-color component relationships, a prediction signal may be generated based on a convolution-based cross-component model.

The convolution-based cross-component model may derive a filter-based linear model, as represented by the following [Equation 41-1], [Equation 41-2], [Equation 42] or [Equation 43] using 1) correlations between surrounding samples of a luma block and surrounding samples of a chroma block or 2) correlations between statistical values such as a maximum value and a minimum value, where the value of a filter coefficient $a_k$ and the value of an offset B may be calculated.

**[Equation 41-1]** $C'(i, j) = \alpha_1 \cdot L_{(x,y)} + \alpha_2 \cdot L_{(x-l,y)} + \alpha_3 \cdot L_{(x+l,y)} + \alpha_4 \cdot L_{(x,y-l)} + \alpha_5 \cdot L_{(x,y+l)} + \alpha_6 \cdot P + \alpha_7 \cdot B$     [Equation 41-1]

**[Equation 41-2]** $C'(i, j) = \alpha_1 \cdot L_{(x,y)} + \alpha_2 \cdot L_{(x-k,y)} + \alpha_3 \cdot L_{(x+k,y)} + \alpha_4 \cdot L_{(x,y-k)} + \alpha_5 \cdot L_{(x,y+k)} + \alpha_6 \cdot P + \alpha_7 \cdot B$     [Equation 41-2]

**[Equation 42]** $C'(i, j) = \alpha_1 \cdot L'_{(i,j)} + \alpha_2 \cdot L'_{(i-l,j)} + \alpha_3 \cdot L'_{(i+l,j)} + \alpha_4 \cdot L'_{(i,j-l)} + \alpha_5 \cdot L'_{(i,j+1)} + \alpha_6 \cdot P + \alpha_7 \cdot B$     [Equation 42]

**[Equation 43]** $predChromaVal = \alpha_1 \cdot C + \alpha_2 \cdot N + \alpha_3 \cdot S + \alpha_4 \cdot E + \alpha_5 \cdot W + \alpha_6 \cdot P + \alpha_7 \cdot B$     [Equation 43]

In embodiments, the offset may be a bias.

A current chroma prediction block may be derived using samples in the derived filter-based linear model and samples in the luma block.

Each of C(i, j) and C' may denote a current chroma prediction block or a sample value in the current chroma prediction block. L'(i, j) may denote a reconstructed luma block/sample corresponding to the location of the current chroma prediction block. L(x, y) may denote a reconstructed luma block/sample at location (x, y). Here, L(x, y) may represent a sample location (x, y) in a luma block that is neither downsampled nor subsampled. Also, as shown in [Equation 41-2], a chroma prediction sample may be derived using samples at location spaced apart from the location (x, y) in the luma block by k.

C, N, S, E and W in [Equation 43] may be defined, as illustrated in FIG. 92.

P may be a nonlinear term. P may be defined by the above-described [Equation 37].

When 10 bits are used as the bitDepth, P may be defined by the above-described [Equation 38].

In [Equation 43], C may denote the value of a downsampled luma sample L' corresponding to the location of the chroma sample.

L'(x, y) may denote a luma sample of a luma block adjusted to have the same size as the chroma block by using subsampling and/or downsampling. L(x, y) may denote the luma sample of a luma block having a size different from that of the chroma block.

Therefore, the location (x, y) of the luma sample L(x, y) corresponding to the chroma sample C'(i, j) and the location (i, j) of the chroma sample may be different from each other.

The filter may be applied, as illustrated in FIGS. 82 to 84.

In deriving model coefficients in [Equation 41-1], [Equation 41-2], [Equation 42] and [Equation 43], the model coefficients may be derived for a U signal and a V signal, respectively.

In deriving model coefficients in [Equation 41-1], [Equation 41-2], [Equation 42] and [Equation 43], the model coefficients applied both to a U signal and a V signal may be derived.

Whether a filter-based linear model is applied may be individually determined for each of the U signal and the V signal. Information indicating whether the model is applied may be encoded/decoded/signaled.

In defining the models in embodiments, as illustrated in FIG. 91, not only the luma pixel (e.g., L and L') but also gradient information between pixels and the location information of the luma pixel may be used.

A cross-component prediction model may be defined differently based on information of a downsampling filter used to generate the downsampled luma sample L'(i, j). In other words, the cross-component prediction model may be defined based on the downsampling filter information.

For example, depending on the type of filter used, the model may be defined to have different numbers of model parameters and different model inputs, and model coefficients may be derived. In other words, depending on the type of filter used, the number of model parameters and the input of each model may be determined, and model coefficients may be derived. The input of the model may include a luma sample, gradient, and a sample location.

Each of 1) whether the derived model, described in embodiments, is applied, 2) information about the model, and 3) information about a downsampling filter used for model derivation may be preset by the encoding apparatus 1600 and/or the decoding apparatus 1700, and may be signaled from the encoding apparatus 1600 to the decoding apparatus 1700.

When one cross-component prediction model is defined, a downsampled luma sample L'(i, j) required for model derivation may be generated using at least one downsampling filter, described in embodiments.

For example, as illustrated in FIG. 90, when a luma sample corresponding to each chroma sample is generated, multiple luma samples may be generated by applying multiple filters to one sample location. Alternatively, a downsampled luma sample corresponding to the location of the chroma sample may be generated by applying different filters depending on the sample location. Here, a cross-component prediction model may be defined using the sample downsampled by at least one filter, as illustrated in FIG. 91, and the model parameters of the model may be derived.

In order to derive the value of a filter coefficient $a_k$ and the value of an offset b, information corresponding to one or more of 1) surrounding samples of a current chroma prediction block, 2) surrounding samples of a luma block corresponding to the location of the current chroma prediction block, and 3) a reference line index of the corresponding luma block may be used. In embodiments, the offset may be a bias.

The reference line may refer to multiple reference lines, described above with reference to FIG. 8. The reference line index may indicate a reference line used for encoding/decoding/prediction/signaling for a block among the multiple reference lines. The reference line may also refer to an adjacent sample line or a surrounding sample line of the block.

Here, when a reference line for deriving the filter coefficient is determined, N or more lines may be used as reference lines. Here, N may be a positive number of 0 or more. N may be a value preset by the encoding apparatus 1600 and the decoding apparatus 1700, and may be a value signaled from the encoding apparatus 1600 to the decoding apparatus 1700.

Statistical values of one or more of N luma samples may be calculated, and one or more representative luma samples may be derived using at least one of the statistical values. The filter coefficient may be derived from the one or more representative luma samples.

In embodiments, statistical values may include the average, maximum value, minimum value, and median value of the samples.

For example, only samples having average values higher than the average value of the samples may be selected from among adjacent samples of the current chroma block, and the selected samples may be used to derive the filter coefficient.

For example, only samples having average values lower than the average value of the samples may be selected from among adjacent samples of the current chroma block, and the selected samples may be used to derive the filter coefficient.

Luma samples for deriving the filter coefficient may be changed. Also, the equation for deriving the chroma prediction sample may also be changed. Information about luma samples for deriving the filter coefficient or information about the equation for deriving the adjacent sample of the current chroma block may be signaled from the encoding apparatus 1600 to the decoding apparatus 1700.

The sample position described in embodiments may be a value preset by the encoding apparatus 1600 and the decoding apparatus 1700, and may be a value signaled from the encoding apparatus 1600 to the decoding apparatus 1700. Alternatively, the sample position described in embodiments may be derived using the coding information of the surrounding samples or the block.

A reference region (or reference line) for deriving filter coefficients and the offset may be selected from a region that can be referenced in the current picture including the current block, and a reference region may be selected from another picture that can be referenced. In other words, the reference region selected from the reference picture may be used.

Here, scaling may be applied to samples in a reference region fetched from another picture, and scaled sample values may be used.

In the convolution-based cross-component model, the shape of a filter may be determined based on the position (x, y) of the luma sample to which each filter is applied and the number of filters to be applied. Here, the position of the sample to which each filter is applied and the number of filters may be values preset by the encoding apparatus 1600 and the decoding apparatus 1700, and may be values signaled from the encoding apparatus 1600 to the decoding apparatus 1700.

In the convolution-based cross-component model, the shape of a filter may be determined based on the position (x, y) of the luma sample to which each filter is applied and the number of filters to be applied. Here, the position of the sample to which each filter is applied and the number of filters may be determined based on coding information of one or more of the current block and a neighboring block.

In embodiments, the shape of each filter may be configured to have various shapes such as cross, radial, hexagonal, diamond, and triangular patterns.

When the shape of the filter is configured, filter coefficients constituting the filter may be disposed in the filter at specific intervals.

For example, the distances between the filter coefficients included in the filter may be equal to each other.

For example, the distances between the filter coefficients included in the filter may be different from each other.

In order to determine the distance between the filter coefficients included in the filter, at least one of these methods may be selected.

The distances between the filter coefficients may be values preset by the encoding apparatus 1600 and the decoding apparatus 1700, and may be values signaled from the encoding apparatus 1600 to the decoding apparatus 1700.

The shape of the filter may be configured not only in a symmetrical shape but also in an asymmetrical shape.

When samples at the positions of filter coefficients included in the filter cannot be referenced, samples that can be referenced around the samples at the positions of the filter coefficients may replace the samples at the positions of the filter coefficients.

A sample spatially adjacent to a sample that cannot be referenced may replace the sample that cannot be referenced. Here, the spatially adjacent sample may be a sample in a reference image.

The shape and the size of each filter may be determined based on the sizes of a neighboring block and/or the current block.

For example, when the size of the neighboring block is smaller than that of the current block, the size of the filter may be reduced. When a sample to which the filter is applied is present outside the adjacent block, the sample may be excluded from filtering.

For example, when the size of a neighboring adjacent block is greater than that of the current block, the size of the filter may be enlarged, and the coefficients included in the filter or the number of samples may also be increased.

For example, as the size of the current block becomes larger, the size of the filter may be enlarged, or the number of filter coefficients may be increased. Also, the interval between the filter coefficients may be further increased.

For example, as the size of the current block becomes larger, the size of the filter may be reduced, or the number of filter coefficients may be decreased. Also, the interval between the filter coefficients may be further decreased.

For example, as the size of the current block becomes smaller, the size of the filter may be enlarged, or the number of filter coefficients may be increased. Further, the interval between the filter coefficients may be further increased.

For example, as the size of the current block becomes smaller, the size of the filter may be further reduced, or the number of filter coefficients may be decreased. Furthermore, the interval between the filter coefficients may be further decreased.

The shape and the size of the filter may be determined based on the shapes of a neighboring block and/or the current block. Here, the shape may refer to a partitioning shape.

For example, when the current block or the neighboring block is partitioned and the horizontal size of each partitioned block is greater than the vertical size thereof, the size of the filter may be increased in a horizontal direction. Alternatively, the size of the filter may be increased in a vertical direction.

For example, when the current block or the neighboring block is partitioned and the horizontal size of each partitioned block is less than the vertical size thereof, the size of the filter may be increased in a vertical direction. Alternatively, the size of the filter may be increased in a horizontal direction.

In these cases, when the number of filter coefficients is defined, filter coefficients at a position corresponding to a changed direction may be increased or decreased.

The shape and the size of the filter may be determined based on the prediction mode of a neighboring block and/or the current block.

For example, the shape and size of the filter may be determined based on the direction of an intra-prediction mode.

In this case, the size of the filter is increased or the number of filter coefficients may be increased in the direction of the intra-prediction mode from the position of the current sample. Furthermore, the interval between filters may be adjusted.

Alternatively, the size of the filter may be decreased or the number of filter coefficients may be decreased in the direction of the intra-prediction mode from the position of the current sample. Furthermore, the interval between filters may be adjusted.

The shape and size of the filter may be determined using at least one of methods for determining the shape and size of the filter in the above-described Filter-based Linear Model (FLM).

In chroma signal prediction based on the convolution-based cross-component model, a chroma signal/sample/-block may be derived using multiple models.

When multiple models are derived, multiple filter-based linear models may be derived based on information such as luma samples at other positions, the statistical values of luma samples, and a defined threshold, as described above in CCLM. In other words, information described as being used in CCLM may also be applied to derivation of multiple models.

When multiple models are derived, a model derived from previously encoded/decoded blocks may be used.

In deriving multiple models, a model derived from a block having a size different from that of the current block may be used.

In deriving multiple models, a model derived from a block at another location in a partitioned block may be used for the block.

In deriving multiple models, a new model may be derived by modifying the coefficient value of a previously derived model.

In deriving multiple models, a new model may be derived using a weighted sum of the coefficient values of previously derived models.

The method for deriving models, described in embodiments, may be used for the derivation of not only multiple models but also a single model for the current block.

In a method for deriving multiple models and deriving a model for the current block according to embodiments, at least one of methods for deriving models used in a "Cross-Component Linear Model (CCLM)" may be used to derive models.

In prediction of a chroma signal based on multiple models, information about a model used to generate the chroma signal/block among multiple models may be signaled. Alternatively, the information about the model may be derived using coding information of the block or the surrounding coding information of the block.

The model information may include information about an equation required to derive the chroma signal and information about coefficients and constants included in the equation.

Information about a model used to generate the final chroma prediction signal/sample/block among multiple models may be signaled using a method such as a method for signaling the final model information in CCLM. In an embodiment, description of signaling of the model information of the final model in CCLM may also be applied to signaling of information about the model used to generate the final chroma prediction signal/sample/block.

A model for generating a prediction signal/block/sample having the lowest error cost may be determined to be the final model in the chroma signal prediction process, and information indicating the final model may be signaled.

The error cost of the prediction signal/block/sample generated by the model may be calculated using the same method as a method for calculating error costs in CCLM. In an embodiment, description of calculation of error cost in CCLM may also be applied to calculation of error cost of the prediction signal/block/sample generated by the model.

Reference regions may be separated into region R1 and region R2. Region R1 may be a region used to derive a model. Region R2 may be a region used to generate a chroma prediction signal by applying the derived model and calculate the error cost of a chroma signal, within the reference region.

Multiple models may be derived in R1 region. A chroma prediction sample may be generated using multiple models in region R2. Error cost between the chroma prediction sample and a reconstructed chroma sample may be calculated.

The final model used to generate the final chroma prediction signal/sample/block may be determined based on the calculated error cost.

## Combination of different models

When a prediction signal/block is generated using a model based on a cross-color component correlation so as to determine a chroma signal prediction method, multiple models may be combined, and a combined model may be used.

In embodiments, a chroma prediction signal/sample/block may be generated using one or more models among a Cross-Component Linear Model (CCLM), a Gradient Linear Model (GLM), a Filter-based Linear Model (FLM), and a Convolution Cross-Component Model (CCCM).

For example, as shown in the following [Equation 44], a combination of CCLM and GLM may be used to generate a chroma prediction signal/sample/block.

### [Equation 44]

$$C'(i, j) = a1 * G(i, j) + a2 * L'(i, j) + b$$

a1 and a2 may be model coefficient values. b may be an offset. L'(i, j) may be a luma sample corresponding to a chroma sample. G(i, j) may be a gradient sample corresponding to the chroma sample.

In embodiments, the offset may be a bias.

A filter and a model for generating a prediction signal may be used as the same concept in a Filter-based Linear Model (FLM) and a convolutional cross-component model.

In determining a chroma signal prediction method based on a cross-component prediction model, when a prediction signal (or a prediction block) is generated using a model based on a correlation between color components, a combination of multiple different models may be used.

When a cross-component prediction model for the current block is derived, information of the cross-component prediction model to be used in the current block may be derived from a previously encoded/decoded block.

Here, model information that has already been calculated in a (previously encoded/decoded) neighboring block or that is stored may be loaded and used for chroma prediction for the current block.

Here, a new model may be derived by modifying the coefficient value of the model derived from the neighboring block.

For example, when a model derived from the neighboring block is CCLM, a new model may be generated by performing modification on the model coefficient a and the bias value b.

a' and b' may be values derived by modifying a and b, respectively.

a' and b' may be derived by adding a specific value v to a and b, as shown in the following [Equation 45].

### [Equation 45]

$$a' = a + v$$

a' and b' may be derived by subtracting a specific value v from a and b, as shown in the following [Equation 46].

### [Equation 46]

$$a' = a - v$$

a' and b' may be derived by multiplying a specific value v by a and b, as shown in the following [Equation 47].

### [Equation 47]

$$a' = a * v$$

a' and b' may be derived by dividing a and b by a specific value v, as shown in the following [Equation 48].

## [Equation 48]

$$a' = a / v$$

The coefficients such as v, t, and s used to derive a' and b' may be values preset by the encoding apparatus 1600 and/or the decoding apparatus 1700, and may be values signaled from the encoding apparatus 1600 to the decoding apparatus 1700.

The range of the value of a' and the range of the value of b' may be specified by W, X, Y and Z, as shown in the following [Equation 49] and [Equation 50].

## [Equation 49]

$$W < a' < X$$

## [Equation 50]

$$Y < b' < Z$$

Here, each of W, X, Y, and Z may be a value preset by the encoding apparatus 1600 and/or the decoding apparatus 1700, and may be a value signaled from the encoding apparatus 1600 to the decoding apparatus 1700.

A new model may be derived by a weighted sum of the coefficient values of models derived from the neighboring block.

After chroma signal prediction for the current block is performed using at least one model derived from the neighboring block, an optimal cross-component prediction model may be determined among one or more models used for prediction. The determined optimal cross-component prediction model may be used as model information of the current block.

The information of the model used for the current block may be signaled from the encoding apparatus 1600 to the decoding apparatus 1700. Here, the model information may include information indicating a model index, a parameter, and a block from which the model is derived. Information indicating the block may include the location of the block.

### Determination of information for deriving cross-component prediction model

Hereinafter, determination of information for deriving a cross-component prediction model at step 3920 will be described. The information required to derive the cross-component prediction model may include reference regions and representative values.

In order to determine reference regions and representative values in CCLM and GLM, the values of a and b in Equation 7 may be derived.

In order to derive the values of a and b, information about one or more of 1) surrounding samples of the current chroma prediction block, 2) surrounding samples of a luma block corresponding to the position of the current chroma prediction block, and 3) a reference line index of the corresponding luma block may be used.

Here, at least one of a and b may be determined based on at least one of coding parameters of a luma block.

Further, at least one of a and b may be determined based on at least one of coding parameters of a chroma block.

Surrounding pixels of the luma block corresponding to the surrounding pixels of the chroma block may include a luma left surrounding sample (= pLeftDsY) and a luma top surrounding sample (= pTopDsY). pLeftDsY) may be a surrounding sample located to the left of the luma block. pTopDsY may be a surrounding sample located above the luma block.

The values of a and b may be derived using the values of surrounding samples of the chroma block and the values of surrounding samples of a luma block corresponding to the position of the current chroma prediction block.

In other words, in order to derive the values of a and b, the surrounding sample of the chroma prediction block and the surrounding sample of a luma prediction block may be referenced at the position of the current block.

In this case, when the gradient-based linear model is used, a representative value determination procedure may be performed by replacing a luma sample or a luma sample value used to determine the representative value with a derived gradient sample.

One or more of pLeftDsY and pTopDsY may be referenced. Two or more representative values may be set from the referenced pLeftDsY and pTopDsY, and the values of a and b may be derived using the set representative values.

In embodiments, the representative values may include statistical values such as a minimum value, a maximum value, a median value, and an average.

For example, the representative values may include a first representative value, a second representative value, a third representative value, and a fourth representative value.

LMAX may denote the first representative value. CMAX may denote the second representative value. LMIN may denote the third representative value. CMIN may denote the fourth representative value.

In order to derive at least one of the values of a and b, at least one of pLeftDsY and pTopDsY may be determined based on at least one of the pieces of coding information of the luma block.

In order to derive at least one of the values of a and b, at least one of pLeftDsY and pTopDsY may be determined based on at least one of the pieces of coding information of the chroma block.

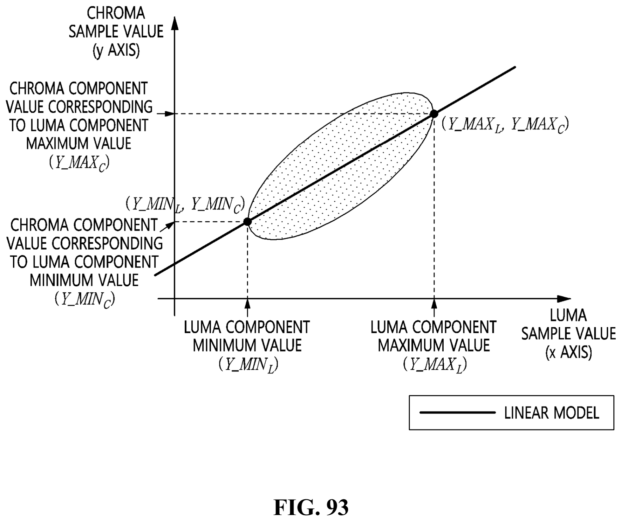

FIG. 93 is a first graph illustrating values used to set a representative value according to an example.

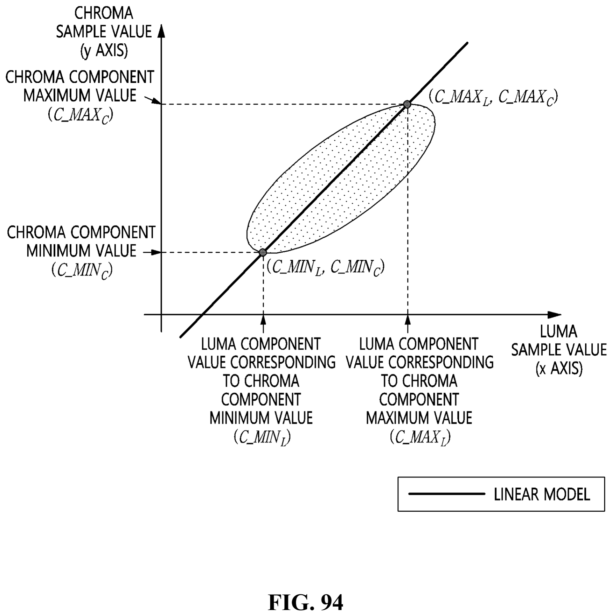

FIG. 94 is a second graph illustrating values used to set a representative value according to an example.

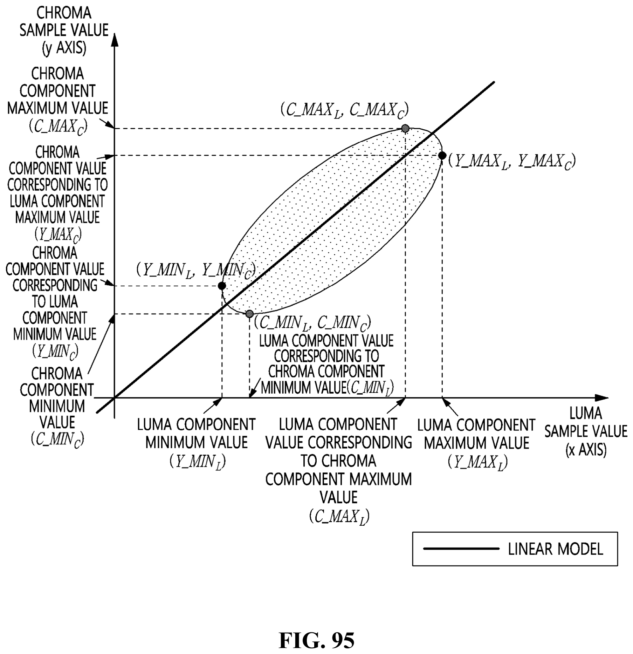

FIG. 95 is a third graph illustrating values used to set a representative value according to an example.

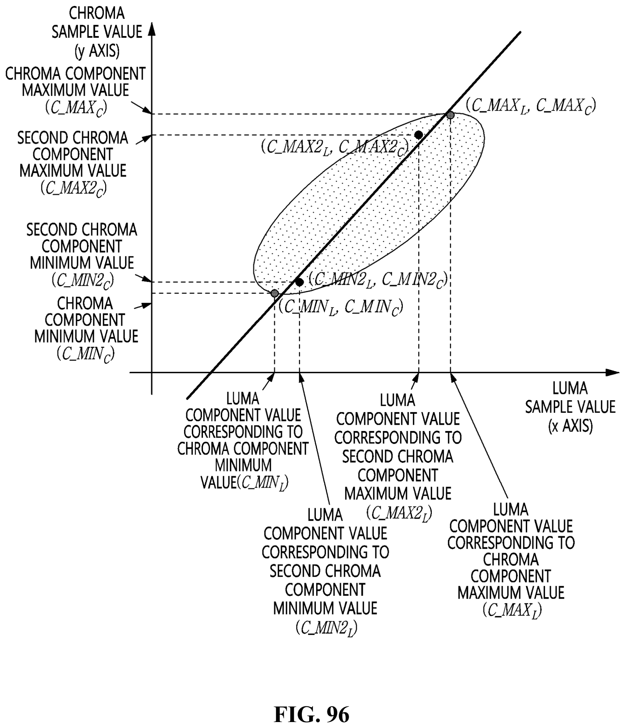

FIG. 96 is a fourth graph illustrating values used to set a representative value according to an example.

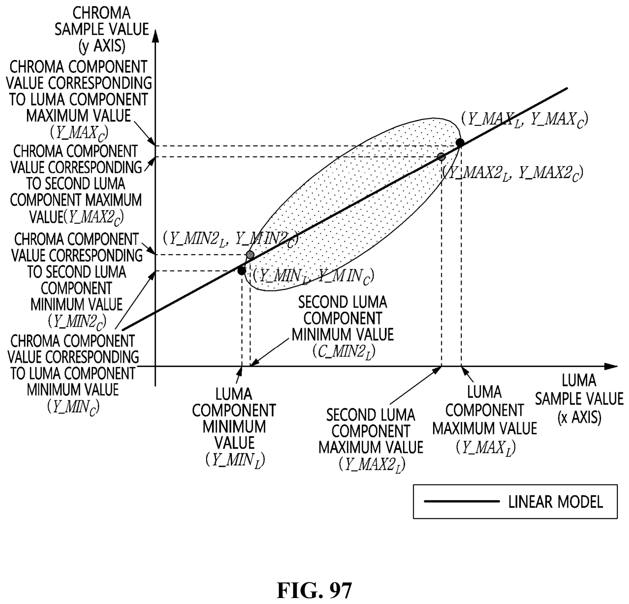

FIG. 97 is a fifth graph illustrating values used to set a representative value according to an example.

In FIGS. 93 to 96, at least one sample of pLeftDsY and pTopDsY may be referenced, and the sample value of the sample may be depicted on an x axis and a y axis. The x axis may denote a luma sample value. The y axis may denote a chroma sample value.

When two or more of the sample values indicated on the x axis and the y axis may be selected, and representative values may be set using the selected sample values.

Alternatively, one of the sample values indicated on the x axis and the y axis may be selected, and at least one remaining sample value for setting the representative value may be selected using a specific angle.

The specific angle may be determined based on one or more of the coding information of the luma block and the coding information of the chroma block.

**First embodiment for setting representative value**

In an embodiment, as shown in FIG. 93, representative values may be selected based on the sample values on an X axis, which are luma component values. In other words, the representative values may be selected depending on the x axis sample values.

The representative values may include a first representative value, a second representative value, a third representative value, and a fourth representative value.

$Y\_MAX_L$ may denote the first representative value. $Y\_MAX_C$ may denote the second representative value.

$Y\_MIN_L$ may denote the third representative value. $Y\_MIN_C$ may denote the fourth representative value.

The values of a and b may be derived using at least one of the obtained N representative values. Here, the number of representative values N may be a positive integer. Alternatively, N may be 2 or more. Alternatively, N may be 4.

Among the representative values, the first representative value and the second representative value may be represented by the following [Equation 51].

**[Equation 51]**

$$(LMAX, CMAX) = (Y\_MAX_L, Y\_MAX_C)$$

The third representative value and the fourth representative value may be represented by the following [Equation 52].

**[Equation 52]**

$$\text{Represented by } (LMIN, CMIN) = (Y\_MIN_L, Y\_MIN_C).$$

$Y\_MAX_L$ may denote a maximum value of the luma component. $Y\_MAX_C$ may denote a chroma component value corresponding to the maximum value of the luma component.

$Y\_MIN_L$ may denote the minimum value of the luma component. $Y\_MIN_C$ may denote a chroma component value corresponding to the minimum value of the luma component.

**Second embodiment for setting representative value**

In an embodiment, as shown in FIG. 94, representative values may be selected based on the sample value of a y axis, which is a chroma component value. In other words, the representative values may be selected depending on the y axis sample value.

The representative values may include a first representative value, a second representative value, a third representative value, and a fourth representative value.

C_MAXL may denote the first representative value. C_MAX$_C$ may denote the second representative value.

C_MIN$_L$ may denote the third representative value. C_MIN$_C$ may denote the fourth representative value.

The values of a and b may be derived using at least one of the obtained N representative values. Here, the number of representative values N may be a positive integer. Alternatively, N may be 2 or more. Alternatively, N may be 4.

Among the representative values, the first representative value and the second representative value may be represented by the following [Equation 53].

## [Equation 53]

$$(LMAX, CMAX) = (C\_MAXL, C\_MAX_C)$$

The third representative value and the fourth representative value may be represented by the following [Equation 54].

## [Equation 54]

$$\text{Represented by } (LMIN, CMIN) = (C\_MIN_L, C\_MIN_C).$$

C_MAXL may denote a luma component value corresponding to the maximum value of the chroma component. C_MAX$_C$ may denote the maximum value of the luma component.

C_MIN$_L$ may denote a luma component value corresponding to the minimum value of the chroma component. C_MIN$_C$ may denote the minimum value of the luma component.

### Third embodiment for setting representative value

In an embodiment, as shown in FIG. 95, representative values may be selected based on the sample values on the X axis, which are luma component values. In other words, the representative values may be selected depending on the x axis sample values.

Further, representative values may be selected based on sample values on the y axis, which are chroma component values. In other words, the representative values may be selected depending on the y axis sample values.

The representative values may include a first representative value, a second representative value, a third representative value, and a fourth representative value.

The average value or weighted sum of a luma component value (= C_MAX$_L$) corresponding to a chroma component maximum value and a luma component maximum value (Y_MAX$_L$) may be derived as the first representative value. The sum of coefficients in the weighted sum may be 1.

Also, the average value or weighted sum of a chroma component maximum value (C_MAX$_C$) and a chroma component value (Y_MAX$_C$) corresponding to a luma component maximum value may be derived as the second representative value. The sum of coefficients in the weighted sum may be 1.

The average value or weighted sum of a luma component minimum value (Y_MIN$_L$) and a luma component value (C_MIN$_L$) corresponding to a chroma component minimum value may be derived as the third representative value. The sum of coefficients in the weighted sum may be 1.

The average value or weighted sum of a chroma component value (Y_MIN$_C$) corresponding to a luma component minimum value and a chroma component minimum value (C_MIN$_C$) may be derived as the fourth representative value. The sum of coefficients in the weighted sum may be 1.

For example, two representative values may be derived by the following [Equation 55] to [Equation 58].

## [Equation 55]

$$xMAX = (j * C\_MAX_L + k * Y\_MAX_L) >> (Log_2(j + k))$$

## [Equation 56]

$$yMAX = (j * C\_MAX_C + k * Y\_MAX_C) >> (Log_2(j + k))$$

## [Equation 57]

$$xMIN = (j * C\_MIN_L + k * Y\_MIN_L) >> (Log_2(j + k))$$

**[Equation 58]**

$$yMIN = (j * C\_MIN_C + k * Y\_MIN_C) >> (Log_2(j + k))$$

The values of a and b may be derived using at least one of the derived N representative values. Here, the number of representative values N may be a positive integer. Alternatively, N may be 2 or more. Alternatively, N may be 4.

Here, among the representative values, the first representative value(= LMAX) and the second representative value (= CMAX) may be represented by the following [Equation 59].

**[Equation 59]**

$$(LMAX, CMAX) = (xMAX, yMAX)$$

The third representative value (= LMIN) and the fourth representative value (= CMIN) may be represented by the following [Equation 60].

**[Equation 60]**

$$(LMIN, CMIN) = (xMIN, yMIN)$$

[Equation 55] and [Equation 56] may represent the first representative value and the second representative value.

[Equation 57] and [Equation 58] may represent the first representative value and the second representative value.

j and k may represent coefficients. Each of j and k may be a specific positive integer.

In [Equation 55] to [Equation 59], ">>" may be used to normalize the coefficients j and k. For example, when the average value is used, each of j and k may be 1.

At least one of j and k values may be determined based on at least one of coding parameters of a luma block.

At least one of j and k values may be determined based on at least one of coding parameters of a chroma block.

The representative values may refer to statistical values.

### Fourth embodiment for setting representative value

In an embodiment, as shown in FIG. 96, representative values may be selected based on sample values on a y axis, which are chroma component values. In other words, the representative values may be selected depending on the y axis sample values.

The average value or weighted sum of a luma component value (= C_MAXL) corresponding to a chroma component maximum value and a luma component value (= $C\_MAX2_L$) corresponding to a second chroma component maximum value may be derived as the first representative value (= LMAX). The sum of coefficients in the weighted sum may be 1.

The first representative value may refer to the x axis value of the maximum value.

Also, the average value or weighted sum of the chroma component maximum value (= $C\_MAX_C$) and the second chroma component maximum value (=C_MAX2C) may be derived as the second representative value (= CMAX). The sum of coefficients in the weighted sum may be 1.

The second representative value may refer to the y axis value of the maximum value.

The average value or weighted sum of a luma component value (= $C\_MIN_L$) corresponding to a chroma component minimum value and a luma component value (= $C\_MIN2_L$) corresponding to a second chroma component minimum value may be derived as the third representative value (= LMIN). The sum of coefficients in the weighted sum may be 1.

The third representative value may refer to the x axis value of the minimum value.

Also, the average value or weighted sum of the chroma component minimum value (= $C\_MIN_C$) and the second chroma component maximum value (C_MIN2$_C$) may be derived as the fourth representative value (= CMIN). The sum of coefficients in the weighted sum may be 1.

The fourth representative value may refer to the y axis value of the maximum value.

The values of a and b may be derived using at least one of the selected N representative values. Here, the number of representative values N may be a positive integer. Alternatively, N may be 2 or more. Alternatively, N may be 4.

**Fifth embodiment for setting representative value**

In an embodiment, as shown in FIG. 96, representative values may be selected based on sample values on a y axis, which are chroma component values. In other words, the representative values may be selected depending on the y axis sample values.

At least one of a luma component value (= C_MAXL) corresponding to a chroma component maximum value and a luma component value (C_MAX2$_L$) corresponding to a second chroma component maximum value may be selected. The first representative value (= LMAX) may be derived using the selected value.

The first representative value may refer to the x axis value of the maximum value.

At least one of the chroma component maximum value (C_MAX$_C$) and the second chroma component maximum value (C_MAX2C) may be selected. The second representative value (= CMAX) may be derived using the selected value.

The second representative value may refer to the y axis value of the maximum value.

At least one of a luma component value (= C_MIN$_L$) corresponding to a chroma component minimum value and a luma component value (C_MIN2$_L$) corresponding to a second chroma component minimum value may be selected. The third representative value (= LMIN) may be derived using the selected value.

The third representative value may refer to the x axis value of the minimum value.

At least one of the chroma component minimum value (= C_MIN$_C$) and the second chroma component maximum value (= C_MIN2$_C$) may be selected. The fourth representative value (= CMIN) may be derived using the selected value.

The fourth representative value may refer to the y axis value of the maximum value.

The values of a and b may be derived using at least one of the selected N representative values. Here, the number of representative values N may be a positive integer. Alternatively, N may be 2 or more. Alternatively, N may be 4.

**Sixth embodiment for setting representative value**

In an embodiment, as shown in FIG. 97, representative values may be selected based on the sample values on the X axis, which are luma component values. In other words, the representative values may be selected depending on the x axis sample values.

Also, the average value or weighted sum of the luma component maximum value (= Y_MAX$_L$) and the second luma component maximum value (= C_MAX2$_L$) may be derived as the first representative value (= LMAX). The sum of coefficients in the weighted sum may be 1.

The first representative value may refer to the x axis value of the maximum value.

The average value or weighted sum of a chroma component value (Y_MAX$_C$) corresponding to a luma component maximum value and a chroma component value (Y_MAX2C) corresponding to the second luma component maximum value may be derived as the second representative value (= CMAX). The sum of coefficients in the weighted sum may be 1.

The second representative value may refer to the y axis value of the maximum value.

Also, the average value or weighted sum of the luma component minimum value (Y_MIN$_L$) and the second luma component minimum value (Y_MIN2$_L$) may be derived as the third representative value (= LMIN). The sum of coefficients in the weighted sum may be 1.

The third representative value may refer to the x axis value of the minimum value.

The average value or weighted sum of a chroma component value (=Y_MIN$_C$) corresponding to the luma component minimum value and a chroma component value (= Y_MIN2$_C$) corresponding to the second luma component minimum value may be derived as the fourth representative value (= CMIN). The sum of coefficients in the weighted sum may be 1. Here, the fourth representative value may refer to the y axis value of the maximum value. Here, the fourth representative

The fourth representative value may refer to the y axis value of the maximum value.

The values of a and b may be derived using at least one of the selected N representative values. Here, the number of representative values N may be a positive integer. Alternatively, N may be 2 or more. Alternatively, N may be 4.

**Seventh embodiment for setting representative value**

In an embodiment, as shown in FIG. 97, representative values may be selected based on the sample values on the X axis, which are luma component values. In other words, the representative values may be selected depending on the y axis sample values.

At least one of a luma component maximum value (= Y_MAX$_L$) and a second luma component maximum value (= Y_MAX2$_L$) may be selected. The selected value may be used as the first representative value (= LMAX).

The first representative value may refer to the x axis value of the maximum value.

At least one of a chroma component value (Y_MAX$_C$) corresponding to the luma component maximum value and a chroma component value (Y_MAX2C) corresponding to a second luma component maximum value may be selected. The selected value may be used as the second representative value (CMAX).

Here, the second representative value may refer to the y axis value of the maximum value.

At least one of a luma component minimum value (= $Y\_MIN_L$) and a second luma component minimum value (= $Y\_MIN2_L$) may be selected. The selected value may be used as the third representative value (= LMIN).

The third representative value may refer to the x axis value of the minimum value.

At least one of a chroma component value (= $Y\_MIN_C$) corresponding to the luma component minimum value and a chroma component value (= $Y\_MIN2_C$) corresponding to the second luma component minimum value may be selected. The selected value may be used as the fourth representative value (= CMIN).

The fourth representative value may refer to the y axis value of the minimum value.

The values of a and b may be derived using at least one of the selected N representative values. Here, the number of representative values N may be a positive integer. Alternatively, N may be 2 or more. Alternatively, N may be 4.

Here, at least one of the representative values of the luma component and the representative values of the chroma component may be determined based on at least one of pieces of coding information of the luma block.

Further, at least one of the representative values of the luma component and the representative values of the chroma component may be determined based on at least one of pieces of coding information of the chroma block.

The representative values may refer to statistical values.

## Determination of information used to derive representative value

When representative values are determined in CCLM, GLM, FLM and CCM, information required to determine the representative values may be determined using coding information.

The information required to determine the representative values may include information about a reference line used to determine the reference values and information about the number of luma samples (or sample values).

In embodiments, the representative value may refer to samples in a reference region used to derive a model, derive a model coefficient, or derive a filter coefficient.

This information may be determined in consideration of a CTU boundary, a Virtual Pipeline Data Unit (VPDU) boundary, etc.

For example, some sides of the block may be adjacent to the CTU boundary or VPDU boundary. The boundary side of the block may be a side adjacent to the CTU boundary or the VPDU boundary. The non-boundary side of the block may not be a side adjacent to the CTU boundary or the VPDU boundary.

Here, the number of reference lines and the number of reference samples, referenced to derive representative values in the region adjacent to the boundary side of the block, may be different from the number of reference lines and the number of reference samples referenced to derive representative values in a region adjacent to a non-boundary side.

For example, the number of reference lines and the number of reference samples, referenced to derive representative values in the region adjacent to the boundary side of the block may be set smaller than the number of reference lines and the number of reference samples referenced to derive representative values in the region adjacent to the -boundary side.

Further, the number of reference lines and the number of reference samples, referenced to derive representative values in the region adjacent to the boundary side may be fixed at N.

N may be a value of 0 or more. N may be a value preset by the encoding apparatus 1600 and the decoding apparatus 1700, and may be a value signaled from the encoding apparatus 1600 to the decoding apparatus 1700.

## Determination of reference lines and reference samples depending on attributes of block

The number of reference lines and the number of reference samples used to derive representative values may be determined depending on the attributes of a neighboring block and/or the current block.

The number of reference lines and the number of reference samples used to derive representative values may be determined depending on the sizes of the neighboring block and/or the current block.

For example, when the size of the neighboring block is smaller than that of the current block, the number of reference lines and the number of reference samples used to derive representative values of a filter in a reference region including a side contacting the neighboring block may be reduced.

For example, when the size of a neighboring adjacent block is smaller than that of the current block, the number of reference lines and the number of reference samples used to derive representative values of the filter in the reference region including the side contacting the neighboring block may be increased.

For example, as the size of the current block becomes smaller, the number of reference lines and the number of reference samples used to derive the representative values of the filter in the reference region may be decreased.

For example, as the size of the current block becomes larger, the number of reference lines and the number of reference samples used to derive the representative values of the filter in the reference region including a side contacting the neighboring block may be increased.

Information indicating whether a changed reference line and/or a changed reference sample are used may be signaled from the encoding apparatus 1600 to the decoding apparatus 1700.

The number of changed reference lines and/or the number of changed reference samples may be values preset by the encoding apparatus 1600 and/or the decoding apparatus 1700, and may be values signaled from the encoding apparatus 1600 to the decoding apparatus 1700.

**Determination of reference lines and reference samples depending on partitioning shape of block**

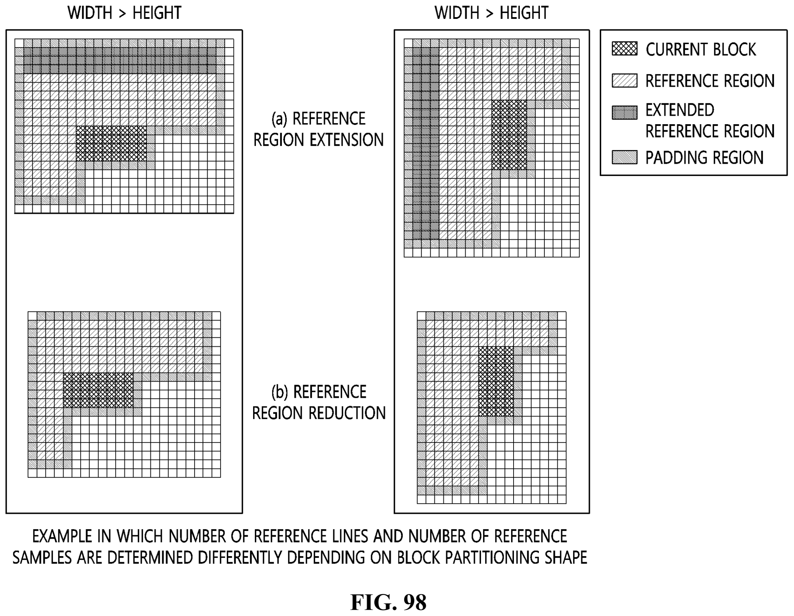

FIG. 98 illustrates the determination of the number of reference lines and the number of reference samples depending on the partitioning shape of a block according to an example.

The number of reference lines and the number of reference samples used to derive representative values may be determined differently depending on the shapes of a neighboring block and/or a current block. The shape of the block may include the partitioning shape of the block.

For example, when the current block or neighboring block is partitioned, and the horizontal size of a partitioned block is greater than the vertical size thereof, the number of reference lines and the number of reference samples used to derive representative values of the filter in a reference region including a side contacting the horizontal side of the partitioned block may be further increased.

For example, when the current block or neighboring block is partitioned, and the horizontal size of a partitioned block is greater than the vertical size thereof, the number of reference lines and the number of reference samples used to derive representative values of the filter in a reference region including a side contacting the vertical side of the partitioned block may be further increased.

For example, when the current block or neighboring block is partitioned, and the horizontal size of a partitioned block is greater than the vertical size thereof, the number of reference lines and the number of reference samples used to derive representative values of the filter in a reference region including a side contacting the horizontal side of the partitioned block may be further decreased.

For example, when the current block or neighboring block is partitioned, and the horizontal size of a partitioned block is greater than the vertical size thereof, the number of reference lines and the number of reference samples used to derive representative values of the filter in a reference region including a side contacting the vertical side of the partitioned block may be further decreased.

Information indicating whether changed reference lines and/or changed reference samples are used may be signaled from the encoding apparatus 1600 to the decoding apparatus 1700.

The number of changed reference lines and/or the number of changed reference samples may be values preset by the encoding apparatus 1600 and/or the decoding apparatus 1700, and may be values signaled from the encoding apparatus 1600 to the decoding apparatus 1700.

**Determination of reference lines and reference samples depending on prediction mode**

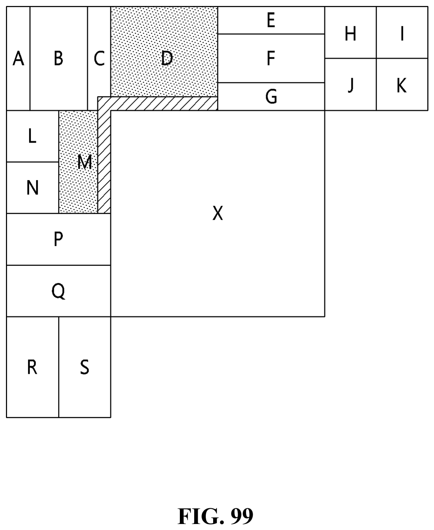

FIG. 99 illustrates a current block and neighboring blocks of the current block according to an example.

In FIG. 99, it is illustrated that intra-prediction has been used only in block D and block M among the neighboring blocks of the current block.

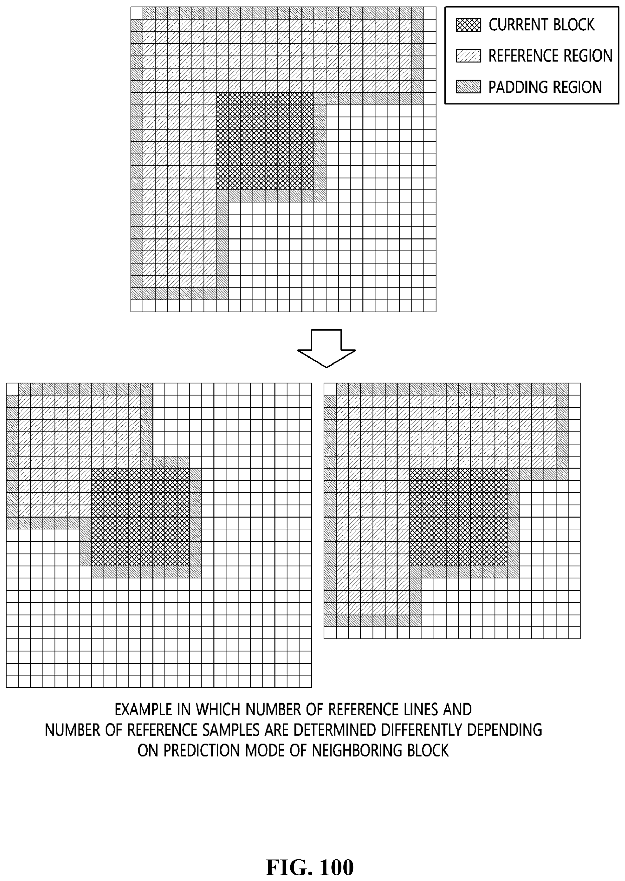

FIG. 100 illustrates a current block and a reference region for the current block according to an example.

In an embodiment, the number of reference lines and/or the number of reference samples may be determined depending on the prediction mode of the neighboring block of the current block.

In an embodiment, a reference region may be constructed using only samples included in blocks in which intra-prediction is used among the neighboring blocks of the current block.

In an embodiment, a region may be constructed using only samples included in blocks in which intra-prediction is used among the neighboring blocks of the current block, and a reference region may be configured by extending the configured region. Here, the region may be extended by the width and/or height of the current block.

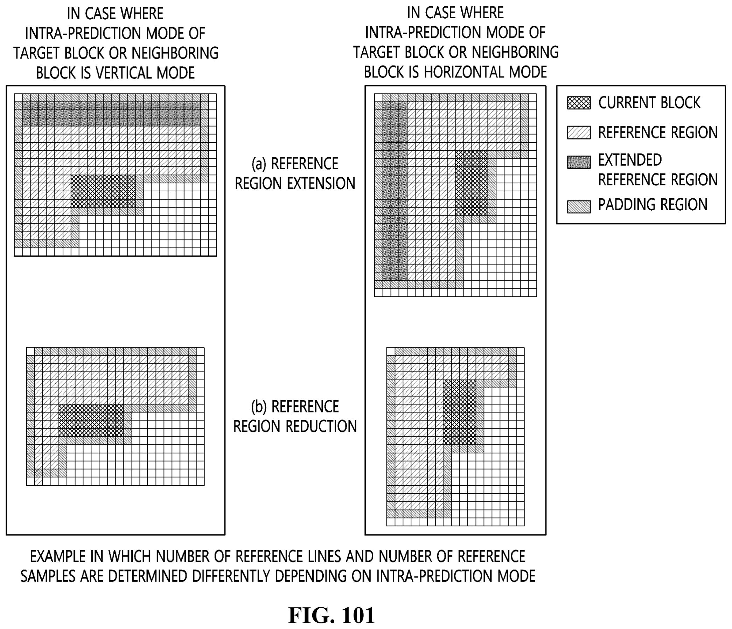

FIG. 101 illustrates the determination of the number of reference lines and the number of reference samples depending on the intra-prediction mode according to an example.

In an embodiment, the number of reference lines and/or the number of reference samples may be changed depending on the intra-prediction mode.

On the left side of FIG. 101, regions in the case where the intra-prediction mode of a current block or a neighboring block is a vertical mode are illustrated.

On the left side of FIG. 101, regions in the case where the intra-prediction mode of a current block or a neighboring block is a horizontal mode are illustrated.

In the upper side of FIG. 101, regions in the case where the reference region is extended are illustrated.

In the lower side of FIG. 101, regions in the case where the reference region is reduced are illustrated.

As illustrated in FIGS. 99 to 101, the number of reference lines and/or the number of reference samples, which are used to derive representative values, may be determined differently depending on the prediction mode of the neighboring block and/or the current block.

For example, the number of reference lines and/or the number of reference samples may be determined differently depending on the direction of the intra-prediction mode.

For example, when the intra-prediction mode is the vertical mode, the number of reference lines and/or the number of reference samples above the current block may be further increased.

For example, when the intra-prediction mode is the vertical mode, the number of reference lines and/or the number of reference samples to the left of the current block may be further decreased.

For example, when the intra-prediction mode is the horizontal mode, the number of reference lines and/or the number of reference samples above the current block may be further decreased.

For example, when the intra-prediction mode is the horizontal mode, the number of reference lines and/or the number of reference samples to the left of the current block may be further decreased.

Information indicating whether changed reference lines and/or changed reference samples are used may be signaled from the encoding apparatus 1600 to the decoding apparatus 1700.

The number of changed reference lines and/or the number of changed reference samples may be values preset by the encoding apparatus 1600 and/or the decoding apparatus 1700, and may be values signaled from the encoding apparatus 1600 to the decoding apparatus 1700.

For example, when a specific neighboring block of the current block is encoded/decoded in an inter-prediction mode, samples included in the specific neighboring block may be excluded from reference samples.

For example, when the specific neighboring block of the current block is encoded/decoded in a prediction mode other than an intra-prediction mode, as in the case of the inter-prediction mode, samples included in the specific neighboring block may be excluded from reference samples.

### Inverse-embodiment for determination of reference lines and/or **reference samples described in embodiments**

In embodiments, the change in the number of reference lines and/or the number of reference samples, described in embodiments, may be applied in a manner opposite to that described in each embodiment.

For example, in an embodiment where the number of reference lines and/or the number of reference samples is described as increasing, or under the conditions of such an embodiment, the number of reference lines and/or the number of reference samples may instead be decreased.

For example, in an embodiment where the number of reference lines and/or the number of reference samples are described as decreasing, or under the conditions of such an embodiment, the number of reference lines and/or the number of reference samples may instead be increased.

### Determination of reference lines and/or **reference samples including area detected by matching method**

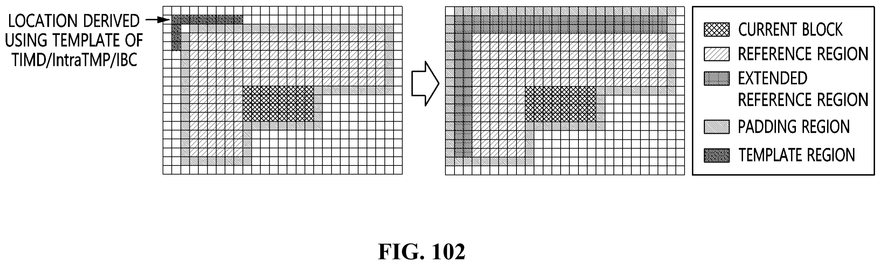

FIG. 102 illustrates the change in a reference region to include a region detected by a matching method according to an example.

Reference lines and reference samples may be determined based on a matching method.

In embodiments, the matching method may include Template-based Intra Mode Derivation (TIMD), Intra Template Matching (IntraTMP), and Intra Block Copy (IBC). For example, the matching method may refer to a method for deriving motion information of the current block. Here, the motion information may be a motion vector or a block vector that indicates a block matching the current block or a template used for prediction for the current block.

In embodiments, the block vector may be the block vector or the motion vector of a col-block. Alternatively, the block vector may be the block vector of IBC. For example, the matching method may refer to a method for deriving a block or a template matching the current block. The detected area may be the matching block or template.

A reference region for the current block may be adjusted such that a location derived by the matching method is included in the reference region. The location derived by the matching method may be the location of an area derived by the matching method or a location indicated by motion information derived by the matching method.

In this case, the location of the neighboring block or the location of the reference region may be adjusted so as to derive a model parameter from the current block using the derived motion vector or the derived block vector, or allow the current block to inherit the derived motion vector or the derived block vector. After adjustment, a merge list for CCP merge may be constructed using the model parameter derived from the reference region, the reference block or the neighboring block.

As illustrated in FIG. 102, the number of reference lines and/or the number of reference samples may be increased so that a template region detected by the matching method is included in the reference region.

As illustrated in FIG. 102, a new reference region may be set based on the location derived by the matching method.

For example, when six lines from a side on which an existing reference region contacts the current block are included, six new lines starting from the template region derived by the matching method may be set as the reference region.

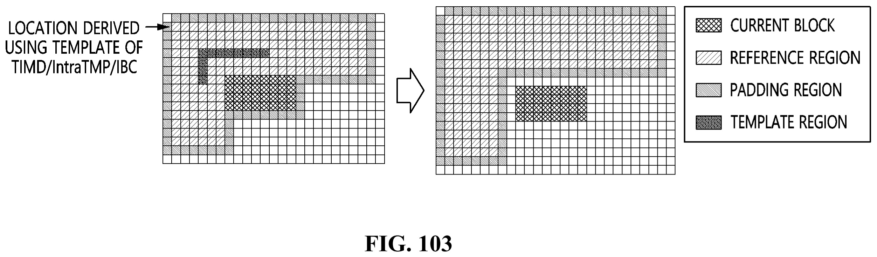

FIG. 103 illustrates the adjustment of a reference region using a location, indicated by a region detected by a matching method, as a reference according to an example.

A motion vector or a block vector may indicate the region detected by the matching method.

A new reference region may be set based on the location indicated by the motion vector or the block vector. In other words, the reference region may be moved in the direction of the motion vector or the block vector to include the template region. Here, the motion vector or the block vector may indicate the template region.

Here, a reference region newly set by movement may be a region that is not adjacent to the current block.

**Configuration of reference region using information of previously encoded/decoded blocks**

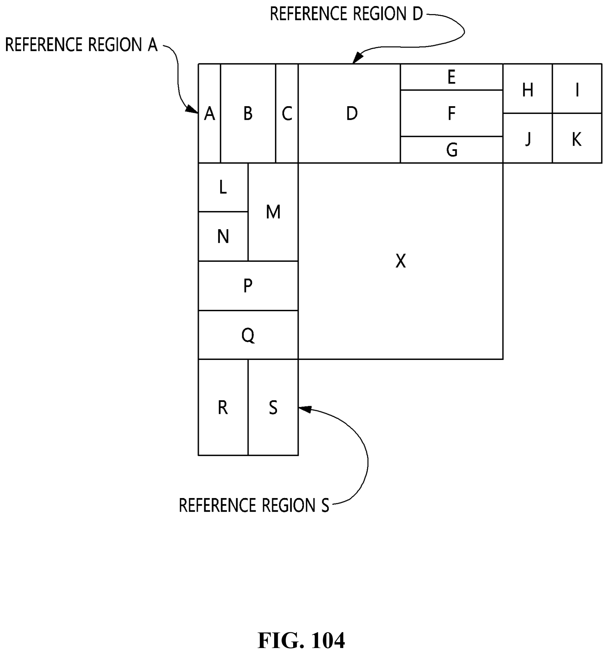

FIG. 104 illustrates the configuration of a reference region according to an example.

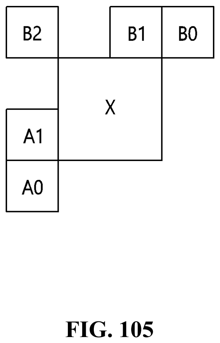

FIG. 105 illustrates reference blocks for the configuration of a reference region according to an example.

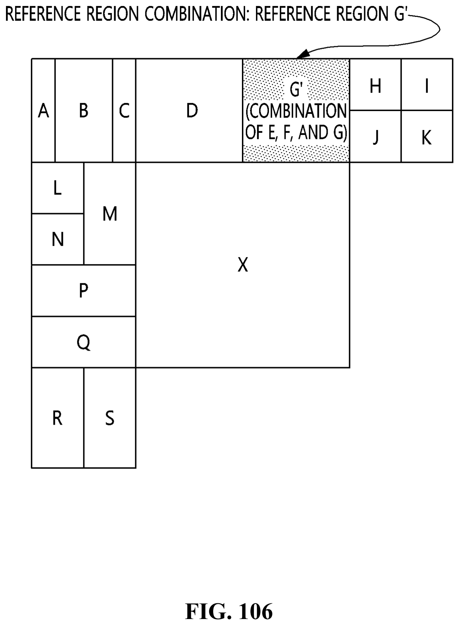

FIG. 106 illustrates the combination of reference regions according to an example.

In FIGS. 104 to 106, "X" may represent a current block.

In configuring a reference region for deriving a cross-component prediction model using samples in a reconstructed area that can be referenced, information of previously encoded/decoded blocks may be utilized.

In embodiments, the cross-component prediction model may refer to a color-component model.

In embodiments, the configuration of the reference region may include the determination of one or more coding parameters/attributes of the reference region, such as the size, shape, and location of the reference region.

In embodiments, block information may include one or more coding parameters/attributes of the block, such as the size, shape and location of a block.

For example, as illustrated in FIG. 104, when neighboring blocks such as block A to block S are present, reference samples (or reference region) for deriving a Cross-Component Prediction (CCP) model may be configured using reconstructed samples belonging to each neighboring block (or reference block).

In embodiments, the neighboring blocks may be blocks around the current block. Each neighboring block may include an adjacent block that is adjacent to the current block, and a non-adjacent block that is not adjacent to the current block. For example, each neighboring block may be a block whose distance from the current block is less than or equal to a reference value.

In embodiments, the distance between blocks may be the distance between pixels at corresponding locations in the blocks. For example, the distance between a first block and a second block may be the distance between a top-left pixel of the first block and a top-left pixel of the second block.

In embodiments, the distance between blocks may be the larger of a horizontal distance and a vertical distance.

In embodiments, each neighboring block may be limited to a block that can be referenced at the time of encoding/decoding of the current block. For example, the neighboring block may be a previously encoded/decoded block. For example, the neighboring block may be limited to a reconstructed block located above or to the left of the current block.

The shape and location of the reference region used to derive a model may correspond to the shape and the location of a neighboring block determined during an encoding/decoding process.

The shape of the reference region may include the size and form of the reference region. The shape of the neighboring block may include the size and form of the neighboring block.

For example, as illustrated in FIGS. 104 and 106, the shape and location of the reference region may be determined to be identical to the shape and location of an encoded/decoded neighboring block.

For example, the size of the reference region may be determined by adjusting the size of the encoded/decoded neighboring block at certain rate. Here, adjustment may include scaling.

Here, the rates of adjustment may be identical to each other or different from each other for a horizontal direction and a vertical direction.

The rates of adjustment may be values preset by the encoding apparatus 1600 and the decoding apparatus 1700, and may be signaled from the encoding apparatus 1600 to the decoding apparatus 1700.

In determining a reference block (or a reference sample) for configuring the reference region, blocks at predefined specific locations, such as those shown in FIG. 105, may be selected.

In determining the size of the neighboring block, a specific size defined by the encoding apparatus 1600/decoding apparatus 1700 may be used.

For example, the size of a reference block (or a neighboring block) for determining a reference region may be 8x8 or 16x16.

For example, the size of a smallest block among the neighboring blocks may be set as the size of the reference block (or reference region).

For example, the size of a largest block among the neighboring blocks may be set as the size of the reference block (or reference region). Here, neighboring blocks smaller than the largest block may be extended to the size of the largest block.

For example, blocks having sizes smaller than a predefined block size may be excluded from the neighboring blocks, and reference blocks may be determined by the remaining blocks.

Here, all reconstructed samples in the neighboring blocks that can be referenced may be set to reference samples for deriving a cross-component prediction model.

Here, a reference region (or a reference sample) may be configured by combining samples in one or more blocks among neighboring blocks that can be referenced.

For example, as shown in FIG. 106, the reference region may be configured by collecting samples in block E, block F, and block G.

The reference region may be configured using only adjacent blocks that are adjacent to a face, line or point of the target block among the neighboring blocks.

For example, when neighboring blocks are located as illustrated in FIG. 104, at least one of block C, block D, block G, block J, block M, block P, block Q, and block S may be selected to configure the reference region.

## Determination of reference region using non-adjacent block

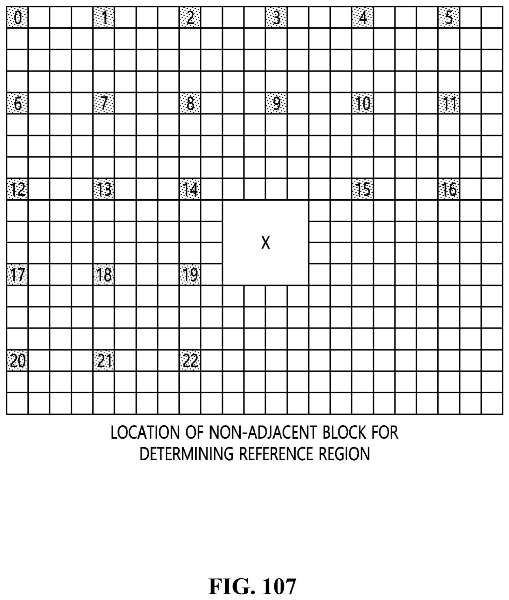

FIG. 107 illustrates the location of a non-adjacent block for determining a reference region according to an example.

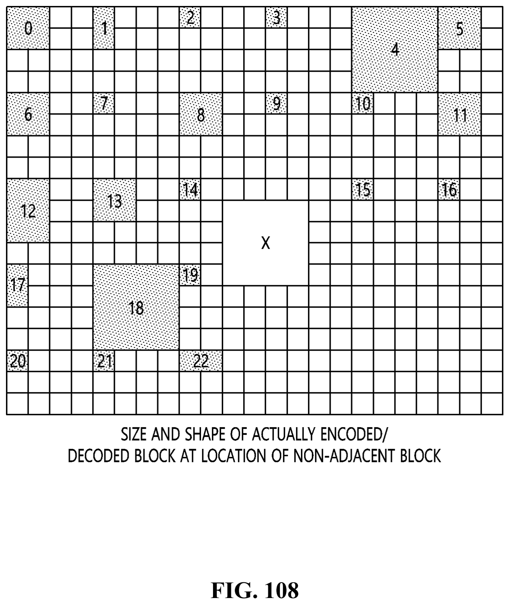

FIG. 108 illustrates the size and shape of an actually encoded/decoded block at the location of a non-adjacent block according to an example.

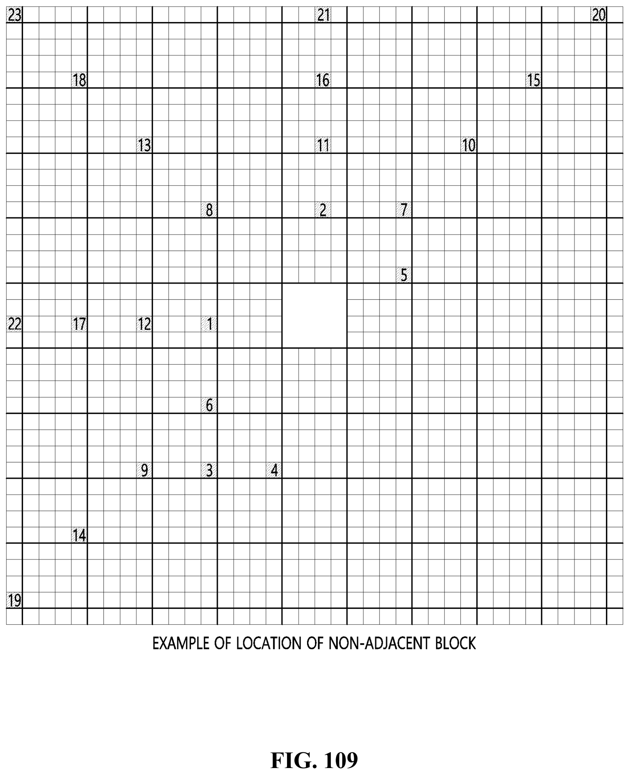

FIG. 109 illustrates the location of a non-adjacent block according to an example.

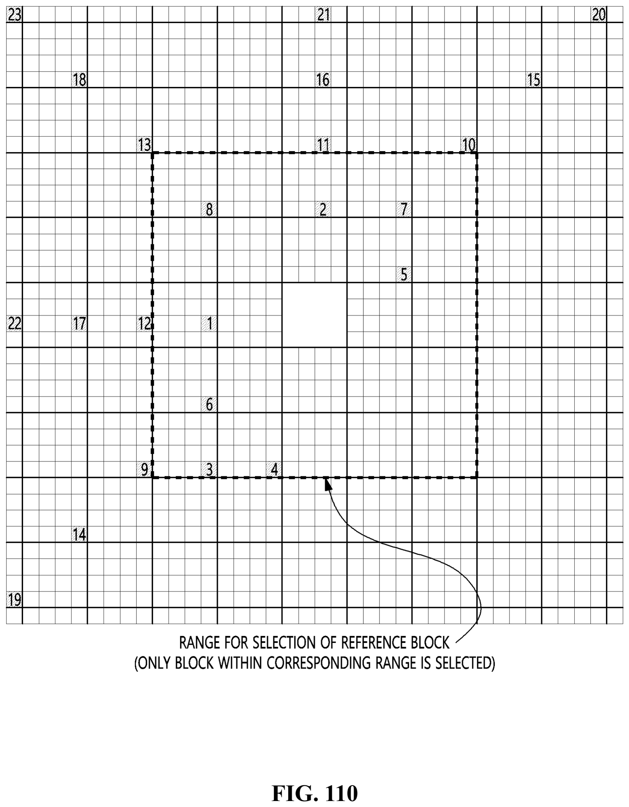

FIG. 110 illustrates a range for the selection of a reference block according to an example.

As illustrated in FIG. 107, reconstructed samples belonging to a non-adjacent block may be set as reference samples for deriving a cross-component prediction model.

The shape and location of a reference region used to derive a model may correspond to the shape and location of a previously encoded/decoded non-adjacent block at a predetermined location.

Here, the shape of the reference region may include the size and form of the reference region.

Here, the shape of the non-adjacent block may include the size and form of the non-adjacent block.

Here, the predetermined location may be the location of a predetermined non-adjacent block, as illustrated in FIG. 107. Here, the location of the predetermined non-adjacent block may be a specific location, and may be a location determined according to a pattern.

Here, the shape and location of the previously encoded/decoded non-adjacent block may refer to the shape and location of an actually encoded/decoded block at the location of the predetermined non-adjacent block, as illustrated in FIG. 108.

For example, as illustrated in FIG. 108, the shape and location of a reference region may be set to be identical to the shape and location of an encoded/decoded non-adjacent block.

For example, a method for adjusting the size of the reference region and determining the rate of adjustment may be set to be identical to a method for adjusting the size of an encoded/decoded non-adjacent block and determining the rate of adjustment.

In determining a reference block (or reference sample) for configuring the reference region, at least one of blocks at a specific location may be selected, and the reference region may be configured using the selected at least one block.

For example, the specific location may be determined depending on the form of a specific pattern, as described with reference to FIGS. 107 to 110.

The pattern may refer to a distribution form of neighboring blocks, which is determined based on the locations and the number of neighboring blocks that can be referenced among multiple neighboring blocks located around the current block. The pattern may be configured in one of various shapes, such as a cross shape, radial shape, hexagonal shape, diamond shape, and triangular shape.

In generating the pattern, the distance between neighboring blocks included in the pattern may be changed.

The pattern may be symmetrically configured or asymmetrically configured.

As illustrated in FIG. 110, when a reference block (or reference sample) for configuring a reference region among non-adjacent blocks is determined, only reference blocks within a specific distance from the target block may be selected. The reference region may be configured using only the selected reference blocks within the specific distance.

In determining the size of the non-adjacent block, a specific size defined by the encoding apparatus 1600/decoding apparatus 1700 may be used.

For example, the size of a reference block (or a non-adjacent block) for determining the reference region may be 8x8 or 16x16.

For example, the size of a smallest block among non-adjacent blocks may be set as the size of the reference block (or reference region).

For example, the size of a largest block among non-adjacent blocks may be set as the size of the reference block (or reference region). Here, non-adjacent blocks smaller than the largest block may be extended to the size of the largest block.

For example, blocks having sizes smaller than a predefined block size may be excluded from the non-adjacent blocks, and reference blocks may be determined by the remaining blocks.

All reconstructed samples in the non-adjacent blocks that can be referenced may be used as reference samples for deriving the cross-component prediction model.

The reference region, the reference sample, and/or the reference block may be configured by combining samples in at least one of the non-adjacent blocks that can be referenced.

In embodiments related to the above-described adjacent blocks and/or non-adjacent blocks, a reference region may be configured for each of the blocks. A cross-component prediction model for the block may be derived using samples in the reference region configured for the corresponding block. Further, for respective blocks, cross-component prediction models for the blocks may be respectively derived using the samples in the reference regions of the blocks.

The reference regions used to derive models may be identified by indices. Each index may indicate a reference region.

A final prediction model may be determined through cross-component prediction. The index may indicate a reference region from which the determined final prediction model is derived.

Information related to the index and the reference region may be signaled from the encoding apparatus 1600 to the decoding apparatus 1700. For example, the information related to the reference region may include the size and location of the corresponding reference region.

Here, the index may be set such that a reference region indicated by the index has a larger value as the reference region becomes farther away from the target block. In other words, indices assigned to reference regions may be increased in ascending order of distances from the current block.

Also, a spiral order centered on the current block may be assigned to the reference regions. The indices assigned to the reference regions may be increased depending on the order of reference regions from the inner to the outer part of the spiral.

The indices for the reference regions may be stored in a First-In First-Out (FIFO) table, as in the case of History-based Motion Vector Prediction (HMVP), and the reference regions indicated by the stored indices may be used as candidates of reference regions for the target block. The reference region may include a reconstructed sample, line and/or block that are used for model parameter derivation and inheritance.

**Modification of reference sample**

In chroma signal prediction based on a cross-component prediction model, at least one of samples in a reference region or a prediction block may be modified, and the modified sample may be used.

In embodiments, modification of samples may be used as the same meaning as adjustment of samples. The terms "modification" and "adjustment" may be used interchangeably with each other.

Here, a sample belonging to the reference region or the prediction block may be modified using the statistical value of samples in the reference region or the prediction block.

The sample in the reference region may be a reference sample. A sample in the prediction block may be a prediction sample.

For example, the average value of the samples in the reference region or the prediction block may be derived, and the derived average value may be added to each of the samples in the reference region or the prediction block. Alternatively, the derived average value may be subtracted from each of the samples in the reference region or the prediction block.

For example, all of samples having one of a maximum value and a minimum value may be modified into a specific value. The specific value may be a value preset by the encoding apparatus 1600 and the decoding apparatus 1700, and may be signaled from the encoding apparatus 1600 to the decoding apparatus 1700.

For example, the specific value may be set to 0.

For example, all of samples for which a difference from the average value is the threshold may be modified into the specific value.

For example, all of samples for which the difference from the average value is equal to or greater than the threshold may be modified into the specific value.

For example, the threshold may be the variance or the standard deviation of the samples.

For example, when the specific value is the variance or the standard deviation, in the case where the sample value of a sample in the reference region is greater than (average + variance/standard deviation) or is less than (average - variance/standard deviation), the sample may be set to have the specific value. In other words, samples having sample values that are greater than (average + variance/standard deviation) or are less than (average - variance/standard deviation), among samples in the reference region or the prediction block, may be set to have the specific value.

Each of the threshold and the specific value may be a value preset by the encoding apparatus 1600 and the decoding apparatus 1700, and may be signaled from the encoding apparatus 1600 to the decoding apparatus 1700.

## Modification of sample using filtering

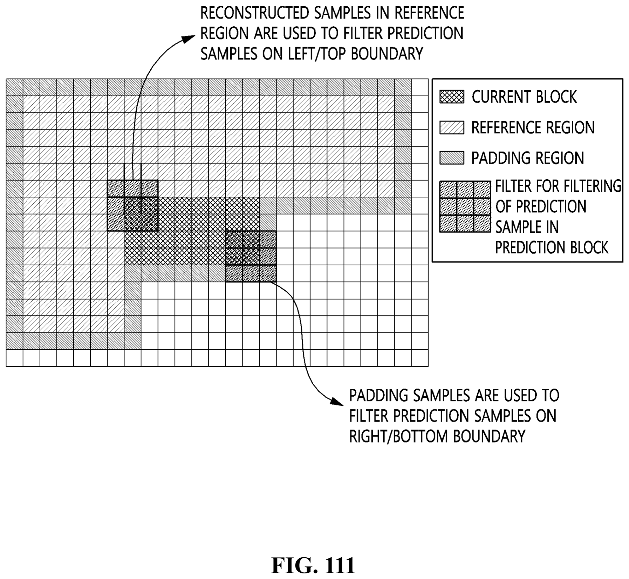

FIG. 111 illustrates filtering of a prediction sample according to an example.

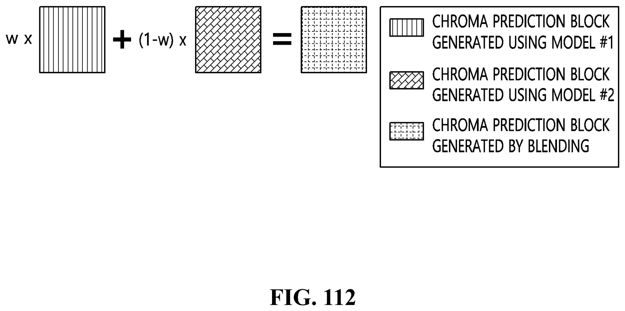

FIG. 112 illustrates the generation of a prediction block using blending according to an example.

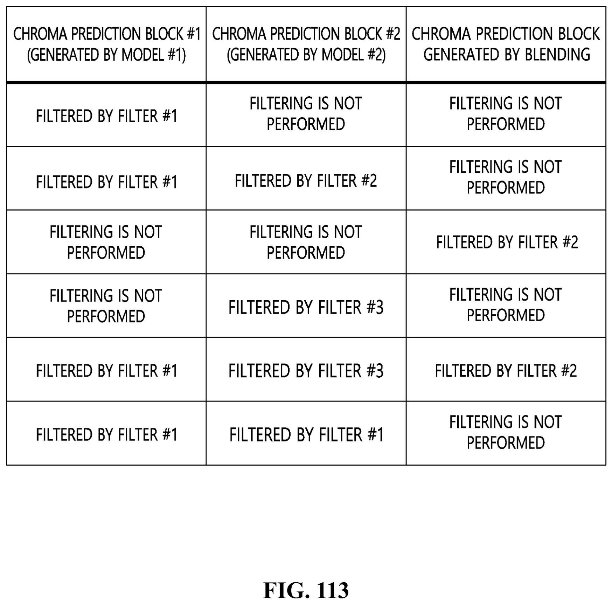

FIG. 113 illustrates filtering for prediction blocks according to an example.

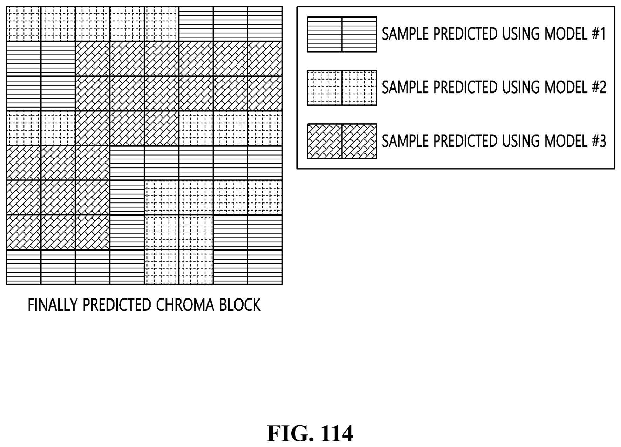

FIG. 114 illustrates the generation of a prediction block using samples predicted by utilizing three models according to an example.

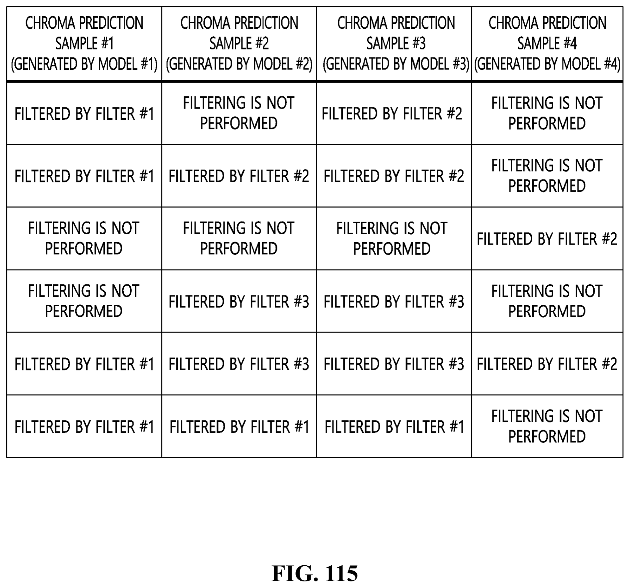

FIG. 115 illustrates filtering for prediction samples and a chroma block according to an example.

Samples in the reference region or prediction block may be modified by filtering.

For example, a reference sample or a prediction sample may be modified by smoothing based on a filter.

For example, the filter may be a low pass filter. The low pass filter may be a Gaussian filter.

For example, a reference sample or a prediction sample may be modified using a sharpening filter.

For example, a reference sample or a prediction sample may be modified using an edge preserving filter, such as a bilateral filter.

For example, a reference sample or a prediction sample may be modified using an edge detection filter, such as a Sobel filter or a Canny filter.

For example, at least one of multiple downsampling filters may be selected, and a reference sample or a prediction sample may be modified using the selected at least one downsampling filter.

When a sample in the reference region or the prediction block is modified by filtering, at least one of the above-described filters may be used.

In filtering a prediction sample using a filter, not only a sample in the prediction block but also reference samples (i.e., surrounding samples) may be used. The reference samples may be samples around the prediction block.

For example, as illustrated in FIG. 111, when filtering is performed on samples on a left/top boundary, reconstructed samples adjacent to the prediction block may be used.

For example, as illustrated in FIG. 111, when filtering is performed on samples on a right/bottom boundary, if there are no adjacent reconstructed samples to be used for filtering, padding samples may be generated by performing padding using samples in the block. Filtering may be performed using the padding samples. In other words, when reconstructed samples to be used for the filter are not available, the padding samples generated through padding may be used instead of reconstructed samples.

In relation to application of filtering, as illustrated in FIGS. 112 and 113, a prediction block may be generated using multiple models. That is, multiple (intermediate) prediction blocks may be generated by multiple models, respectively, and a new (final) prediction block may be generated using the multiple (intermediate) prediction blocks.

Whether filtering is applied to each of multiple prediction blocks (or multiple samples) generated by multiple models and a new prediction block (or sample) generated using the multiple prediction blocks (or multiple samples), and which filter is to be used may be determined.

To perform filtering, at least one filter may be selected. When filtering is performed on a reference region or a prediction sample using multiple filters, multiple models may be derived. An optimal filter may be selected from among multiple filters by performing predictive encoding. Information indicating the finally selected filter may be signaled from the encoding apparatus 1600 to the decoding apparatus 1700.

In the above-described embodiments, each of information indicating whether filtering is applied and information about the filter to be used for filtering may be preset by the encoding apparatus 1600 and the decoding apparatus 1700, and may be signaled from the encoding apparatus 1600 to the decoding apparatus 1700. The information about the filter may include the index of the filter, the coefficients of the filter, the offset of the filter, or the like.

A new cross-component prediction model (or cross-color component prediction model) may be derived using reference samples adjusted by the filtering or modification method, described in the embodiments. Here, the adjusted reference samples may be samples within the reference region.

The adjusted reference samples may refer to samples to which filtering is applied, or reference samples to which modification is applied.

The above-defined Cross-Component Linear Model (CCLM), Gradient Linear Model (GLM), Filter-based Linear Model (FLM), and Convolutional Cross-Component Model (CCCM) may be derived using the adjusted reference samples.

In each cross-color component prediction, each of information indicating whether filtering is applied to samples used to derive a prediction mode and information about the filter in filtering may be signaled from the encoding apparatus 1600 to the decoding apparatus 1700.

In addition to the cross-component prediction model described in embodiments, a new cross-component prediction model may be defined using adjusted reference samples.

For example, the model may be defined and derived such that the model has different numbers of model parameters and different coefficients (or gradients and locations) constituting the corresponding model parameter. Here, the coefficients may include a gradient and a location.

Further, the model may be defined and derived such that the model has different numbers of model parameters and different coefficients (or gradients and locations) constituting the corresponding model parameter depending on the type of filter used.

In embodiments using a downsampling filter, the cross-component prediction model may be defined differently depending on the type of downsampling filter used to generate luma samples.

For example, depending on the type of filter used, the model may be defined and derived to have different numbers of model parameters and different model inputs. In other words, depending on the type of filter used, the number of model parameters and the input of each model may be determined, and the model may be derived. The input of the model may include a luma sample, gradient, and a sample location.

Each of 1) whether the derived model, described in embodiments, is applied, 2) information about the model, and 3) information about a downsampling filter used for model derivation may be preset by the encoding apparatus 1600 and/or the decoding apparatus 1700, and may be signaled from the encoding apparatus 1600 to the decoding apparatus 1700.

Samples in the reference region or the prediction block may be modified using a previously derived cross-component prediction model.

For example, the cross-component prediction model may be derived or calculated from the current block or neighboring blocks, and the derived or calculated cross-component prediction model may be stored. Samples in the reference region or the prediction block may be modified using the previously derived cross-component prediction model. A new cross-component prediction model may be derived using modified samples in the reference region or the prediction block.

The previously derived model may be derived from the current block or a neighboring block.

Whether such a modified reference sample or the modified prediction sample is used may be preset by the encoding apparatus 1600 and the decoding apparatus 1700, and may be signaled to the encoding apparatus 1600 and the decoding apparatus 1700.

## Generation of chroma prediction signal using cross-component prediction model

Hereinafter, generation of a chroma prediction signal at step 3930 will be described.

A chroma prediction signal/block/sample may be generated using information of multiple models, described above in embodiments.

The information of the models may include model coefficients and an offset, and may be an equation configured using the model coefficients and the offset.

The information of the models may be generated using one or more of chroma signal prediction models such as CCLM, GML, FLM, and CCCM.

## Generation of prediction block using weighted sum

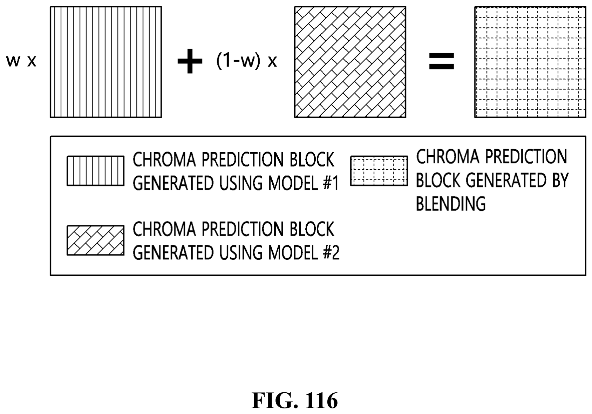

FIG. 116 illustrates the generation of a prediction block using a weighted sum of prediction blocks generated by utilizing multiple models according to an example.

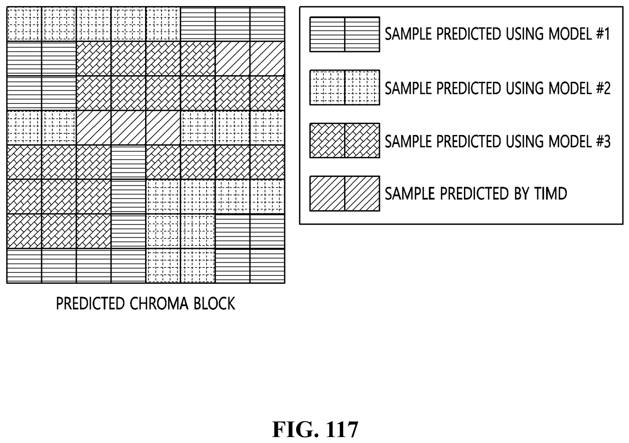

FIG. 117 illustrates the generation of a prediction signal using signals generated through different cross-component prediction models for samples according to an example.

In FIG. 116, blending may represent a weighted sum.

A new chroma prediction signal/block/sample to be used for chroma prediction may be generated using the weighted sum of chroma prediction signals/blocks/samples generated using multiple models.

The weights in the weighted sum may be equal to each other. Alternatively, the weights may be different from each other.

The weights may be determined based on the coding information.

Here, the weighted sum may be performed using at least one or more chroma prediction signals/blocks/samples.

The number of models in weights and the weighted sum may be present by the encoding apparatus 1600 and/or the decoding apparatus 1700. Alternatively, the information indicating the number of models used in weights and the weighted sum may be signaled from the encoding apparatus 1600 to the decoding apparatus 1700. Alternatively, the information indicating the number of models used in weights and the weighted sum may be derived using information neighboring information.

In embodiments, the neighboring information may refer to information about the block or information about surrounding pixels of the block. The neighboring information may refer to the coding information of the block or the coding information of the surrounding pixels of the block.

The type and number of models used for the weighted sum may be determined based on the neighboring information.

A new prediction signal to be used for chroma prediction may be generated using the weighted sum of signals generated by different types of cross-component prediction models.

For example, a new chroma prediction signal may be generated using the weighted sum of a chroma prediction signal generated by Cross-Component Linear Model (CCLM) and a chroma prediction signal generated by a Gradient Linear Model (GLM).

For example, when a new chroma prediction block is generated, a model to be applied to each sample of a new chroma prediction block may be determined, and a sample generated by the determined model may be used as a sample of the new chroma prediction block. In other words, different types of cross-component prediction models may be respectively used for samples of the new chroma prediction block.

For example, when a new chroma prediction block is generated, each sample of the new chroma prediction block may be generated using one of prediction samples generated by different types of cross-component prediction models.

For example, when a new chroma prediction block is generated, a weight may be determined for each sample of the new chroma prediction block. In other words, different weights may be used for the samples of the new chroma prediction block. Here, the weights may be weights for the samples generated by different types of cross-component prediction models.

The weighted sum of multiple models may be used to generate the final chroma signal/block/sample to be used for chroma prediction.

The information indicating the multiple models may be signaled from the encoding apparatus 1600 to the decoding apparatus 1700. Alternatively, information indicating the multiple models may be derived using coding information.

When a chroma prediction signal is generated, a prediction signal, a prediction block, or a prediction sample, which is to be used for chroma prediction, may be generated using a weighted sum of a signal generated through intra-prediction or inter-prediction and a signal generated using the cross-component prediction model.

A prediction signal, a prediction block, or a prediction sample, which is to be used for chroma prediction, may be generated using a weighted sum of a prediction signal generated using an additional method, other than the method using the cross-component prediction model, and a prediction signal generated using the cross-component prediction model.

For example, the additional method may include Template-based Intra Mode Derivation (TIMD), Decoder-side Intra Mode Derivation (DIMD), an angular mode, a fusion mode, or the like. Furthermore, the prediction signal generated using the additional method may include a prediction block or sample derived through Intra Block Copy (IBC), Intra Template Matching (Intra TMP), or the like.

A new chroma prediction block to be used for chroma prediction may be generated using prediction signals or prediction samples generated based on a single model or multiple models and prediction signals or prediction samples generated based on various predictions according to embodiments. Predictions in embodiments may include intra-prediction and inter-prediction.

For example, when a new chroma prediction block is generated, a method to be applied to each sample of a new chroma prediction block may be determined, and a sample generated by the determined method may be used as a sample of the new chroma prediction block. Here, different methods may include multiple models and predictions in embodiments. In other words, different methods may be respectively used for samples of the new chroma prediction block.

For example, when a new chroma prediction block is generated, each sample of the new chroma prediction block may be generated using one of prediction samples generated using different methods. Here, different methods may include multiple models and predictions in embodiments.

For example, when a new chroma prediction block is generated, a weight may be determined for each sample of the new chroma prediction block. In other words, different weights may be used for the samples of the new chroma prediction block. Here, the weights may be weights for the samples generated by different methods.

Information indicating a model or a prediction mode used to generate a chroma signal may be signaled from the encoding apparatus 1600 to the decoding apparatus 1700, and the information indicating the model or the prediction mode used to generate a chroma signal may be derived using other information described in embodiments such as coding parameters or pieces of signaled information.

In fusion of chroma prediction blocks (signals) generated by various cross-component prediction models and prediction blocks (signals) generated by other prediction methods, a prediction block to be used for fusion may be determined based on template matching cost. For example, in the case where prediction blocks generated by CCLM and CCCM in the cross-component prediction method are present, and prediction blocks generated by TIMD and DIMD methods other than the cross-component prediction methods are present, template matching costs of the prediction blocks respectively generated by different prediction methods may be compared with each other, and a prediction block having lower template cost may be used for function. For example, when template matching costs of a prediction block generated by CCCM among cross-component prediction methods and a prediction block generated by a TIMD method among other prediction methods are lower than template costs of prediction blocks generated by other prediction methods to be compared, the prediction block generated by CCCM and the prediction block generated by the TIMD method may be used for fusion.

## Revision of chroma signal

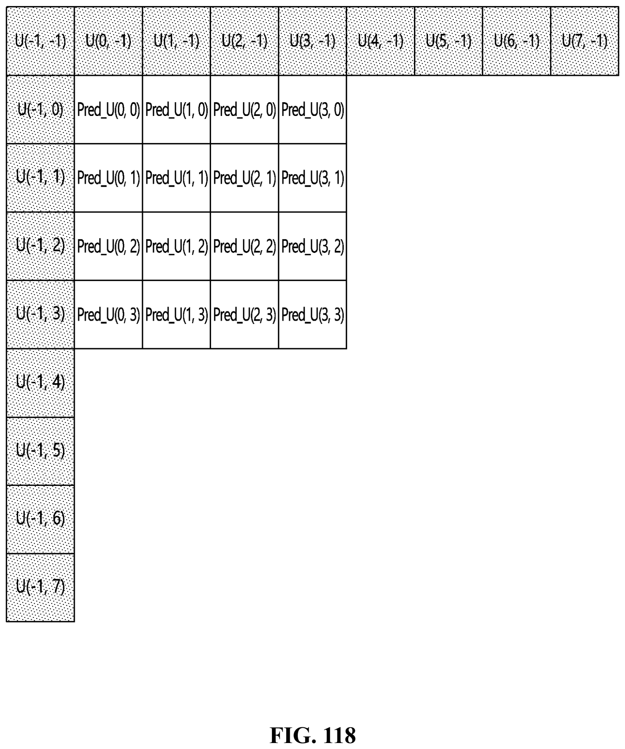

FIG. 118 illustrates a U prediction signal revised using a color-component prediction model between a luma signal and a chroma signal according to an example.

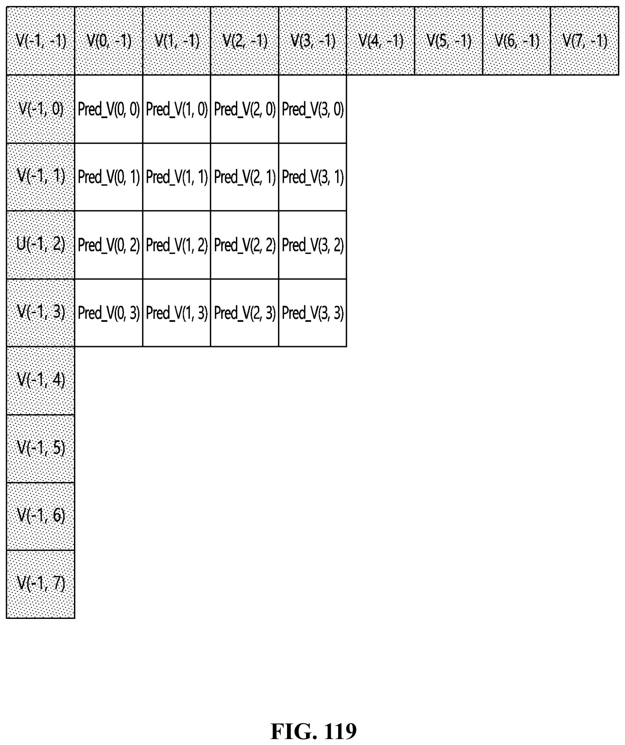

FIG. 119 illustrates a Y prediction signal revised using a color-component prediction model between a luma signal and a chroma signal according to an example.

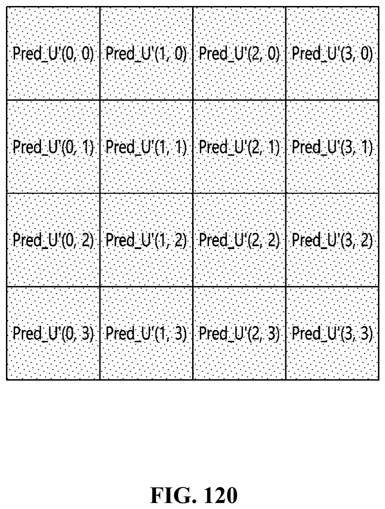

FIG. 120 illustrates a U prediction signal revised using a color-component prediction model between chroma signals according to an example.

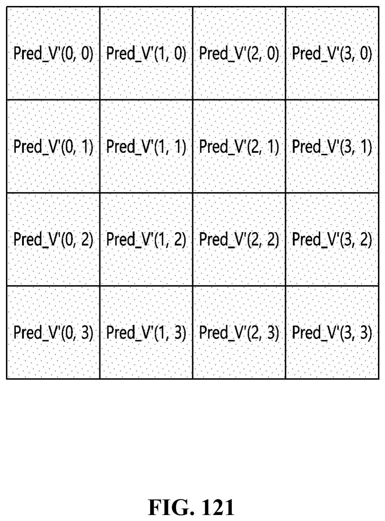

FIG. 121 illustrates a V prediction signal revised using a color-component prediction model between chroma signals according to an example.

When a chroma prediction signal is generated, revision of chroma signals may be performed using a prediction model derived by cross-color component modeling between chroma signals U and V.

In embodiments, the term "revision" may refer to refinement and update. In embodiments, the terms "revision", "refinement", and "update" may be used interchangeably with each other.

For example, as illustrated in FIGS. 118 to 121, a chroma prediction signal Pred_U and a chroma prediction signal Pred_V may be generated by cross-color component correlation modeling between a luma signal and a chroma signal. A cross-color component prediction model between U and V may be derived using the chroma prediction signals Pred_U and Pred_V and surrounding reconstructed samples of the chroma prediction signals. Revision of the chroma prediction signals Pred_U and Pred_V may be performed using the derived cross-color component prediction model.

Pred_U' may be revised Pred_U. Pred_V' may be revised Pred_V.

When CCLM is used for cross-color component prediction, the revised chroma prediction signals Pred_U' and Pred_V' may be calculated by the following [Equation 61] and [Equation 62].

### [Equation 61]

$$Pred\_U'(i, j) = a * Pred\_U(i, j) + b$$

### [Equation 62]

$$Pred\_V'(i, j) = c * Pred\_V(i, j) + d$$

[Equation 61] and [Equation 62] may represent revision of the chroma prediction signals U and V in the case where the cross-color component prediction model of CCLM is used.

Here, a modeling method used to model the cross-color component correlation between the luma signal and the chroma signal and a modeling method used to model the cross-color component correlation between the chroma signals may be different from each other.

For example, CCCM or FLM may be used to model the cross-color component correlation between the luma signal and the chroma signal, and CCLM or GLM may be used to model the cross-color component correlation between chroma signals.

Information about the model used to model the cross-color component correlation between the luma signal and the chroma signal may be preset by the encoding apparatus 1600 and the decoding apparatus 1700, and may be signaled to the encoding apparatus 1600 and the decoding apparatus 1700. Here, the information about the model may include the index of the model.

Information about the model used to model the cross-color component correlation between the chroma signals may be preset by the encoding apparatus 1600 and the decoding apparatus 1700, and may be signaled to the encoding apparatus 1600 and the decoding apparatus 1700. Here, the information about the model may include the index of the model.

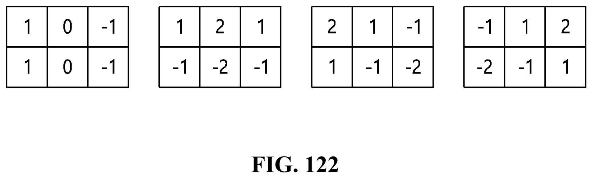

FIG. 122 illustrates gradient patterns according to an example.

A Gradient Linear Model (GLM) may predict a chroma sample, as shown in the following [Equation 6] by utilizing the gradient of a luma sample.

**[Equation 63]**

$$\text{pred}_C(i, j) = \alpha \cdot G(i, j) + \beta$$

$\text{pred}_C(i, j)$ may denote a prediction value for the chroma sample.

$G(i,j)$ may denote the slope of a corresponding reconstructed luma sample.

Linear model parameters $\alpha$ and $\beta$ may be derived using a linear model identical to or similar to CCLM using adjacent reconstructed samples based on a Liner Minimum Mean Square Error (LMMSE) method.

In the case of signaling, when a CCLM mode is enabled for the current block, two flags may be separately signaled for a Cb component and a Cr component so as to indicate whether a GML is enabled for each component.

In embodiments, the current block may be a CU.

When a GLM is enabled for one component, one syntax element may be additionally signaled so that one of four gradient patterns is selected for gradient calculation, as shown in FIG. 77.

Furthermore, in gradient calculation, the gradient detection pattern and the gradient detection filter illustrated in FIG. 56 may be selected. Furthermore, a pattern or a filter may be selected from among available patterns or available filters described in embodiments.

A pattern/filter indicator may be used to indicate a pattern or a filter selected from available patterns or available filters. The pattern/filter indicator may be additionally encoded/decoded/signaled.

In order to improve the coding efficiency of GLM, a gradient and a luma value may be used to predict a chroma sample.

A chroma sample may be predicted using the gradient $G(i, j)$ and the reconstructed values $\text{rec}'_L(i, j)$ of the luma samples.

The chroma sample may be predicted using the following [Equation 64].

**[Equation 64]**

$$\text{pred}_C(i, j) = \alpha_0 \cdot G(i, j) + \alpha_1 \cdot \text{rec}'_L(i, j) + \alpha_2 \cdot \text{midValue}$$

The model parameters $\alpha_0$, $\alpha_1$ and $\alpha_2$ may be derived from samples adjacent to six rows and columns based on an LDL decomposition method, as in the case of the CCCM mode.

In signaling, one flag indicating whether GLM is enabled for the Cb component and for the Cr component may be signaled. A syntax element indicating a gradient pattern may be coded by a truncated unary code.

A new GLM mode in the above-described embodiment may perform prediction for a chroma sample based on the gradients and luma values having different parameters. Such a new GLM mode may replace another GLM mode in embodiments. Alternatively, the additional GLM mode in embodiments may be reserved. The new GLM mode may be signaled as an additional mode by signaling one additional flag in a bitstream.

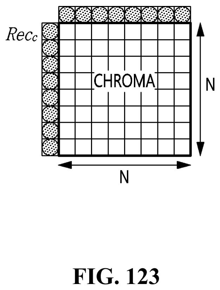

FIG. 123 illustrates chroma samples used to derive a linear model according to an example.

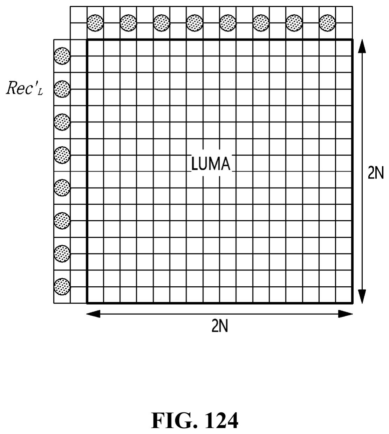

FIG. 124 illustrates luma samples used to derive a linear model according to an example.

A template for deriving a linear model may include a full template, a top-only template, and a left-only template.

In FIG. 78, the full template is represented by reconstructed samples of the top-only template and reconstructed samples of the left-only template.

Also, predictors of non-CCLM intra chroma modes (i.e., a direct mode: DM, DIMD, and four base modes) may be fused with the predictors of MMLM. In embodiments, the predictor of a specific mode may represent a prediction signal generated in the specific mode or information for deriving the prediction signal.

Similar to CCLM, CCCM may predict a chroma sample from a luma sample reconstructed using a 7-tap filter.

CCCM may use a left template and a top template so as to derive the model. The template of CCCM may refer to a reference region.

Selection of the template in CCLM may be extended to CCCM. By means of this extension, only a left template or a top template in addition to the full template may be used to derive the model.

In order to derive the model in CCCM, 1) a left template, 2) a top template or 3) both the left template and the top template may be used.

1) In order to use the left, top, or left and top templates for model derivation, selection of a template in CCLM is extended to CCCM.

2) MMLM fusion may be replaced with multi-model CCCM fusion. More specifically, the predictors in a non-CCLM chroma mode may be merged with the predictors in a multi-model CCCM mode. The derivation of weights for merging, described in embodiments, may be applied.

In embodiments, fusing the predictors may mean that the weighted sum of prediction blocks is derived.

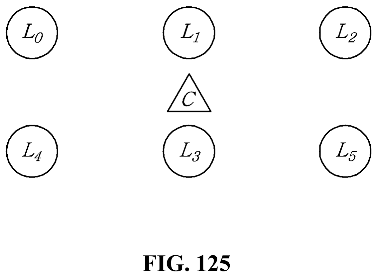

FIG. 125 illustrates non-downsampled luma samples according to an example

CCCM may have a 3x2 filter using non-downsampled luma samples.

The 3x2 filter may include four nonlinear terms and a bias term. 6-tap spatial terms may correspond to six neighboring luma samples (i.e., L0, L1, ..., L5) around the chroma sample (i.e., C) to be predicted. The four nonlinear terms may be derived from samples $L_0$, $L_1$, $L_2$, and $L_3$.

The chroma sample may be derived by the following [Equation 65].

**[Equation 65]**

$$C = \sum_{i=0}^{5} \alpha_i \cdot (L_i - \text{offsetLuma}) + \sum_{i=6}^{9} \alpha_i \cdot (((L_{i-4} - \text{offsetLuma})^2 + \beta) \gg bitDepth) + \alpha_{10} \cdot \beta + \text{offsetChroma}$$

$\alpha_i$ may be a coefficient. $\beta$ may be an offset.

The filter coefficients may be derived by applying samples in a reference region of the current block to the top and the left. The samples may include luma samples and chroma samples. The reference region may indicate samples in a maximum of six lines above from the current block and/or samples in a maximum of six lines to the left of the current block.

The filter coefficients may be derived based on the same LDL decomposition method as that used in CCCM.

The method according to the embodiment may be signaled as an additional CCCM model in addition to the existing CCCM model.

In an embodiment, when CCCM is selected, one flag may be signaled for two chroma components Cb and Cr. The flag may indicate whether CCCM in another embodiment or an additional CCCM model is applied.

In an embodiment, two flags may be respectively signaled for two chroma components. Alternatively, the flag may indicate whether CCCM in the embodiment or an additional CCCM model is applied to at least one of two chroma component.

Information indicating whether CCCM using non-downsampled luma samples is enabled may be signaled. The foregoing information may be signaled in SPS.

The encoding apparatus 1600 may include an additional coding speed enhancement logic which adaptively adjusts the number of RD calculations depending on SATD values in CCCM which uses normal intra modes, default CCCM, and non-downsampled luma samples.

In an embodiment, in CCCM that uses non-downsampled luma samples and CCCM that uses downsampled luma samples, the position of the chroma sample and the position of a luma sample corresponding to the chroma sample may be identical to each other.

In an embodiment, in CCCM that uses non-downsampled luma samples and CCCM that uses downsampled luma samples, the position of the chroma sample and the position of a luma sample corresponding to the chroma sample may be different from each other.

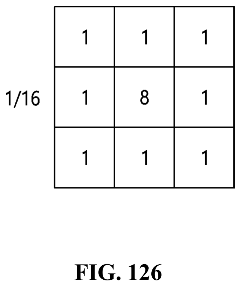

FIG. 126 illustrates a filter for samples in CCLM according to an example.

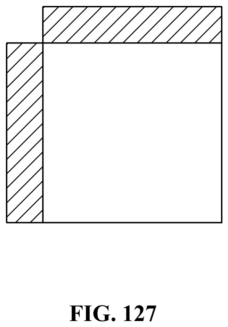

FIG. 127 illustrates the template of a block according to an example.

Cross-component prediction may include a CCLM and a CCCM, and variants of the CCLM and CCCM. For example, cross-component prediction may include intra fusion that uses GLM, CCLM or CCCM.

In the intra chroma fusion mode, local neighboring information may be utilized with CCP. Here, the weighted sum of CCP and the angular prediction mode may be used to generate final prediction.

Local-Boosting Cross-Component Prediction (LB-CCP) may utilize more local information.

LB-CCP may utilize local information. The local information neighboring samples and prediction samples.

In an embodiment, prediction samples in CCLM may be filtered with neighboring samples. As shown in FIG. 81, a 3×3 low pass filter may be applied to filter prediction samples generated by prediction samples in CCLM.

For samples at left/top boundaries, a filtering window may include neighboring reconstructed samples. For inner samples, the filtering window may include only prediction samples. Padding may be applied to prediction samples.

A flag indicating whether filtering is applied to a block coded with CCCM may be signaled.

In an embodiment, template cost may be calculated to implicitly determine the use of CCP. The template cost may be used to determine candidates to be included in a CCP merge list among available merge candidates.

As shown in FIG. 81, the template cost may be derived by applying candidate CCP to the template and calculating SAD between the prediction samples of the template and the reconstructed samples.

In the CCCM, two template costs may be calculated using six lines or two lines of neighboring samples as training samples.

In CCCM, in order to derive a median value as a threshold for distinguishing two models from each other, two template costs may be calculated by utilizing neighboring luma samples or luma samples collocated to the current chroma block.

For an intra chroma fusion mode, two template costs may be calculated by fusing angular chroma prediction with the CCLM. The weight values of fusion may be determined based on lowest template cost. An option having lower template cost may be selected as the final CCP method for the current block.

In an embodiment, binarization of the CCP mode may be modified. Two syntax elements may be coded and signaled instead of signaling CCLM/CCCM using truncated unary code.

For example, a multi_mode_flag may indicate whether multiple models or single model are applied.

For example, ccp_dir_flag may indicate whether a left direction or an upward direction is applied.

multi_mode_flag and ccp_dir_flag may be individually encoded/decoded/signaled.

## Configuration of candidates for construction of CCP merge list

In order to utilize a cross-component correlation, CCLM, CCCM, GLM, and CCP including modifications thereof may be used.

A CCP merge candidate list may be constructed using temporally/spatially adjacent candidates, temporally/-spatially non-adjacent candidates, and history-based candidates. Also, the location of each candidate may be adjusted or shifted by the motion vector or block vector of a neighboring block or a co-located (collocated) block. A candidate at the new shifted location may be included in the CCP merge candidate list.

Here, the candidates may be adjacent blocks that are encoded/decoded using CCP. The CCP merge candidate list may be configured using model information (i.e., parameters) derived from candidates.

After those candidates are included, default modes may be further added to fill empty positions in the merge list. In order to remove redundant CCP models in the merge list, a pruning operation may be applied.

After the merge list is constructed, CCP modes in the merge list may be reordered based on costs. The costs may be obtained using neighboring templates of the current block. For example, the costs may refer to values derived in relation to the cost, described in embodiments, such as SAD, SATD and rate-distortion costs.

The positions of spatially adjacent candidates and spatially non-adjacent candidates and the order in which the candidates are included may be identical to those defined for regular inter merge prediction candidates.

A history-based table may be maintained to include recently used CCP models. The history-based table may be reset at the beginning of each CTU row. When the current merge list is not full even after the spatially adjacent candidates and spatially non-adjacent candidates are included therein, CCP models in a history-based table may be added to the merge list.

CCTM candidates having default scaling parameters may be taken into consideration even when the current merge list is not full after the spatially adjacent candidates, the spatially non-adjacent candidates or the history-based candidates are included therein.

When a candidate having a single model CCLM mode is not present in the current merge list, default scaling parameters may be {0, 1/8, -1/8, 2/8, -2/8, 3/8, -3/8, 4/8, -4/8, 5/8, -5/8, 6/8}. Otherwise, the default scaling parameters may be {0, scaling parameter of first CCLM candidate + {1/8, -1/8, 2/8, -2/8, 3/8, -3/8, 4/8, -4/8, 5/8, -5/8, 6/8}}.

The offset parameter may be derived depending on a default scaling parameter, an average adjacent reconstructed luma sample value, and an average adjacent reconstructed Cb/Cr sample value.

A flag indicating whether a CCP merge mode is applied may be encoded/decoded/signaled.

When the CCP merge mode is applied, an index indicating which candidate model is used in the current block may be encoded/decoded/signaled.

Also, when the current block is coded in Intra SubPartition (ISP) that uses a single tree, or when the size of the current chroma block is less than or equal to 16, a CCP merge mode may not be allowed for the current chroma block.

## Generation of luma sample used to derive filter using multiple downsampling filters

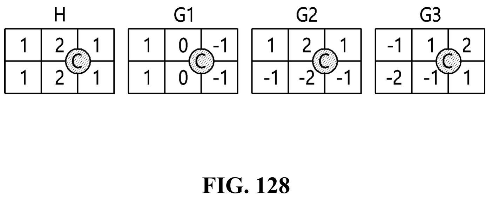

FIG. 128 illustrates various downsampling filters used for cross-component models according to an example.

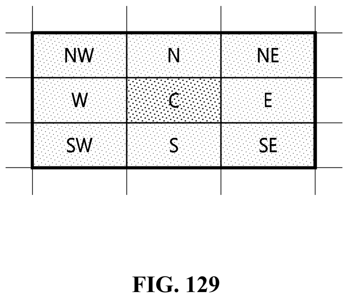

FIG. 129 illustrates the locations of chroma samples according to an example.

Multiple downsampling filters may be applied to a group of reconstructed luma samples in CCCM. A linear combination of such downsampled reconstructed samples may be multiplied by filter coefficients derived to form a final chroma predictor. The horizontal location or vertical location of a center luma sample may also be considered in the model according to the embodiment.

The coefficients may be derived by a Gaussian elimination method, as currently employed by CCCM modes.

The cross-component models shown in the following [Model 4-1] to [Model 4-3] may be used as additional CCCM modes having mode indices signaled in a bitstream.

**[Model 4-1]** predChroma = c0 * H(C) + c1 * G1(C) + c2 * G2(C) + c3 * G3(C) + c4 * P(H(C)) + c5 * P (G1(C)) + c6 * P(G2(C)) + c7 * X + c8 * Y + c9 * B          [Model 4-1]

**[Model 4-2]** predChroma = c0 * H(C) + c1 * H(W) + c2 * H(E) + c3 * G1(C) + c4 * G1(W) + c5 * G1(E) + c6 * P(H(C)) + c7 * P(H(W)) + c8 * P(H(E)) + c9 * X + c10 * B          [Model 4-2]

**[Model 4-3]** predChroma = c0 * H(C) + c1 * H(NE) + c2 * H(SW) + c3 * G3(C) + c4 * G3(NE) + c5 * G3 (SW) + c6 * P(H(C)) + c7 * P(H(NE)) + c8 * P(H(SW)) + c9 * Y+c10*B          [Model 4-3]

Here, $H(\cdot)$, $G1(\cdot)$, $G2(\cdot)$ and $G3(\cdot)$ may be various downsampling filters, as indicated in FIG. 128.

C may indicate the location of a current chroma sample, as indicated in FIG. 129.

N, S, W, E, NE and SW may be locations around C.

$c_i$ may be filter coefficients.

P and B may be a nonlinear term and a bias term, respectively.

X and Y may be the horizontal and vertical locations of the center luma sample with respect to top-left coordinates of a block.

[Model 4-1] may indicate a 1x1 prediction form using only the current chroma sample, whereas other models may be one-directional prediction models using three chroma samples.

**Determination of reference region using motion vector and block vector**

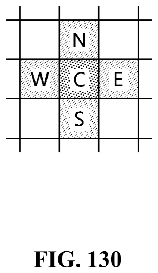

FIG. 130 illustrates a spatial part of a convolution filter according to an example.

When models according to embodiments are derived, the models may use block vectors of both IBC and IntraTMP so as to determine a reference region. Here, the block vectors may be derived from a co-located (collocated) luma block.

A convolutional cross-component model may predict chroma samples from luma samples reconstructed using a 7-tap filter.

CCCM may have an option using a single model or a multi-model variant.

The multi-model variant may use two models. One model may be derived from samples having sample values above an average luma reference value. The other model may be derived from the remaining samples (as in the case of design of CCLM).

A multi-model CCCM mode may be selected for the current block having at least 128 available reference samples. The current block may be a Prediction Unit (PU).

A CCCM filter may be composed of a 5-tap plus sign-shaped spatial component, a nonlinear term, and a bias term.

As illustrated in FIG. 130, the input of the spatial 5-tap component of the filter may include a center luma sample C co-located with a chroma sample to be predicted, and the top/north (N), bottom/south (S), left/west (W), and right/east (E) neighbors of the center luma sample C.

The nonlinear term P may be represented by a power of 2 of the center luma sample C, and may be scaled to the sample value range of content, as represented by the following [Equation 66]:

**[Equation 66]**

$$P = ( C * C + midVal ) >> bitDepth$$

The bias term B may represent a scalar offset between input and output (similar to an offset term in CCLM), and may be set to a middle chroma value (512 for 10-bit content).

As shown in the following [Equation 67], the output of the filter may be calculated as a convolution between filter coefficients $c_i$ and input values, and may be clipped to the range of valid chroma samples:

**[Equation 67]**

$$predChromaVal = c_0C + c_1N + c_2S + c_3E + c_4W + c_5P + c_6B$$

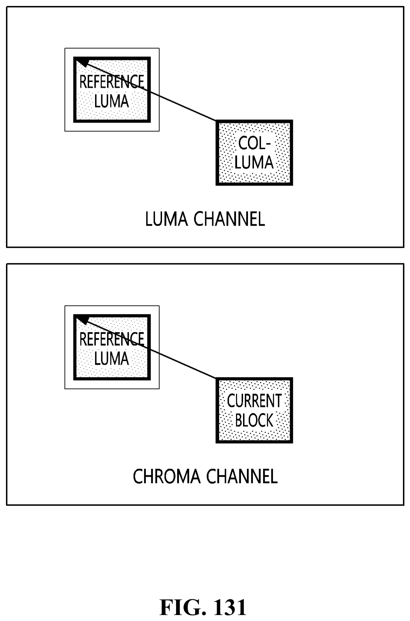

FIG. 131 illustrates a reference region for BVG-CCCM according to an example.

A Block Vector Guided CCCM (BVG-CCCM) method may enhance coding efficiency.

BVG-CCCM may use the block vectors of co-located luma blocks which are coded in IBC or IntraTMP modes so as to determine a reference region for calculating CCCM parameters. Next, a reference region in a luma channel and the corresponding area in a chroma channel may be used to calculate CCCM parameters.

Prediction may employ model parameters calculated to perform CCCM prediction and co-located luma samples.

FIG. 131 illustrates a reference region in a BVG-CCCM method.

A BVG-CCCM mode may use an 11-tap filter for cross-component prediction, as represented by the following [Equation 68]:

**[Equation 68]** $predChromaVal = c_0C + c_1N + c_2S + c_3E + c_4W + c_5P(C) + c_6P(N) + c_7P(S) + c_8P(W) + c_9P(E) + c_{10}B$
[Equation 68]

The input of the spatial 5-tap component of the filter may be composed of a center luma sample C co-located with a chroma sample to be predicted, and the top/north (N), bottom/south (S), left/west (W), and right/east (E) neighbors of the luma sample.

The nonlinear term P may be represented by a power of 2 of the corresponding luma sample, and B may be a bias term.

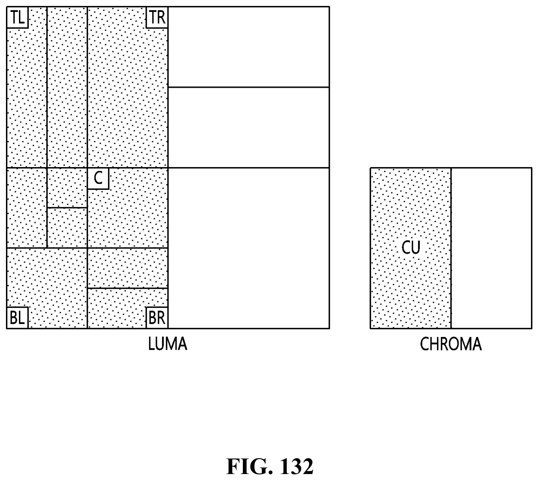

FIG. 132 illustrates locations used to derive a block vector from a co-located luma block according to an example.

As illustrated in FIG. 132, similarly to a direct block vector DBV, five locations within the co-located luma block may be scanned, and associated block vectors may then be used to determine a reference region for parameter calculation within the BVG-CCCM method. In the above embodiment, not only the block vector but also a motion vector derived through inter-prediction may also be used in the same manner.

## Determination of block to be referenced for parameter inheritance.

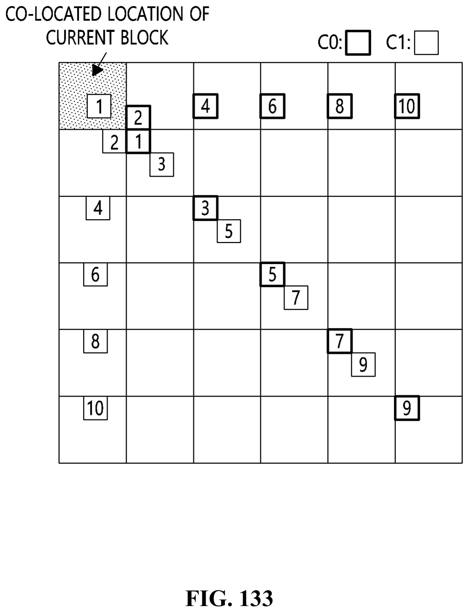

FIG. 133 illustrates the locations of temporal candidates according to an example.

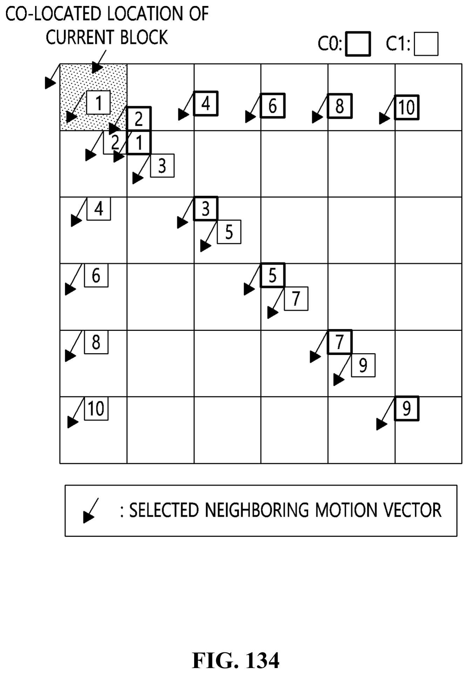

FIG. 134 illustrates the locations of shifted temporal candidates according to an example.

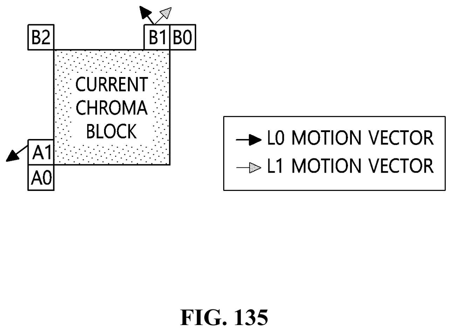

FIG. 135 illustrates locations for selection of a neighboring motion vector.

A Cross-Component Prediction (CCP) merge mode may be used to enhance the coding efficiency of chroma intra-coding.

In the CCP merge mode, cross-component model parameters of the current chroma block may be inherited from spatially adjacent candidates, spatially non-adjacent candidates, history-based candidates, and default candidates of the current chroma block.

Such CCP models may be inherited from blocks that are coded in a CCLM mode, a Multi-Model Liner Model (MMLM) mode, a CCCM mode, a GLM mode, a chroma fusion mode, and a CCP merge mode.

In embodiments, methods for additionally inheriting CCP parameters from temporal candidates and results thereof are disclosed.

In the CCP merge mode, a CCP merge candidate list may include spatially adjacent candidates, spatially non-adjacent candidates, and history-based candidates that are coded in a CCLM mode, an MMLM mode, a CCCM mode, a GLM mode, a chroma fusion mode, and a CCP merge mode.

After the candidates are included, default models may be included in the merge list to fill empty locations if necessary.

In order to remove redundant CCP models in the merge list, pruning operations may be applied.

The candidates in the list may be reordered based on SAD costs obtained using a neighboring template of the current block.

In order to enhance coding efficiency of the CCP merge mode, two types of candidates, referred to as temporal candidates and shifted temporal candidates, may be included in a merge list for non-intra slices.

The temporal candidates may be added to the merge list after spatially adjacent candidates.

The shifted temporal candidates may be added to the merge list after history-based candidates.

Details of the two types of candidates will be described below.

For chroma blocks having sizes of 16 or less, the CCP merge mode may be allowed to be applied into non-intra slices.

The temporal candidates may be selected from a co-located picture.

FIG. 133 may depict the locations of temporal candidates and the inclusion order thereof. The locations and the inclusion order may be identical to the locations of temporal candidates in an inter-merge mode and the inclusion order thereof.

The definition of the co-located picture may be identical to the definition thereof in other embodiments.

The inclusion order of the temporal candidates may be $(C0_1, C0_2, ... , C0_{10})$.

When $C0_i$ is located outside a picture/slice boundary, and $C1_i$ is located inside the picture/slice boundary, $C1_i$ may be used instead of $C0_i$. Here, i may be an integer of 1 or more and 10 or less. Otherwise, the next inclusion location may be checked.

As depicted in FIG. 134, shifted temporal candidates may also be selected from the co-located picture.

The location of a co-located block may be shifted by a neighboring motion vector that is selected.

Therefore, the locations of $C0_i$ and $C1_i$ may be shifted by the same neighboring motion vector.

The inclusion order of the shifted temporal candidates may be identical to the inclusion order of temporal candidates.

As illustrated in FIG. 135, an adjacent motion vector may be selected from among motion vectors of neighboring blocks.

The order of checking may be represented by the following [Equation 69].

### [Equation 69]

$$(L0_{B1}, L1_{B1}, L0_{A1}, L1_{A1}, L0_{B0}, L1_{B0}, L0_{A0}, L1_{A0}, L0_{B2}, L1_{B2})$$

A first motion vector that uses the co-located picture as a reference picture may be selected. When such a motion vector is not detected, no shifted temporal candidates may be added.

In embodiments, cross-component prediction parameters may be derived using a reference sample at the location of a specific block. Here, the model parameters may be inherited from the location of the specific block, and the inherited model parameters may be used for CCP merge.

### Extension of CCP prediction and CCP merge

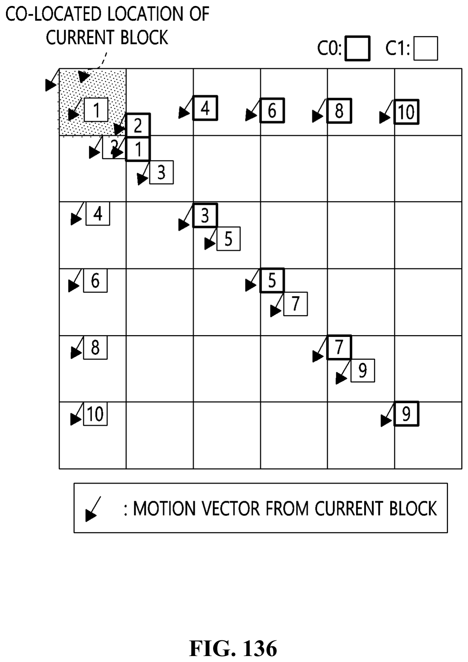

FIG. 136 illustrates the derivation of shifted temporal candidates based on a current motion vector according to an example.

A Cross-Component Prediction (CCP) merge mode may be used to improve the coding efficiency of chroma intra-coding.

In the CCP merge mode, the cross-component model parameters of the current chroma block may be inherited from a selected candidate in a CCP merge list. The CCP merge list may include spatially adjacent candidates, spatially non-adjacent candidates, history-based candidates, and default candidates.

In addition, for non-intra slices, a temporal candidate and a shifted temporal candidate may be further included in the CCP merge list.

Moreover, due to the introduction of inter CCM, inter blocks may use CCP to refine chroma inter-prediction. The methods and results in embodiments may extend the CCP merge mode to chroma inter-coding by utilizing CCP models from the intra-block and an inter block.

In embodiments, a flag may be first used to indicate whether the method according to the embodiment is used for a chroma inter-block.

When the method according to the embodiment is used, a CCP model may be implicitly selected from the CCP merge list.

Final prediction of the current chroma inter-block may be formed by combining cross-component predicted signals derived by utilizing signals predicted by motion compensation and the selected CCP model.

Weights for combined predictions may be fixed by the following [Equation 70].

### [Equation 70]

$$(w_{CCP}, w_{inter}) = (3/4, 1/4)$$

Details of the method according to the embodiment will be described below.

Construction of CCP merge list for chroma inter-coding

For a chroma inter-block, a CCP merge list may include the second type of shifted temporal candidates in addition to existing candidates of a CCP merge mode. In addition, the CCP models in the list may be inherited from an intra-block and an inter-block.

After the CCP merge list is constructed, a candidate having lowest template cost may be implicitly selected.

Second type of shifted temporal candidates

The locations of first-type shifted temporal candidates may be derived based on neighboring motion vectors, whereas the locations of second-type candidates may be derived based on the current motion vector. The current motion vector may be the motion vector of the current block.

As depicted in FIG. 136, the location of a co-located block and the locations of $C0_i$ and $C1_i$ may be shifted by a motion vector from the current block. $CO_i$ and $C1_i$ may be the locations of temporal candidates. Here, i may be an integer of 1 or more and 10 or less.

Inheritance of CCP models from inter-blocks

CCP models may also be inherited from inter-blocks in addition to a CCLM mode, a MMLM mode, a CCCM mode, a GLM mode, a chroma fusion mode, and a CCP merge mode.

For each inter-block, a CCP model may be stored after the block is coded.

The stored model may be inherited by the following coding blocks coded in a CCP merge mode in chroma intra-coding and chroma inter-coding.

When the inter-block is coded in an inter-CCCM mode or inter-CCP merge mode, the CCP model may be stored. Otherwise, a CCP model to be stored may be retrieved from a reference location that is located by the motion vector of an inter-block based on the rules of Intra Prediction Mode (IPM) propagation.

On-the-fly derived candidates

A CCP model may be derived on-the-fly based on neighboring reconstructed samples of the current block.

The on-the-fly CCP models may be derived without accessing luma reconstructed samples of the current block.

When any of derived CCCM/CCLM model parameters of Cb and Cr is non-zero, the on-the-fly derived candidate may be inserted into the beginning of a CCP merge list.

A maximum of four on-the-fly derived candidates may be inserted into the CCP merge list for an inter-CCP merge mode. The maximum of four on-the-fly derived candidates may include a single-model CCCM, a multi-model CCCM, a single-model CCLM, and a multi-model CCLM.

Prediction for a chroma signal based on a cross-component prediction model in embodiments may be applied to various predictions described in embodiments. For example, prediction for a chroma signal based on the cross-component prediction model in embodiments may also be applied to inter-prediction.

**Generation of new chroma signal**

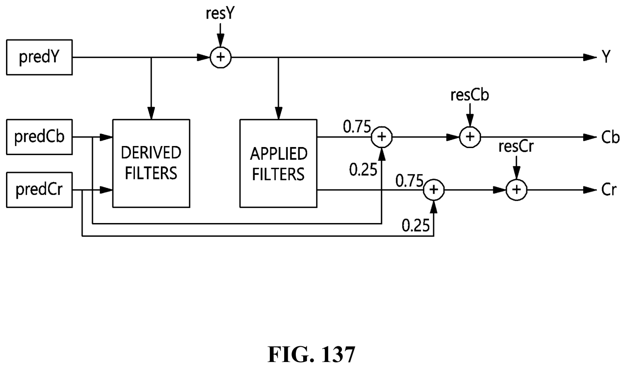

FIG. 137 illustrates a decoding method according to an example.

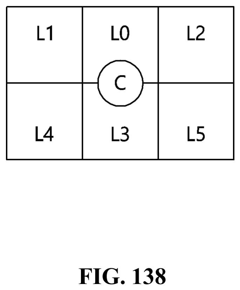

FIG. 138 illustrates luma samples related to a chroma sample according to an example.

When a current block uses inter-prediction or IBC, a Cross-Component Residual Model (CCRM) may be applied to predict chroma samples from reconstructed luma samples.

In FIG. 137, a decoder side in the method according to an embodiment is illustrated.

Cross-component filters may be derived using a luma prediction block and chroma prediction blocks.

The derived filters may be applied to a reconstructed luma block, and the reconstructed luma block may be blended with chroma prediction blocks so as to generate final chroma prediction blocks.

In a blending process, the filtered reconstructed luma blocks may use a blending weight of 0.75, and the chroma prediction blocks may use a blending weight of 0.25.

An 8-tap filter may be composed of six spatial luma samples, a nonlinear term, and a bias term.

As illustrated in FIG. 138, spatial luma samples (L0, ... , L5) may be obtained from a luma grid that selects six luma samples closest to a chroma location C without downsampling. The predicted chroma values may be obtained, as represented by the following [Equation 71]:

**[Equation 71]** predChromaVal = $c_0$L0+ $c_1$L1 + $c_2$L2 + $c_3$L3 + $c_4$L4 + $c_5$L5 + $c_6$ nonlinear((L0+L3+1) >> 1) + $c_7$B

[Equation 71]

Here, 'nonlinear' may be a nonlinear operator of CCCM, and B may be a bias.

Filter coefficients may be derived using a division-free Gaussian elimination method, and necessary offsets may be applied to samples prior to filter derivation.

For filter coefficient derivation, a maximum of 256 chroma samples may be used.

The use of a mode may be signaled with a CABAC-coded TU-level flag. One new CABAC context may be included to support the use of the mode. An InterCCCM flag may be signaled only when the luma Cbf of a TU is non-zero and predMode of CU is MODE _INTER or MODE_IBC.

An encoder may perform RD decision in a transform selection loop for chroma components when luma Cbf is non-zero and predMode of CU is MODE_INTER or MODE _IBC.

According to embodiments, a cross-component prediction model may be derived based on a reconstructed block. In this embodiment, a prediction block derived by inter-prediction may be used to replace the reconstructed block. In other words, a cross-component prediction model may be derived using a prediction block derived by inter-prediction. Alternatively, a prediction block derived by inter-prediction may be used together with the reconstructed block. For example, a cross-component prediction model may be derived using a combination or a weighted sum of the prediction block derived by inter-prediction and the reconstructed block.

In embodiments, description of a prediction method for specific CCP may be applied to another CCP prediction method. For example, the specific CCP may include CCLM, CCCM, GLM, etc. Another CCP may include CCLM, CCCM, GLM, etc. Furthermore, description of the prediction method for the specific CCP may be applied to other prediction methods in embodiments, and may be combined with other prediction methods in embodiments.

The embodiments may be performed using the same method by the encoding apparatus 1600 and by the decoding apparatus 1700. Also, the image may be encoded/decoded using at least one of the embodiments or at least one combination thereof.

The order of application of the embodiments may be different from each other by the encoding apparatus 1600 and the decoding apparatus 1700, and the order of application of the embodiments may be (at least partially) identical to each other by the encoding apparatus 1600 and the decoding apparatus 1700.

The embodiments may be performed for each of a luma signal and a chroma signal, and may be equally performed for the luma signal and the chroma signal.

The form of a block to which the embodiments are applied may have a square or non-square shape.

Whether at least one of the above-described embodiments is to be applied and/or performed may be determined based on a condition related to the size of a block. In other words, at least one of the above-described embodiments may be applied and/or performed when the condition related to the size of a block is satisfied. The condition includes a minimum block size and a maximum block size. The block may be one of blocks described above in connection with the embodiments and the units described above in connection with the embodiments. The block to which the minimum block size is applied and the block to which the maximum block size is applied may be different from each other.

For example, when the block size is equal to or greater than the minimum block size and/or less than or equal to the maximum block size, the above-described embodiments may be applied and/or performed. When the block size is greater than the minimum block size and/or less than or equal to the maximum block size, the above-described embodiments may be applied and/or performed.

For example, the above-described embodiments may be applied only to the case where the block size is a predefined block size. The predefined block size may be 2x2, 4x4, 8x8, 16x16, 32x32, 64x64, or 128x128. The predefined block size may be $(2*SIZE_X)x(2*SIZE_Y)$. $SIZE_X$ may be one of integers of 1 or more. $SIZE_Y$ may be one of integers of 1 or more.

For example, the above-described embodiments may be applied only to the case where the block size is equal to or greater than the minimum block size. The above-described embodiments may be applied only to the case where the block size is greater than the minimum block size. The minimum block size may be 2x2, 4x4, 8x8, 16x16, 32x32, 64x64, or 128x128. Alternatively, the minimum block size may be $(2*SIZE_{MIN\_X})x(2*SIZE_{MIN\_Y})$. $SIZE_{MIN\_X}$ may be one of integers of 1 or more. $SIZE_{MIN\_Y}$ may be one of integers of 1 or more.

For example, the above-described embodiments may be applied only to the case where the block size is less than or equal to the maximum block size. The above-described embodiments may be applied only to the case where the block size is less than the maximum block size. The maximum block size may be 2x2, 4x4, 8x8, 16x16, 32x32, 64x64, or 128x128. Alternatively, the maximum block size may be $(2*SIZE_{MAX\_X})x(2*SIZE_{MAX\_Y})$. $SIZE_{MAX\_X}$ may be one of integers of 1 or more. $SIZE_{MAX\_Y}$ may be one of integers of 1 or more.

For example, the above-described embodiments may be applied only to the case where the block size is equal to or greater than the minimum block size and is less than or equal to the maximum block size. The above-described embodiments may be applied only to the case where the block size is greater than the minimum block size and is less than or equal to the maximum block size. The above-described embodiments may be applied only to the case where the block size is equal to or greater than the minimum block size and is less than the maximum block size. The above-described embodiments may be applied only to the case where the block size is greater than the minimum block size and is less than the maximum block size.

In the above-described embodiments, the block size may be a horizontal size (width) or a vertical size (height) of a block. The block size may indicate both the horizontal size and the vertical size of the block. The block size may indicate the area of the block. Each of the area, minimum block size, and maximum block size may be one of integers equal to or greater than 1. In addition, the block size may be the result (or value) of a well-known equation using the horizontal size and the vertical size of the block, or the result (or value) of an equation in embodiments.

Further, in the embodiments, a first embodiment may be applied to a first size, and a second embodiment may be applied to a second size. That is, the embodiments may be compositely applied according to the size.

The embodiments may be applied depending on a temporal layer. In order to identify a temporal layer to which the embodiments are applicable, a separate identifier may be signaled, and the embodiments may be applied to the temporal layer specified by the corresponding identifier. Here, the identifier may be defined as the lowest (bottom) layer and/or the highest (top) layer to which the embodiments are applicable, and may be defined as being indicating a specific layer to which the embodiments are applied. Further, a fixed temporal layer to which the embodiments are applied may also be defined.

For example, the embodiments may be applied only to the case where the temporal layer of a target image is the lowermost layer. For example, the embodiments may be applied only to the case where the temporal layer identifier of a target image is equal to or greater than 1. For example, the embodiments may be applied only to the case where the temporal layer of a target image is the highest layer.

A slice type or a tile group type to which the embodiments to which the embodiments are applied may be defined, and the embodiments may be applied depending on the corresponding slice type or tile group type.

In the above-described embodiments, it may be construed that, during the application of specific processing to a specific target, assuming that specified conditions may be required and the specific processing is performed under a specific determination, a specific coding parameter may be replaced with an additional coding parameter when a description has been made such that whether the specified conditions are satisfied is determined based on the specific coding parameter, or such that the specific determination is made based on the specific coding parameter. In other words, it may be considered that a coding parameter that influences the specific condition or the specific determination is merely exemplary, and it may be understood that, in addition to the specific coding parameter, a combination of one or more additional coding parameters functions as the specific coding parameter.

In the above-described embodiments, although the methods have been described based on flowcharts as a series of steps or units, the present disclosure is not limited to the sequence of the steps and some steps may be performed in a sequence different from that of the described steps or simultaneously with other steps. Further, those skilled in the art will understand that the steps shown in the flowchart are not exclusive and may further include other steps, or that one or more steps in the flowchart may be deleted without departing from the scope of the disclosure.

The above-described embodiments include examples in various aspects. Although all possible combinations for indicating various aspects cannot be described, those skilled in the art will appreciate that other combinations are possible in addition to explicitly described combinations. Therefore, it should be understood that the present disclosure includes other replacements, changes, and modifications belonging to the scope of the accompanying claims.

The above-described embodiments according to the present disclosure may be implemented as a program that can be executed by various computer means and may be recorded on a computer-readable storage medium. The computer-readable storage medium may include program instructions, data files, and data structures, either solely or in combination. Program instructions recorded on the storage medium may have been specially designed and configured for the present disclosure, or may be known to or available to those who have ordinary knowledge in the field of computer software.

A computer-readable storage medium may include information used in the embodiments of the present disclosure. For example, the computer-readable storage medium may include a bitstream, and the bitstream may contain the information described above in the embodiments of the present disclosure.

A bitstream may include computer-executable code and/or program. The computer-executable code and/or program may include pieces of information described in the embodiments, and may include syntax elements described in the embodiments. In other words, the pieces of information and syntax elements described in the embodiments may be regarded as a computer-executable code in the bitstream, and may be regarded as at least a part of the computer-executable code and/or program represented by the bitstream.

The computer-readable storage medium may include a non-transitory computer-readable medium.

Examples of the computer-readable storage medium include all types of hardware devices specially configured to record and execute program instructions, such as magnetic media, such as a hard disk, a floppy disk, and magnetic tape, optical media, such as compact disk (CD)-ROM and a digital versatile disk (DVD), magneto-optical media, such as a floptical disk, ROM, RAM, and flash memory. Examples of the program instructions include machine code, such as code created by a compiler, and high-level language code executable by a computer using an interpreter. The hardware devices may be configured to operate as one or more software modules in order to perform the operation of the present disclosure, and vice versa.

As described above, although the present disclosure has been described based on specific details such as detailed components and a limited number of embodiments and drawings, those are merely provided for easy understanding of the entire disclosure, the present disclosure is not limited to those embodiments, and those skilled in the art will practice various changes and modifications from the above description.

Accordingly, it should be noted that the spirit of the present embodiments is not limited to the above-described embodiments, and the accompanying claims and equivalents and modifications thereof fall within the scope of the present disclosure.

**Claims**

1. An image decoding method, comprising:

    determining a prediction method for a chroma block;
    determining information for deriving a cross-component prediction model; and
    generating a chroma prediction block using the cross-component prediction model.

2. The image decoding method of claim 1, wherein the information for deriving the cross-component prediction model includes a reference region and a representative value.

3. The image decoding method of claim 2, wherein the reference region and the representative value are determined based on a size of a block.

4. The image decoding method of claim 2, wherein the reference region and the representative value are determined based on a prediction mode of a block.

5. The image decoding method of claim 2, wherein the reference region is determined based on template matching.

6. The decoding method of claim 1, wherein the prediction method is determined using models derived from previously decoded blocks.

7. The image decoding method of claim 1, wherein the chroma prediction block is generated using a prediction block generated by a method other than the cross-component prediction model.

8. An image encoding method, comprising:

    determining a prediction method for a chroma block;
    determining information for deriving a cross-component prediction model; and
    generating a chroma prediction block using the cross-component prediction model.

9. The image encoding method of claim 8, wherein the information for deriving the cross-component prediction model includes a reference region and a representative value.

10. The image encoding method of claim 9, wherein the reference region and the representative value are determined based on a size of a block.

11. The image encoding method of claim 9, wherein the reference region and the representative value are determined based on a prediction mode of a block.

12. The encoding method of claim 9, wherein the reference region is determined based on template matching.

13. The image encoding method of claim 8, wherein the prediction method is determined using models derived from previously encoded blocks.

14. The image encoding method of claim 8, wherein the chroma prediction block is generated using a prediction block generated by a method other than the cross-component prediction model.

15. A computer-readable storage medium for storing a bitstream for image decoding, wherein:

   the bitstream comprises coding information,
   a prediction method for a chroma block is determined based on the coding information,
   information for deriving a cross-component prediction model is determined, and
   a chroma prediction block is generated using the cross-component prediction model.

16. The computer-readable storage medium of claim 15, wherein the information for deriving the cross-component prediction model includes a reference region and a representative value.

17. The computer-readable storage medium of claim 16, wherein the reference region and the representative value are determined based on a size of a block.

18. The computer-readable storage medium of claim 16, wherein the reference region and the representative value are determined based on a prediction mode of a block.

19. The computer-readable storage medium of claim 16, wherein the reference region is determined based on template matching.

20. The computer-readable storage medium of claim 15, wherein the prediction method is determined using models derived from previously decoded blocks.

**FIG. 1**

**FIG. 2**

**FIG. 3**

EP 4 648 415 A2

SKIP MODE

INTRA MODE

2Nx2N 410

2NxN 415

Nx2N 420

NxN 425

2NxnU 430

2NxnD 440

nLx2N 445

nRx2N 450

INTER MODE

**FIG. 4**

510

**FIG. 5**

**FIG. 6**

**FIG. 7**

FIG. 8

**FIG. 9**

**FIG. 10**

**FIG. 11**

RESIDUAL SIGNAL → FIRST TRANSFORM → TRANSFORM COEFFICIENT → SECONDARY TRANSFORM → QUANTIZATION →

**FIG. 12**

DIAGONAL SCANNING

Legend:
- □ BLOCK
- □ SUB-BLOCK
- ⬚ QUANTIZED TRANSFORM COEFFICIENT
- ○ START POINT
- ● END POINT

**FIG. 13**

HORIZONTAL SCANNING

**FIG. 14**

VERTICAL SCANNING

BLOCK
SUB-BLOCK
QUANTIZED TRANSFORM COEFFICIENT
○ START POINT
● END POINT

**FIG. 15**

**FIG. 16**

**FIG. 17**

START

1810

DETERMINE
PREDICTION
INFORMATION

1830

GENERATE
BITSTREAM

1820

PERFORM
PREDICTION USING
DETERMINED
PREDICTION
INFORMATION

END

**FIG. 18**

START

ACQUIRE BITSTREAM — 1910

DETERMINE PREDICTION INFORMATION — 1920

PERFORM PREDICTION USING DETERMINED PREDICTION INFORMATION — 1930

END

**FIG. 19**

col_ref    curr_ref    curr_pic    col_pic

curr_blk    col_blk

tb

td

**FIG. 20**

| NEIGHBORING BLOCK $(BLK_j)$ |
|---|
| 1 |
| 2 |
| 3 |

**FIG. 21**

| CODING PARAMETER ($P_k$) | PARAMETER DETAILS |
|---|---|
| 1 | MOTION VECTOR MAGNITUDE |
| 2 | REFERENCE IMAGE INDEX |
| 3 | CANDIDATE INDEX IN CANDIDATE LIST |

**FIG. 22**

| THRESHOLD (TH$_i$) | VALUE |
|---|---|
| 1 | 10 |
| 2 | 5 |
| 3 | 2 |

**FIG. 23**

| NEIGHBORING BLOCK (BLK$_j$) | CODING PARAMETER OF NEIGHBORING BLOCK (BLK$_j$ _ P$_k$) | |
|---|---|---|
| | INDEX (K) | PARAMETER VALUE |
| 1 | 1 | 3 |
| | 2 | 1 |
| | 3 | 5 |
| 2 | 1 | 7 |
| | 2 | 2 |
| | 3 | 4 |
| 3 | 1 | 10 |
| | 2 | 3 |
| | 3 | 8 |

**FIG. 24**

**FIG. 25**

**FIG. 26**

**FIG. 27**

**FIG. 28**

**FIG. 29**

BLOCK

**FIG. 30**

**FIG. 31**

**FIG. 32**

**FIG. 33**

**FIG. 34**

**FIG. 35**

**FIG. 36**

**FIG. 37**

**FIG. 38**

**FIG. 39**

**FIG. 40**

**FIG. 41**

**FIG. 42**

FIG. 43

FIG. 44

| L(-3, -3) | L(-2, -3) | L(-1, -3) | L(0, -3) | L(1, -3) | L(2, -3) | L(3, -3) | L(4, -3) | L(5, -3) | L(6, -3) | L(7, -3) |
|---|---|---|---|---|---|---|---|---|---|---|
| L(-3, -2) | L(-2, -2) | L(-1, -2) | L(0, -2) | L(1, -2) | L(2, -2) | L(3, -2) | L(4, -2) | L(5, -2) | L(6, -2) | L(7, -2) |
| L(-3, -1) | L(-2, -1) | L(-1, -1) | L(0, -1) | L(1, -1) | L(2, -1) | L(3, -1) | L(4, -1) | L(5, -1) | L(6, -1) | L(7, -1) |
| L(-3, 0) | L(-2, 0) | L(-1, 0) | L(0, 0) | L(1, 0) | L(2, 0) | L(3, 0) | | | | |
| L(-3, 1) | L(-2, 1) | L(-1, 1) | L(0, 1) | L(1, 1) | L(2, 1) | L(3, 1) | | | | |
| L(-3, 2) | L(-2, 2) | L(-1, 2) | L(0, 2) | L(1, 2) | L(2, 2) | L(3, 2) | | | | |
| L(-3, 3) | L(-2, 3) | L(-1, 3) | L(0, 3) | L(1, 3) | L(2, 3) | L(3, 3) | | | | |
| L(-3, 4) | L(-2, 4) | L(-1, 4) | | | | | | | | |
| L(-3, 5) | L(-2, 5) | L(-1, 5) | | | | | | | | |
| L(-3, 6) | L(-2, 6) | L(-1, 6) | | | | | | | | |
| L(-3, 7) | L(-2, 7) | L(-1, 7) | | | | | | | | |

LUMA BLOCK (L)

SUBSAMPLING, DOWNSAMPLING, DIRECT MAPPING...

| | L'(0, -1) | L'(1, -1) | L'(2, -1) | L'(3, -1) |
|---|---|---|---|---|
| L'(-1, 0) | L'(0, 0) | L'(1, 0) | L'(2, 0) | L'(3, 0) |
| L'(-1, 1) | L'(0, 1) | L'(1, 1) | L'(2, 1) | L'(3, 1) |
| L'(-1, 2) | L'(0, 2) | L'(1, 2) | L'(2, 2) | L'(3, 2) |
| L'(-1, 3) | L'(0, 3) | L'(1, 3) | L'(2, 3) | L'(3, 3) |

LUMA BLOCK DIRECTLY CORRESPONDING TO CHROMA BLOCK (L')

**FIG. 45**

CHROMA BLOCK (C)

**FIG. 46**

| | C'(0, -1) | C'(1, -1) | C'(2, -1) | C'(3, -1) |
|---|---|---|---|---|
| C'(-1, 0) | C'(0, 0) | C'(1, 0) | C'(2, 0) | C'(3, 0) |
| C'(-1, 1) | C'(0, 1) | C'(1, 1) | C'(2, 1) | C'(3, 1) |
| C'(-1, 2) | C'(0, 2) | C'(1, 2) | C'(2, 2) | C'(3, 2) |
| C'(-1, 3) | C'(0, 3) | C'(1, 3) | C'(2, 3) | C'(3, 3) |

CHROMA PREDICTION BLOCK (C')

## FIG. 47

| | L'(0, -1) | L'(1, -1) | L'(2, -1) | L'(3, -1) |
|---|---|---|---|---|
| L'(-1, 0) | L'(0, 0) | L'(1, 0) | L'(2, 0) | C'(3, 0) |
| L'(-1, 1) | L'(0, 1) | L'(1, 1) | L'(2, 1) | L'(3, 1) |
| L'(-1, 2) | L'(0, 2) | L'(1, 2) | L'(2, 2) | L'(3, 2) |
| L'(-1, 3) | L'(0, 3) | L'(1, 3) | L'(2, 3) | L'(3, 3) |

**FIG. 48**

**FIG. 49**

BLK_C'    BLK_C"    BLK_C'''    BLK_C''''

**FIG. 50**

EP 4 648 415 A2

LUMA BLOCK (L)

REGION R1

REGION R2

SUBSAMPLING, DOWNSAMPLING, DIRECT MAPPING...

LUMA BLOCK DIRECTLY CORRESPONDING TO CHROMA BLOCK

**FIG. 51**

| C(-2, -2) | C(-1, -2) | REGION R1 | | C(2, -2) | C(3, -2) |
| C(-2, -1) | C(-1, -1) | REGION R2 | | C(2, -1) | C(3, -1) |
| C(-2, 0) | C(-1, 0) | | | | |
| C(-2, 1) | C(-1, 1) | | | | |
| C(-2, 2) | C(-1, 2) | | | | |
| C(-2, 3) | C(-1, 3) | | | | |

CHROMA BLOCK (C)

**FIG. 52**

| L'(-2, -2) | L'(-1, -2) | L'(0, - | REGION R1 | (2, -2) | L'(3, -2) |
| L'(-2, -1) | L'(-1, -1) | L'(0, - | REGION R2 | (2, -1) | L'(3, -1) |
| L'(-2, 0) | L'(-1, 0) | L'(0, 0) | L'(1, 0) | L'(2, 0) | L'(3, 0) |
| L'(-2, 1) | L'(-1, 1) | L'(0, 1) | L'(1, 1) | L'(2, 1) | L'(3, 1) |
| L'(-2, 2) | L'(-1, 2) | L'(0, 2) | L'(1, 2) | L'(2, 2) | L'(3, 2) |
| L'(-2, 3) | L'(-1, 3) | L'(0, 3) | L'(1, 3) | L'(2, 3) | L'(3, 3) |

LUMA BLOCK DIRECTLY
CORRESPONDING TO
CHROMA BLOCK (L')

# FIG. 53

| C(-2, -2) | C(-1, -2) | REGION R1 | C(2, -2) | C(3, -2) |
| C(-2, -1) | C(-1, -1) | REGION R2 | C(2, -1) | C(3, -1) |
| C(-2, 0) | C(-1, 0) | | | |
| C(-2, 1) | C(-1, 1) | | | |
| C(-2, 2) | C(-1, 2) | | | |
| C(-2, 3) | C(-1, 3) | | | |

CHROMA BLOCK (C)

# FIG. 54

**FIG. 55**

START

DERIVE MODEL COEFFICIENTS — 5610

GENERATE CHROMA PREDICTION SAMPLE
OR CHROMA PREDICTION TEMPLATE — 5620

CALCULATE ERROR COST OF CHROMA
PREDICTION SAMPLE OR CHROMA
PREDICTION BLOCK — 5630

SELECT MODEL AND PERFORM PREDICTION — 5640

END

**FIG. 56**

| TABLE INDEX | MODEL INDEX (PREDICTION MODE INDEX) | ERROR COST |
|:---:|:---:|:---:|
| 0 | 1 | 30 |
| 1 | 2 | 100 |
| 2 | 3 | 50 |
| 3 | 4 | 60 |

INITIAL MODEL-BASED
CHROMA PREDICTION MODE TABLE

ERROR
COST-BASED
TABLE SORTING

| TABLE INDEX | MODEL INDEX (PREDICTION MODE INDEX) | ERROR COST |
|:---:|:---:|:---:|
| 0 | 1 | 30 |
| 1 | 3 | 50 |
| 2 | 4 | 60 |
| 3 | 2 | 100 |

SORTED MODEL-BASED
CHROMA PREDICTION MODE TABLE

**FIG. 57**

EP 4 648 415 A2

| TABLE INDEX | MODEL INDEX | ERROR COST |
|:-----------:|:-----------:|:----------:|
| 0 | 1 | 30 |
| 1 | 3 | 50 |

RECONSTRUCT PREDICTION MODE TABLE BY
SELECTING TWO MODELS HAVING
LOWEST ERROR COSTS

**FIG. 58**

| TABLE INDEX | MODEL INDEX | ERROR COST |
|:---:|:---:|:---:|
| 0 | 1 | 30 |
| 1 | 3 | 50 |
| 2 | 4 | 60 |

RECONSTRUCT PREDICTION MODE TABLE BY
SELECTING MODELS HAVING ERROR COSTS LOWER
THAN OR EQUAL TO AVERAGE ERROR COST

**FIG. 59**

$$\begin{pmatrix}1 & 0 & -1 \\ 1 & 0 & -1\end{pmatrix}, \begin{pmatrix}1 & 2 & 1 \\ -1 & -2 & -1\end{pmatrix}, \begin{pmatrix}2 & 1 & -1 \\ 1 & -1 & -2\end{pmatrix}, \begin{pmatrix}-1 & 1 & 2 \\ -2 & -1 & 1\end{pmatrix}, \begin{pmatrix}0 & 1 & -1 \\ 0 & 1 & -1\end{pmatrix}, \begin{pmatrix}0 & 1 & 1 \\ 0 & -1 & -1\end{pmatrix}, \begin{pmatrix}1 & 1 & 0 \\ 0 & -1 & -1\end{pmatrix}, \begin{pmatrix}0 & 1 & 1 \\ -1 & -1 & 0\end{pmatrix},$$

$$\begin{pmatrix}0 & 2 & -2 \\ 0 & 1 & -1\end{pmatrix}, \begin{pmatrix}1 & 1 & 1 \\ -1 & -1 & -1\end{pmatrix}, \begin{pmatrix}1 & 1 & -1 \\ -1 & -1 & -1\end{pmatrix}, \begin{pmatrix}-1 & 1 & 1 \\ -1 & -1 & 1\end{pmatrix}, \begin{pmatrix}1 & -1 & 0 \\ 0 & -1 & 0\end{pmatrix}, \begin{pmatrix}1 & 1 & 0 \\ -1 & -1 & 0\end{pmatrix}, \begin{pmatrix}1 & 2 & 0 \\ 0 & -2 & -1\end{pmatrix}, \begin{pmatrix}0 & 2 & 1 \\ -1 & -2 & 0\end{pmatrix},$$

$$\begin{pmatrix}0 & 0 & -1 \\ 0 & 0 & -1 \\ 0 & 0 & -1\end{pmatrix}, \begin{pmatrix}1 & 1 & 1 \\ -1 & -2 & -1 \\ 1 & 2 & 1\end{pmatrix}, \begin{pmatrix}2 & -1 & -1 \\ -1 & 2 & -1 \\ -1 & -1 & -2\end{pmatrix}, \begin{pmatrix}-1 & -1 & 2 \\ -1 & 2 & -1 \\ -2 & -1 & -1\end{pmatrix}, \begin{pmatrix}0 & 1 & -1 \\ 0 & 1 & -1 \\ 0 & 1 & -1\end{pmatrix}, \begin{pmatrix}0 & 1 & 1 \\ 0 & -1 & -1 \\ 0 & 1 & 1\end{pmatrix}, \begin{pmatrix}1 & 1 & 0 \\ 0 & -1 & -1 \\ 0 & 1 & 1\end{pmatrix}, \begin{pmatrix}0 & 1 & 1 \\ -1 & -1 & -1 \\ 1 & 1 & 0\end{pmatrix},$$

$$\begin{pmatrix}0 & 2 & -2 \\ 0 & 1 & -1 \\ 0 & 2 & -1\end{pmatrix}, \begin{pmatrix}1 & 1 & 1 \\ -1 & -1 & -1 \\ 1 & 1 & 1\end{pmatrix}, \begin{pmatrix}1 & 1 & -1 \\ -1 & 1 & -1 \\ -1 & -1 & 1\end{pmatrix}, \begin{pmatrix}-1 & -1 & 1 \\ -1 & 1 & -1 \\ 1 & -1 & -1\end{pmatrix}, \begin{pmatrix}1 & -1 & 0 \\ 1 & -1 & 0 \\ 1 & -1 & 0\end{pmatrix}, \begin{pmatrix}1 & 1 & 0 \\ -1 & -1 & 0 \\ 1 & 1 & 0\end{pmatrix}, \begin{pmatrix}1 & -2 & 0 \\ 0 & 2 & -1 \\ 0 & -2 & 1\end{pmatrix}, \begin{pmatrix}0 & -2 & 1 \\ -1 & 2 & 0 \\ 1 & -2 & 0\end{pmatrix},$$

GRADIENT DETECTION FILTERS OR GRADIENT DETECTION PATTERNS

# FIG. 60

G2(-1, 1) G2(0, 1) G2(1, 1) G2(2, 1) G2(3, 1)
G2(-1, 0)
G2(-1, 1)
G2(-1, 2)
G2(-1, 3)

G4(-1, 1) G4(0, 1) G4(1, 1) G4(2, 1) G4(3, 1)
G4(-1, 0)
G4(-1, 1)
G4(-1, 2)
G4(-1, 3)

G1(-1, 1) G1(0, 1) G1(1, 1) G1(2, 1) G1(3, 1)
G1(-1, 0)
G1(-1, 1)
G1(-1, 2)
G1(-1, 3)

G3(-1, 1) G3(0, 1) G3(1, 1) G3(2, 1) G3(3, 1)
G3(-1, 0)
G3(-1, 1)
G3(-1, 2)
G3(-1, 3)

GRADIENT BLOCKS DERIVED USING FOUR GRADIENT DETECTION FILTERS

GRADIENT DETECTION FILTERING

L(-1, -2) L(0, -2) L(1, -2) L(2, -2) L(3, -2) L(4, -2) L(5, -2) L(6, -2) L(7, -2)
L(-1, -1) L(0, -1) L(1, -1) L(2, -1) L(3, -1) L(4, -1) L(5, -1) L(6, -1) L(7, -1)
L(-1, 0) L(0, 0) L(1, 0) L(2, 0) L(3, 0)
L(-1, 1) L(0, 1) L(1, 1) L(2, 1) L(3, 1)
L(-1, 2) L(0, 2) L(1, 2) L(2, 2) L(3, 2)
L(-1, 3) L(0, 3) L(1, 3) L(2, 3) L(3, 3)
L(-1, 4)
L(-1, 5)
L(-1, 6)
L(-1, 7)

LUMA BLOCK

FIG. 61

LUMA BLOCK (L)

GRADIENT
DETECTION
FILTERING

GRADIENT BLOCKS DERIVED USING FOUR
GRADIENT DETECTION FILTERS

FIG. 62

GRADIENT BLOCKS DERIVED USING FOUR
GRADIENT DETECTION FILTERS

**FIG. 63**

CHROMA BLOCK (C)

**FIG. 64**

| C'(-1, -1) | C'(0, -1) | C'(1, -1) | C'(2, -1) | C'(3, -1) |
|---|---|---|---|---|

C'(-1, 0)

C'(-1, 1)                    PRED_TMP_C'

C'(-1, 2)

C'(-1, 3)

| C''(-1, -1) | C''(0, -1) | C''(1, -1) | C''(2, -1) | C''(3, -1) |
|---|---|---|---|---|

C''(-1, 0)

C''(-1, 1)                   PRED_TMP_C''

C''(-1, 2)

C''(-1, 3)

| C'''(-1, -1) | C'''(0, -1) | C'''(1, -1) | C'''(2, -1) | C'''(3, -1) |
|---|---|---|---|---|

C'''(-1, 0)

C'''(-1, 1)                  PRED_TMP_C''''

C'''(-1, 2)

C'''(-1, 3)

| C''''(-1, -1) | C''''(0, -1) | C''''(1, -1) | C''''(2, -1) | C''''(3, -1) |
|---|---|---|---|---|

C''''(-1, 0)

C''''(-1, 1)                 PRED_TMP_C'''

C''''(-1, 2)

C''''(-1, 3)

CHROMA PREDICTION TEMPLATES DERIVED
USING FOUR GRADIENT LINEAR MODELS

ERROR COST
CALCULATION

| C'(-1, -1) | C'(0, -1) | C'(1, -1) | C'(2, -1) | C'(3, -1) |
|---|---|---|---|---|

C'(-1, 0)

C'(-1, 1)

C'(-1, 2)                    TMP_C

C'(-1, 3)

CHROMA TEMPLATE (C)

**FIG. 65**

171

START

GENERATE GRADIENT SAMPLE — 6610

DERIVE MODEL COEFFICIENT — 6620

GENERATE CHROMA PREDICTION SAMPLE
OR CHROMA PREDICTION TEMPLATE — 6630

CALCULATE ERROR COST OF
CHROMA PREDICTION SAMPLE OR
CHROMA PREDICTION BLOCK — 6640

SELECT MODEL AND PERFORM PREDICTION — 6650

END

**FIG. 66**

| TABLE INDEX | MODEL INDEX (PREDICTION MODE INDEX) | GRADIENT DETECTION FILTER INDEX (FILTER PATTERN INDEX) | ERROR COST |
|---|---|---|---|
| 0 | 1 | 3 | 30 |
| 1 | 2 | 2 | 100 |
| 2 | 3 | 4 | 50 |
| 3 | 4 | 1 | 60 |

INITIAL MODEL-BASED
CHROMA PREDICTION MODE TABLE

ERROR
COST-BASED
TABLE SORTING

| TABLE INDEX | MODEL INDEX (PREDICTION MODE INDEX) | GRADIENT DETECTION FILTER INDEX (FILTER PATTERN INDEX) | ERROR COST |
|---|---|---|---|
| 0 | 1 | 3 | 30 |
| 1 | 3 | 4 | 50 |
| 2 | 4 | 1 | 60 |
| 3 | 2 | 2 | 100 |

SORTED CHROMA PREDICTION MODE TABLE

**FIG. 67**

EP 4 648 415 A2

| TABLE INDEX | MODEL INDEX (PREDICTION MODE INDEX) | GRADIENT DETECTION FILTER INDEX (FILTER PATTERN INDEX) | ERROR COST |
|---|---|---|---|
| 0 | 1 | 3 | 30 |
| 1 | 3 | 4 | 50 |

RECONSTRUCT PREDICTION MODE TABLE BY SELECTING
TWO MODELS HAVING LOWEST ERROR COSTS

**FIG. 68**

| TABLE INDEX | MODEL INDEX (PREDICTION MODE INDEX) | GRADIENT DETECTION FILTER INDEX (FILTER PATTERN INDEX) | ERROR COST |
|---|---|---|---|
| 0 | 1 | 3 | 30 |
| 1 | 3 | 4 | 50 |
| 2 | 4 | 1 | 60 |

RECONSTRUCT PREDICTION MODE TABLE BY SELECTING MODELS HAVING
ERROR COSTS LOWER THAN OR EQUAL TO AVERAGE ERROR COST

**FIG. 69**

| L(-3, -3) | L(-2, -3) | L(-1, -3) | L(0, -3) | L(1, -3) | L(2, -3) | L(3, -3) | L(4, -3) | L(5, -3) | L(6, -3) | L(7, -3) |
|---|---|---|---|---|---|---|---|---|---|---|
| L(-3, -2) | L(-2, -2) | L(-1, -2) | L(0, -2) | L(1, -2) | L(2, -2) | L(3, -2) | L(4, -2) | L(5, -2) | L(6, -2) | L(7, -2) |
| L(-3, -1) | L(-2, -1) | L(-1, -1) | L(0, -1) | L(1, -1) | L(2, -1) | L(3, -1) | L(4, -1) | L(5, -1) | L(6, -1) | L(7, -1) |
| L(-3, 0) | L(-2, 0) | L(-1, 0) | | | | | | | | |
| L(-3, 1) | L(-2, 1) | L(-1, 1) | | | | | | | | |
| L(-3, 2) | L(-2, 2) | L(-1, 2) | | | | | | | | |
| L(-3, 3) | L(-2, 3) | L(-1, 3) | | | | | | | | |
| L(-3, 4) | L(-2, 4) | L(-1, 4) | | | | | | | | |
| L(-3, 5) | L(-2, 5) | L(-1, 5) | | | | | | | | |
| L(-3, 6) | L(-2, 6) | L(-1, 6) | | | | | | | | |
| L(-3, 7) | L(-2, 7) | L(-1, 7) | | | | | | | | |

LUMA SAMPLES CORRESPONDING TO CHROMA SAMPLES
AND FORM IN WHICH FILTER IS APPLIED

**FIG. 70**

CHROMA SAMPLE

**FIG. 71**

| | | |
|---|---|---|
| (x-1, y) | (x, y) | (x+1, y) |
| (x-1, y+1) | (x, y+1) | (x+1, y+1) |

FILTER SHAPE AND
FILTER COEFFICIENT POSITION

**FIG. 72**

**FIG. 73**

**FIG. 74A**

**FIG. 74B**

|   |   |   |
|---|---|---|
|   |   |   |
| W | C | E |
| WS | S | ES |

**FIG. 74C**

|   |   |   |
|---|---|---|
| WN | N | EN |
| W | C | E |
|   |   |   |

**FIG. 74D**

FIG. 74E

FIG. 74F

**FIG. 74G**

**FIG. 74H**

**FIG. 74I**

**FIG. 74J**

**FIG. 74K**

**FIG. 74L**

**FIG. 74M**

**FIG. 74N**

**FIG. 74O**

**FIG. 74P**

**FIG. 74Q**

**FIG. 74R**

**FIG. 75**

(FILTER SET 2)

**FIG. 76**

**FIG. 77**

**FIG. 78**

(FILTER SET 3)

**FIG. 79**

(FILTER SET 4)

**FIG. 80**

**FIG. 81**

EP 4 648 415 A2

LUMA SAMPLES CORRESPONDING TO CHROMA SAMPLES AND
FORM IN WHICH FILTER IS APPLIED

**FIG. 82**

CHROMA SAMPLE

**FIG. 83**

FILTER SHAPE AND
FILTER COEFFICIENT POSITION

**FIG. 84**

**FIG. 85**

DOWNSAMPLING FILTER F1()

L'(i,j)_f1
F1(C(i,j))

**FIG. 86**

| 1 | 0 | -1 |
|---|---|----|
| 1 | 0 | -1 |

DOWNSAMPLING FILTER F2()

L'(i,j)_f2
F2(C(i,j))

**FIG. 87**

| 1 | 2 | 1 |
|---|---|---|
| -1 | -2 | -1 |

DOWNSAMPLING FILTER F3()

L'(i,j)_f3
F3(C(i,j))

**FIG. 88**

| 2 | 1 | -1 |
|---|---|----|
| 1 | -1 | -2 |

DOWNSAMPLING FILTER F4()

L'(i,j)_f4
F4(C(i,j))

## FIG. 89

| -2 | -1 | 1 |
|----|----|---|
| -1 | 1  | 2 |

DOWNSAMPLING FILTER F5()

L'(i,j)_f5
F5(C(i,j))

## FIG. 90

| MODEL INDEX | | MODEL | USAGE INFORMATION |
|---|---|---|---|
| MODEL 1 | EXAMPLE 1 | predChroma(색차 예측 신호) = a0 * F1(C) + a1 * F2(C) + a2 * F3(C) + a3 * F4(C) + a4 * P(F1(C)) + a5 * P(F2(C)) + a6 * P(F3(C)) + a7 * B | LUMA INFORMATION |
| | EXAMPLE 2 | predChroma = a0 * F1(C) + a1 * F2(C) + a2 * F3(C) + a3 * F4(C) + a4 * P(F1(C)) + a5 * P(F2(C)) + a6 * P(F3(C)) + a7 * X + a8 * Y + a9 * B | LUMA INFORMATION/ LOCATION INFORMATION |
| | EXAMPLE 3 | predChroma = a0 * F1(C) + a1 * F2(C) + a2 * F3(C) + a3 * F4(C) + a4 * P(F1(C)) + a5 * P(F2(C)) + a6 * P(F3(C)) + a7 * $G_x$ + a8 * $G_y$ + a9 * X + a10 * Y + a11 * B | LUMA INFORMATION/ LOCATION INFORMATION/ GRADIENT INFORMATION |
| MODEL 2 | 예시 1 | predChroma = a0 * F1(C) + a1 * F1(W) + a2 * F1(E) + a3 * F2(C) + a4 * F2(W) + a5 * F2(E) + a6 * P(F1(C)) + a7 * P(F1(W)) + a8 * P(F1(E)) + a9 * X + a10 * B | LUMA INFORMATION/ LOCATION INFORMATION |
| | 예시 2 | predChroma = a0 * F1(C) + a1 * F1(W) + a2 * F1(E) + a3 * F2(C) + a4 * F2(W) + a5 * F2(E) + a6 * P(F1(C)) + a7 * P(F1(W)) + a8 * P(F1(E)) + a9 * X + a10 * $G_x$ + a11 * B | LUMA INFORMATION/ LOCATION INFORMATION/ GRADIENT INFORMATION |
| MODEL 3 | 예시 1 | predChroma = a0 * F1(C) + a1 * F1(NE) + a2 * F1(SW) + a3 * F4(C) + a4 * F4(NE) + a5 * F4(SW) + a6 * P(F1(C)) + a7 * P(F1(NE)) + a8 * P(F1(SW)) + a9 * Y + a10 * B | LUMA INFORMATION/ LOCATION INFORMATION |
| | 예시 2 | predChroma = a0 * F1(C) + a1 * F1(NE) + a2 * F1(SW) + a3 * F4(C) + a4 * F4(NE) + a5 * F4(SW) + a6 * P(F1(C)) + a7 * P(F1(NE)) + a8 * P(F1(SW)) + a9 * Y + a10 * $G_y$ + a11 * B | LUMA INFORMATION/ LOCATION INFORMATION/ GRADIENT INFORMATION |

**FIG. 91**

| | | |
|---|---|---|
| L'(i-1, j-1)<br>**(NW)** | L'(i, j-1)<br>**(N)** | L'(i+1, j-1)<br>**(NE)** |
| L'(i-1, j)<br>**(W)** | L'(i, j)<br>**(C)** | L'(i+1, j)<br>**(E)** |
| L'(i-1, j+1)<br>**(SW)** | L'(i, j+1)<br>**(S)** | L'(i+1, j+1)<br>**(SE)** |

**FIG. 92**

FIG. 93

**FIG. 94**

FIG. 95

**FIG. 96**

CHROMA
SAMPLE VALUE
(y AXIS)
CHROMA COMPONENT
VALUE CORRESPONDING
TO LUMA COMPONENT
MAXIMUM VALUE
$(Y\_MAX_C)$
CHROMA COMPONENT
VALUE CORRESPONDING
TO SECOND LUMA
COMPONENT MAXIMUM
VALUE$(Y\_MAX2_C)$
CHROMA COMPONENT
VALUE CORRESPONDING
TO SECOND LUMA
COMPONENT
MINIMUM VALUE
$(Y\_MIN2_C)$
CHROMA COMPONENT
VALUE CORRESPONDING
TO LUMA COMPONENT
MINIMUM VALUE
$(Y\_MIN_C)$

$(Y\_MAX_L, Y\_MAX_C)$

$(Y\_MAX2_L, Y\_MAX2_C)$

$(Y\_MIN2_L, Y\_MIN2_C)$

$(Y\_MIN_L, Y\_MIN_C)$

SECOND LUMA
COMPONENT
MINIMUM VALUE
$(C\_MIN2_L)$

LUMA
COMPONENT
MINIMUM
VALUE
$(Y\_MIN_L)$

SECOND LUMA
COMPONENT
MAXIMUM VALUE
$(Y\_MAX2_L)$

LUMA
COMPONENT
MAXIMUM VALUE
$(Y\_MAX_L)$

LUMA
SAMPLE VALUE
(x AXIS)

LINEAR MODEL

## FIG. 97

WIDTH > HEIGHT

(a) REFERENCE REGION EXTENSION

(b) REFERENCE REGION REDUCTION

WIDTH > HEIGHT

CURRENT BLOCK

REFERENCE REGION

EXTENDED REFERENCE REGION

PADDING REGION

EXAMPLE IN WHICH NUMBER OF REFERENCE LINES AND NUMBER OF REFERENCE SAMPLES ARE DETERMINED DIFFERENTLY DEPENDING ON BLOCK PARTITIONING SHAPE

**FIG. 98**

**FIG. 99**

| | |
|---|---|
| ▨ | CURRENT BLOCK |
| ▨ | REFERENCE REGION |
| ▨ | PADDING REGION |

EXAMPLE IN WHICH NUMBER OF REFERENCE LINES AND
NUMBER OF REFERENCE SAMPLES ARE DETERMINED DIFFERENTLY DEPENDING
ON PREDICTION MODE OF NEIGHBORING BLOCK

**FIG. 100**

IN CASE WHERE
INTRA-PREDICTION MODE OF
TARGET BLOCK OR NEIGHBORING
BLOCK IS VERTICAL MODE

IN CASE WHERE
INTRA-PREDICTION MODE OF
TARGET BLOCK OR NEIGHBORING
BLOCK IS HORIZONTAL MODE

(a) REFERENCE
REGION EXTENSION

(b) REFERENCE
REGION REDUCTION

CURRENT BLOCK

REFERENCE REGION

EXTENDED
REFERENCE REGION

PADDING REGION

EXAMPLE IN WHICH NUMBER OF REFERENCE LINES AND NUMBER OF REFERENCE
SAMPLES ARE DETERMINED DIFFERENTLY DEPENDING ON INTRA-PREDICTION MODE

**FIG. 101**

FIG. 102

FIG. 103

**FIG. 104**

B2

B1  B0

X

A1

A0

**FIG. 105**

REFERENCE REGION COMBINATION: REFERENCE REGION G'

**FIG. 106**

LOCATION OF NON-ADJACENT BLOCK FOR
DETERMINING REFERENCE REGION

**FIG. 107**

SIZE AND SHAPE OF ACTUALLY ENCODED/
DECODED BLOCK AT LOCATION OF NON-ADJACENT BLOCK

**FIG. 108**

EXAMPLE OF LOCATION OF NON-ADJACENT BLOCK

**FIG. 109**

RANGE FOR SELECTION OF REFERENCE BLOCK
(ONLY BLOCK WITHIN CORRESPONDING RANGE IS SELECTED)

**FIG. 110**

**FIG. 111**

w x ▯ + (1-w) x ▨ = ▦

| | |
|---|---|
| ▯ | CHROMA PREDICTION BLOCK GENERATED USING MODEL #1 |
| ▨ | CHROMA PREDICTION BLOCK GENERATED USING MODEL #2 |
| ▦ | CHROMA PREDICTION BLOCK GENERATED BY BLENDING |

**FIG. 112**

| CHROMA PREDICTION BLOCK #1 (GENERATED BY MODEL #1) | CHROMA PREDICTION BLOCK #2 (GENERATED BY MODEL #2) | CHROMA PREDICTION BLOCK GENERATED BY BLENDING |
|---|---|---|
| FILTERED BY FILTER #1 | FILTERING IS NOT PERFORMED | FILTERING IS NOT PERFORMED |
| FILTERED BY FILTER #1 | FILTERED BY FILTER #2 | FILTERING IS NOT PERFORMED |
| FILTERING IS NOT PERFORMED | FILTERING IS NOT PERFORMED | FILTERED BY FILTER #2 |
| FILTERING IS NOT PERFORMED | FILTERED BY FILTER #3 | FILTERING IS NOT PERFORMED |
| FILTERED BY FILTER #1 | FILTERED BY FILTER #3 | FILTERED BY FILTER #2 |
| FILTERED BY FILTER #1 | FILTERED BY FILTER #1 | FILTERING IS NOT PERFORMED |

**FIG. 113**

FINALLY PREDICTED CHROMA BLOCK

SAMPLE PREDICTED USING MODEL #1

SAMPLE PREDICTED USING MODEL #2

SAMPLE PREDICTED USING MODEL #3

**FIG. 114**

| CHROMA PREDICTION SAMPLE #1 (GENERATED BY MODEL #1) | CHROMA PREDICTION SAMPLE #2 (GENERATED BY MODEL #2) | CHROMA PREDICTION SAMPLE #3 (GENERATED BY MODEL #3) | CHROMA PREDICTION SAMPLE #4 (GENERATED BY MODEL #4) |
|---|---|---|---|
| FILTERED BY FILTER #1 | FILTERING IS NOT PERFORMED | FILTERED BY FILTER #2 | FILTERING IS NOT PERFORMED |
| FILTERED BY FILTER #1 | FILTERED BY FILTER #2 | FILTERED BY FILTER #2 | FILTERING IS NOT PERFORMED |
| FILTERING IS NOT PERFORMED | FILTERING IS NOT PERFORMED | FILTERING IS NOT PERFORMED | FILTERED BY FILTER #2 |
| FILTERING IS NOT PERFORMED | FILTERED BY FILTER #3 | FILTERED BY FILTER #3 | FILTERING IS NOT PERFORMED |
| FILTERED BY FILTER #1 | FILTERED BY FILTER #3 | FILTERED BY FILTER #3 | FILTERED BY FILTER #2 |
| FILTERED BY FILTER #1 | FILTERED BY FILTER #1 | FILTERED BY FILTER #1 | FILTERING IS NOT PERFORMED |

# FIG. 115

w x [ ] + (1-w) x [ ] = [ ]

| | | |
|---|---|---|
| [ ] | CHROMA PREDICTION BLOCK GENERATED USING MODEL #1 | [ ] CHROMA PREDICTION BLOCK GENERATED BY BLENDING |
| [ ] | CHROMA PREDICTION BLOCK GENERATED USING MODEL #2 | |

**FIG. 116**

PREDICTED CHROMA BLOCK

SAMPLE PREDICTED USING MODEL #1

SAMPLE PREDICTED USING MODEL #2

SAMPLE PREDICTED USING MODEL #3

SAMPLE PREDICTED BY TIMD

**FIG. 117**

| U(-1, -1) | U(0, -1) | U(1, -1) | U(2, -1) | U(3, -1) | U(4, -1) | U(5, -1) | U(6, -1) | U(7, -1) |
|-----------|----------|----------|----------|----------|----------|----------|----------|----------|
| U(-1, 0) | Pred_U(0, 0) | Pred_U(1, 0) | Pred_U(2, 0) | Pred_U(3, 0) | | | | |
| U(-1, 1) | Pred_U(0, 1) | Pred_U(1, 1) | Pred_U(2, 1) | Pred_U(3, 1) | | | | |
| U(-1, 2) | Pred_U(0, 2) | Pred_U(1, 2) | Pred_U(2, 2) | Pred_U(3, 2) | | | | |
| U(-1, 3) | Pred_U(0, 3) | Pred_U(1, 3) | Pred_U(2, 3) | Pred_U(3, 3) | | | | |
| U(-1, 4) | | | | | | | | |
| U(-1, 5) | | | | | | | | |
| U(-1, 6) | | | | | | | | |
| U(-1, 7) | | | | | | | | |

**FIG. 118**

| V(-1, -1) | V(0, -1) | V(1, -1) | V(2, -1) | V(3, -1) | V(4, -1) | V(5, -1) | V(6, -1) | V(7, -1) |
|-----------|----------|----------|----------|----------|----------|----------|----------|----------|
| V(-1, 0) | Pred_V(0, 0) | Pred_V(1, 0) | Pred_V(2, 0) | Pred_V(3, 0) | | | | |
| V(-1, 1) | Pred_V(0, 1) | Pred_V(1, 1) | Pred_V(2, 1) | Pred_V(3, 1) | | | | |
| U(-1, 2) | Pred_V(0, 2) | Pred_V(1, 2) | Pred_V(2, 2) | Pred_V(3, 2) | | | | |
| V(-1, 3) | Pred_V(0, 3) | Pred_V(1, 3) | Pred_V(2, 3) | Pred_V(3, 3) | | | | |
| V(-1, 4) | | | | | | | | |
| V(-1, 5) | | | | | | | | |
| V(-1, 6) | | | | | | | | |
| V(-1, 7) | | | | | | | | |

**FIG. 119**

**FIG. 120**

| Pred_V'(0, 0) | Pred_V'(1, 0) | Pred_V'(2, 0) | Pred_V'(3, 0) |
| Pred_V'(0, 1) | Pred_V'(1, 1) | Pred_V'(2, 1) | Pred_V'(3, 1) |
| Pred_V'(0, 2) | Pred_V'(1, 2) | Pred_V'(2, 2) | Pred_V'(3, 2) |
| Pred_V'(0, 3) | Pred_V'(1, 3) | Pred_V'(2, 3) | Pred_V'(3, 3) |

**FIG. 121**

| 1 | 0 | -1 |
|---|---|----|
| 1 | 0 | -1 |

| 1 | 2 | 1 |
|----|----|----|
| -1 | -2 | -1 |

| 2 | 1 | -1 |
|---|----|----|
| 1 | -1 | -2 |

| -1 | 1 | 2 |
|----|----|---|
| -2 | -1 | 1 |

**FIG. 122**

**FIG. 123**

**FIG. 124**

**FIG. 125**

| | | |
|---|---|---|
| 1 | 1 | 1 |
| 1 | 8 | 1 |
| 1 | 1 | 1 |

1/16

**FIG. 126**

**FIG. 127**

| H | | |
|---|---|---|
| 1 | 2 | 1 |
| 1 | 2 | 1 |

| G1 | | |
|---|---|---|
| 1 | 0 | -1 |
| 1 | 0 | -1 |

| G2 | | |
|---|---|---|
| 1 | 2 | 1 |
| -1 | -2 | -1 |

| G3 | | |
|---|---|---|
| -1 | 1 | 2 |
| -2 | -1 | 1 |

**FIG. 128**

**FIG. 129**

**FIG. 130**

**FIG. 131**

LUMA

CHROMA

**FIG. 132**

**FIG. 133**

FIG. 134

FIG. 135

**FIG. 136**

**FIG. 137**

**FIG. 138**

**REFERENCES CITED IN THE DESCRIPTION**

**Patent documents cited in the description**

- KR 1020230001455
- KR 1020230086030
- KR 1020240001582